(19) **Europäisches Patentamt / European Patent Office / Office européen des brevets**

(11) **EP 4 616 996 A1**

(12) **EUROPEAN PATENT APPLICATION**
published in accordance with Art. 153(4) EPC

(43) Date of publication:
**17.09.2025 Bulletin 2025/38**

(21) Application number: **22965065.0**

(22) Date of filing: **07.11.2022**

(51) International Patent Classification (IPC):
**B23Q 17/24** *(2006.01)*

(52) Cooperative Patent Classification (CPC):
**B23Q 17/24**

(86) International application number:
**PCT/JP2022/041449**

(87) International publication number:
**WO 2024/100738 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NIKON CORPORATION**
**Tokyo 140-8601 (JP)**

(72) Inventors:
- **INOUE, Hirohiko**
  **Tokyo 140-8601 (JP)**
- **ISHIKAWA, Takahiro**
  **Tokyo 140-8601 (JP)**
- **NAKA, Shunsuke**
  **Tokyo 140-8601 (JP)**
- **SUGAWARA, Kazuma**
  **Tokyo 140-8601 (JP)**
- **HANASHIMA, Yuichi**
  **Tokyo 140-8601 (JP)**
- **TANIZAWA, Yusuke**
  **Tokyo 140-8601 (JP)**
- **MONIWA, Hiroaki**
  **Tokyo 140-8601 (JP)**
- **YAMAMOTO, Kozo**
  **Tokyo 140-8601 (JP)**
- **KAMEI, Yuki**
  **Tokyo 140-8601 (JP)**
- **MORITA, Takayuki**
  **Tokyo 140-8601 (JP)**
- **NEGISHI, Taketoshi**
  **Tokyo 140-8601 (JP)**
- **HAYAKAWA, Sota**
  **Tokyo 140-8601 (JP)**
- **MASUI, Hitoshi**
  **Tokyo 140-8601 (JP)**

(74) Representative: **Hoffmann Eitle**
**Patent- und Rechtsanwälte PartmbB**
**Arabellastraße 30**
**81925 München (DE)**

(54) **MEASUREMENT SYSTEM, MACHINE TOOL, OPTICAL DEVICE, MEASUREMENT METHOD, COMPUTER PROGRAM, AND RECORDING MEDIUM**

(57)    An optical apparatus is attached to a main spindle instead of a tool in a machine tool, the machine tool processes a workpiece by the tool attached to the main spindle of a processing head while moving at least one of a stage, on which the workpiece is placed, and the processing head, the optical apparatus includes: a direction change member for changing a propagating direction of measurement light; and a light receiving unit for optically receiving returning light, which is generated by irradiating each of fiducial members with the measurement light whose propagating direction has been changed by the direction change member, from each of the fiducial members, the light receiving unit optically receives the returning light that is generated by irradiating each of at least one fiducial member, which is positioned on the workpiece that is placed on the stage, and at least another one fiducial member, which is positioned on the stage or on the workpiece that is placed on the stage, of the fiducial members with the measurement light.

**(Cont. next page)**

FIG. 1

**Description**

Technical Field

The present invention relates to a technical field of a machine tool, and, a measurement system, a measurement method, an optical apparatus, a measurement method, a computer program, and a recording medium that are used for the machine tool, for example.

Background Art

A Patent literature 1 discloses a machine tool that calculates a movement error occurring in a translational movement and a rotational movement of first and second machine component. One technical problem of this machine tool is to properly calculates the movement error.

Citation List

Patent Literature

Patent Literature 1: US2018/0174317A1

Summary of Invention

A first aspect provides an optical apparatus that is attached to a main spindle instead of a tool in a machine tool, wherein the machine tool processes a workpiece by the tool, which is attached to the main spindle of a processing head in a detachable manner, while moving at least one of a stage, on which the workpiece is placed, and the processing head, the optical apparatus includes: a direction change member that is configured to change a propagating direction of measurement light; and a light receiving unit that optically receives returning light, which is generated by irradiating each of a plurality of fiducial members with the measurement light whose propagating direction has been changed by the direction change member, from each of the plurality of fiducial members, the light receiving unit optically receives the returning light that is generated by irradiating each of at least one fiducial member, which is positioned on the workpiece placed on the stage, and at least another one fiducial member, which is positioned on the stage or on the workpiece placed on the stage, of the plurality of fiducial members with the measurement light.

A second aspect provides a measurement system that is used for a machine tool, wherein the machine tool processes a workpiece by a tool, which is attached to a main spindle of a processing head in a detachable manner, while moving at least one of a stage, on which the workpiece is placed, and the processing head, the measurement system includes: an optical apparatus that is attached to the main spindle instead of the tool, that includes a direction change member configured to change a propagating direction of measurement light, and that optically receives returning light, which is generated by irradiating each of at least four fiducial members with the measurement light whose propagating direction has been changed by the direction change member, from each of the at least four fiducial members; and a computing unit that calculates a position of the optical apparatus based on an optical received result of the returning light from each of the at least four fiducial members by the optical apparatus attached to the main spindle, the optical apparatus optically receives the returning light that is generated by irradiating each of at least one fiducial member, which is positioned on the workpiece placed on the stage, and at least three fiducial members, which are positioned on the stage or on the workpiece placed on the stage, of the at least four fiducial members with the measurement light.

A third aspect provides a machine tool including: the measurement system provided by the second aspect described above; the processing head; the stage; and a driving apparatus that moves at least one of the processing head and the placing apparatus.

A fourth aspect provides a measurement method that is used for a machine tool, wherein the machine tool processes a workpiece by the tool, which is attached to the main spindle of a processing head in a detachable manner, while moving at least one of a stage, on which the workpiece is placed, and the processing head, the measurement method includes: irradiating each of at least four fiducial members with measurement light by using an optical apparatus that is attached to the main spindle instead of the tool; optically receiving, by using the optical apparatus, returning light, which is generated by irradiating each of at least four fiducial members with the measurement light, from each of the at least four fiducial members; and calculating a position of the optical apparatus based on an optical received result of the returning light from each of the at least four fiducial members by the optical apparatus, each of the at least four fiducial members is positioned on the stage or on the workpiece placed on the stage, at least one fiducial member of the at least four fiducial members is positioned on the workpiece placed on the stage.

A fifth aspect provides a computer program that allows a computer to execute the measurement method provided by the fourth aspect described above.

A sixth aspect provides a recording medium recording thereon the computer program provided by the fifth aspect described above.

A seventh aspect provides an optical apparatus that is attached to a main spindle instead of a tool in a machine tool, wherein the machine tool processes a workpiece by a tool, which is attached to a main spindle of a processing head in a detachable manner, while moving at least one of a stage, on which the workpiece is placed, and the processing head, the optical apparatus includes: a direction change member that is configured to change a propagating direction of measurement light; and a light receiving unit that optically receives returning light, which is generated by irradiating each of at least four fiducial members with the measurement light whose propagating direction has been changed by the direction change member, from each of the at least four fiducial members, the light receiving unit optically receives the returning light that is generated by irradiating each of at least one fiducial member, which is positioned on the workpiece placed on the stage, and at least three fiducial members, which are positioned on the stage or on the workpiece placed on the stage, of the at least four fiducial members with the measurement light, and an optical received result of the returning light by the light receiving unit is used to calculate a position of the optical apparatus.

An eighth aspect provides a machine tool that processes a workpiece by a tool, which is attached to a main spindle of a processing head in a detachable manner, while moving at least one of a stage, on which the workpiece is placed, and the processing head, wherein the machine tool includes: a computing unit that calculates a position of the optical apparatus based on an optical received result by an optical apparatus that is attached to the main spindle instead of the tool and that optically receives returning light, which is generated by irradiating each of at least four fiducial members with the measurement light, from each of the at least four fiducial members, the computing unit calculates the position of the optical apparatus based on the optical received result of the returning light, which is generated by irradiating each of at least one fiducial member, which is positioned on the workpiece placed on the stage, and at least three fiducial members, which are positioned on the stage or on the workpiece placed on the stage, of the at least four fiducial members with the measurement light, by the optical apparatus.

A ninth aspect provides a measurement system that is used for a machine tool, wherein the machine tool processes a workpiece by a tool, which is attached to a main spindle of a processing head in a detachable manner, while moving at least one of a stage, on which the workpiece is placed, and the processing head, the measurement system includes: an optical apparatus that optically receives returning light, which is generated by irradiating a fiducial member with measurement light each time the stage or the processing head moves to each of a plurality of different positions, from the fiducial member in a situation where the main spindle is positioned in a first space that is different from a second space occupied by the workpiece placed on the stage; and a computing unit that calculates a position related to the main spindle in the first space based on an optical received result of the returning light from the fiducial member which is optically received by the optical apparatus each time the stage or the processing head moves to each of the plurality of different positions, and calculates a position related to the main spindle in the second space based on the calculated position related to the main spindle in the first space.

A tenth aspect provides a measurement system that is used for a machine tool, wherein the machine tool processes a workpiece by a tool, which is attached to a main spindle of a processing head in a detachable manner, while moving at least one of a stage, on which the workpiece is placed, and the processing head, the measurement system includes: an optical apparatus that is attached to the main spindle instead of the tool and that optically receives returning light, which is generated by irradiating measurement light onto a fiducial member that is positioned on the stage or on the workpiece placed on the stage, from the fiducial member; and a computing unit that calculates a position of the optical apparatus based on a temperature of at least one of the workpiece and the stage that is detected by a temperature detector, which is configured to detect the temperature of at least one of the workpiece and the stage, and an optical received result of the returning light from the fiducial member by the optical apparatus.

A eleventh aspect provides a measurement system that is used for a machine tool, wherein the machine tool processes a workpiece by a tool, which is attached to a main spindle of a processing head in a detachable manner, while moving at least one of a stage, on which the workpiece is placed, and the processing head, the measurement system includes: an optical apparatus that is attached to the main spindle instead of the tool and that optically receives returning light, which is generated by irradiating a fiducial member with measurement light, from the fiducial member; and a computing unit that calculates a position of the optical apparatus based on an optical received result of the returning light from the fiducial member by the optical apparatus attached to the main spindle, the optical apparatus includes a direction change member that is configured to change a propagating direction of the measurement light, the computing unit controls the direction change member so as to scan a first area, which is allowed to be irradiated with the measurement light by the direction change member changing the propagating direction of the measurement light, with the measurement light, the optical apparatus optically receives the returning light from the first area that is generated by scanning the first area with the measurement light, the computing unit calculates a direction of the fiducial member from the optical apparatus based on the optical received result of the returning light from the first area by the optical apparatus, and the computing unit controls the direction change member so as to irradiate the fiducial member with the measurement light based on the direction of the fiducial member.

A twelfth aspect provides a measurement system that is used for a machine tool, wherein the machine tool processes a workpiece by a tool, which is attached to a main spindle of a processing head in a detachable manner, while moving at least one of a stage, on which the workpiece is placed, and the processing head, the measurement system includes: an optical apparatus that is attached to the main spindle instead of the tool, that includes a direction change member configured to change a propagating direction of measurement light, and that optically receives returning light, which is generated by irradiating each of at least four fiducial members that are positioned on at least one of the stage and the workpiece with the measurement light whose propagating direction has been changed by the direction change member, from each of the at least four fiducial members; and a computing unit that calculates a distance between the optical apparatus and each of the at least four fiducial members based on an optical received result of the returning light from each of the at least four fiducial members by the optical apparatus, and generate information for controlling the machine tool based on the calculated distance.

A thirteenth aspect provides a machine tool that processes a workpiece by a tool, which is attached to a main spindle of a processing head in a detachable manner, while moving at least one of a stage, on which the workpiece is placed, and the processing head, the machine tool includes: a computing unit that calculates a distance between an optical apparatus and each of at least four fiducial members based on an optical received result by the optical apparatus that is attached to the main spindle instead of the tool and that optically receives returning light, which is generated by irradiating each of at least four fiducial members that are positioned on at least one of the stage and the workpiece with measurement light, from each of the at least four fiducial members, at least one of the stage and the processing head is controlled based on the calculated distance and a command value related to a movement of at least one of the stage and the processing head.

An operation and another advantage of the present invention will be apparent from an example embodiment described below.

Brief Description of Drawings

[FIG. 1] FIG. 1 is a perspective view that illustrates an exterior appearance of a processing system in a present example embodiment.
[FIG. 2] FIG. 2 is a system configuration diagram that illustrates a system configuration of the processing system in the present example embodiment.
[FIG. 3] FIG. 3 is a cross-sectional view that illustrates a configuration of a processing head in the present example embodiment.
[FIG. 4] FIG. 4 is a cross-sectional view that illustrates the configuration of the processing head in the present example embodiment.
[FIG. 5] FIG. 5 is a cross-sectional view that illustrates the processing head to which a measurement apparatus (especially, a measurement head) is attached in the present example embodiment.
[FIG. 6] FIG. 6 is a cross-sectional view that illustrates the processing head to which the measurement apparatus (especially, the measurement head) is attached in the present example embodiment
[FIG. 7] FIG. 7 is a cross-sectional view that illustrates an optical system that irradiates a measurement target object with measurement light and detects returning light from the measurement target object.
[FIG. 8] FIG. 8 is a cross-sectional view that illustrates a configuration of the optical system of the measurement head in the present example embodiment.
[FIG. 9] FIG. 9 is a cross-sectional view that illustrates a fiducial member and the measurement head that measures the fiducial member.
[FIG. 10] FIG. 10(a) is a top view that illustrates a plurality of fiducial members, and FIG. 10(b) is a side view that illustrates the plurality of fiducial members.
[FIG. 11] Each of FIG. 11(a) to FIG. 11(e) is a side view that illustrates the measurement head that irradiated the fiducial member with the measurement light.
[FIG. 12] FIG. 12 is a flowchart that illustrates a flow of a movement error calculation operation for calculating a movement error occurring in a translational movement of at least one of the processing head and a stage.
[FIG. 13] FIG. 13 schematically illustrates the measurement head that performs a global scan.
[FIG. 14] FIG. 14 schematically illustrates the measurement head that performs a local scan.
[FIG. 15] FIG. 15 illustrates a measurement coordinate system.
[FIG. 16] FIG. 16 illustrates the measurement coordinate system that moves due to a movement of the stage in a machine coordinate system.
[FIG. 17] FIG. 17 illustrates three measurement points and four fiducial members.
[FIG. 18] FIG. 18 illustrates a position of the measurement point in the measurement coordinate system.
[FIG. 19] FIG. 19 illustrates a position of the measurement point in the machine coordinate system.
[FIG. 20] FIG. 20 illustrates the movement error in the machine coordinate system.
[FIG. 21] FIG. 21 is a flowchart that illustrates a flow of a movement error calculation operation for calculating a movement error occurring in a rotational movement of at least one of the processing head and the stage.
[FIG. 22] FIG. 22 illustrates a positional relationship between the measurement head and the fiducial member.
[FIG. 23] FIG. 23 illustrates a position of the fiducial member in the machine coordinate system.
[FIG. 24] FIG. 24 illustrates the movement error in the machine coordinate system.
[FIG. 25] FIG. 25 is a cross-sectional view that illustrates a positional relationship among the stage, a workpiece, and the measurement head.

[FIG. 26] FIG. 26 is a cross-sectional view that illustrates a positional relationship among the stage, the workpiece, and the measurement head.

[FIG. 27] FIG. 27 illustrates the movement error calculated by an interpolation.

[FIG. 28] FIG. 28 is a cross-sectional view that illustrates a positional relationship among the stage, the workpiece, and the measurement head.

[FIG. 29] FIG. 29 illustrates the movement error calculated by an interpolation.

[FIG. 30] FIG. 30 is a cross-sectional view that illustrates a positional relationship among the stage, the workpiece, and the measurement head.

[FIG. 31] FIG. 31 illustrates a method of combining positions of the measurement points in a plurality of spaces.

[FIG. 32] FIG. 32(a) illustrates the measurement head in a first situation where the workpiece is not placed on the stage, and FIG. 32(b) illustrates the measurement head in a second situation where the workpiece is placed on the stage.

[FIG. 33] Each of FIG. 33(a) and FIG. 33(b) is a top view and a side view that illustrate a datum of the workpiece and the fiducial member.

[FIG. 34] Each of FIG. 34(a) and FIG. 34(b) is a side view and a top view that illustrate the datum of the workpiece and the fiducial member.

[FIG. 35] Each of FIG. 35(a) and FIG. 35(b) illustrates a datum point of the workpiece.

[FIG. 36] Each of FIG. 36(a) and FIG. 36(b) illustrates the datum point of the workpiece.

[FIG. 37] FIG. 37 illustrates the datum point of the workpiece.

[FIG. 38] FIG. 38 schematically illustrates a configuration of a processing system in a fourth modified example.

[FIG. 39] FIG. 39 is a cross-sectional view that illustrates one example of the measurement head of the processing system in the fourth modified example.

[FIG. 40] Each of FIG. 40(a) and FIG. 40(b) is a cross-sectional view that illustrates one example of the measurement head of the processing system in the fourth modified example.

[FIG. 41] FIG. 41 is a cross-sectional view that illustrates a positional relationship between the measurement head and the fiducial member2

[FIG. 42] Each of FIG. 42(a) and FIG. 42(b) is a cross-sectional view illustrating the stage that rotationally moves and the measurement head that follows the fiducial member placed on the rotationally moving stage.

[FIG. 43] FIG. 43 is a graph that illustrates a distance between the measurement head and the fiducial member, which is calculated based on the returning light from the fiducial member in a situation where the stage rotationally moves, with a movement trajectory of the fiducial member is associated with it.

[FIG. 44] FIG. 44 is a cross-sectional view that illustrates a first specific example of a measurement head in a seventh modified example.

[FIG. 45] Each of FIG. 45(a) and FIG. 45(b) is a cross-sectional view that illustrates a second specific example of the measurement head in the seventh modified example.

[FIG. 46] Each of FIG. 46(a) and FIG. 46(b) is a cross-sectional view that illustrates a third specific example of the measurement head in the seventh modified example.

[FIG. 47] FIG. 47 is a cross-sectional view that illustrates a fourth specific example of the measurement head in the seventh modified example.

[FIG. 48] FIG. 48 is a cross-sectional view that illustrates a fifth specific example of the measurement head in the seventh modified example.

[FIG. 49] FIG. 49 is a cross-sectional view that illustrates a sixth specific example of the measurement head in the seventh modified example.

[FIG. 50] FIG. 50 illustrates a pivot point that is positioned at a potion that is away from a rotational axis of main spindle.

[FIG. 51] Each of FIG. 51(a) to FIG. 51(c) is a cross-sectional view that illustrates an aspect in which a posture of the main spindle changes in a situation where the pivot point is positioned on the rotational axis of the main spindle.

[FIG. 52] Each of FIG. 52(a) to FIG. 52(c) is a cross-sectional view that illustrates an aspect in which the posture of the main spindle changes in a situation where the pivot point is positioned at a position that is away from the rotational axis of the main spindle.

[FIG. 53] FIG. 53 is a cross-sectional view that illustrates a configuration of a measurement apparatus in a ninth modified example.

[FIG. 54] FIG. 54 is a cross-sectional view that illustrates a configuration of a first specific example of the measurement apparatus in the ninth modified example.

[FIG. 55] FIG. 55 is a cross-sectional view that illustrates a configuration of a second specific example of the measurement apparatus in the ninth modified example.

[FIG. 56] FIG. 56 is a cross-sectional view that illustrates a configuration of a third specific example of the measurement apparatus in the ninth modified example.

[FIG. 57] FIG. 57 is a cross-sectional view that illustrates the measurement head that repeats a unit measurement operation for irradiating the fiducial member with the measurement light and optically receiving the returning light from the fiducial member.

[FIG. 58] FIG. 58 is a cross-sectional view that illustrates the measurement head that repeats the unit measurement operation for irradiating the fiducial member with the measurement light and optically receiving the returning light from the fiducial member.

[FIG. 59] FIG. 59 is a block diagram that illustrates a system configuration of a processing system in an eleventh modified example.

[FIG. 60] FIG. 60 is a cross-sectional view that illustrates the workpiece that thermally expands.

[FIG. 61] Each of FIG. 61(a) to FIG. 61(d) is a cross-sectional view that illustrates one example of a temperature sensor.

[FIG. 62] Each of FIG. 62(a) and FIG. 62(b) is a cross-sectional view that illustrates the workpiece placed on the stage through a support member.

[FIG. 63] FIG. 63 is a cross-sectional view that illustrates a positional relationship between the fiducial member FM and each of the measurement head and the processing head.

[FIG. 64] FIG. 64 is a cross-sectional view that illustrates a positional relationship between the fiducial member FM and each of the measurement head and the processing head.

[FIG. 65] FIG. 65 is a block diagram that illustrates a system configuration of a processing system in a twelfth modified example.

[FIG. 66] FIG. 66 is a block diagram that illustrates a system configuration of a processing system in a thirteenth modified example.

[FIG. 67] FIG. 67 is a block diagram that illustrates a system configuration of a processing system in a fifteenth modified example.

Description of Example embodiments

Next, with reference to drawings, an example embodiment of a measurement system, a machine tool, an optical apparatus, a measurement method, a computer program, and a recording medium will be described. In the below described description, the example embodiment of the measurement system, the machine tool, the optical apparatus, the measurement method, the computer program, and the recording medium will be described by using a processing system SYS that is configured to process a workpiece W that is one example of an object.

Incidentally, in the below-described description, a positional relationship of various components included in the processing system SYS will be described by using a machine coordinate system that is an XYZ rectangular coordinate system that is defined by an X-axis, a Y-axis and a Z-axis that are perpendicular to one another. Incidentally, in the below-described description, an example in which each of an X-axis direction and a Y-axis direction in the machine coordinate system is a horizontal direction (namely, a predetermined direction in a horizontal plane) and a Z-axis direction is a vertical direction (namely, a direction that is perpendicular to the horizontal plane, and substantially a vertical direction) will be described for convenience of the description. Moreover, rotational directions (in other words, inclination directions) around the X-axis, the Y-axis and the Z-axis may be referred to as a $\theta X$ direction, a $\theta Y$ direction and a $\theta Z$ direction, respectively.

Moreover, in the below-described description, the X-axis, the Y-axis, and the Z-axis mean the X-axis in the machine coordinate system, the Y-axis in the machine coordinate system, and the Z-axis in the machine coordinate system, respectively, in a case where there is no notation.

## (1) Configuration of Mahine Tool 1

Firstly, a configuration of the processing system SYS in the present example embodiment will be described.

## (1-1) Entire Configuration of Processing System SYS

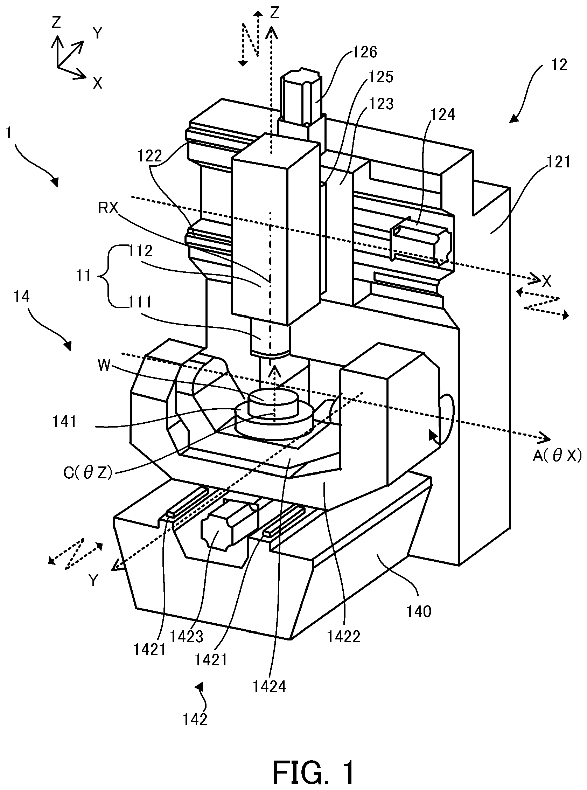

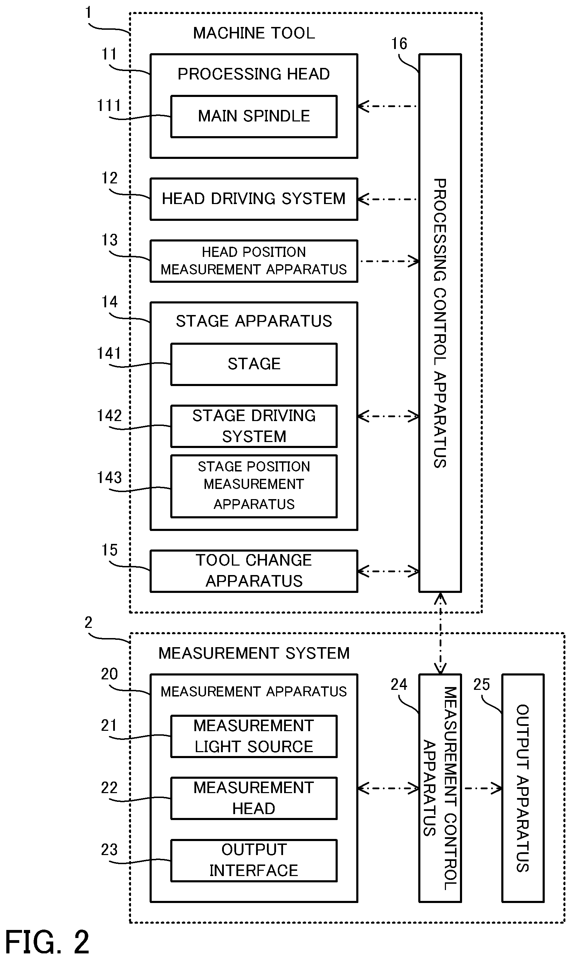

Firstly, with reference to FIG. 1 and FIG. 2, an entire configuration of the processing system SYS in the present example embodiment will be described. FIG. 1 is a perspective view that illustrates an exterior appearance of the processing system SYS (especially, a machine tool 1) in the present example embodiment. FIG. 2 is a block diagram that illustrates one example of a system configuration of the processing system SYS in the present example embodiment.

As illustrated in FIG. 1 and FIG. 2, the processing system SYS includes a machine tool 1 and a measurement system 2. Incidentally, the measurement system 2 is not illustrated in FIG. 1 for a visibility of drawings. Therefore, FIG. 1 may be considered to mainly illustrates an external appearance of the machine tool 1. Moreover, an apparatus including at least a part of the measurement system 2 and the machine tool 1 may be referred to as a machine tool. Namely, the machine tool 1 may include at least a part of the measurement system 2.

## (1-1-1) Configuration of Machine Tool 1

The machine tool 1 includes a processing head 11, a head driving system 12, a head position measurement apparatus 13, a stage apparatus 14, a tool change apparatus 15, and a processing control apparatus 16.

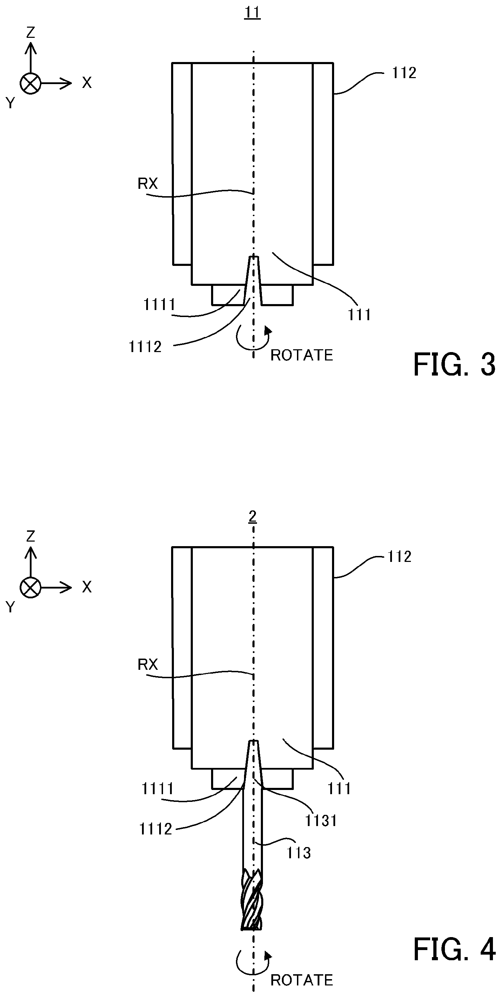

The processing head 11 is a processing apparatus for processing the workpiece W. The processing head 11 includes a main spindle 111 and a head housing 112. In the below-described description, the processing head 11 will be described with reference to FIG. 3 to FIG. 4, in addition to FIG. 1 and FIG. 2. Each of FIG. 3 and FIG. 4 is a cross-sectional view that illustrates a configuration of the processing head 11. Note that the processing head 11 may be referred to simply as a head. Incidentally, FIG. 1 illustrates a vertical machine tool as one example, but the machine tool 1 is not limited to the vertical machine tools. The machine tool 1 may be any machine tool that is well-known. For example, the machine tool 1 may be a horizontal machine tool or a multi-tasking machine tool.

As illustrated in FIG. 1 and FIG. 3 to FIG. 4, the main spindle 111 is a member that is rotatable around a rotational axis RX. In this case, the main spindle 111 may be a member extending along the rotational axis RX (namely, a member having a longitudinal shape) , for example. In an example illustrated in FIG. 1, the rotational axis RX of the main spindle 111 is parallel to the Z-axis. However, the main spindle 111 may rotate around the rotational axis RX that intersects the Z-axis (for example, the rotational axis RX that is orthogonal to the Z-axis or inclined with respect to the Z-axis).

A tool 113 for processing the workpiece W (namely, a tool for processing) is attachable to the main spindle 111, as illustrated in FIG. 4. Specifically, as illustrated in FIG. 3 and FIG. 4, the main spindle 111 has an attachment part 1111 to which the tool 113 is attached. The tool 113 is attached to the main spindle 111 through the attachment part 1111. The tool 113 attached to the attachment part 1111 is detachable from the attachment part 1111. Namely, the tool 113 is detachably attached to the main spindle 111.

Note that a state in which "a first object is attached to a second object" in the present example embodiment includes at least one of a state in which "the first object is directly attached to the second object (namely, the first object is attached to the second object so that the first object and the second object are in contact)" and a state in which "the first object is indirectly attached to the second object (namely, the first object and the second object are not in contact)". The state in which "the first object is indirectly attached to the second object" may include a state in which "the first object is attached to the second object through a third object that is different from the first and second objects".

In the example illustrated in FIG. 3 and FIG. 4, the main spindle 111 includes the attachment part 1111 with a hole 1112 (for example, a tapered hole), which is formed at an end of the main spindle 111 (specifically, at an end on the workpiece W side), into which the tool 113 is fitted (alternatively, inserted). In this case, the tool 113 is attached to the main spindle 111 by a shank 1131 of the tool 113, which has a shape complementary to the hole 1112, being fitted into (alternatively, inserted into) the hole 1112 of the attachment part 1111. The attachment part 1111 may hold the tool 113 attached to the attachment part 1111. In this case, the attachment part 1111 may include at least one of a mechanical chuck, a hydraulic chuck, an electrostatic chuck, a vacuum suction chuck, and the like to hold the tool 113.

In a case where the main spindle 111 rotates in a state where the tool 113 is attached to the main spindle 111, the tool 113 also rotates around the rotational axis RX. As a result, the workpiece W is processed by the rotating tool 113 contacting the workpiece W. In this manner, the machine tool 1 (especially, the processing head 11) may machine (machining-process) the workpiece W by using the main spindle 111 and the tool 113.

The head housing 112 is a housing for containing the main spindle 111. The head housing 112 may contain the main spindle 111 in a containing space formed inside the head housing 112. The main spindle 111 contained in the head housing 112 may be supported by the head housing 112 through a non-illustrated bearing member (for example, a bearing).

In FIG. 1 and FIG. 2 again, the head driving system 12 moves the processing head 11. Note that the head driving system 12 may be referred to as a driving apparatus. The head driving system 12 may move the processing head 11 along at least one of the X-axis, the Y-axis, and the Z-axis, for example. Namely, the head driving system 12 may move the processing head 11 along at least one translational axis of a translational axis along the X-axis, a translational axis along the Y-axis, and a translational axis along the Z-axis, for examples. Incidentally, a movement along at least one of the translational axis along the X-axis, the translational axis the Y-axis, and the translational axis the Z-axis may be referred to as a translational movement. Moreover, in the below-described description, the translational axis along the X-axis, the translational axis along the Y-axis, and the translational axis along the Z-axis are referred to as a translational axis (X), a translational axis (Y), and a translational axis (Z), respectively. Moreover, in the below-described description, the translational axis may mean at least one of the translational axis (X), the translational axis (Y), and the translational axis (Z) in a case where there is no notation.

The head driving system 12 may move the processing head 11 along at least one of the θX direction, the θY direction, and the θZ direction, in addition to or instead of at least one of the translational axis along the X-axis, the translational axis along the Y-axis, and the translational axis along the Z-axis, for example. Namely, the head driving system 12 may rotate the processing head 11 around at least one of a rotational axis along the X-axis, a rotational axis along the Y-axis, and a rotational axis along the Z-axis, in addition to or instead of moving the processing head 11 along at least one of the translational axis along the X-axis, the translational axis along the Y-axis, and the translational axis along the Z-axis, for example. Note that the movement along at least one of the θX direction (a direction around the rotational axis along the X-axis), the θY direction (a direction around the rotational axis along the Y-axis), and the θZ direction (a direction around the rotational axis along the Z-axis) may be referred to as a rotational movement. Moreover, in the below-described description, the rotational axis along the X-axis, the rotational axis along the Y-axis, and the rotational axis along the Z-axis are referred to as a rotational axis (X), a rotational axis (Y), and a rotational axis (Z), respectively. Moreover, in the below-described description, the rotational axis may mean at least one of the rotational axis (X), the rotational axis (Y) and the rotational axis (Z) in a case where there is no notation. Incidentally, an operation for moving the processing head 11 along a rotational direction around the rotational axis may be considered to be equivalent to an operation for changing a posture of the processing head 11.

In the example illustrated in FIG. 1, the head driving system 12 moves the processing head 11 along each of the translational axis (X) and the translational axis (Z). In this case, the head driving system 12 may include: a column 121 that is a wall-like member extending upwardly along the Z-axis from a bead 140 that is a base of the stage apparatus 14 described below; an X guide member 122 that is attached to (alternatively, formed on) the column 121 and that extends along the X-axis; an X block member 123 that is attached to the X guide member 122 and that is movable along the X guide member 122; a servomotor 124 that generates a driving force for moving the X block member 123; a Z guide member 125 that is attached to (alternatively, formed on) the X block member 123 and that extends along the Z-axis; the Z block member (it is not illustrated in FIG. 1) that is attached to the Z guide member 125 and that is movable along the Z guide member 125; and a servomotor 126 that generates a driving force for moving the Z block member, for example. The processing head 11 (especially, the head housing 112) may be attached to the Z-block member. As a result, the processing head 11 moves in the X-axis due to the movement of the X block member 123 and moves in the Z-axis due to the movement of the Z-block member.

When the head driving system 12 moves the processing head 11, a relative positional relationship between the processing head 11 and a below-described stage 141 (furthermore, the workpiece W placed on the stage 141) changes. Therefore, the relative positional relationship between a processing position at which the processing head 11 performs the processing and the workpiece W changes. Namely, the processing position moves relative to the workpiece W. The machine tool 1 may process the workpiece W while moving the processing head 11. Specifically, the machine tool 1 may process a desired position of the workpiece W while setting the processing position at the desired position of the workpiece W by moving the processing head 11. However, in a case where the processing position may be set at the desired position of the workpiece W by moving the below-described stage 141, the machine tool 1 may process the workpiece W without moving the processing head 11.

The head position measurement apparatus 13 is configured to measure a position of the processing head 11. An encoder is one example of the head position measurement apparatus 13.

The stage apparatus 14 includes the bead 140, the stage 141, a stage driving system 142, and a position measurement apparatus 143. The stage 141 and the stage driving system 142 are supported by the bead 140.

The workpiece W is placed on the stage 141.

Therefore, the stage 141 may be referred to as a placing apparatus. The stage 141 is configured to support the workpiece W placed on the stage 141. The stage 141 may be configured to hold the workpiece W placed on the stage 141. In this case, the stage 141 may include at least one of a mechanical chuck, an electrostatic chuck, a vacuum suction chuck, and the like to hold the workpiece W.

The stage 141 is positioned at a position at which it can face the processing head 11 (especially, the main spindle 111). In the example illustrated in FIG. 1, the stage 141 is positioned below the processing head 11 (especially, the main spindle 111). However, the stage 141 may be positioned at a position that is different from the position below the processing head 11 (especially, the main spindle 111).

The stage driving system 142 moves the stage 141. Note that the stage driving system 142 may be referred to as a driving apparatus. The stage driving system 142 may move the stage 141 along at least one of the X-axis, the Y-axis, and the Z-axis, for example. Namely, the stage driving system 142 may move the stage 141 along at least one of the translational axis (X), the translational axis (Y), and the translational axis (Z).

The stage driving system 142 may move the stage 141 along at least one of the $\theta X$ direction, the $\theta Y$ direction, and the $\theta Z$ direction, in addition to or instead of at least one of the translational axis (X), the translational axis (Y), and the translational axis (Z), for example. Namely, the stage driving system 142 may rotate the stage 141 around at least one rotational axis of the rotational axis (X), the rotational axis (Y), and the rotational axis (Z), in addition to or instead of moving the stage 141 along at least one of the translational axis (X), the translational axis (Y), and the translational axis (Z), for example. Incidentally, an operation for moving the stage 141 along the rotational direction around at least one rotational axis of the rotational axis (X), the rotational axis (Y), and the rotational axis (Z) may be regarded to be equivalent to an operation for changing a posture of the stage 141.

In the example illustrated in FIG. 1, the stage driving system 142 moves the stage 141 along the translational axis (Y) and rotates the stage 141 around each of the rotational axis (X) and the rotational axis (Z). In this case, the stage driving system 142 may include: a Y-guide member 1421 that is attached to (alternatively, formed on) the bead 140 and that extends along the Y-axis; a trunnion (a Y-block member) 1422 that is attached to the Y-guide member 1421 and that is movable along the Y-guide member 1421; a servomotor 1423 that generates a driving force for moving the trunnion 1422; a cradle 1424 that is attached to the trunnion 1422 and that is rotatable around the rotational axis (X) relative to the trunnion 1422; and an non-illustrated servomotor that generates a driving force for rotating the cradle 1424, for example. The stage 141 may be attached to the cradle 1424 so that it is rotatable around the rotational axis (Z) relative to the cradle 1424 by using a driving force generated by a non-illustrated servo motor. As a result, the stage 141 moves along the translational axis (Y) due to the movement of the trunnion 1422, rotates around the rotational axis (X) due to the rotation of the cradle 1424, and rotates around the rotational axis (Z). Incidentally, the rotational axis (X) may be referred to as an A-axis. Moreover, the rotational axis (Z) may be referred to as a C-axis.

When the stage driving system 142 moves the stage 141, the relative positional relationship between the processing head 11 and the stage 141 (furthermore, the workpiece W placed on the stage 141) changes. Therefore, the relative positional relationship between the processing position at which the processing head 11 performs the processing and the workpiece W changes. Namely, the processing position moves relative to the workpiece W. The machine tool 1 may process the workpiece W while moving the stage 141. Specifically, the machine tool 1 may process a desired position of the workpiece W while setting the processing position at the desired position of the workpiece W by moving the stage 141. However, in a case where the processing position may be set at the desired position of the workpiece W by moving the above-described processing head 11, the machine tool 1 may process the workpiece W without moving the stage 141.

The position measurement apparatus 143 is configured to measure a position of stage 141. An encoder is one example of the position measurement apparatus 143.

The tool change apparatus 15 is an apparatus that is configured to change the tool 113 attached to the main spindle 111. For example, the tool change apparatus 15 may pick-up one tool 113 that should be attached to the main spindle 111 from a non-illustrated tool magazine containing a plurality of tools 113, and attach the picked-up one tool 113 to the main spindle 111. Namely, the tool change apparatus 15 may serve as an attachment apparatus that is configured to attach the tool 113 to the main spindle 111. The tool change apparatus 15 may detach the tool 113 attached to the main spindle 111 from the main spindle 111, and store the detached tool 113 in the non-illustrated tool magazine. Namely, the tool change apparatus 15 may serve as a detachment apparatus that is configured to detach the tool 113 from the main spindle 111. Note that an automatic tool changer (ATC: Automatic Tool Changer) used in a machining center or the like may be used as the tool change apparatus 15.

The processing control apparatus 16 controls an operation of the machine tool 1. For example, the processing control apparatus 16 may control an operation of the processing head 11 of the machine tool 1 (for example, the rotation of the main spindle 111). For example, the processing control apparatus 16 may control an operation of the head driving system 12 of the machine tool 1 (for example, the movement of the processing head 11). For example, the processing control apparatus 16 may control an operation of the stage driving system 142 of the machine tool 1 (for example, the movement of the stage 141). For example, the processing control apparatus 16 may control an operation of the tool change apparatus 15 of the machine tool 1 (namely, the change of the tool 113 and a measurement head 22 attached to the main spindle 111).

The processing control apparatus 16 may include a computing apparatus and a storage apparatus, for example. The processing control apparatus 16 including the computing apparatus may be referred to as an arithmetic unit. The computing apparatus may include at least one of a CPU (Central Processing Unit) and a GPU (Graphical Processing Unit), for example. The storage apparatus may include a memory, for example. The processing control apparatus 16 serves as an apparatus for controlling the operation of the machine tool 1 by means of the computing apparatus executing a computer program. The computer program is a computer program that allows the processing control apparatus 16 (for example, the computing apparatus) to perform (namely, to execute) a below-described operation that should be performed by the processing control apparatus 16. Namely, the computer program is a computer program that allows the processing control apparatus 16 to function so as to make the machine tool 1 perform the below-described operation. The computer program executed by the computing apparatus may be recorded in the storage apparatus (namely, a recording medium) of the processing control apparatus 16, or may be recorded in any recording medium (for example, a hard disk or a semiconductor memory) that is built in the processing control apparatus 16 or that is attachable to the processing control apparatus 16. Alternatively, the computing apparatus may download the computer program that should be executed from an apparatus positioned outside the processing control apparatus 16 through a network interface. Incidentally, the processing control apparatus 16 may not include the storage apparatus.

The processing control apparatus 16 may not be positioned in the machine tool 1, and may be positioned outside the machine tool 1 as a server or the like. In this case, the processing control apparatus 16 may be connected to the machine tool 1 through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the processing control apparatus 16 and the machine tool 1 may be configured to transmit and receive various information through the network. Moreover, the processing control apparatus 16 may be configured to transmit information such as a command and a control parameter to the machine tool 1 through the network. The machine tool 1 may include a receiving apparatus that receives the information such as the command and the control parameter from the processing control apparatus 16 through the network. The machine tool 1 may include a transmitting apparatus that transmits the information such as the command and the control parameter to the processing control apparatus 16 (namely, an output apparatus that outputs the information to the processing control apparatus 16) through the network. Alternatively, a first control apparatus that performs a part of the processing performed by the processing control apparatus 16 may be positioned in the machine tool 1 and a second control apparatus that performs another part of the processing performed by the processing control apparatus 16 may be positioned outside the machine tool 1.

An arithmetic model that is buildable by machine learning may be implemented in the processing control apparatus 16 by the computing apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The processing control apparatus 16 may control the operation of the machine tool 1 by using the arithmetic model. Namely, the operation for controlling the operation of the machine tool 1 may include an operation for controlling the operation of the machine tool 1 by using the arithmetic model. Note that the arithmetic model that has been built by off-line machine learning using training data may be implemented in the processing control apparatus 16. Moreover, the arithmetic model implemented in the processing control apparatus 16 may be updated by online machine learning on the processing control apparatus 16. Alternatively, the processing control apparatus 16 may control the operation of the machine tool 1 by using the arithmetic model implemented in an apparatus positioned outside the processing control apparatus 16 (namely, an apparatus positioned outside the machine tool 1), in addition to or instead of the arithmetic model implemented on the processing control apparatus 16.

Note that the recording medium recording therein the computer program that should be executed by the processing control apparatus 16 may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the processing control apparatus 16 by means of the processing control apparatus 16 (namely, a computer) executing the computer program, may be realized by a hardware such as a predetermined gate array (a FPGA (Field Programmable Gate Array), an ASIC (Application Specific Integrated Circuit)) of the processing control apparatus 16, or may be realized in a form in which the logical process block and a partial hardware module that realizes an partial element of the hardware are combined.

## (1-1-2) Configuration of Measurement System 2

The measurement system 2 is configured to measure a measurement target object. In order to measure the measurement target object, the measurement system 2 includes a measurement apparatus 20 and a measurement control apparatus 24.

The measurement apparatus 20 is configured to measure the measurement target object. For example, the measurement apparatus 20 may be configured to measure a characteristic of the measurement target object. The characteristic of the measurement target object may include at least one of a position of the measurement target object, a shape of the measurement target object, a distance between the measurement apparatus 20 and the measurement target object, a posture of the measurement target object viewed from the measurement apparatus 20, a reflectance of the measurement target object, a transmittance of the measurement target object, a temperature of the measurement target object, an inner structure of the measurement target object, and a surface roughness of the measurement target object, for example.

In the below-described description, an example in which the measurement apparatus 20 measures at least the position of the measurement target object will be described. The position of the measurement target object may include a position of a surface of the measurement target object. The position of the surface of the measurement target object may include a position of at least a part of the surface of the measurement target object. Incidentally, the position of the measurement target object may mean a position (namely, tan absolute position) of the measurement target object in the machine coordinate system used as a base in the processing system SYS.

Alternatively, the position of the measurement target object may mean a position (namely, a relative position) of the measurement target object relative to the measurement apparatus 20. Alternatively, the position of the measurement target object may mean a position of the measurement target object in a measurement coordinate system that is used in the measurement apparatus 20 as a coordinate system different from the machine coordinate system.

Incidentally, in the present example embodiment as described in more detail later, in order to measure the position of the measurement target object, the measurement apparatus 20 measures the distance between the measurement apparatus 20 and the measurement target object (specifically, a distance between the below-described measurement head 22 and the measurement target object), and the measurement control apparatus 24 calculates the position of the measurement target object based on the distance. Therefore, an operation for measuring at least the position of the measurement target object may be considered to mean an operation for measuring the distance between the measurement head 22 and the measurement target object, which is necessary to calculate the position of the measurement target object.

The position of the surface of the measurement target object changes depending on a shape of the surface of the measurement target object. Therefore, the operation for measuring the position of the measurement target object may be considered to be equivalent to an operation for measuring the shape of the measurement target object. The shape of the measurement target object may include at least one of a one-dimensional shape, a two-dimensional shape, and a three-dimensional shape of the measurement target object.

The measurement target object may include the workpiece W processed by the processing head 11, for example. The measurement target object may include any object placed on the stage 141, for example. The object placed on the stage 141 may include the workpiece W, for example. The measurement target object may include a fiducial member FM that is used in a below-described movement error calculation operation. The measurement target object may include the stage 141, for example.

The measurement apparatus 20 may be configured to measure the measurement target object in a non-contact manner. The measurement apparatus 20 may be configured to optically measure the measurement target object. The measurement apparatus 20 may be configured to electrically measure the measurement target object. The measurement apparatus 20 may be configured to magnetically measure the measurement target object. The measurement apparatus 20 may be configured to thermally measure measurement target object. The measurement apparatus 20 may be configured to acoustically measure the measurement target object. The measurement apparatus 20 may be configured to measure the measurement target object by using a probe that physically contacts with the measurement target object.

In the below-described description, an example where the measurement apparatus 20 is configured to optically measure the measurement target object. In this case, the measurement apparatus 20 may be referred to as an optical measurement apparatus. Specifically, in the below-described description, an example in which the measurement apparatus 20 measures the measurement target object by irradiating the measurement target object with measurement light ML and optically receiving at least a part of light from the measurement target object irradiated with the measurement light ML. The light from the measurement target object irradiated with the measurement light ML is light from the measurement target object generated by the irradiation of the measurement light ML. In the below-described explanation, light, which enters the measurement apparatus 20 (namely, is optically received by the measurement apparatus 20), of the light from the measurement target object irradiated with the measurement light ML is referred to as "returning light RL".

Incidentally, the light from the measurement target object generated by the irradiation of the measurement light ML may include specular reflection light that is generated at the measurement target object by the irradiation of the measurement light ML. The light from the measurement target object generated by the irradiation of the measurement light ML may include diffused reflection light that is generated at the measurement target object by the irradiation of the measurement light ML, in addition to or instead of the specular reflection light. The light from the measurement target object generated by the irradiation of the measurement light ML may include diffraction light generated at the measurement target object by the irradiation of the measurement light ML, in addition to or instead of at least one of the specular reflection light and the diffused reflection light.

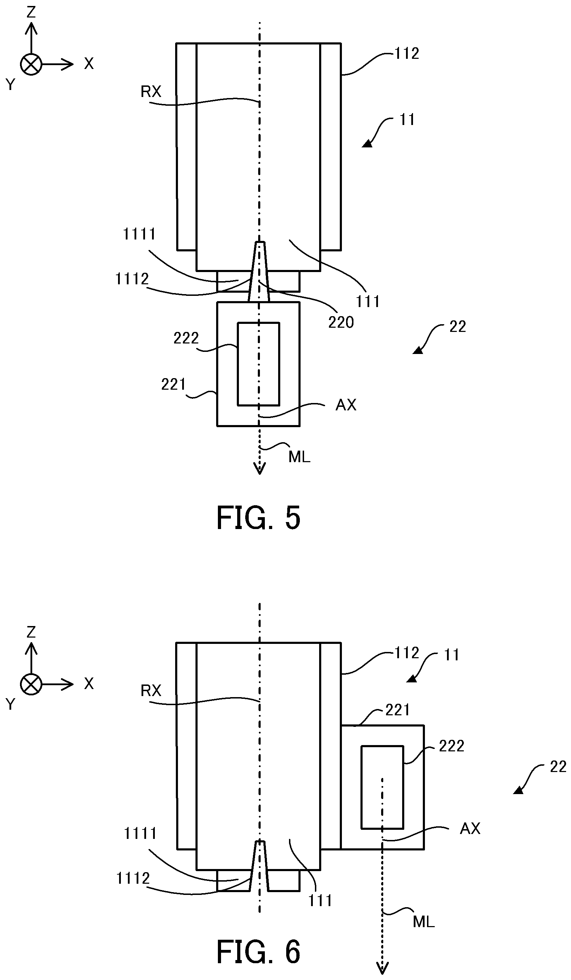

In the present example embodiment, in order to optically measure the measurement target object, the measurement apparatus 20 may include a measurement light source 21, a measurement head 22, and an output interface 23, for example. Incidentally, a configuration and an operation of the measurement apparatus 20 will be described in detail later, however, an overview thereof will be briefly described here. The measurement light source 21 is configured to generate the measurement light ML. The measurement head 22 is attached to the processing head 11. Namely, the measurement head 22 is positioned on the processing head 11. The measurement head 22 attached to the processing head 11 may be fixed to the processing head 11. The measurement head 22 attached to the processing head 11 may be detachable from the processing head 11. Incidentally, although the measurement head 22 attached to the processing head 11 is not illustrated in FIG. 1 for a simplification of a drawing, the measurement head 22 attached to the processing head 11 is illustrated in FIG 5 to FIG. 6 and so on for describing the configuration and the operation of the measurement apparatus 20 in detail later. The measurement head 22 irradiates the measurement target object with the measurement light ML. Furthermore, the measurement head 22 optically receives the returning light RL from the measurement target object irradiated with the measurement light ML. Therefore, the measurement head 22 may be referred to as an optical apparatus. The output interface 23 is configured to output a measured result of the measurement target object by the measurement apparatus 20 (namely, an optical received result of the returning light RL from the measurement target object) to the measurement control apparatus 24.

The measurement apparatus 20 may not include the measurement light source 21. For example, the measurement light source 21 may be a light source that is positioned outside the measurement apparatus 20. For example, the measurement light source 21 may be positioned outside the machine tool 1. For example, the measurement light source 21 may be positioned outside the measurement system 2. For example, the measurement light source 21 may be positioned outside the measurement apparatus 20 (typically, outside the measurement system 1) and at a predetermined position inside the machine tool 1. A predetermined position inside or outside a housing that contains at least one of the processing head 11, the head driving system 12, the stage apparatus 14, and the processing control apparatus 16 of the machine tool 1 is one example of the predetermined position that is outside the measurement apparatus 20 (typically, outside the measurement system 1) and inside the machine tool 1. For example, the measurement light source 21 may be positioned outside the measurement apparatus 20 and at a predetermined position inside the measurement system 2. A predetermined position inside or outside a housing that contains the measurement control apparatus 24 of the measurement system 2 is one example of the predetermined position that is outside the measurement apparatus 20 and inside the measurement system 2. In this case, the measurement head 22 of the measurement apparatus 20 may irradiate the measurement target object with the measurement light ML generated by the measurement light source 21 positioned outside the measurement apparatus 20.

In the present example embodiment, the measurement head 22 may be attached to the main spindle 111 of the machine tool 1, as described in detail later. Namely, the measurement head 22 of the measurement apparatus 20 may be attached to the main spindle 111 instead of the tool 113. In this case, the tool change apparatus 15 may serve as an attachment apparatus that is configured to attach the measurement head 22 to the main spindle 111. Namely, the tool change apparatus 15 may pick-up the measurement head 22 from the non-illustrated tool magazine containing not only the tool 113 but also the measurement head 22 (alternatively, a non-illustrated head magazine containing the measurement head 22 that is different from the tool magazine containing the tool 113), and attach the picked-up measurement head 22 to the main spindle 111. Moreover, the measurement head 22 may be serve as a detachment apparatus that is configured to detach the measurement head 22 from the main spindle 111. Namely, the tool change apparatus 15 may detach the measurement head 22 attached to the main spindle 111 from the main spindle 111, and store the detached measurement head 22 in the non-illustrated tool magazine or the non-illustrated head magazine.

The measurement control apparatus 24 controls an operation of the measurement system 2. For example, the measurement control apparatus 24 may control the measurement apparatus 20 so as to measure the measurement target object. Furthermore, since the measurement head 22 is attached to the machine tool 1 (especially, the main spindle 111) as described above, the head driving system 12 of the machine tool 1 moves the measurement head 22. Therefore, the measurement control apparatus 24 may control the machine tool 1 (especially, the head driving system 12) together with the processing control apparatus 16 so that the measurement apparatus 20 moves to a desired position. Namely, the measurement control apparatus 24 may control the movement of the processing head 11 together with the processing control apparatus 16. Furthermore, in a case where the measurement target object moves together with the stage 141, the measurement control apparatus 24 may control the machine tool 1 (especially, the stage driving system 142) together with the processing control apparatus 16 so that the measurement target object moves to a desired position. Namely, the measurement control apparatus 24 may control the movement of the stage 141 together with the processing control apparatus 16.

Incidentally, since the measurement head 22 is attached to the machine tool 1 (the main spindle 111), the measurement control apparatus 24 may not control the head driving system 12. In this case, the processing control apparatus 16 may control the head driving system 12. Moreover, since the measurement head 22 is attached to the machine tool 1 (the main spindle 111), the processing control apparatus 16 may not control the head driving system 12. In this case, the measurement control apparatus 24 may control the head driving system 12. Moreover, the measurement control apparatus 24 may not control the stage driving system 142. In this case, the processing control apparatus 16 may control the stage driving system 142. Moreover, the processing control apparatus 16 may not control the stage driving system 142. In this case, the measurement control apparatus 24 may control the stage driving system 142.

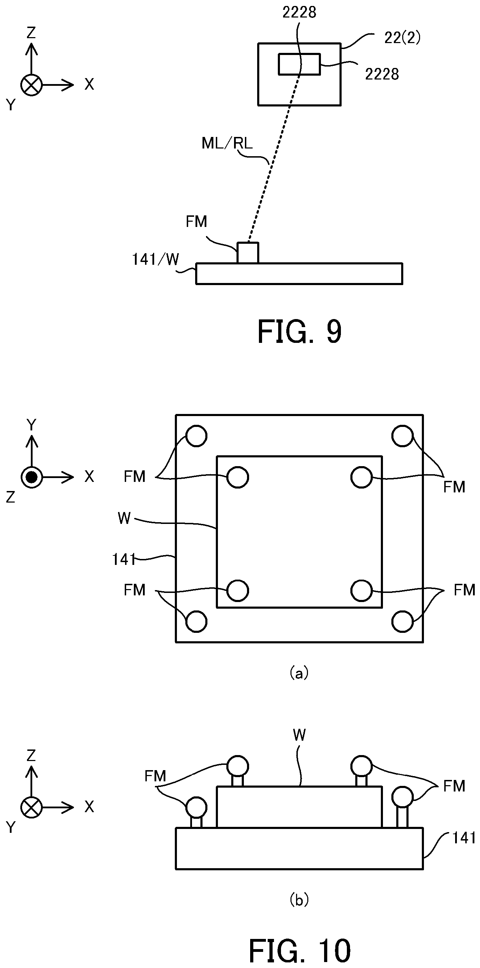

In the present example embodiment, the measurement control apparatus 24 performs the movement error calculation operation. The movement error calculation operation may include an operation for calculating a movement error (in other words, a motion error) occurring in a movement of at least one of the processing head 11 and the stage 141 based on the measured result of the measurement target object by the measurement head 22. The movement error calculation operation may include an operation for generating, as information for controlling the machine tool 1, information related to the movement error occurring in the movement of at least one of the processing head 11 and the stage 141 based on the measured result of the measurement target object by the measurement head 22. The movement error calculation operation may include an operation for generating the information for controlling the machine tool 1 (especially, information that is different from the information related to the movement error) based on the calculated movement error (the generated information related to the movement error). In this case, the measurement control apparatus 24 may output the generated information to the processing control apparatus 16. The processing control apparatus 16 may control the machine tool 1 based on the information. Incidentally, the movement error calculation operation will be described in detail later with reference to FIG. 9 and so on, so a description thereof is omitted here. Incidentally, the movement error may also be referred to as a volumetric accuracy.

Incidentally, the measurement control apparatus 24 that performs the movement error calculation operation may be referred to as a movement error computing apparatus, a computing apparatus, or a computing apparatus. The measurement system 2 that includes the measurement apparatus 20 and the measurement control apparatus 24 may be referred to as a movement error calculation system, a calculation system, or an arithmetic system. A system that includes the measurement control apparatus 24 and the below-described fiducial member FM, which is used to perform the movement error calculation operation may be referred to as a movement error calculation system, a calculation system, or an arithmetic system. The system that includes the measurement control apparatus 24 and the fiducial member FM may be referred to as the measurement system 2. A system that includes the fiducial member FM, the measurement apparatus 20, and the measurement control apparatus 24 may be referred to as a movement error calculation system, a calculation system, or an arithmetic system. The system that includes the fiducial member FM, the measurement apparatus 20, and the measurement control apparatus 24 may be referred to as the measurement system 2. A system that includes the measurement head 22 and the measurement control apparatus 24 may be referred to as the measurement system 2.

The measurement control apparatus 24 may include a computing apparatus and a storage apparatus, for example. The measurement control apparatus 24 including the computing apparatus may be referred to as an arithmetic unit. The computing apparatus may include at least one of a CPU (Central Processing Unit) and a GPU (Graphical Processing Unit), for example. The storage apparatus may include a memory, for example. The measurement control apparatus 24 serves as an apparatus for controlling the operation of the measurement apparatus 20 by means of the computing apparatus executing a computer program. Furthermore, in a case where the measurement control apparatus 24 controls the operation of at least a part of the machine tool 1 (for example, at least one of the head driving system 12 and the stage driving system 142), the measurement control apparatus 24 serves as an apparatus for controlling the operation of the machine tool 1 by means of the computing apparatus executing a computer program. However, in a case where the measurement control apparatus 24 may not control the operation of at least a part of the machine tool 1, the measurement control apparatus 24 may not serve as the apparatus for controlling the operation of the machine tool 1. The computer program is a computer program that allows the measurement control apparatus 24 (for example, the computing apparatus) to perform (namely, to execute) a below-described operation that should be performed by the measurement control apparatus 24. Namely, the computer program is a computer program that allows the measurement control apparatus 24 to function so as to make the measurement apparatus 20 (furthermore, the machine tool 1) perform the below-described operation. The computer program executed by the computing apparatus may be recorded in the storage apparatus (namely, a recording medium) of the measurement control apparatus 24, or may be recorded in any recording medium (for example, a hard disk or a semiconductor memory) that is built in the measurement control apparatus 24 or that is attachable to the measurement control apparatus 24. Alternatively, the computing apparatus may download the computer program that should be executed from an apparatus positioned outside the measurement control apparatus 24 through a network interface. Incidentally, the measurement control apparatus 24 may not include the storage apparatus.

The measurement control apparatus 24 may not be positioned in the measurement system 2, and may be positioned outside the measurement system 2 as a server or the like. In this case, the measurement control apparatus 24 may be connected to the measurement system 2 through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802. 1x (for example, at least one of a wireless LAN and Bluetooth (registered trademark)) is one example of the network using the electrical wave. A network using an infrared ray may be used as the wireless network. A network using an optical communication may be used as the wireless network. In this case, the measurement control apparatus 24 and the measurement system 2 may be configured to transmit and receive various information through the network. Moreover, the measurement control apparatus 24 may be configured to transmit information such as a command and a control parameter to the measurement system 2 through the network. The measurement system 2 may include a receiving apparatus that receives the information such as the command and the control parameter from the measurement control apparatus 24 through the network. The measurement system 2 may include a transmitting apparatus that transmits the information such as the command and the control parameter to the measurement control apparatus 24 (namely, an output apparatus that outputs the information to the measurement control apparatus 24) through the network. Alternatively, a first control apparatus that performs a part of the processing performed by the measurement control apparatus 24 may be positioned in the measurement system 2 and a second control apparatus that performs another part of the processing performed by the measurement control apparatus 24 may be positioned outside the measurement system 2.

At least a part of the processing performed by the measurement control apparatus 24 may be performed by the processing control apparatus 16. As one example, the processing control apparatus 16 may perform at least a part of the movement error calculation operations performed by the measurement control apparatus 24. Conversely, at least a part of the processing performed by the processing control apparatus 16 may be performed by the measurement control apparatus 24.

The processing system SYS may include a control apparatus that is configured to serve as both the measurement control apparatus 24 and the processing control apparatus 16, instead of the measurement control apparatus 24 and the processing control apparatus 16. Namely, the processing system SYS may include a control apparatus in which the measurement control apparatus 24 and the processing control apparatus 16 are integrated. As one example, the machine tool 1 may include a control apparatus that is configured to serve as the measurement control apparatus 24 and that is configured to serve as the processing control apparatus 16, instead of the processing control apparatus 16. **In** this case, the measurement system 2 may include or may not include the measurement control apparatus 24. As another example, the measurement system 2 may include a control apparatus that is configured to serve as the measurement control apparatus 24 and that is configured to serve as the processing control apparatus 16, instead of the measurement control apparatus 24. In this case, the machine tool 1 may include or may not include the processing control apparatus 16.

An arithmetic model that is buildable by machine learning may be implemented in the measurement control apparatus 24 by the computing apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The measurement control apparatus 24 may control the operation of the measurement system 2 by using the arithmetic model. Namely, the operation for controlling the operation of the measurement system 2 may include an operation for controlling the operation of the measurement system 2 by using the arithmetic model. Note that the arithmetic model that has been built by off-line machine learning using training data may be implemented in the measurement control apparatus 24. Moreover, the arithmetic model implemented in the measurement control apparatus 24 may be updated by online machine learning on the measurement control apparatus 24. Alternatively, the measurement control apparatus 24 may control the operation of the measurement system 2 by using the arithmetic model implemented in an apparatus positioned outside the measurement control apparatus 24 (namely, an apparatus positioned outside the measurement system 2), in addition to or instead of the arithmetic model implemented on the measurement control apparatus 24.

Note that the recording medium recording therein the computer program that should be executed by the measurement control apparatus 24 may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the measurement control apparatus 24 by means of the measurement control apparatus 24 (namely, a computer) executing the computer program, may be realized by a hardware such as a predetermined gate array (a FPGA (Field Programmable Gate Array), an ASIC (Application Specific Integrated Circuit)) of the measurement control apparatus 24, or may be realized in a form in which the logical process block and a partial hardware module that realizes an partial element of the hardware are combined.

An output apparatus 25 is an apparatus that outputs information to an outside of the measurement system 2. For example, the output apparatus 25 may output the information as an image. Namely, the output apparatus 25 may include a display apparatus (a so-called display) that is configured to display the image. For example, the output apparatus 25 may output the information as audio. Namely, the output apparatus 25 may include an audio output apparatus (a so-called speaker) that is configured to output the audio. For example, the output apparatus 25 may output the information on paper. Namely, the output apparatus 25 may include a printing apparatus (a so-called printer) that is configured to print desired information on paper. For example, the output apparatus 25 may output the information as data to a recording medium that is attachable to the machine tool 1. For example, the output apparatus 25 may output the information as data to a recording medium attachable to the measurement system 2. Namely, the output apparatus 25 may serve as a communication apparatus. For example, the output apparatus 25 may output (namely, transmit) the information as data through a communication line. Namely, the output apparatus 25 may serve as a communication apparatus. Incidentally, the measurement system 2 may not include the output apparatus 25.

## (1-2) Configuration of Measurement apparatus 20 (Measurement Head 22)

Next, with reference to FIG. 5, a configuration of the measurement apparatus 20 will be described. FIG. 5 is a cross-sectional view that illustrates the processing head 11 to which the measurement apparatus 20 (especially, the measurement head 22) is attached.

As illustrated in FIG. 5, the measurement head 22 is attached to the processing head 11. Specifically, the measurement head 22 includes a head housing 221, and the head housing 221 is attached to the processing head 11. In an example illustrated in FIG. 5, the measurement head 22 is attached to the main spindle 111 of the processing head 11. Namely, the measurement head 22 is attached to the main spindle 111 instead of the tool 113. Specifically, the head housing 221 is attached to the attachment part 1111 of the main spindle 111. In the example illustrated in FIG. 5, since the main spindle 111 includes the attachment part 1111 with the formed hole 1112, the head housing 221 is attached to the main spindle 111 by a shank 220 corresponding to a protruding part of the head housing 221, which has a shape complementary to the hole 1112, being fitted into (alternatively, inserted into) the hole 1112 of the attachment part 1111. The attachment part 1111 may hold the head housing 221. In this case, the attachment part 1111 may include at least one of a mechanical chuck, a hydraulic chuck, an electrostatic chuck, a vacuum suction chuck, and the like to hold the head housing 221.

The head housing 221 (namely, the measurement head 22) attached to the attachment part 1111 is detachable from the attachment part 1111. Namely, the head housing 221 (namely, the measurement head 22) is detachably attached to the main spindle 111. For example, in a case where the measurement head 22 is attached to the main spindle 111, the tool 113 is detached from the main spindle 111. On the other hand, in a case where the tool 113 is attached to the main spindle 111, the measurement head 22 is detached from the main spindle 111. Incidentally, as described above, the attachment and the detachment of the head housing 221 and the attachment and the detachment of the tool 113 are performed by the tool change apparatus 15. However, an operator of the machine tool 1 may manually perform at least one of the attachment and the detachment of the measurement head 22 relative to the main spindle 111 and the attachment and the detachment of the tool 113 relative to the main spindle 111.

However, the measurement head 22 may be attached to a part of the processing head 11 that is different from the main spindle 111. For example, as illustrated in FIG. 6 that is a cross-sectional view illustrating the processing head 11 to which the measurement apparatus 20 (especially, the measurement head 22) is attached, the measurement head 22 may be attached to the head housing 112 of the processing head 11. The head housing 221 may be attached to the head housing 112 of the processing head 11. The head housing 221 may be attached to the processing head 11 at a position that is away from the rotational axis RX of the main spindle 111 along a direction intersecting with the rotational axis RX. In an example illustrated in FIG. 6, the head housing 221 is attached to a side surface of the head housing 112.

In a case where the measurement head 22 is attached to the part of the processing head 11 that is different from the main spindle 111, the measurement head 22 may not be detachable from the processing head 11. Namely, the measurement head 22 may not be detachably attached to the processing head 11. The measurement head 22 may remain to be attached to the processing head 11 in a processing period during which the processing head 11 processes the workpiece W by using the tool 113. Incidentally, measurement head 22 may always remain to be attached to the processing head 11. However, the measurement head 22 may be detachably attached to the processing head 11, even in a case where the measurement head 22 is attached to the part of the processing head 11 that is different from the main spindle 111.

The measurement head 22 may be attached to a position that is fixed relative to the processing head 11. Namely, the measurement head 22 may be attached to the processing head 11 so that a positional relationship between the processing head 11 and the measurement head 22 is fixed (namely, does not change). The measurement head 22 may be directly attached to the processing head 11 in a fixed manner. The measurement head 22 may be indirectly attached to the processing head 11 in a fixed manner. For example, the measurement head 22 may be fixed to other side of a support member whose one side is directly fixed to the processing head 11. Both of a state in which the measurement head 22 is directly fixed to the processing head 11 and a state in which the measurement head 22 is directly fixed to the processing head 11 correspond to a state in which the measurement head 22 is attached to the position that is fixed relative to the processing head 11. Incidentally, in a case where the measurement head 22 is attached to the processing head 11, the positional relationship between the processing head 11 and the measurement head 22 is usually fixed, unless the measurement apparatus 20 includes a driving system that moves the measurement head 22 independently of the processing head 11. Incidentally, in a case where the measurement head 22 is attached to the main spindle 111 of the processing head 11, the rotation of the main spindle 111 may be locked by using a mechanical fixing mechanism or the like in a case where the measurement head 22 is attached to the main spindle 111 because the main spindle 111 is rotatable around the rotational axis RX.

However, the measurement head 22 may not be attached to the position that is fixed relative to the processing head 11. The positional relationship between the processing head 11 and the measurement head 22 may be variable. The measurement apparatus 20 may include the driving system that moves the measurement head 22 independently of the processing head 11. For example, this driving system may be configured to relatively move the processing head 11 and the measurement head 22 along the rotational axis RX. In a case where the measurement head 22 is attached to the head housing 112 of the processing head 11 as described above, there is a possibility that the measurement head 22 interferes with the processing of the workpiece W in the processing period during which the processing head 11 processes the workpiece W by using the tool 113. Specifically, for example, if the measurement head 22 contacts the workpiece W (alternatively, another object) before the tool 113 contacts the workpiece W, the tool 113 cannot contact the workpiece W, and as a result, the measurement head 22 interferes with the processing of the workpiece W. Therefore, the positional relationship between the processing head 11 and the measurement head 22 in at least a part of a measurement period during which the measurement apparatus 20 measures the measurement target object may be different from the positional relationship between the processing head 11 and the measurement head 22 in at least a part of the processing period during which the processing head 11 processes the workpiece W. For example, the positional relationship between the processing head 11 and the measurement head 22 may be set to a first relationship that allows the measurement head 22 not to interfere with the processing of the workpiece W in at least a part of the processing period, and the positional relationship between the processing head 11 and the measurement head 22 may be set to a second relationship that is different from the first relationship (for example, a second relationship that allows the measurement apparatus 20 to measure the measurement target object by using the measurement head 22) in at least a part of the measuring period.

Here, in a case where the position relationship between the processing head 11 and the measurement head 22 is variable, the measurement control apparatus 24 may use the head position measurement apparatus 13 to measure a movement distance along the rotational axis RX of each of the processing head 11 and the measurement head 22. Furthermore, the measurement control apparatus 24 may measure the movement error along the movement axis in advance, and use this movement error, which has been measured in advance, to calculate the movement error of the machine tool 1 by performing the movement error calculation operation described above.

Incidentally, the driving system for moving the measurement head 22 may be configured to relatively move the processing head 11 and measurement head 22 not only along the rotational axis RX but also a direction different from the direction along the rotational axis RX.

In a case where the measurement head 22 is attached to the processing head 11, the measurement head 22 also moves due to the movement of the processing head 11. Namely, the measurement head 22 moves in the same manner as the processing head 11. Therefore, the head driving system 12 that moves the processing head 11 may be considered to serve as a head driving system that moves the measurement head 22. In this case, a relative positional relationship between a measurement position at which the measurement head 22 performs the measurement and the measurement target object changes due to the movement of the measurement head 22. Namely, the measurement position moves relative to the measurement target object. The machine tool 1 may measure the measurement target object while moving the measurement head 22 by moving the processing head 11. Specifically, the machine tool 1 may measure a desired position of the measurement target object while setting the measurement position at the desired position of the measurement target object by moving the measurement head 22. However, in a case where the measurement target object is the stage 141 or the object placed on the stage 141, the relative positional relationship between the measurement position at which the measurement head 22 performs the measurement and the measurement target object also changes due to the movement of the stage 141. Therefore, in a case where it is possible to set the measurement position at the desired position of the measurement target object by moving the stage 141, the machine tool 1 may measure the measurement target object without moving the measurement head 22.

In a case where the measurement head 22 is attached to the main spindle 111, the measurement head 22 may also rotate around the rotational axis RX due to the rotation of the main spindle 111. In this case, the processing control apparatus 16 may measure a movement error due to the rotational movement of the main spindle 111 in advance, and use this movement error, which has been measured in advance, to calculate the movement error of the machine tool 1 by performing the movement error calculation operation described above.

The measurement head 22 further includes an optical system 222. The optical system 222 is contained in a containing space inside the head housing 221. Therefore, the optical system 222 is attached to the processing head 11 through the head housing 221. In a case where the optical system 222 is contained in the head housing 221 in this manner, unnecessary substance (for example, cutting chip, cutting fluid, and the like) generated by the processing of the workpiece W are prevented from adhering to the optical system 222.

Note that the measurement head 22 may include the measurement light source 21. For example, the measurement light source 21 may be contained in an inner space of the head housing 221. In this case, the measurement light source 21 may be considered to be a part of the optical system 222. Moreover, the measurement light source 21 may not be attached to the processing head 11, and may be attached to a part of the processing head 11 that is different from the main spindle 111. In a case where the measurement apparatus 202 includes a plurality of measurement light sources 21 (for example, measurement light sources 21#1 and 51#2 described below), at least one of the plurality of measurement light sources 21 may not be attached to the processing head 11, and may be attached to a part of the processing head 11 that is different from the main spindle 111.

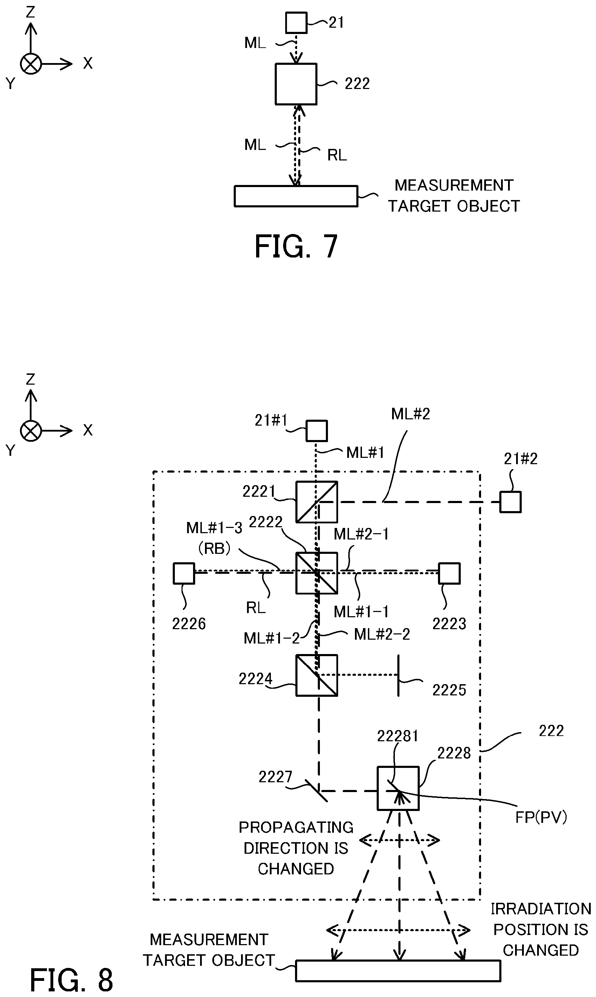

The optical system 222 is used to irradiate the measurement target object with the measurement light ML from the measurement light source 21. Furthermore, the optical system 222 is used to optically receive the returning light RL from the measurement target object. Specifically, as illustrated in FIG. 7 that is a cross-sectional view illustrating the optical system 222 that irradiates the measurement target object with the measurement light ML and optically receives the returning light RL from the measurement target object, the measurement light ML generated by the measurement light source 21 enters the optical system 222 from the measurement light source 21 through a non-illustrated optical transmission member such as an optical fiber. The optical system 222 emits the measurement light ML, which has entered the optical system 222, toward the measurement target object. Namely, the optical system 222 irradiates the measurement target object with the measurement light ML.

When the measurement target object is irradiated with the measurement light ML, light generated by the irradiation of the measurement light ML is emitted from the measurement target object. The light generated by the irradiation of the measurement light ML may include reflection light of the measurement light ML with which the measurement target object is irradiated. The light generated by the irradiation of the measurement light ML may include scattered light of the measurement light ML with which the measurement target object is irradiated. The light generated by the irradiation of the measurement light ML may include transmitted light of the measurement light ML with which the measurement target object is irradiated. The light generated by the irradiation of the measurement light ML may include diffracted light of the measurement light ML with which the measurement target object is irradiated.

At least a part of the light generated by the irradiation of the measurement light ML enters the optical system 222 as the returning light RL from the measurement target object. Specifically, a light component, which propagates along an optical path of the measurement light ML, of the light generated by the irradiation of the measurement light ML enters the optical system 222 as the returning light RL. In this case, an optical path of the measurement light ML that is emitted from the optical system 222 to enter the measurement target object may be the same as an optical path of the returning light RL that is emitted from the measurement target object to enter the optical system 222. Namely, an optical path of the measurement light ML between the optical system 222 and the measurement target object may be the same as an optical path of the returning light RL between the optical system 222 and the measurement target object. As one example, in a case where the measurement light ML vertically enters the measurement target object, the returning light RL may be light that is mainly specular reflection light of the measurement light ML. However, in a case where the measurement light ML vertically enters the measurement target object, the returning light RL may include light other than the specular reflection light of the measurement light ML (for example, at least one of diffused reflection light, the scattered light, the transmitted light, and the diffracted light of the measurement light ML). As another example, in a case where the measurement light ML obliquely enters (in other words, non-vertically enters) the measurement target object, the returning light RL may be light that is mainly the diffused reflection light of the measurement light ML. However, in a case where the measurement light ML obliquely enters the measurement target object, the returning light RL may include light other than the diffused reflection light of the measurement light ML (for example, at least one of the specular reflection light, the scattered light, the transmitted light, and the diffracted light of the measurement light ML).

Here, with reference to FIG. 8, a configuration of the optical system 222 that irradiates the measurement target object with the measurement light ML and optically receives the returning light RL will be described in more detail. FIG. 8 is a cross-sectional view illustrating the configuration of the optical system 222.

The optical system 222 includes a beam splitter 2221, a beam splitter 2222, an optical detector (a measurement unit) 2223, a beam splitter 2224, a mirror 2225, an optical detector (a measurement unit) 2226, a mirror 2227, and a Galvano mirror 2228.

Incidentally, as described in detail in a ninth modified example below, at least one of the measurement light source 21, the beam splitter 2221, the beam splitter 2222, the optical detector 2223, the beam splitter 2224, the mirror 2225, and the optical detector 2226 may not be contained in the head housing 221. In other words, at least one of the measurement light source 21, the beam splitter 2221, the beam splitter 2222, the optical detector 2223, the beam splitter 2224, the mirror 2225, and the optical detector 2226 may not be attached to the processing head 11, or may be attached to a part of the processing head 11 that is different from the main spindle 111. At least one of the measurement light source 21, the beam splitter 2221, the beam splitter 2222, the optical detector 2223, the beam splitter 2224, the mirror 2225, and the optical detector 2226 may be contained in a housing that is different from the head housing 221 attached to the main spindle 111 of the processing head 11. In this case, the housing that is different from the head housing 221 may not be attached to the processing head 11, may be attached to a part of the processing head 11 that is different from the main spindle 111, or may be attached outside or inside the housing that contains at least one of the processing head 11, the head driving system 12, the stage apparatus 14, the measurement apparatus 20, the processing control apparatus 16 of the machine tool 1, the measurement control apparatus 24, and so on. Incidentally, at least one of the measurement light source 21, the beam splitter 2221, the beam splitter 2222, the optical detector 2223, the beam splitter 2224, the mirror 2225, and the optical detector 2226 may be positioned not only inside the machine tool 1 but also outside the machine tool 1.

The measurement light ML emitted from the measurement light source 21 enters the beam splitter 2221. In the present example embodiment, two measurement lights ML, which are generated by two measurement light sources 21 (specifically, the measurement light sources 21#1 and 21#2), respectively, enter the beam splitter 2221. Therefore, the measurement apparatus 20 includes the measurement light source 21#1 and the measurement light source 21#2. The two measurement light sources 21 may emit the two measurement lights ML whose phases are synchronized with each other and that are coherent, respectively. However, the measurement apparatus 20 may include a single measurement light source 21.

Oscillation frequencies of the two measurement light sources 21 are different. Therefore, the two measurement lights ML respectively emitted from the two measurement light sources 21 are two measurement lights ML having different frequencies. In a case where the measurement light sources 21 generates pulsed light as the measurement light ML, the two measurement lights ML emitted from the two measurement light sources 21 are two measurement lights ML having different pulse frequencies (for example, the number of the pulsed light per unit time, and an inverse number of an emission cycle of the pulsed light). As one example, the measurement light source 21#1 may emit the measurement light ML whose pulse frequency is 25 GHz, and the measurement light source 21#2 may emit the measurement light ML whose pulse frequency is 25 GHz $+\alpha$ (for example, +100 kHz). Incidentally, in the below-described description, the measurement light ML generated by the measurement light source 21#1 is referred to as "measurement light ML#1" and the measurement light ML generated by the measurement light source 21#2 is referred to as "measurement light ML#2". However, the oscillation frequencies of the two measurement light sources 21 may be equal to each other.

The measurement light source 21 includes a light comb light source. The light comb light source is a light source that is configured to generate, as the pulsed light, a light including frequency components that are arranged with equal interval on a frequency axis (hereinafter, it is referred to as a "light frequency comb"). In this case, the measurement light source 21 emits, as the measurement light ML, the pulsed light including the frequency components that are arranged with equal interval on the frequency axis. However, the measurement light source 21 may include a light source that is different from the light comb light source.

The two measurement lights ML#1 and ML#2, which have entered the beam splitter 2221, are emitted toward the beam splitter 2222. Namely, the beam splitter 2221 emits the measurement light ML#1 and ML#2, which have entered the beam splitter 2221 from different directions, respectively, toward the same direction (namely, the direction in which the beam splitter 2222 is positioned).

The beam splitter 2222 emits measurement light ML#1-1, which is a part of the measurement light ML#1 that has entered the beam splitter 2222, toward the optical detector 2223. The beam splitter 2222 emits measurement light ML#1-2, which is another part of the measurement light ML#1 that has entered the beam splitter 2222, toward the beam splitter 2224. The beam splitter 2222 emits measurement light ML#2-1, which is a part of the measurement light ML2#2 that has entered the beam splitter 2222, toward the optical detector 2223. The beam splitter 2222 emits measurement light ML#2-2, which is another part of the measurement light ML#2 that has entered the beam splitter 2222, toward the beam splitter 2224.

The measurement lights ML#1-1 and ML#2-1, which have been emitted from the beam splitter 2222, enter the optical detector 2223. The optical detector 2223 optically receives the measurement light ML#1-1 and the measurement light ML#2-1. The optical detector 2223 optically receives and detects the measurement light ML#1-1 and the measurement light ML#2-1. Incidentally, a state in which "an object optically receives light" in the present example embodiment may mean a state in which "the light enters the object". Therefore, the state in which "the object optically receives the light" in the present example embodiment may mean a state in which "the object that is configured to optically receive the light optically receives the light" and a state in which "the object that is not configured to optically receive the light optically receives the light". Especially, the optical detector 2223 optically receives and detects interfering light generated by an interference between the measurement light ML#1-1 and the measurement light ML#2-1. Note that an operation for optically receiving the interfering light generated by the interference between the measurement light ML#1-1 and the measurement light ML#2-1 may be considered to be equivalent to an operation for optically receiving the measurement light ML# 1-1 and the measurement light ML#2-1. A detected result by the optical detector 2223 (namely, an optical received result of the interfering light) is output to the measurement control apparatus 24 as a part of the measured result by the measurement apparatus 20 through the output interface 23.

The measurement lights ML#1-2 and ML#2-2, which have been emitted from the beam splitter 2222, enter the beam splitter 2224. The beam splitter 2224 emits at least a part of the measurement light ML#1-2, which has entered the beam splitter 2224, toward the mirror 2225. The beam splitter 2224 emits at least a part of the measurement light ML#2-2, which has entered the beam splitter 2224, toward the mirror 2227.

The measurement light ML#1-2, which has been emitted from the beam splitter 2224, enter the mirror 2225. The measurement light ML#1-2, which has entered the mirror 2225, is reflected by a reflection surface of the mirror 2225 (the reflection surface may be referred to as a reference surface). Specifically, the mirror 2225 reflects the measurement light ML#1-2, which has entered the mirror 2225, toward the beam splitter 2224. Namely, the mirror 2225 emits the measurement light ML#1-2, which has entered the mirror 2225, toward the beam splitter 2224 as measurement light ML#1-3 that is a reflection light thereof. In this case, the measurement light ML#1-3 may be referred to as reference light. The measurement light ML#1-3, which has been emitted from the mirror 2225, enters the beam splitter 2224. The beam splitter 2224 emits the measurement light ML#1-3, which has entered the beam splitter 2224, toward the beam splitter 2222. The measurement light ML#1-3, which has been emitted from the beam splitter 2224, enters the beam splitter 2222. The beam splitter 2222 emits the measurement light ML#1-3, which has entered the beam splitter 2222, toward the optical detector 2226.

On the other hand, the measurement light ML#2-2, which has been emitted from the beam splitter 2224 toward the mirror 2227, enters the Galvano mirror 2228 through the mirror 2227. The Galvano mirror 2228 is configured to change a propagating direction of the measurement light ML#2-2 emitted from the Galvano mirror 2228 toward the measurement target object so that an irradiation position of the measurement light ML (in this case, the measurement light ML#2-2) on the measurement target object changes. Therefore, the Galvano mirror 2228 may be referred to as a direction change member or a direction change apparatus. The Galvano mirror 2228 may include a scanning mirror 22281 that may be referred to as a reflection member or a deflection member. The scanning mirror 22281 is a tilt angle variable mirror whose angle relative to an optical path of the measurement light ML#2-2 entering the scanning mirror 22281 is changeable. The scanning mirror 22281 is configured to rotate around a rotational axis intersecting the optical axis at an incident side of the measurement light ML#2-2 entering the scanning mirror 22281 to change an angle thereof relative to the optical path of the measurement light ML#2-2 entering the scanning mirror 22281. Incidentally, the scanning mirror 22281 may be inclined with respect to or swing around the rotational axis intersecting the optical axis at an incident side of the measurement light ML#2-2 entering the scanning mirror 22281. The scanning mirror 22281 may be configured to rotate around a first rotational axis, which intersects the optical axis at an incident side of the measurement light ML#2-2 entering the scanning mirror 22281, to change the propagating direction of the measurement light ML#2-2 so as to change the irradiation position of the measurement light ML#2-2 on the measurement target object along the X-axis direction. The scanning mirror 22281 may be configured to rotate around a second rotational axis, which intersects the optical axis at an incident side of the measurement light ML#2-2 entering the scanning mirror 22281 and which intersects the first rotational axis, to change the propagating direction of the measurement light ML#2-2 so as to change the irradiation position of the measurement light ML#2-2 on the measurement target object along the Y-axis direction. Alternatively, the scanning mirror 22281 may include, as the scanning mirrors 22281, a first scanning mirror that is configured to rotate around the first rotational axis to change the propagating direction of the measurement light ML#2-2 so as to change the irradiation position of the measurement light ML#2-2 on the measurement target object along the X-axis direction, and a second scanning mirror 22281 that is configured to rotate around the second rotational axis to change the propagating direction of the measurement light ML#2-2 so as to change the irradiation position of the measurement light ML#2-2 on the measurement target object along the Y-axis direction. In this case, the second rotational axis of the second scanning mirror and the first rotational axis of the first scanning mirror may be skew.

The Galvano mirror 2228 may change the propagating direction of the measurement light ML#2-2 with a pivot point PV of the Galvano mirror 2228 as an origin. The pivot point PV may be a virtual point on a reflection surface of the scanning mirror 22281. In a case where the Galvano mirror 2228 includes a plurality of scanning mirrors 22281, the pivot point PV may be a virtual point on the reflection surface of one scanning mirror 22281, which is closest to the measurement target object on the optical path of the measurement light ML#2-2, of the plurality of scanning mirrors 22281. For example, the pivot point may be a center point of the reflection surface of the scanning mirror 22281. For example, the pivot point may be a point at which the measurement light ML#2-2 enters the scanning mirror 22281. The pivot point PV may be a point at which the measurement light ML#2-2 is emitted from the scanning mirror 22281. The pivot point PV may be a point on the rotational axis of the scanning mirror 22281.

Incidentally, the pivot point PV may not be a virtual point on the reflection surface of the scanning mirror 22281. For example, the pivot point PV may be a virtual point that is used as a reference (a starting point) for calculating the distance to the measurement target object. In this case, for example, the pivot point PV may be a point on the reflection surface of the scanning mirror 22281, or may be a predetermined point of the optical system 222. Moreover, there may be a plurality of pivot points PV. For example, there may be a pivot point PV for each surface that is scanned with the measurement light ML#2-2. For example, in a case where the Galvano mirror 2228 includes the first scanning mirror and the second scanning mirror as described above, the pivot point related to the XZ plane may be positioned on the first rotational axis of the first scanning mirror, and the pivot point PV related to the YZ plane may be positioned on the second rotational axis of the second scanning mirror. Incidentally, the pivot point PV may be referred to as a reference point or a measurement reference point, because it can be said to be a reference for the measurement apparatus 20 (the measurement head 22).

Since the Galvano mirror 2228 is configured to change the irradiation position of the measurement light ML#2-2 on the measurement target object, the measurement apparatus 20 may irradiate a plurality of parts of the measurement target object with the measurement light ML#2-2 in order. As a result, the measurement apparatus 20 may measure the plurality of parts of the measurement target object at a relatively high speed. Namely, the measurement apparatus 20 may perform a multi-point measurement of the measurement target object. Incidentally, the plurality of parts that are irradiated with the measurement light ML#2-2 in order may not be arranged in order along a predetermined direction on the measurement target object.

The measurement head 22 irradiates the measurement target object with the measurement light ML#2-2, which is collimated light. In this case, the optical system 222 may be designed so that the measurement light ML#2-2 emitted from the Galvano mirror 2228 is the collimated light. However, as described in a fourth modified example later, the measurement head 22 may irradiate the measurement target object with the measurement light ML#2-2, which is convergent light. In this case, the optical system 222 may include a condensing optical system that condenses the measurement light ML#2-2 emitted from the Galvano mirror 2228. A fθ lens is one example of the condensing optical system.

When the measurement target object is irradiated with the measurement light ML, the returning light RL, which is at least a part of the light generated by the irradiation of the measurement light ML onto the measurement target object, is emitted from the measurement target object. The returning light RL enters the optical system 222 (specifically, the Galvano mirror 2228). Here, as described above, the returning light RL is the light component, which propagates along the optical path of the measurement light ML, of the light generated by the irradiation of the measurement light ML. Therefore, the optical path of the returning light RL may overlap with the optical path of the measurement light ML#2-2 between the optical system 222 (especially, the Galvano mirror 2228) and the measurement target object. Namely, the optical path of the returning light RL and the optical path of the measurement light ML#2-2 may be coaxial between the optical system 222 and the measurement target object. For example, the Galvano mirror 2228 may irradiate the measurement target object with the measurement light ML#2-2 so that the measurement light ML#2-2 vertically enters the measurement target object. In a case where the measurement light ML#2-2 vertically enters the measurement target object, typically, the optical path of the returning light RL overlaps with the optical path of the measurement light ML#2-2 between the optical system 222 and the measurement target object. However, the Galvano mirror 2228 may irradiate the measurement target object with the measurement light ML#2-2 so that the measurement light ML#2-2 obliquely enters the measurement target object. Even in this case, the optical path of the returning light RL, which is mainly diffuse reflection light of the measurement light ML, overlaps with the optical path of the measurement light ML#2-2 between the optical system 222 and the measurement target object as described above.

The returning light RL that has entered the Galvano mirror 2228 enters the optical detector 2226 through the Galvano mirror 2228, the beam splitters 2224 and 2222. Therefore, the optical detector 2226 may be considered to optically receive the returning light RL through the Galvano mirror 2228.

As described above, not only the returning light RL but also the measurement light ML#1-3 enter the optical detector 2226. Namely, the returning light RL propagating toward the optical detector 2226 through the measurement target object and the measurement light ML#1-3 propagating toward the optical detector 2226 without passing through the measurement target object enter the optical detector 2226. Incidentally, the measurement light ML#1-3 entering the optical detector 2226 is used as reference light. Therefore, in the below-described description, the measurement light ML#1-3 entering the optical detector 2226 is referred to as reference light RB. The optical detector 2226 optically receives the reference light RB and the returning light RL. The optical detector 2226 optically receives and detects the reference light RB and the returning light RL. Especially, the optical detector 2226 optically receives interfering light generated by an interference between the reference light RB and the returning light RL. Note that an operation for optically receiving the interfering light generated by the interference between the reference light RB and the returning light RL may be considered to be equivalent to an operation for optically receiving the reference light RB and the returning light RL. A detected result by the optical detector 2226 (namely, an optical received result of the interfering light) is output to the measurement control apparatus 24 as a part of the measured result by the measurement apparatus 20 through the output interface 23.

The measurement control apparatus 24 acquires the detected result by the optical detector 2223 and the detected result by the optical detector 2226 through the output interface 23. The measurement control apparatus 24 generates measurement data of the measurement target object based on the detected result by the optical detector 2223 and the detected result by the optical detector 2226 (namely, the measured result by the measurement apparatus 20).

In the present example embodiment, the measurement control apparatus 24 may first calculate the distance between the measurement head 22 and the measurement target object based on the detected result by the optical detector 2223 and the detected result by the optical detector 2226 as described below. Namely, the measurement control apparatus 24 may generate the measurement data related to the distance between the measurement head 22 and the measurement target object. Furthermore, the measurement control apparatus 24 may calculate the position of the measurement target object based on the distance between the measurement head 22 and the measurement target object. Namely, the measurement control apparatus 24 may generate the measurement data related to the position of the measurement target object. Furthermore, the measurement control apparatus 24 may calculate the shape of the measurement target object based on the position of the measurement target object (especially, the position of each of the plurality of parts of the measurement target object). Namely, the measurement control apparatus 24 may generate the measurement data related to the shape of the measurement target object.

Specifically, since the pulse frequency of the measurement light ML#1 is different from the pulse frequency of the measurement light ML#2, a pulse frequency of the measurement light ML#1-1 is different from a pulse frequency of the measurement light ML#2-1. Therefore, the interfering light generated by the interference between the measurement light ML#1-1 and the measurement light ML#2-1 is an interfering light in which a pulsed light appears in synchronization with a timing at which the pulsed light of the measurement light ML#1-1 and the pulsed light of the measurement light ML#2-1 enter the optical detector 2223 at the same time. Similarly, a pulse frequency of the reference light RB is different from a pulse frequency of the returning light RL. Therefore, the interfering light generated by the interference between the reference light RB and the returning light RL is an interfering light in which a pulsed light appears in synchronization with a timing at which the pulsed light of the reference light RB and the pulsed light of the returning light RL enter the optical detector 2226 at the same time. Here, a position (a position along a time axis) of the pulsed light of the interfering light detected by the optical detector 2226 changes depending on a positional relationship between the measurement head 22 and the measurement target object (namely, substantially, a positional relationship between the processing head 11 and the measurement target object). This is because the interfering light detected by the optical detector 2226 is the interfering light generated by the interference between the returning light RL propagating toward the optical detector 2226 through the measurement target object and the reference light RB propagating toward the optical detector 2226 without passing through the measurement target object. On the other hand, a position (a position along a time axis) of the pulsed light of the interfering light detected by the optical detector 2223 does not change depending on the positional relationship between the measurement head 22 and the measurement target object (namely, substantially, the positional relationship between the processing head 11 and the measurement target object). Therefore, it can be said that a difference in time between the pulsed light of the interfering light detected by the optical detector 2223 and the pulsed light of the interfering light detected by the optical detector 2226 indirectly indicates the positional relationship between the measurement head 22 and the measurement target object. Specifically, it can be said that the difference in time between the pulsed light of the interfering light detected by the optical detector 2226 and the pulsed light of the interfering light detected by the optical detector 2223 indirectly indicates a distance between the measurement head 22 and the measurement target object in the direction along the optical path of the measurement light ML (namely, in the direction along the propagating direction of the measurement light ML) emitted from the optical system 222. Therefore, the measurement control apparatus 24 may calculate the distance between the measurement head 22 and the measurement target object in the direction along the optical path of the measurement light ML emitted from the optical system 222 based on the difference in time between the pulsed light of the interfering light detected by the optical detector 2226 and the pulsed light of the interfering light detected by the optical detector 2223.

Furthermore, since the irradiation position of the measurement light ML#2-2 on the measurement target object is determined by a driving state of the Galvano mirror 2228, the measurement control apparatus 24 may calculate, based on information related to the driving state of the Galvano mirror 2228, a direction of an irradiated part from the measurement head 22 (for example, a direction of the irradiated part from the pivot point PV). Namely, the measurement control apparatus 24 may calculate, based on information related to the driving state of the Galvano mirror 2228, a direction in which the measurement light ML#2-2 is emitted from the measurement head 22 as the direction of the irradiated part from the measurement head 22. Information related a rotational angle of the scanning mirror 22281 of the Galvano mirror 2228 is one example of the information related to the driving state of the Galvano mirror 2228. Here, the Galvano mirror 2228 may include a rotational angle detector for detecting the rotational angle of the scanning mirror 22281. At least one of a rotary encoder and an angle detection apparatus that optically detects the angle of the scanning mirror 22281 by irradiating the scanning mirror 22281 with light may be used as the rotational angle detector. Furthermore, in a case where the above-described movement error has been corrected, the measurement control apparatus 24 may determine the position of the measurement head 22 in the machine coordinate system by using the head position measurement apparatus 13 that is configured to measure the position of the processing head 11 to which the measurement head 22 is attached. As a result, the measurement control apparatus 24 may calculate the position (for example, the position in a three-dimensional coordinate space) of the irradiated part in the machine coordinate system based on the distance between the measurement head 22 and the irradiated part, the direction of the irradiated part from the measurement head 22, and the position of the measurement head 22 in the machine coordinate system. Namely, the measurement control apparatus 24 may generate the measurement data indicating the position of the irradiated part in the machine coordinate system.

The measurement head 22 may irradiate a plurality of parts of the measurement target object with the measurement light ML#2-2. For example, the Galvano mirror 2228 may change the irradiation position of the measurement light ML#2-2 on the measurement target object so that the measurement head 22 irradiates the plurality of parts of the measurement target object with the measurement light ML#2-2. For example, at least one of the processing head 11 (the measurement head 22) and the stage 141 may move so that the measurement head 22 irradiates the plurality of parts of the measurement target object with the measurement light ML#2-2. In a case where the plurality of parts of the measurement target object are irradiated with the measurement light ML#2-2, the measurement control apparatus 24 may generate the measurement data indicating the positions of the plurality of parts of the measurement target object. As a result, the measurement control apparatus 24 may generate the measurement data indicating the shape of the measurement target object based on the measurement data indicating the positions of the plurality of parts. For example, the measurement control apparatus 24 may generate the measurement data indicating the shape of the measurement target object by calculating, as the shape of the measurement target object, a three-dimensional shape formed by a virtual plane (alternatively, curved plane) connecting the plurality of parts whose positions have been determined.

Incidentally, in this manner, the measurement apparatus 20 may measure the measurement target object by irradiating the measurement target object with the measurement light ML and optically receiving the returning light RL from the measurement target object irradiated with the measurement light ML. Especially in the above-described example, the measurement apparatus 20 may measure the measurement target object by optically receiving the interfering light generated by the interference between the returning light RL and the reference light RB. Therefore, the measurement apparatus 20 may be regarded as an interferometric measurement apparatus. However, the measurement apparatus 20 may not be the interferometric measurement apparatus as long as it is configured to measure the measurement target object. For example, measurement apparatus 20 may be a triangulation type of measurement apparatus. The measurement apparatus 20 may be a stereo-type of measurement apparatus. The measurement apparatus 20 may be a phase-shift-type of measurement apparatus. The measurement apparatus 20 may be a confocal-type of measurement apparatus. The measurement apparatus 20 may be a ToF (Time of Flight)-type of measurement apparatus. The measurement apparatus 20 may be an FMCW (Frequency Modulated Continuous Wave) type of measurement apparatus.

## (2) Movement Error Calculation Operation

Next, the movement error calculation operation performed by the measurement control apparatus 24 will be described.

## (2-1) Overview of Movement Error Calculation Operation

As described above, the movement error calculation operation is an operation for calculating the movement error occurring in the movement of at least one of the processing head 11 and stage 141 based on the measured result by the measurement apparatus 20. Since the measurement apparatus 20 optically receives the interfering light generated by the interference between the reference light RB and the returning light RL as described above, the movement error calculation operation may be regarded as an operation for calculating the movement error occurring in the movement of at least one of the processing head 11 and stage 141 based on the detected result of the interfering light generated by the interference between the reference light RB and the returning light RL.

As one example, the movement error of the processing head 11 may include an error corresponding to a difference (namely, a deviation) between an actual position of the processing head 11 and a target position of the processing head 11 in a case where the head driving system 12 moves the processing head 11 based on a driving control signal for controlling the head driving system 12 so as to move the processing head 11 (the main spindle 111) to the desired target position. Incidentally, in the below-described description, the driving control signal for controlling the head driving system 12 is referred to as a head driving control signal. In a case where the processing head 11 is configured to move translationally along the translational axis, the movement error of the processing head 11 may include the error corresponding to the difference (namely, the deviation) between the actual position of the processing head 11 and the target position of the processing head 11 in a case where the head driving system 12 moves the processing head 11 translationally along the translational axis based on the head driving control signal for controlling the head driving system 12 so as to move the processing head 11 to the desired target position. Namely, the movement error of the processing head 11 may include the movement error occurring in the translational movement of the processing head 11. In a case where the processing head 11 is configured to rotationally move around the rotational axis, the movement error of the processing head 11 may include the error corresponding to the difference (namely, the deviation) between the actual position of the processing head 11 and the target position of the processing head 11 in a case where the head driving system 12 rotationally moves the processing head 11 around the rotational axis based on the head driving control signal for controlling the head driving system 12 so as to move the processing head 11 to the desired target position. Namely, the movement error of the processing head 11 may include the movement error occurring in the rotational movement of the processing head 11.

difference (namely, a deviation) between an actual position of the stage 141 and a target position of the stage 141 in a case where the stage driving system 142 moves the stage 141 based on a driving control signal for controlling the stage driving system 142 so as to move the stage 141 to the desired target position. Incidentally, in the below-described description, the driving control signal for controlling the stage driving system 142 is referred to as a stage driving control signal. In a case where the stage 141 is configured to move translationally along the translational axis, the movement error of the stage 141 may include the error corresponding to the difference (namely, the deviation) between the actual position of the stage 141 and the target position of the stage 141 in a case where the stage driving system 142 moves the stage 141 translationally along the translational axis based on the head driving control signal for controlling the stage driving system 142 so as to move the stage 141 to the desired target position. Namely, the movement error of the stage 141 may include the movement error occurring in the translational movement of the stage 141. In a case where the stage 141 is configured to rotationally move around the rotational axis, the movement error of the stage 141 may include the error corresponding to the difference (namely, the deviation) between the actual position of the stage 141 and the target position of the stage 141 in a case where the stage driving system 142 rotationally moves the stage 141 around the rotational axis based on the head driving control signal for controlling the stage driving system 142 so as to move the stage 141 to the desired target position. Namely, the movement error of the stage 141 may include the movement error occurring in the rotational movement of the stage 141.

Here, in a case where the movement error of the processing head 11 is not corrected although the movement error of the processing head 11 occurs, there is a possibility that the processing head 11 moves to a position that is different from the desired target position due to the movement error even in a case where the head driving system 12 moves the processing head 11 based on the head driving control signal for controlling the head driving system 12 so as to move the processing head 11 to the desired target position. Therefore, there is a possibility that the machine tool 1 cannot move the processing head 11 accurately. As a result, there is a possibility that the machine tool 1 cannot process the workpiece W placed on the stage 141 accurately. Furthermore, in a case where the measurement head 22 or a measurement head 22d-1 described below is attached to the processing head 11, there is a possibility that the measurement system 2 cannot measure the workpiece W placed on the stage 141 appropriately, because there is a possibility that the measurement head 22 or the measurement head 22d-1 described below does not move accurately.

Similarly, in a case where the movement error of the stage 141 is not corrected although the movement error of the stage 141 occurs, there is a possibility that the stage 141 moves to a position that is different from the desired target position due to the movement error even in a case where the stage driving system 142 moves the stage 141 based on the head driving control signal for controlling the stage driving system 142 so as to move the stage 141 to the desired target position. Therefore, there is a possibility that the machine tool 1 cannot move the stage 141 accurately. As a result, there is a possibility that the machine tool 1 cannot process the workpiece W placed on the stage 141 accurately. Furthermore, in a case where the measurement head 22 or a measurement head 22d-1 described below is attached to the stage 141, there is a possibility that the measurement system 2 cannot measure the workpiece W placed on the stage 141 appropriately.

Therefore, in the present example embodiment, the processing system SYS may calculate the movement error by performing the movement error calculation operation and move at least one of the processing head 11 and the stage 141 to correct (for example, cancel) the movement error. Namely, the processing system SYS may control the movement of the processing head 11 so that the processing head 11 moves in the same way as in a case where the movement error of the processing head 11 does not occur, even in a case where the movement error of the processing head 11 occurs. The processing system SYS may control the movement of the stage 141 so that the stage 141 moves in the same way as in a case where the movement error of the stage 141 does not occur, even in a case where the movement error of the stage 141 occurs. As a result, in a case where the head driving system 12 moves the processing head 11 based on the head driving control signal for controlling the head driving system 12 so as to move the processing head 11 to the desired position, the head driving system 12 can move the processing head 11 to the desired position accurately. Therefore, the machine tool 1 can move the processing head 11 with higher accuracy, compared to a case where the movement error calculation operation is not performed. As a result, the machine tool 1 can process the workpiece W with higher accuracy, compared to a case where the movement error calculation operation is not performed. Furthermore, in a case where the measurement head 22 or the measurement head 22d-1 described below is attached to the processing head 11, the measurement system 2 can measure the workpiece W placed on the stage 141 more appropriately, compared to a case where the movement error calculation operation is not performed. Similarly, in a case where the stage driving system 142 moves the stage 141 based on the stage driving control signal for controlling the stage driving system 142 to move the stage 141 to the desired position, the stage driving system 142 can move the stage 141 to the desired position accurately. Therefore, the machine tool 1 can move the stage 141 with higher accuracy, compared to a case where the movement error calculation operation is not performed. As a result, the machine tool 1 can process the workpiece W with higher accuracy, compared to a case where the movement error calculation operation is not performed. Furthermore, in a case where the measurement head 22 or the measurement head 22d-1 described below is attached to the processing head 11, the measurement system 2 can measure the workpiece W placed on the stage 141 more appropriately, compared to a case where the movement error calculation operation is not performed.

The processing system SYS may perform the movement error calculation operation before the machine tool 1 starts processing the workpiece W. In this case, the machine tool 1 may move at least one of the processing head 11 and the stage 141 so as to correct (for example, cancel) the movement error calculated by the movement error calculation operation after starting the processing of the workpiece W. Therefore, the machine tool 1 can move the processing head 11 accurately. Namely, the machine tool 1 can process the workpiece W accurately.

However, the processing system SYS may perform the movement error calculation operation in at least a part of a period during which the machine tool 1 processes the workpiece W. In other words, the processing system SYS may perform the movement error calculation operation after the machine tool 1 starts processing the workpiece W. In other words, the processing system SYS may perform the movement error calculation operation in at least a part of a period between a timing at which the machine tool 1 starts processing the workpiece W and a timing at which the machine tool 1 finishes processing the workpiece W. Furthermore, the processing system SYS may perform the movement error calculation operation after the machine tool 1 finishes processing the workpiece W.

In the present example embodiment, in order to calculate the movement error, the measurement head 22 irradiates the fiducial member FM with the measurement light ML and optically receives the returning light RL from the fiducial member FM as illustrated in FIG. 9. Then, the measurement control apparatus 24 calculates a distance between the measurement head 22 and the fiducial member FM based on the measured result by the measurement head 22 (namely, the optical received result of the interfering light between the reference light RB and the returning light RL). Then, the measurement control apparatus 24 calculates the movement error based on the distance between the measurement head 22 and the fiducial member FM. Incidentally, a specific example of an operation for calculating the movement error based on the distance between the measurement head 22 and the fiducial member FM will be described in detail later.

One example of a position of the fiducial member FM is illustrated in FIG. 10(a) and FIG. 10(b). As illustrated in FIG. 10(a) and FIG. 10(b), in the present example embodiment, at least one fiducial member FM is positioned on the workpiece W placed on the stage 141. Furthermore, at least one fiducial member FM may be positioned on the stage 141. However, the fiducial member FM may not be arranged on the stage 141. In the below-described description, an example in which the fiducial member FM is positioned on each of the workpiece W and the stage 141 will be described as one example. Note that the fiducial member FM may not be positioned on the workpiece W placed on the stage 141.

In the present example embodiment, furthermore, a plurality of fiducial members FM may be positioned on the workpiece W and the stage 141. In the example illustrated in FIG. 10(a) and FIG. 10(b), at least four fiducial members FM are positioned on the workpiece W, and at least four fiducial members FM are positioned on the stage 141. However, three or fewer fiducial members FM or five or more fiducial members FM may be positioned on the workpiece W. Three or fewer fiducial members FM or five or more fiducial members FM may be positioned on the stage 141.

The plurality of fiducial members FM may be positioned on the workpiece W and the stage 141 so that at least N (wherein, N is a constant value representing an integer that is equal to or greater than 1) fiducial members FM are included in a measurement range of the measurement head 22 that is positioned at any position in the machine coordinate system. The plurality of fiducial members FM may be positioned on the workpiece W and the stage 141 so that at least N fiducial members FM are included in the measurement range of the measurement head 22 that moves in the machine coordinate system. Incidentally, the measurement range of the measurement head 22 may mean an area that is allowed to be scanned with the measurement light ML whose propagating direction is allowed to be changed by the Galvano mirror 2228. Moreover, "N" is a variable number representing a minimum number of the number of fiducial members FM included in the measurement range of the measurement head 22, and is typically a variable number representing an integer that is equal to or greater than 1. Incidentally, N may be a variable number representing an integer that is equal to or greater than 4.

As one example, the plurality of fiducial members FM may be positioned on the workpiece W and the stage 141 so that at least N first fiducial members FM are included in the measurement range of the measurement head 22 that is positioned at a first position in the machine coordinate system. Furthermore, the plurality of fiducial members FM may be positioned on the workpiece W and the stage 141 so that at least N second fiducial members FM are included in the measurement range of the measurement head 22 that is positioned at a second position, which is different from the first position, in the machine coordinate system. Incidentally, the at least N second fiducial members FM may be different from the at least N first fiducial members FM. Alternatively, a part of the at least N second fiducial members FM may be the same as a part of the at least N first fiducial members FM. Alternatively, all of the at least N second fiducial members FM may be the same as all of the at least N first fiducial members FM.

As another example, the plurality of fiducial members FM may be positioned on the workpiece W and the stage 141 so that at least N third fiducial members FM are included in the measurement range of the measurement head 22 in a case where the stage 141 is positioned at a third position in the machine coordinate system. Furthermore, the plurality of fiducial members FM may be positioned on the workpiece W and the stage 141 so that at least N fourth fiducial members FM are included in the measurement range of the measurement head 22 in a case where the stage 141 is positioned at a fourth position, which is different from the third position, in the machine coordinate system. Incidentally, the at least N fourth fiducial members FM may be different from the at least N third fiducial members FM. Alternatively, a part of the at least N fourth fiducial members FM may be the same as a part of the at least N third fiducial members FM. Alternatively, all of the at least N fourth fiducial members FM may be the same as all of the at least N third fiducial members FM.

4 is one example of the variable number N. In this case, the plurality of fiducial members FM may be positioned on the workpiece W and the stage 141 so that at least four fiducial members FM are included in the measurement range of the measurement head 22 that is positioned at a desired position in the machine coordinate system. The plurality of fiducial members FM may be positioned on the workpiece W and the stage 141 so that at least four fiducial members FM are included in the measurement range of the measurement head 22 that moves in the machine coordinate system.

Incidentally, one reason why 4 is one example of the variable number N is that a first movement error calculation operation uses a principle of multi-side surveying as described later. In this case, a plurality of lines connecting the measurement head 22 and the reference members FM are prepared, and then, the position of the measurement head 22 is calculated based on lengths of the lines (namely, the distances between the measurement head 22 and the fiducial members FM), and then the movement error is calculated based on the position of the measurement head 22. In the present example embodiment, not only the position of the measurement head 22 but also the position of the fiducial member FM are unknown parameters, so at least four fiducial members FM are required in order to set a minimization problem described below. However, three or fewer fiducial members FM may be sufficient depending on the method used to set the minimization problem.

Here, in a case where the fiducial member FM is positioned on each of the stage 141 and the workpiece W, it is more likely that at least N fiducial members FM are included in the measurement range of the measurement head 22, compared to a case where the fiducial member FM is positioned only on the stage 141.

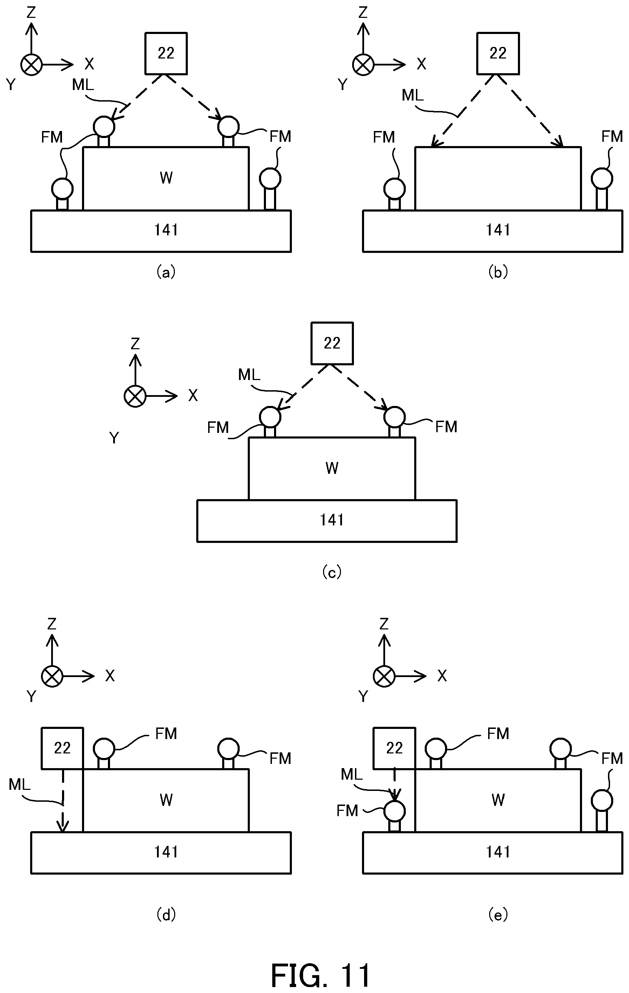

For example, FIG. 11(a) illustrates the measurement head 22 that irradiates the fiducial members FM with the measurement light ML at a position above the workpiece W, in a situation where the fiducial member FM is positioned on each of the stage 141 and the workpiece W. On the other hand, for example, FIG. 11(b) illustrates the measurement head 22 that irradiates the fiducial members FM with the measurement light ML at a position above the workpiece W, in a situation where the fiducial member FM is positioned on the stage 141 but the fiducial member FM is not positioned on the workpiece W. As illustrated in FIG. 11(b), in a case where the fiducial member FM is not positioned on the workpiece W, there is a possibility that the measurement head 22 positioned above the workpiece W cannot irradiate the fiducial member FM placed on the stage 141 with the measurement light ML. This is because, as illustrated in FIG. 11(b), there is a possibility that the measurement light ML is shielded by the workpiece W. On the other hand, as illustrated in FIG. 11(a), in a case where the fiducial member FM is further positioned on the workpiece W, the measurement head 22 can irradiate the fiducial member FM positioned on the workpiece W with the measurement light ML even in a case where the measurement head 22 positioned above the workpiece W cannot irradiate the fiducial member FM positioned on the stage 141 the measurement light ML. Namely, it is more likely that at least N fiducial members FM are included in the measurement range of the measurement head 22 in the situation illustrated in FIG. 11(a), compared to the situation illustrated in FIG. 11(b).

Furthermore, FIG. 11(c) illustrates the measurement head 22 that irradiates the fiducial member FM with the measurement light ML at a position above the workpiece W, in a situation where the fiducial member FM is positioned on the workpiece W, but the fiducial member FM is not positioned on the stage 141. In this case, as illustrated in FIG. 11(c), in a case where the fiducial member FM is positioned on the workpiece W, the measurement head 22 can irradiate the fiducial member FM positioned on the workpiece W with the measurement light ML even in a case where the measurement head 22 positioned above the workpiece W cannot irradiate the fiducial member FM positioned on the stage 141 with the measurement light ML. Namely, it is more likely that at least N fiducial members FM are included in the measurement range of the measurement head 22 in the situation illustrated in FIG. 11(c), compared to the situation illustrated in FIG. 11(b).

Incidentally, FIG. 11(d) illustrates the measurement head 22 that irradiates the fiducial member FM with the measurement light ML at a position lateral to the workpiece W, in a situation where the fiducial member FM is positioned on the workpiece W, but the fiducial member FM is not positioned on the stage 141. In this case, in a case where the fiducial member FM is not positioned on stage 141, there is a possibility that the measurement head 22 positioned at the position lateral to the workpiece W cannot irradiate the fiducial member FM positioned on the workpiece W (especially, its upper surface) with the measurement light ML depending on a positional relationship between the measurement head 22 and the workpiece W. On the other hand, as illustrated in FIG. 11(e), in a case where the fiducial member FM is further positioned on the stage 141, the measurement head 22 can irradiate the fiducial member FM positioned on the stage 141 with the measurement light ML even in a case where the measurement head 22 positioned at the position lateral to the workpiece W cannot irradiate the fiducial member FM positioned on the workpiece W with the measurement light ML. Namely, it is more likely that at least N fiducial members FM are included in the measurement range of the measurement head 22, compared to the situation illustrated in FIG. 11(d). However, a frequency with which the measurement head 22 irradiates the fiducial member FM with the measurement light ML at the position lateral to the workpiece W may be lower than a frequency with which the measurement head 22 irradiates the fiducial member FM with the measurement light ML at the position above the workpiece W. Therefore, even in a situation illustrated in FIG. 11(d), it remains true that the position of the fiducial members FM illustrated in FIG. 11(c), which achieves an effect that "it is more likely that at least N fiducial members FM are included in the measurement range of the measurement head 22", is still beneficial in a situation where "the measurement head 22 irradiates the fiducial member FM with the measurement light ML at the position above the workpiece W", which may occur frequently. It can be said that FIG. 11(e) emphatically illustrates an additional effect that is achievable by positioning the fiducial member FM on each of the stage 141 and the workpiece W in a situation where the measurement head 22 irradiates the fiducial member FM with the measurement light ML at the position lateral to the workpiece W, which may not occur frequently.

In FIG. 10(a) and FIG. 10(b) again, the fiducial member FM may be directly positioned on the stage 141 or the workpiece W. Alternatively, the fiducial member FM may be positioned on the stage 141 or the workpiece W through a support member that is configured to support the fiducial member FM. Namely, the fiducial member FM may be indirectly positioned on the stage or the workpiece W through the support member. Specifically, the support member that supports the fiducial member FM may be directly positioned on the stage 141 or the workpiece W. A jig is one example of the support member that is configured to support the fiducial member FM. In the example illustrated in FIG. 10(b), each fiducial member FM is positioned on the stage 141 or the workpiece W through a bar-shaped support member. Incidentally, a member that includes: the fiducial member FM; and the support member that supports the fiducial member FM may be referred to as the fiducial member FM.

The plurality of fiducial members FM may include at least two fiducial members FM positioned at at least two positions that are different along the X-axis of the machine coordinate system. Namely, the plurality of fiducial members FM may include at least two fiducial members FM whose positions along the X-axis of the machine coordinate system are different from each other. In other words, the plurality of fiducial members FM may include at least two fiducial members FM that are away from each other along the X-axis of the machine coordinate system. For example, at least two fiducial members FM that are away from each other along the X-axis of the machine coordinate system may be positioned on the workpiece W. For example, at least two fiducial members FM that are away from each other along the X-axis of the machine coordinate system may be positioned on the stage 141. For example, at least one fiducial member FM positioned on the workpiece W and at least one fiducial member FM positioned on the stage 141 may be away from each other along the X-axis of the machine coordinate system.

The plurality of fiducial members FM may include at least two fiducial members FM positioned at at least two positions that are different along the Y-axis of the machine coordinate system. Namely, the plurality of fiducial members FM may include at least two fiducial members FM whose positions along the Y-axis of the machine coordinate system are different from each other. In other words, the plurality of fiducial members FM may include at least two fiducial members FM that are away from each other along the Y-axis of the machine coordinate system. For example, at least two fiducial members FM that are away from each other along the Y-axis of the machine coordinate system may be positioned on the workpiece W. For example, at least two fiducial members FM that are away from each other along the Y-axis of the machine coordinate system may be positioned on the stage 141. For example, at least one fiducial member FM positioned on the workpiece W and at least one fiducial member FM positioned on the stage 141 may be away from each other along the Y-axis of the machine coordinate system.

The plurality of fiducial members FM may include at least two fiducial members FM positioned at at least two positions that are different along the Z-axis of the machine coordinate system. Namely, the plurality of fiducial members FM may include at least two fiducial members FM whose positions along the Z-axis of the machine coordinate system are different from each other. In other words, the plurality of fiducial members FM may include at least two fiducial members FM that are away from each other along the Z-axis of the machine coordinate system. The plurality of fiducial members FM may include at least two fiducial members FM whose heights are different from each other, because the Z-axis is a vertical direction. For example, at least two fiducial members FM whose heights are different from each other may be positioned on the workpiece W. For example, at least two fiducial members FM whose heights are different from each other may be positioned on the stage 141. For example, the height of at least one fiducial member FM positioned on the workpiece W may be different from the height of at least one fiducial member FM positioned on the stage 141.

The height of the fiducial member FM may be adjusted by the support member (for example, the jig) that supports the fiducial member FM. For example, at least two fiducial members FM, which are respectively supported by at least two bar-shaped support members having different lengths (heights), may be positioned on the workpiece W. For example, at least two fiducial members FM, which are respectively supported by at least two bar-shaped support members having different lengths (heights), may be positioned on the stage 141.

The fiducial member FM may be a member whose characteristic is known. For example, the fiducial member FM may be a member whose shape is known. For example, the fiducial member FM may be a member whose size is known. For example, the fiducial member FM may be a member whose reflectance (reflectance distribution) is known. For example, the fiducial member FM may be a member whose transmittance (transmittance distribution) is known. For example, the fiducial member FM may be a retroreflective member that is configured to retroreflect the measurement light ML entering thereto. The retroreflective member may be a corner cube or may be a ball lens. The fiducial member FM may be a Spherical Mounted Retroreflector (SMR) that is one example of the retroreflective member. Incidentally, the fiducial member FM may be referred to as a reflector or a retroreflective member. Incidentally, the fiducial member FM may be referred to as a target. For example, the fiducial member FM may be a marker. For example, the fiducial member FM may be an AR tag or may be a barcode.

The fiducial member FM may be a member that has at least one feature point in the measurement range of the measurement head 22. Here, a state in which at least one feature point is in the measurement range may mean a state in which at least one feature point is in an area, which corresponds to the measurement range, of a surface of the fiducial member FM. The feature point may be a part of the fiducial member FM satisfying a condition that the feature point is distinguishable from other part of the fiducial member FM. For example, the feature point may be a part of the fiducial member FM satisfying a condition that a characteristic of the feature point is distinguishable from a characteristic of other part of the fiducial member FM. A vertex or a corner of one area of the fiducial member FM that is distinguishable from other area may be used as the feature point. A boundary of one area of the fiducial member FM that is distinguishable from other area may be used as the feature point. In a case where the fiducial member FM having at least one feature point in the measurement range of the measurement head 22 is used, there is an advantage that measurement error is reducible.

### (2-2) Specific Flow of Movement Error Calculation Operation

Next, a specific flow of the movement error calculation operation will be described. As described above, the movement errors include at least one of the movement error occurring in the translational movement of the processing head 11, the movement error occurring in the rotational movement of the processing head 11, the movement error occurring in the translational movement of the stage 141, and the movement error occurring in the rotational movement of the stage 141. In the below-described description, for convenience of description, a first movement error calculation operation for calculating the movement error occurring in the translational movement of at least one of the processing head 11 and the stage 141, and a second movement error calculation operation for calculating the movement error occurring in the rotational movement of at least one of the processing head 11 and the stage 141 will be described in order.

**(2-2-1) Specific Flow of First Movement Error Calculation Operation for calculating movement error occurring in translational movement of at least one of processing head 11 and stage 141**

First, the first movement error calculation operation for calculating the movement error occurring in the translational movement of at least one of the processing head 11 and the stage 141 will be described.

In a case where the movement error occurring in the translational movement of the processing head 11 (the measurement head 22) is calculated, the measurement head 22 may irradiate each of at least N fiducial members FM, which are included in the measurement range of the measurement head 22, with the measurement light ML by using the Galvano mirror 2228 to change the propagating direction of the measurement light ML each time the processing head 11 moves translationally and stops. Namely, the measurement head 22 may irradiate each of at least N fiducial members FM, which are included in the measurement range of the measurement head 22, with the measurement light ML whose propagating direction is changed by the Galvano mirror 2228 each time the processing head 11 moves translationally to each of a plurality of different positions. As a result, the measurement head 22 optically receives the returning light RL from each of at least N fiducial members FM each time the processing head 11 moves translationally and stops. The measurement control apparatus 24 may calculate the movement error occurring in the translational movement of the processing head 11 based on the optical received result of the returning light RL that is from each of at least N fiducial members FM and that is optically received by the measurement head 22 each time the processing head 11 moves translationally to each of the plurality of different positions. Especially, the measurement control apparatus 24 may calculate the movement error occurring in the translational movement of the processing head 11 in a space in which the processing head 11 moves translationally to the plurality of different positions, based on the optical received result of the returning light RL that is from each of at least N fiducial members FM and that is optically received by the measurement head 22 each time the processing head 11 moves translationally to each of the plurality of different positions.

Incidentally, the measurement head 22 may irradiate each of at least N fiducial members FM included in the measurement range of the measurement head 22 with the measurement light ML by using the Galvano mirror 2228 to sequentially change the propagating direction of the measurement light ML in a period during which the processing head 11 is moving translationally (in a state where the processing head 11 is not stopped). Even in this case, the measurement control apparatus 24 may calculate the movement error occurring in the translational movement of the processing head 11 in the space in which the processing head 11 moves translationally to the plurality of different positions, based on the optical received result of the returning light RL that is from each of at least N fiducial members FM and that is optically received by the measurement head 22 each time the processing head 11 moves translationally to each of the plurality of different positions.

In a case where the movement error occurring in the translational movement of the stage 141 is calculated, the measurement head 22 may irradiate each of at least N fiducial members FM, which are included in the measurement range of the measurement head 22, with the measurement light ML by using the Galvano mirror 2228 to change the propagating direction of the measurement light ML each time the stage 141 moves translationally and stops. Namely, the measurement head 22 may irradiate each of at least N fiducial members FM, which are included in the measurement range of the measurement head 22, with the measurement light ML whose propagating direction is changed by the Galvano mirror 2228 each time the stage 141 moves translationally to each of a plurality of different positions. As a result, the measurement head 22 optically receives the returning light RL from each of at least N fiducial members FM each time the stage 141 moves translationally and stops. The measurement control apparatus 24 may calculate the movement error occurring in the translational movement of the stage 141 based on the optical received result of the returning light RL that is from each of at least N fiducial members FM and that is optically received by the measurement head 22 each time the stage 141 moves translationally to each of the plurality of different positions. Especially, the measurement control apparatus 24 may calculate the movement error occurring in the translational movement of the stage 141 in a space in which the stage 141 moves translationally to the plurality of different positions, based on the optical received result of the returning light RL that is from each of at least N fiducial members FM and that is optically received by the measurement head 22 each time the stage 141 moves translationally to each of the plurality of different positions.

Incidentally, the measurement head 22 may irradiate each of at least N fiducial members FM included in the measurement range of the measurement head 22 with the measurement light ML by using the Galvano mirror 2228 to sequentially change the propagating direction of the measurement light ML in a period during which the stage 141 moves translationally (in a state where the stage 141 is not stopped). Even in this case, the measurement control apparatus 24 may calculate the movement error occurring in the translational movement of the stage 141 in the space in which the stage 141 moves translationally to the plurality of different positions, based on the optical received result of the returning light RL that is from each of at least N fiducial members FM and that is optically received by the measurement head 22 each time the stage 141 moves translationally to each of the plurality of different positions.

In a case where the movement error occurring in the translational movement is calculated, the workpiece W is placed on the stage 141. For example, in a case where the movement error occurring in the translational movement is calculated, the workpiece W with the fiducial member FM may be placed on the stage 141. For example, in a case where the movement error occurring in the translational movement is calculated, the workpiece W without the fiducial member FM may be placed on the stage 141. However, in a case where the movement error occurring in the translational movement is calculated, the workpiece W may not be placed on the stage 141. In the below-described description, for convenience of description, the first movement error calculation operation performed in a case where the workpiece W with the fiducial member FM is placed on the stage 141 will be described. However, even in a case where the workpiece W without the fiducial member FM is placed on the stage 141 or the workpiece W is not placed on the stage 141, the processing system SYS may calculate the movement error occurring in the translational movement by performing the first movement error calculation operation described below.

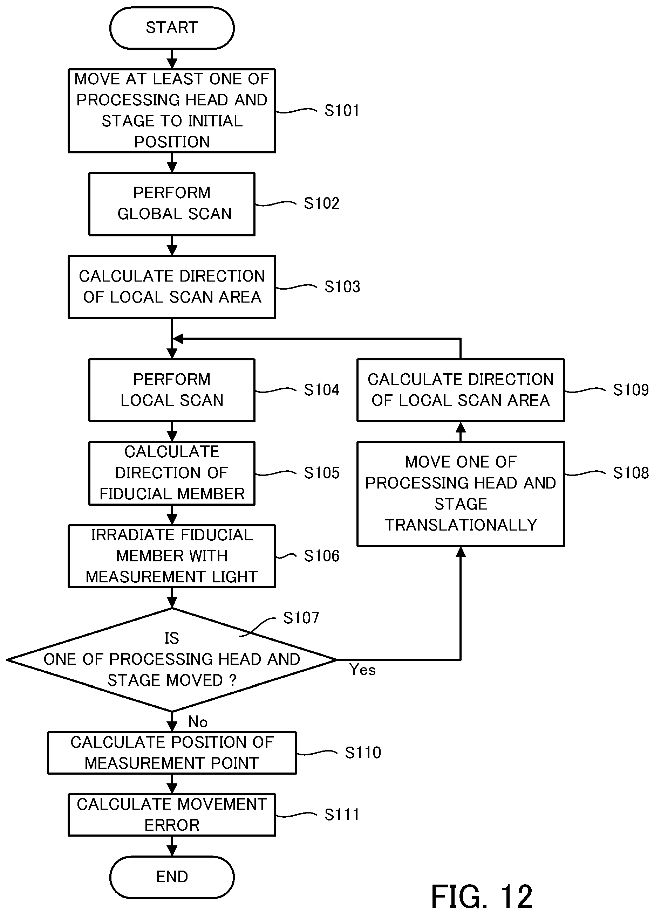

Next, with reference to FIG. 12, a flow of the first movement error calculation operation for calculating the movement error occurring in the translational movement of at least one of the processing head 11 (the measurement head 22) and the stage 141 will be described. FIG. 12 is a flowchart that illustrates the flow of the first movement error calculation operation for calculating the movement error occurring in the translational movement of at least one of the processing head 11 and the stage 141.

As illustrated in FIG. 12, first, the measurement control apparatus 24 moves at least one of the processing head 11 and the stage 141 to an initial position, and then stops it at the initial position in the machine coordinate system (a step S101). Namely, the measurement control apparatus 24 controls at least one of the head driving system 12 and the stage driving system 142 so that at least one of the processing head 11 and the stage 141 moves to the initial position in the machine coordinate system (the step S101). More specifically, the processing control apparatus 16 controls at least one of the head driving system 12 and the stage driving system 142 so that at least one of the processing head 11 and the stage 141 moves to the initial position in the machine coordinate system under the control of the measurement control apparatus 24 (the step S101). At the step S101, the measurement control apparatus 24 may moves at least one of the processing head 11 and the stage 141 translationally.

Specifically, the measurement control apparatus 24 may move the processing head 11 to an initial head position, which is one example of the initial position. In this case, the processing control apparatus 16, which controls the head driving system 12, generates the head driving control signal for controlling the head driving system 12 to move the processing head 11 to the initial head position based on the initial head position in the machine coordinate system under the control of the measurement control apparatus 24. Incidentally, information related to the initial head position that is used to generate the head driving control signal may be regarded as a command value related to the movement of the processing head 11. The head driving control signal itself may also be regarded as the command value related to the movement of the processing head 11. Then, the processing control apparatus 16 controls the head driving system 12 based on the generated driving control signal under the control of the measurement control apparatus 24. As a result, the head driving system 12 moves the processing head 11 so that the processing head 11 moves to the initial head position. As a result, the processing head 11 moves to the initial head position and then stops at the initial head position.

However, at this point, the processing head 11 may not actually be positioned (namely, stop) at the initial head position because the movement error of the processing head 11 is not corrected yet. Namely, the actual position of the processing head 11 in the machine coordinate system may not be the same as the initial head position in the machine coordinate system.

The initial head position may be a position of an edge of a movement range in which the processing head 11 is allowed to move along the translational axis in the machine coordinate system. For example, the processing head 11 is movable along each of the translational axis (X) and the translational axis (Z). In this case, the initial head position may be a position of an edge at the +X side of the movement range in which the processing head 11 is allowed to move along the translational axis (X) in the machine coordinate system. The initial head position may be a position of an edge at the -X side of the movement range in which the processing head 11 is allowed to move along the translational axis (X) in the machine coordinate system. The initial head position may be a position of an edge at the +Z side of the movement range in which the processing head 11 is allowed to move along the translational axis (Z) in the machine coordinate system. The initial head position may be a position of an edge at the -Z side of the movement range in which the processing head 11 is allowed to move along the translational axis (Z) in the machine coordinate system. Alternatively, a current position of the processing head 11 may be used as the initial head position. In this case, the measurement control apparatus 24 may not necessarily move the processing head 11 at the step S101. However, the initial head position is not limited to the position described as one example here.

The measurement control apparatus 24 may move the stage 141 to an initial stage position, which is one example of the initial position. In this case, the processing control apparatus 16, which controls the stage driving system 142, generates the stage driving control signal for controlling the stage driving system 142 to move the stage 141 to the initial stage position based on the initial stage position in the machine coordinate system under the control of the measurement control apparatus 24. Incidentally, information related to the initial stage position that is used to generate the stage driving control signal may be regarded as a command value related to the movement of the stage 141. The stage driving control signal itself may also be regarded as the command value related to the movement of the stage 141. Then, the processing control apparatus 16 controls the stage driving system 142 based on the generated driving control signal under the control of the measurement control apparatus 24. As a result, the stage driving system 142 moves the stage 141 so that the stage 141 moves to the initial stage position. As a result, the stage 141 moves to the initial stage position and then stops at the initial stage position.

However, at this point, the stage 141 may not actually be positioned (namely, stop) at the initial stage position because the movement error of the stage 141 is not corrected yet. Namely, the actual position of the stage 141 in the machine coordinate system may not be the same as the initial stage position in the machine coordinate system.

The initial stage position may be a position of an edge of a movement range in which the stage 141 is allowed to move along the translational axis in the machine coordinate system. For example, the stage 141 is movable along the translational axis (Y). In this case, the initial stage position may be a position of an edge at the +Y side of the movement range in which the stage 141 is allowed to move along the translational axis (Y) in the machine coordinate system. The initial stage position may be a position of an edge at the -Y side of the movement range in which the stage 141 is allowed to move along the translational axis (Y) in the machine coordinate system. Alternatively, a current position of the stage 141 may be used as the initial stage position. In this case, the measurement control apparatus 24 may not necessarily move the stage 141 at the step S101. However, the initial stage position is not limited to the position described as one example here.

Then, the measurement control apparatus 24 performs a global scan (a step S102). Specifically, the measurement control apparatus 24 controls the measurement head 22 to perform the global scan (the step S102). As a result, the measurement head 22 performs the global scan (the step S102).

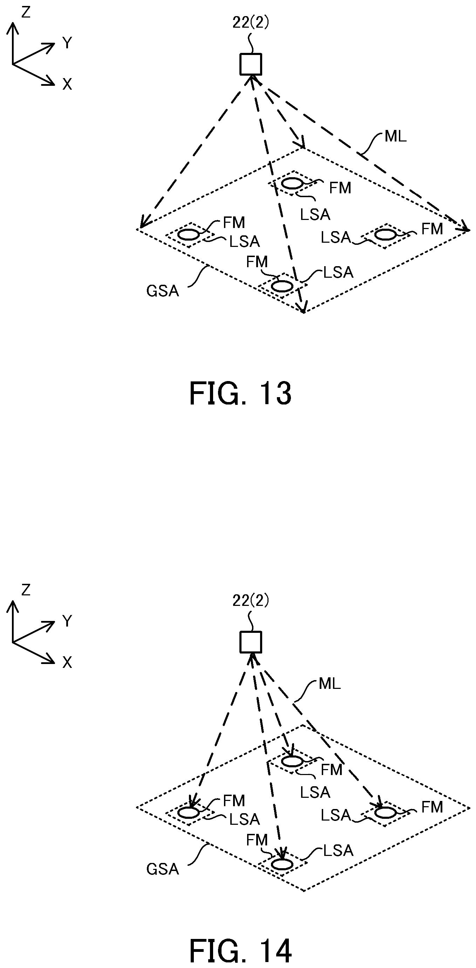

The global scan is an operation for scanning a global scan area GSA, which corresponds to the measurement range of the measurement head 22, with the measurement light ML, as illustrated in FIG. 13 that illustrates the measurement head 22 performing the global scan. In order to perform the global scan, the measurement control apparatus 24 controls the Galvano mirror 2228 of the measurement head 22 so as to scan the global scan area GSA with the measurement light ML. As a result, the measurement head 22 optically receives the returning light RL from the global scan area GSA. Namely, the optical detector 2226 of the measurement head 22 optically receives the returning light RL from the global scan area GSA.

As described above, in a case where the measurement control apparatus 24 calculates the distance between the measurement target object and the measurement head 22, the optical detector 2226 optically receives the interfering light between the returning light RL and the reference light RB. On the other hand, in a case where the measurement head 22 performs the global scan, the optical detector 2226 optically receives the returning light RL, but may not optically receive the reference light RB. Namely, the optical detector 2226 may not optically receive the interfering light between the returning light RL and the reference light RB. In a case where the measurement head 22 performs the global scan, the measurement light source 21#1, which is configured to generate the measurement light ML#1 that is the reference light RB entering the optical detector 2226, may not generate the measurement light ML#1. In other words, the measurement light source 21#1 may not emit the measurement light ML#1. Alternatively, a light-shielding member that shields the measurement light ML#1 may be inserted in the optical path of the measurement light ML#1 between the measurement light source 21#1 and the optical detector 2226.

Then, the measurement control apparatus 24 calculates a direction of a local scan area LSA from the measurement head 22 based on a result of the global scan (a step S103). The local scan area LSA is an area in which the fiducial member FM is positioned in the global scan area GSA, as illustrated in FIG. 13. Therefore, at the step S103, the measurement control apparatus 24 may be considered to calculate a direction of the fiducial member FM, which exists in the global scan area GSA, from the measurement head 22 based on the result of the global scan.

Especially, the local scan area LSA is an area that is smaller than the global scan area GSA. Therefore, the local scan area LSA is an area in which the fiducial member FM is positioned in the global scan area GSA and is an area that corresponds to a part of the global scan area GSA.

In order to calculate the direction of the local scan area LSA, the measurement control apparatus 24 acquires the detected result (namely, the optical received result of the returning light RL) by the optical detector 2226 as the result of the global scan. Here, it is more likely that an intensity of the returning light RL in a case where the fiducial member FM is irradiated with the measurement light ML is different from an intensity of the returning light RL the fiducial member FM is not irradiated with the measurement light ML. Conversely, a reflectance (a reflectance distribution) of the fiducial member FM may be set so that the intensity of the returning light RL in a case where the fiducial member FM is irradiated with the measurement light ML is different from the intensity of the returning light RL in a case where the fiducial member FM is irradiated with the measurement light ML. Typically, it is more likely that the intensity of the returning light RL in a case where the fiducial member FM is irradiated with the measurement light ML is higher than the intensity of the returning light RL the fiducial member FM is not irradiated with the measurement light ML. Conversely, the reflectance (the reflectance distribution) of the fiducial member FM may be set so that the intensity of the returning light RL in a case where the fiducial member FM is irradiated with the measurement light ML is higher than the intensity of the returning light RL in a case where the fiducial member FM is irradiated with the measurement light ML. In this case, the measurement control apparatus 24 may determine a period during which the fiducial member FM is irradiated with the measurement light ML, based on the detected result (namely, the optical received result of the returning light RL) by the optical detector 2226. Namely, the measurement control apparatus 24 may distinguish the period during which the fiducial member FM is irradiated with the measurement light ML from a period during which the fiducial member FM is not irradiated with the measurement light ML. Then, the measurement control apparatus 24 may calculate a direction along which the measurement light ML is emitted from the Galvano mirror 2228 in the period during which the fiducial member FM is irradiated with the measurement light ML as the direction of the fiducial member FM from the measurement head 22, based on the information related to the driving state of the Galvano mirror 2228 in the period during which the fiducial member FM is irradiated with the measurement light ML. Namely, the measurement control apparatus 24 may calculate the direction along which the measurement light ML is emitted from the Galvano mirror 2228 in the period during which the fiducial member FM is irradiated with the measurement light ML as the direction of the local scan area LSA from the measurement head 22. The information related the rotational angle of the scanning mirror 22281 of the Galvano mirror 2228 is one example of the information related to the driving state of the Galvano mirror 2228.

In a case where at least N fiducial members FM are included in the measurement range of the measurement head 22 as described above, the measurement control apparatus 24 may calculate the direction of each of at least N local scan areas LSA in which at least N fiducial members FM are positioned, respectively. In the present example embodiment, the example in which the variable number N is set to 4 in a case where the first movement error calculation operation is performed will be described. In this case, the plurality of fiducial members FM may be positioned on the workpiece W and the stage 141 so that at least four fiducial members FM are included in the measurement range of the measurement head 22. The measurement control apparatus 24 may calculate the direction of each of at least four local scan areas LSA in which at least four fiducial members FM are positioned, respectively, in the measurement range (namely, in the global scan area GSA).

However, even in a case where the direction of each local scan area LSA, is calculated the measurement head 22 may optically receive the interfering light between the returning light RL from the global scan area GSA (namely, the returning light RL from the fiducial member FM) and the reference light RB. In this case, the measurement control apparatus 24 may calculate a distance between the measurement head 22 and the local scan area LSA in which the fiducial member FM is positioned based on the optical received result of the interfering light between the returning light RL and the reference light RB. Then, the measurement control apparatus 24 may calculate a position of the local scan area LSA in the machine coordinate system based on the calculated distance to the local scan area LSA, the direction of the local scan area LSA calculated from the intensity of the returning light RL, and the position of the processing head 11 (namely, the position of the measurement head 22 attached to the processing head 11) in the machine coordinate system. Incidentally, the position of the processing head 11 in the machine coordinate system may be acquired from the position measurement apparatus 13 that is configured to measure the position of the processing head 11.

Incidentally, the number of fiducial members FM included in the local scan area LSA is not limited to one. Namely, at least two fiducial members FM may be positioned in a single local scan area LSA. In this case, the measurement control apparatus 24 may calculate the direction of the single local scan area LSA in which at least two fiducial members FM are positioned. In this case, the measurement control apparatus 24 may not calculate the direction of each of N local scan areas LSA in which at least N fiducial members FM are positioned, respectively. For example, in a case where at least N fiducial members FM are included in the measurement range of the measurement head 22, the measurement control apparatus 24 may calculate the directions of the local scan areas LSA the number of which is less than N and is equal to or greater than two.

Then, the measurement control apparatus 24 performs a local scan (a step S104). Specifically, the measurement control apparatus 24 controls the measurement head 22 to perform the local scan (the step S104). As a result, the measurement head 22 performs the local scan (the step S104).

The local scan is an operation for scanning each of at least four local scan areas LSA with the measurement light ML, as illustrated in FIG. 14 that illustrates the measurement head 22 performing the local scan. In order to perform the local scan, the measurement control apparatus 24 scans each of at least four local scan areas LSA with the measurement light ML based on the direction of each of at least four local scan areas LSA calculated at the step S103. Specifically, the measurement control apparatus 24 controls the Galvano mirror 2228 so that the measurement light ML is emitted along the direction of one local scan area LSA calculated at the step S103. Furthermore, the measurement control apparatus 24 controls the Galvano mirror 2228 so as to scan the one local scan area LSA with the measurement light ML that is emitted along the direction of the one local scan area LSA calculated at the step S103. As a result, the measurement head 22 scans the one local scan area LSA with the measurement light ML and optically receives the returning light RL from the one local scan area LSA. Namely, the optical detector 2226 of the measurement head 22 optically receives the returning light RL from the one local scan area LSA. The measurement control apparatus 24 repeats this operation as many times as the number of local scan areas LSA.

Then, the measurement control apparatus 24 calculates a direction of the fiducial member FM from the measurement head 22 based on a result of the local scan (a step S105). Namely, the measurement control apparatus 24 calculates the direction of each of at least four fiducial members FM from the measurement head 22 based on the result of the local scan (the step S105).

In order to calculate the direction of each of the at least four fiducial members FM, the measurement control apparatus 24 acquires the detected result (namely, the optical received result of the returning light RL) by the optical detector 2226 as the result of the local scan. Here, it is more likely that the intensity of the returning light RL in a case where the fiducial member FM is irradiated with the measurement light ML is different from the intensity of the returning light RL the fiducial member FM is not irradiated with the measurement light ML as described above. In this case, the measurement control apparatus 24 may determine a period during which one fiducial member FM positioned in one local scan area LSA is irradiated with the measurement light ML for scanning the one local scan area LSA based on the optical received result of the returning light RL from the one local scan area LSA. Namely, the measurement control apparatus 24 may distinguish the period during which the one fiducial member FM positioned in the one local scan area LSA is irradiated with the measurement light ML for scanning the one local scan area LSA from a period during which the one fiducial member FM positioned in the one local scan area LSA is not irradiated with the measurement light ML for scanning the one local scan area LSA. Then, the measurement control apparatus 24 may calculate a direction along which the measurement light ML is emitted from the Galvano mirror 2228 in the period during which the one fiducial member FM positioned in the one local scan area LSA is irradiated with the measurement light ML as the direction of the one fiducial member FM positioned in the one local scan area LSA from the measurement head 22, based on the information related to the driving state of the Galvano mirror 2228 in the period during which the one fiducial member FM positioned in the one local scan area LSA is irradiated with the measurement light ML. The measurement control apparatus 24 repeats this operation as many times as the number of local scan areas LSA. As a result, the direction from each of at least four fiducial members FM from the measurement head 22 is calculated.

Incidentally, a scanning pitch of the measurement light ML in the local scan may be smaller than a scanning pitch of the measurement light ML in the global scan. For example, the measurement head 22 may scan the global scan area GSA with the measurement light ML at a first scanning pitch. On the other hand, for example, the measurement head 22 may scan each local scan area LSA with the measurement light ML at a second scanning pitch that is smaller than the first scanning pitch. Incidentally, the scanning pitch of the measurement light ML may mean a distance between a plurality of scanning points (irradiation points) that are irradiated with the measurement light ML. Since the measurement head 22 optical receives the returning light RL from each scanning point (each irradiation point), the scanning pitch of the measurement light ML may be considered to be equivalent to a cycle at which the optical detector 2226 detects the returning light RL. In this case, in order to perform a global scan, the measurement head 22 may irradiate each of the plurality of scanning points (irradiation points), which are distributed in a relatively sparse distribution state in the global scan area GSA that is larger than the local scan area LSA, with the measurement light ML. As a result, the measurement head 22 may roughly search the position at which the fiducial member FM exists in the global scan area GSA (namely, the position of the local scan area LSA). On the other hand, in order to perform the local scan, the measurement head 22 may irradiate each of the plurality of scanning points (irradiation points), which are distributed in a relatively dense distribution state in the local scan area LSA that is smaller than the global scan area GSA, with the measurement light ML. As a result, the measurement head 22 may finely search the position at which the fiducial member FM exists in the local scan area LSA. As a result, the measurement control apparatus 24 can calculate the direction of the fiducial member FM more quickly, compared to a case where the scanning pitch of the measurement light ML in the local scan is not smaller than the scanning pitch of the measurement light ML in the global scan.

However, the measurement control apparatus 24 may not perform the local scan. Namely, the measurement control apparatus 24 may not perform the operation from the step S103 to the step S104. In this case, the measurement control apparatus 24 may calculate the directions of at least four fiducial members FM from the measurement head 22 based on the result of the global scan at the step S105. Specifically, the measurement control apparatus 24 acquires the detected result (namely, the optical received result of the returning light RL) by the optical detector 2226 as the result of the global scan. Here, it is more likely that the intensity of the returning light RL in a case where the fiducial member FM is irradiated with the measurement light ML is different from the intensity of the returning light RL the fiducial member FM is not irradiated with the measurement light ML as described above. In this case, the measurement control apparatus 24 may determine the period during which the fiducial member FM is irradiated with the measurement light ML based on the optical received result of the returning light RL. Then, the measurement control apparatus 24 may calculate a direction along which the measurement light ML is emitted from the Galvano mirror 2228 in the period during which the fiducial member FM is irradiated with the measurement light ML as the direction of the fiducial member FM from the measurement head 22, based on the information related to the driving state of the Galvano mirror 2228 in the period during which the fiducial member FM is irradiated with the measurement light ML.

Incidentally, in a case where the local scan is not performed, the measurement head 22 may scan the global scan area GSA with the measurement light ML at a relatively small scanning pitch that is used for the local scan.

Incidentally, at the step S105, the measurement control apparatus 24 may calculate the direction of the fiducial member FM from the measurement head 22 without using the results of the global scan and the local scan. For example, in a case where the position of the fiducial member FM in the machine coordinate system is already known, the direction of the fiducial member FM from the measurement head 22 may be calculated based on that position. Incidentally, the position of the fiducial member FM in the machine coordinate system may not be known. For example, in a case where the machine tool 1 includes a camera, the measurement control apparatus 24 may calculate the direction of the fiducial member FM from the measurement head 22 by analyzing an image captured by the camera.

Moreover, at the step S105, the measurement control apparatus 24 may calculate the position of each fiducial member FM, in addition to or instead of calculating the direction of each fiducial member FM. Once the position of each fiducial member FM has been calculated, the direction of each fiducial member FM is determined. Therefore, an operation for calculating the direction of each fiducial member FM at the step S105 may include an operation for calculating the position of each fiducial member FM. In order to calculate the position of each fiducial member FM, the measurement head 22 may optically receive the interfering light between the returning light RL (namely, the returning light RL from the fiducial member FM) and the reference light RB. In this case, the measurement control apparatus 24 may calculate a distance between the fiducial member FM and the measurement head 22 based on the optical received result of the interfering light between the returning light RL and the reference light RB. Then, the measurement control apparatus 24 may calculate the position of the fiducial member FM in the machine coordinate system based on the calculated distance to the fiducial member FM, the direction of the fiducial member FM calculated from the intensity of the returning light RL, and the position of the processing head 11(namely, the position of the measurement head 22 attached to the processing head 11) in the machine coordinate system.

Then, the measurement control apparatus 24 controls the measurement head 22 so as to irradiate the fiducial member FM with the measurement light ML (a step S106). Namely, the measurement control apparatus 24 controls the measurement head 22 so as to irradiate each of at least four fiducial members FM with the measurement light ML (the step S106). As a result, the measurement head 22 irradiates each of at least four fiducial members FM with the measurement light ML (the step S106). As a result, the measurement head 22 optical receives the returning light RL from each of at least four fiducial members FM (the step S106).

In order to irradiate each of at least four fiducial members FM with the measurement light ML, the measurement control apparatus 24 irradiates each of at least four fiducial members FM with the measurement light ML based on the direction of each of at least four fiducial members FM determined at the step S105. Specifically, the measurement control apparatus 24 controls the Galvano mirror 2228 so as to emit the measurement light ML toward the direction of one fiducial member FM determined at the step S105. As a result, the measurement head 22 irradiates the one fiducial member FM with the measurement light ML and optically receives the returning light RL from the one fiducial member FM. Namely, the optical detector 2226 of the measurement head 22 optically receives the returning light RL from the one fiducial member FM. The measurement control apparatus 24 repeats this operation as many times as the number of fiducial members FM included in the measurement range of the measurement head 22.

Then, the measurement control apparatus 24 determines whether or not one of the processing head 11 and the stage 141 should be moved (a step S107). Especially, at the step S107, the measurement control apparatus 24 determines whether or not one the processing head 11 and the stage 141 should be moved translationally along the translational axis. Conversely, each of the processing head 11 and the stage 141 does not move in a period during which the operation from the step S102 to the step S106 is performed. Each of the processing head 11 and the stage 141 stops in the period during which the operation from the step S102 to the step S106 is performed.

For example, in a case where the number of times one of the processing head 11 and the stage 141 has moved translationally is less than a required movement number, the measurement control apparatus 24 may determine that one of the processing head 11 and the stage 141 should be moved. For example, in a case where the number of times one of the processing head 11 and the stage 141 has moved translationally is equal to or greater than the required movement number, the measurement control apparatus 24 may determine that one of the processing head 11 and the stage 141 may not be moved.

As a result of the determination at the step S107, in a case where it is determined that one of the processing head 11 and the stage 141 should be moved (the step S107: Yes), for example, the measurement control apparatus 24 moves one of the processing head 11 and the stage 141 in the machine coordinate system (a step S108). Especially, the measurement control apparatus 24 moves one of the processing head 11 and the stage 141 translationally in the machine coordinate system along the translational axis (the step S108). For example, the measurement control apparatus 24 may move the processing head 11 translationally along at least one of the translational axis (X) and the translational axis (Z) in the machine coordinate system. For example, the measurement control apparatus 24 may move the stage 141 translationally along the translational axis (Y) in the machine coordinate system, in addition to or instead of translationally moving the processing head 11.

At the step S108, the measurement control apparatus 24 does not move the processing head 11 and the stage 141 translationally at the same time. For example, at the step S108, when the processing head 11 is moved translationally, the measurement control apparatus 24 does not move the stage 141 translationally in parallel with the translational movement of the processing head 11. On the other hand, at the step S108, when the stage 141 is moved translationally, the measurement control apparatus 24 does not move the processing head 11 translationally in parallel with the translational movement of the stage 141. However, the measurement control apparatus 24 may move the processing head 11 and the stage 141 translationally at the same time at the step S108.

At the step S108, the measurement control apparatus 24 may move the processing head 11 so that the processing head 11 moves to a desired head position that has not yet been specified as a destination for movement of the processing head 11. Since the measurement head 22 irradiates the fiducial member FM with the measurement light ML in a state where the processing head 11 is stopped as described above, the measurement control apparatus 24 may move the processing head 11 to a desired head position satisfying a condition that the measurement head 22 has not yet irradiated the fiducial member FM with the measurement light ML in a state where the processing head 11 is stopped at the desired head position.

One example of a purpose of moving one of the processing head 11 and the stage 141 translationally at the step S108 may be considered to set a relative positional relationship between the processing head 11 and the stage 141 to each of at least a plurality of different positions. As a result, as described later, the measurement control apparatus 24 can set a plurality of measurement points MP for calculating the movement error, and can calculate the movement error occurring in the translational movement based on positions of the plurality of measurement points MP properly. Furthermore, in a case where one of the processing head 11 and the stage 141 moves translationally at the step S108, a space in which the movement error can be calculated in the machine coordinate system becomes larger, compared to a case where one of the processing head 11 and the stage 141 does not move translationally at the step S208. This is because the measurement point MP moves translationally in the machine coordinate system due to the translational movement of one of the processing head 11 and the stage 141. Therefore, one example of the purpose of moving one of the processing head 11 and the stage 141 translationally at the step S108 may be considered to expand the space in which the movement error can be calculated in the machine coordinate system.

In a case where the processing head 11 is moved to the desired head position in the machine coordinate system, the processing control apparatus 16, which controls the head driving system 12, generates the head driving control signal for controlling the head driving system 12 so as to move the processing head 11 to the desired head position, based on the desired head position in the machine coordinate system, under the control of the measurement control apparatus 24. Incidentally, information related to the desired head position used to generate the head driving control signal may be regarded as the command value related to the movement of the processing head 11. The head driving control signal itself may also be considered to be the command value related to the movement of the processing head 11. Then, the processing control apparatus 16 controls the head driving system 12 based on the generated head driving control signal under the control of the measurement control apparatus 24. As a result, the head driving system 12 moves the processing head 11 so that the processing head 11 moves to the desired head position. As a result, the processing head 11 moves to the desired head position and then stops at the desired head position.

However, at this point, the processing head 11 may not actually be positioned (namely, stop) at the desired head position because the movement error of the processing head 11 is not corrected yet. Namely, the actual position of the processing head 11 in the machine coordinate system may not be the same as the desired head position in the machine coordinate system.

At the step S108, the measurement control apparatus 24 may move the stage 141 so that the stage 141 moves to a desired stage position that has not yet been specified as a destination for movement of the stage 141. Since the measurement head 22 irradiates the fiducial member FM with the measurement light ML in a state where the stage 141 is stopped as described above, the measurement control apparatus 24 may move the stage 141 to a desired stage position satisfying a condition that the measurement head 22 has not yet irradiated the fiducial member FM with the measurement light ML in a state where the stage 141 is stopped at the desired stage position.

In a case where the stage 141 is moved to the desired stage position in the machine coordinate system, the processing control apparatus 16, which controls the stage driving system 142, generates the stage driving control signal for controlling the stage driving system 142 so as to move the stage 141 to the desired stage position, based on the desired stage position in the machine coordinate system, under the control of the measurement control apparatus 24. Incidentally, information related to the desired stage position used to generate the stage driving control signal may be regarded as the command value related to the movement of the stage 141. The stage driving control signal itself may also be considered to be the command value related to the movement of the stage 141. Then, the processing control apparatus 16 controls the stage driving system 142 based on the generated stage driving control signal under the control of the measurement control apparatus 24. As a result, the stage driving system 142 moves the stage 141 so that the stage 141 moves to the desired stage position. As a result, the stage 141 moves to the desired stage position and then stops at the desired stage position.

However, at this point, the stage 141 may not actually be positioned (namely, stop) at the desired stage position because the movement error of the stage 141 is not corrected yet. Namely, the actual position of the stage 141 in the machine coordinate system may not be the same as the desired stage position in the machine coordinate system.

Then, the measurement control apparatus 24 calculates the direction of the local scan area LSA from the measurement head 22 (a step S109). Namely, the measurement control apparatus 24 calculates the direction of each of at least four local scan areas LSA from the measurement head 22 (the step S109). However, at the step S109, the measurement control apparatus 24 calculates the direction of the local scan area LSA without using the result of the global scan. Namely, after at least one of the processing head 11 and the stage 141 has moved at the step S108, the measurement control apparatus 24 may not perform the global scan again. As a result, a time required for performing the movement error calculation operation is reduced.

At the step S109, the measurement control apparatus 24 calculates the direction of each of at least four fiducial members FM from the measurement head 22 after at least one of the processing head 11 and stage 141 moves at the step S108 based on fiducial member direction information related to the direction of each of the at least four fiducial members FM from the measurement head 22 before at least one of the processing head 11 and stage 141 moves at the step S108 and movement information related to at least one of a movement distance and a movement direction of at least one of the processing head 11 and the stage 141 at the step S108. Specifically, the measurement control apparatus 24 may calculate the direction of one fiducial member FM from the measurement head 22 after at least one of the processing head 11 and stage 141 moves at the step S108 by estimating which direction the one fiducial member FM, which has been positioned in one direction from the measurement head 22 before at least one of the processing head 11 and the stage 141 moves at the step S108, is positioned relative to the measurement head 22 after at least one of the processing head 11 and stage 141 moves at the step S108 based on the fiducial member direction information and the movement information. The fiducial member direction information may be acquired as a result of the operation at the step S105. On the other hand, the movement information may be generated from at least one of the head driving control signal and the stage driving control signal. Alternatively, the movement information may be generated from the measured result by at least one of the head position measurement apparatus 13, which measures the position of the processing head 11, and the position measurement apparatus 143, which measures the position of the stage 141. The measurement control apparatus 24 may repeat this operation as many times as the number of local scan areas LSA. As a result, the direction of each of the at least four local scan areas LSA from the measurement head 22 is calculated .

Incidentally, the relative positional relationship between the processing head 11 and the stage 141 changes due to the movement of at least one of the processing head 11 and the stage 141. Specifically, the relative positional relationship between the processing head 11 and the stage 141 changes from a first relative positional relationship to a second relative positional relationship due to the movement of at least one of the processing head 11 and the stage 141. In this case, the fiducial member direction information used at the step S109 may be regarded as information related to the direction of each of at least four fiducial members FM from the measurement head 22 in a case where the relative positional relationship between the processing head 11 and the stage 141 is the first positional relationship. The movement information used at the step S109 may be regarded as information related to at least one of a movement distance and a movement direction of at least one of the processing head 11 and the stage 141 for changing the relative positional relationship between the processing head 11 and the stage 141 from the first positional relationship to the second positional relationship. At the step S109, the measurement control apparatus 24 may be considered to calculate (for example, estimate) the direction of each of the at least four local scan areas LSA from the measurement head 22 in a case where the relative positional relationship between the processing head 11 and the stage 141 is the second positional relationship, based on the fiducial member direction information and the movement information.

However, the measurement control apparatus 24 may perform the global scan again (the step S102) after at least one of the processing head 11 and the stage 141 moves at the step S108, and calculate the direction of the local scan area LSA from the measurement head 22 based on the result of the global scan (the step S103).

After the direction of the local scan area LSA is calculated at the step S109 (alternatively, at the step S103), the measurement control apparatus 24 performs the local scan (the step S104) and calculates the direction of the fiducial member FM from the measurement head 22 based on the result of the local scan (the step S105).

However, even after at least one of the processing head 11 and the stage 141 moves at the step S108, the measurement control apparatus 24 may not perform the local scan. Namely, the measurement control apparatus 24 may not perform the operation at the step S109 and the step S104. In this case, at the step S105, the measurement control apparatus 24 may calculate the direction of each of the at least four fiducial members FM from the measurement head 22 after at least one of the processing head 11 and the stage 141 moves at the step S108, based on the fiducial member direction information and the movement information. Specifically, the measurement control apparatus 24 may calculate the direction of one fiducial member FM from the measurement head 22 after at least one of the processing head 11 and stage 141 moves at the step S108 by estimating which direction the one fiducial member FM, which has been positioned in one direction from the measurement head 22 before at least one of the processing head 11 and the stage 141 moves at the step S108, is positioned relative to the measurement head 22 after at least one of the processing head 11 and stage 141 moves at the step S108 based on the fiducial member direction information and the movement information. The measurement control apparatus 24 repeats this operation as many times as the number of fiducial member. As a result, the direction of each of the at least four fiducial members FM from the measurement head 22 is calculated .

Incidentally, the relative positional relationship between the processing head 11 and the stage 141 changes due to the movement of at least one of the processing head 11 and the stage 141. Specifically, the relative positional relationship between the processing head 11 and the stage 141 changes from a first relative positional relationship to a second relative positional relationship due to the movement of at least one of the processing head 11 and the stage 141. In this case, at the step S105, the measurement control apparatus 24 may be considered to calculate (for example, estimate) the direction of each of the at least four fiducial members FM from the measurement head 22 in a case where the relative positional relationship between the processing head 11 and the stage 141 is the second positional relationship, based on the fiducial member direction information and the movement information.

Then, the measurement control apparatus 24 controls the measurement head 22 so as to irradiate the fiducial member FM with the measurement light ML (the step S106). Namely, the measurement control apparatus 24 controls the measurement head 22 so as to irradiate each of at least four fiducial members FM with the measurement light ML (the step S106). Especially, the measurement control apparatus 24 controls the measurement head 22 so as to irradiate each of at least four fiducial members FM with the measurement light ML that is the collimated light (the step S106). As a result, the measurement head 22 irradiates each of at least four fiducial members FM with the measurement light ML (the step S106). As a result, the measurement head 22 optical receives the returning light RL from each of at least four fiducial members FM (the step S106).

In this manner, in the present example embodiment, the measurement head 22 optically receives the returning light RL from each of at least four fiducial members FM each time the processing head 11 moves along the translational axis and stops. In other words, the measurement head 22 optically receives the returning light RL from each of at least four fiducial members FM each time the processing head 11 moves to each of the plurality of positions, which are different from each other, translationally along the translational axis. Namely, the measurement head 22 optically receives the returning light RL from each of at least four fiducial members FM each time the processing head 11 moves translationally along the translational axis and stops at each of the plurality of positions, which are different from each other.

Similarly, in the present example embodiment, the measurement head 22 optically receives the returning light RL from each of at least four fiducial members FM each time the stage 141 moves along the translational axis and stops. In other words, the measurement head 22 optically receives the returning light RL from each of at least four fiducial members FM each time the stage 141 moves to each of the plurality of positions, which are different from each other, translationally along the translational axis. Namely, the measurement head 22 optically receives the returning light RL from each of at least four fiducial members FM each time the stage 141 moves translationally along the translational axis and stops at each of the plurality of positions, which are different from each other. Especially, in a case where the stage 141 moves, the fiducial member FM positioned on the stage 141 or the workpiece W placed on the stage 141 also moves. Therefore, it can be said that the measurement head 22 optically receives the returning light RL from each of at least four fiducial members FM, which has moved due to the movement of the stage 141, each time the stage 141 moves along the translational axis and stops.

In a case where at least one of the processing head 11 and the stage 141 is moved translationally at the step S108, the measurement control apparatus 24 may move at least one of the processing head 11 and the stage 141 translationally along the same movement direction toward the same way in order to eliminate an effect of backlash components that occur in the translational movement of at least one of the processing head 11 and the stage 141. For example, the measurement control apparatus 24 may first perform an X-scan movement operation that repeats an operation for moving the processing head 11 along the translational axis (X) by a desired movement distance so that the processing head 11 moves from one end to the other end of a movement range, in which the processing head 11 is movable, toward a first direction along the translational axis (X) in the machine coordinate system. Then, the measurement control apparatus 24 may perform a Y-step movement operation for moving the stage 141 toward a second direction by a predetermined movement distance along the translational axis (Y). Then, the measurement control apparatus 24 may repeat the X-scan movement operation and the Y-step movement operation alternately until the stage 141 moves from one end to the other end of a movement range, in which the stage 141 is movable, along the translational axis (Y) in the machine coordinate system. Then, the measurement control apparatus 24 may perform a Z-step movement operation for moving the processing head 11 toward a third direction by a desired movement distance along the translational axis (Z). Then, the measurement control apparatus 24 may again repeat the X-scan movement operation and the Y-step movement operation alternately until the stage 141 moves from one end to the other end of the movement range, in which the stage 141 is movable, along the translational axis (Y) in the machine coordinate system. Then, the same operation may be repeated until the processing head 11 moves from one end to the other end of a movement range, in which the processing head 11 is allowed to move, along the translational axis (Z) in the machine coordinate system.

On the other hand, as a result of the determination at the step S107, in a case where it is determined one of the processing head 11 and the stage 141 may not be moved (the step S107: No), for example, the measurement control apparatus 24 calculates an actual position of the measurement point MP, at which the measurement head 22 has measured the fiducial member FM, based on the optical received result of the returning light RL at the step S106 (a step S110). Namely, the measurement control apparatus 24 calculates, as the actual position of the measurement point MP, an actual position of the measurement head 22 at a timing at which the fiducial member FM is measured based on the optical received result of the returning light RL at the step S106 (the step S110). In the present example embodiment, a position of a fiducial point FP of the measurement head 22 is used as the position of the measurement point MP. Namely, in the present example embodiment, the position of the fiducial point FP of the measurement head 22 is used as the position of the measurement head 22. Therefore, in the below-described description, the position of the measurement head 22 means the position of the fiducial point FP of the measurement head 22 in a case where there is no notation. The fiducial point FP is a part of the measurement head 22 that is used as a base for calculating the distance between the measurement head 22 and the measurement target object described above. A pivot point PV described above is one example of the fiducial point FP of the measurement head 22. In this case, at the step S110, the measurement control apparatus 24 calculates the actual position of the fiducial point FP of the measurement head 22 based on the optical received result of the returning light RL at the step S106.

When the processing head 11 moves, the positional relationship between the processing head 11 and the stage 141 changes. Therefore, when the processing head 11 moves, the positional relationship between the measurement head 22, which is attached to the processing head 11, and the stage 141 also changes. Therefore, a positional relationship between the measurement point MP and the stage 141 changes. Similarly, when the stage 141 moves, the positional relationship between the processing head 11 and the stage 141 changes. Therefore, when the stage 141 moves, the positional relationship between the measurement head 22, which is attached to the processing head 11, and the stage 141 changes. Therefore, the positional relationship between the measurement point MP and the stage 141 changes. Therefore, the measurement point MP may be regarded as a point that moves relative to the stage 141 due to the movement of at least one of the processing head 11 and the stage 141 at the step S101 or the step S108. The measurement point MP may be regarded as a point that moves relative to the workpiece W placed on the stage 141 due to the movement of at least one of the processing head 11 and the stage 141 at the step S101 or the step S108. The measurement point MP may be regarded as a point that moves relative to the fiducial member FM positioned on the stage 141 due to the movement of at least one of the processing head 11 and the stage 141 at the step S101 or the step S108. The measurement point MP may be considered to be a point that moves relative to the fiducial member FM positioned on the workpiece W placed on the stage 141 due to the movement of at least one of the processing head 11 and the stage 141 at the step S101 or the step S108.

Here, as described above, the measurement head 22 optically receives the returning lights RL from at least four fiducial members FM each time at least one of the processing head 11 and the stage 141 moves at the step S101 or the step S108. Therefore, the measurement control apparatus 24 may calculate the position of the measurement point MP that moves due to the movement of at least one of the processing head 11 and the stage 141 based on the returning lights RL from at least four fiducial members FM that are optically received by the measurement head 22 each time at least one of the processing head 11 and the stage 141 moves at the step S101 or the step S108. In the below-described description, for convenience of description, the measurement point MP whose position is calculated based on the returning lights RL from at least four fiducial members FM that are optically received by the measurement head 22 after at least one of the processing head 11 and the stage 141 has moved at least j times is referred to as a measurement point MP#j. Namely, the measurement point MP in a case where the number of times the measurement head 22 has performed the operation for measuring at least four fiducial members FM at the step S106 is j-th time is referred to as the measurement point MP#j. Incidentally, "j" is a variable number that represents the number of times at least one of the processing head 11 and the stage 141 has moved at the step S101 or the step S108. "j" is a variable number that represents the number of times the measurement head 22 has performed the operation for measuring at least four fiducial members FM at the step S106.

For example, the movement of at least one of the processing head 11 and the stage 141 at the step S101 is a first movement. In this case, the measurement control apparatus 24 may calculate the position of the fiducial point FP of the measurement head 22 as the position of the measurement point MP#1 based on the optical received result of the returning light RL that is optically received by the measurement head 22 after at least one of the processing head 11 and the stage 141 has moved for the first time and then stopped. Furthermore, the movement of at least one of the processing head 11 and the stage 141 at the step S108 that is performed for the first time after that movement is a second movement. In this case, the measurement control apparatus 24 may calculate the position of the fiducial point FP of the measurement head 22 as the position of the measurement point MP#2 based on the optical received result of the returning light RL that is optically received by the measurement head 22 after at least one of the processing head 11 and the stage 141 has moved for the second time and then stopped.

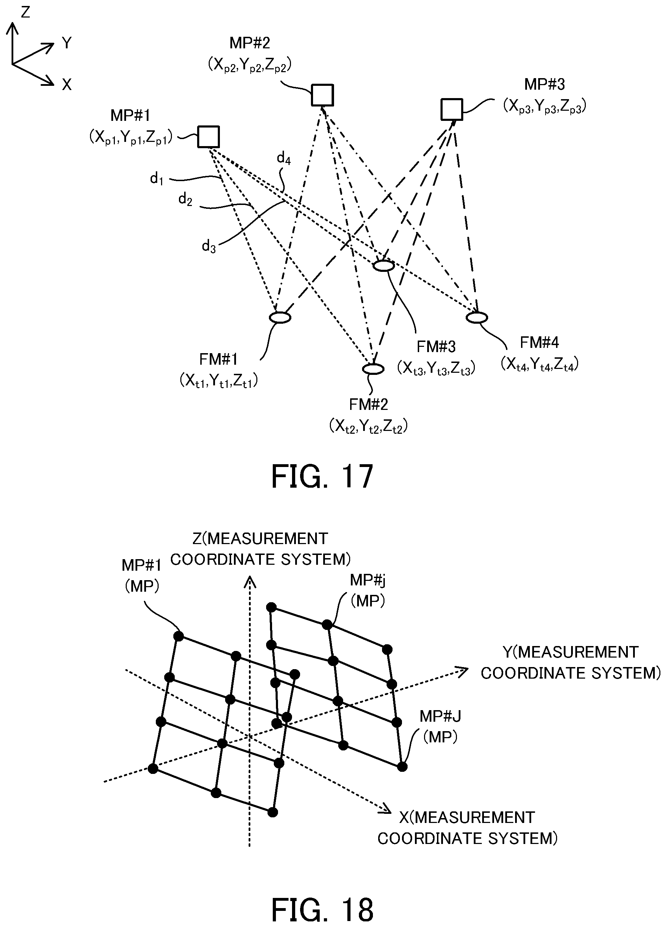

As described in detail later with reference to FIG. 17, at the step S110, the measurement control apparatus 24 first calculates the distance between the measurement head 22 positioned at each measurement point MP and each of at least four fiducial members FM based on the optical received result of the returning light RL from each of at least four fiducial members FM, in order to calculate the position of each of the plurality of measurement points MP. The measurement control apparatus 24 repeats this operation for calculating the distance for the number of times that is the same as the number of measurement points MP (namely, the number of times at least one of the processing head 11 and the stage 141 has moved). Then, the measurement control apparatus 24 calculates the positions of the plurality of measurement points MP based on the calculated distances.

In the below-described description, an example in which at least one of the processing head 11 and the stage 141 moves J times in the process of performing the first movement error calculation operation. In this case, at the step S110, the measurement control apparatus 24 calculates the position of each of the measurement points MP#1 to MP#J.

In the present example embodiment, in a case where the first movement error calculation operation is performed, the measurement control apparatus 24 may newly form (in other words, define) a measurement coordinate system, which is different from the machine coordinate system, in the machine coordinate system in order to calculate the positions of the measurement points MP#1 to MP#J. The measurement control apparatus 24 may calculate the positions of the measurement points MP#1 to MP#J in the measurement coordinate system at the step S110.

The measurement coordinate system may be any coordinate system as long as it is a coordinate system formed in the machine coordinate system. However, the measurement control apparatus 24 may generate, as the measurement coordinate system, a measurement coordinate system that can reduce the number of unknown parameters that should be calculated by the measurement control apparatus 24 to calculate the positions of the measurement points MP#1 to MP#J.

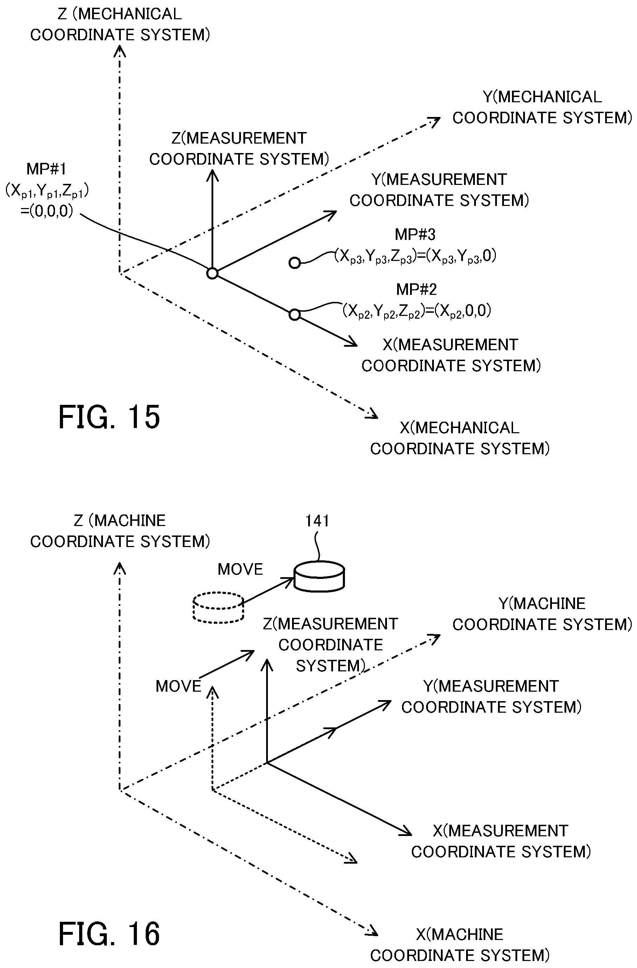

FIG. 15 illustrates one example of the measurement coordinate system. As illustrated in FIG. 15, the measurement control apparatus 24 may generate a coordinate system in which the measurement point MP#1 is an origin as the measurement coordinate system. In this case, as illustrated in FIG. 15, a position (0, 0, 0) may be used as the position $(X_{p1}, Y_{p1}, Z_{p1})$ of the measurement point MP#1 in the measurement coordinate system. As a result, the number of unknown parameters, which should be calculated by the measurement control apparatus 24 order to calculate the positions of the measurement points MP#1 to MP#J, is reduced.

The measurement control apparatus 24 may generate a coordinate system in which an axis connecting the measurement point MP#1 and the measurement point MP#2 is a first axis (a first measurement coordinate axis) as the measurement coordinate system. In this case, the movement of at least one of the processing head 11 and the stage 141 to move the measurement head 22 from the measurement point MP#1 to the measurement point MP#2 may be a movement based on the driving control signal for moving at least one of the processing head 11 and the stage 141 along one axis (a first machine coordinate axis) of the X-axis, the Y-axis, and the Z-axis of the machine coordinate system. In this case, the first measurement coordinate axis of the measurement coordinate system may be used as an axis corresponding to the first machine coordinate axis of the machine coordinate system. For example, in a case where the processing head 11 moves based on the head driving control signal for moving the processing head 11 along the X-axis of the machine coordinate system in order to move the measurement head 22 from the measurement point MP#1 to the measurement point MP#2, the measurement control apparatus 24 may generate a coordinate system whose X-axis is the axis connecting the measurement point MP#1 and the measurement point MP#2 as the measurement coordinate system. For example, in a case where the stage 141 moves based on the stage driving control signal for moving the stage 141 along the Y-axis of the machine coordinate system in order to move the measurement head 22 from the measurement point MP#1 to the measurement point MP#2, the measurement control apparatus 24 may generate a coordinate system whose Y-axis is the axis connecting the measurement point MP#1 and the measurement point MP#2 as the measurement coordinate system. For example, in a case where the processing head 11 moves based on the head driving control signal for moving the processing head 11 along the Z-axis of the machine coordinate system in order to move the measurement head 22 from the measurement point MP#1 to the measurement point MP#2, the measurement control apparatus 24 may generate a coordinate system whose Z-axis is the axis connecting the measurement point MP#1 and the measurement point MP#2 as the measurement coordinate system.

Incidentally, in the below-described description, an example in which the processing head 11 moves based on the head driving control signal for moving the processing head 11 along the X-axis of the machine coordinate system in order to move the measurement head 22 from the measurement point MP#1 to the measurement point MP#2, and as a result, the measurement control apparatus 24 generates the measurement coordinate system whose X-axis is the axis connecting the measurement point MP#1 and the measurement point MP#2 will be described for convenience of description, as illustrated in FIG. 15. In this case, as illustrated in FIG. 15, a position ($X_{p2}$, 0, 0) may be used as the position ($X_{p2}$, $Y_{p2}$, $Z_{p2}$) of the measurement point MP#2 in the measurement coordinate system. Namely, the number of unknown parameters, which should be calculated by the measurement control apparatus 24 in order to calculate the positions of the measurement points MP#1 to MP#J, is reduced.

The measurement control apparatus 24 may generate a coordinate system in which an axis that is along a plane including the measurement point MP#1, the measurement point MP#2, and the measurement point MP#3 and that is orthogonal to the first measurement coordinate axis described above is a second axis (a second measurement coordinate axis) as the measurement coordinate system. In this case, the movement of at least one of the processing head 11 and the stage 141 to move the measurement head 22 from the measurement point MP#2 to the measurement point MP#3 may be a movement based on the driving control signal for moving at least one of the processing head 11 and the stage 141 along another axis (a second machine coordinate axis), which is orthogonal to the first machine coordinate axis, of the X-axis, the Y-axis, and Z-axis of the machine coordinate system but for not moving at least one of the processing head 11 and the stage 141 along the other one axis (a third machine coordinate axis), which is orthogonal to the first machine coordinate axis, of the X-axis, the Y-axis, and the Z-axis of the machine coordinate system. In this case, the second measurement coordinate axis of the measurement coordinate system may be used as an axis corresponding to the second machine coordinate axis of the machine coordinate system. For example, in a case where the stage 141 moves based on the stage driving control signal for moving the stage 141 along the Y-axis of the machine coordinate system but the processing head 11 does not move based on the head driving control signal for moving the processing head 11 along the Z-axis of the machine coordinate system in order to move the measurement head 22 from the measurement point MP#2 to the measurement point MP#3, the measurement control apparatus 24 may generate, as the measurement coordinate system, a coordinate system whose Y-axis is along the plane including the measurement point MP#1, the measurement point MP#2, and the measurement point MP#3 and is an axis that is orthogonal to the X-axis of the measurement coordinate system described above. For example, in a case where the processing head 11 moves based on the head driving control signal for moving the processing head 11 along the Z-axis of the machine coordinate system but the stage 141 does not move based on the stage driving control signal for moving the stage 141 along the Y-axis of the machine coordinate system in order to move the measurement head 22 from the measurement point MP#2 to the measurement point MP#3, the measurement control apparatus 24 may generate, as the measurement coordinate system, a coordinate system whose Z-axis is along the plane including the measurement point MP#1, the measurement point MP#2, and the measurement point MP#3 and is an axis that is orthogonal to the X-axis of the measurement coordinate system described above.

Incidentally, in the below-described description, an example in which the stage 141 moves based on the stage driving control signal for moving the stage 141 along the Y-axis of the machine coordinate system but the processing head 11 does not move based on the head driving control signal for moving the processing head 11 along the Z-axis of the machine coordinate system in order to move the measurement head 22 from the measurement point MP#2 to the measurement point MP#3, and as a result, the measurement control apparatus 24 generates the measurement coordinate system whose Y-axis is along the plane including the measurement point MP#1, the measurement point MP#2, and the measurement point MP#3 and is an axis that is orthogonal to the X-axis of the measurement coordinate system described above will be described for convenience of description, as illustrated in FIG. 15. In this case, as illustrated in FIG. 15, a position ($X_{p3}$, $Y_{p3}$, 0) may be used as the position ($X_{p3}$, $Y_{p3}$, $Z_{p3}$) of measurement point MP#3 in the measurement coordinate system. Namely, the number of unknown parameters, which should be calculated by the measurement control apparatus 24 in order to calculate the positions of the measurement points MP#1 to MP#J, is reduced.

Incidentally, when the first and second measurement coordinate axes have been determined, the remaining one axis of the measurement coordinate system (the third measurement coordinate axis) is also determined. Specifically, the measurement control apparatus 24 may use an axis that is orthogonal to the first and second measurement coordinate axes as the third measurement coordinate axis of the measurement coordinate system.

The measurement coordinate system may be formed as a coordinate system that moves in the machine coordinate system due to the movement of the stage 141. For example, as illustrated in FIG. 16 illustrating the measurement coordinate system that moves in the machine coordinate system due to the movement of the stage 141, the measurement coordinate system may move along the Y-axis of the machine coordinate system due to the movement of the stage 141 along the Y-axis of the machine coordinate system. On the other hand, in a case where the stage 141 does not move, the measurement coordinate system may not move in the machine coordinate system. Incidentally, the measurement coordinate system may be referred to as a coordinate system based on the fiducial member FM, or as a coordinate system based on the stage 141.

After the measurement coordinate system has been formed, the measurement control apparatus 24 calculates the positions of the measurement points MP#1 to #J in the measurement coordinate system. In the first movement error calculation operation in the present example embodiment, the measurement control apparatus 24 may calculate the positions of the measurement points MP#1 to #J by using the principle of multi-side surveying, for example. Next, with reference to FIG. 17, an operation for calculating the positions of the measurement points MP#1 to #J by using the principle of multi-side surveying will be described.

FIG. 17 schematically illustrates a positional relationship among three measurement points MP (specifically, the measurement point MP#1, the measurement point MP#2, and the measurement point MP#3) and four fiducial members FM (specifically, the fiducial member FM#1, the fiducial member FM#2, the fiducial member FM#3, and the fiducial member FM#4). In this case, the unknown parameters that should be calculated by the multi-side surveying are the position $(X_{p1}, Y_{p1}, Z_{p1})$ of the measurement point MP#1, the position $(X_{p2}, Y_{p2}, Z_{p2})$ of the measurement point MP#2, the position $(X_{p3}, Y_{p3}, Z_{p3})$ of the measurement point MP#3, a position $(X_{t1}, Y_{t1}, Z_{t1})$ of the fiducial member FM#1, a position $(X_{t2}, Y_{t2}, Z_{t2})$ of the fiducial member FM#3, a position $(X_{t3}, Y_{t3}, Z_{t3})$ of the fiducial member FM#3, a position $(X_{t4}, Y_{t4}, Z_{t4})$ of the fiducial member FM#4, a distance $d_1$ between the measurement point MP#1 and the fiducial member FM#1, a distance $d_2$ between the measurement point MP#1 and the fiducial member FM#2, a distance $d_3$ between the measurement point MP#1 and the fiducial member FM#3, and the distance $d_4$ between the measurement

point MP#1 and the fiducial member FM#4. In this case, the measurement control apparatus 24 calculates 25 unknown parameters by using the principle of multi-side surveying.

Incidentally, a distance between the measurement point MP#2 and the fiducial member FM#1 is calculated by adding or subtracting, to or from the distance $d_1$ between the measurement point MP#1 and the fiducial member FM#1 that is the unknown parameter, a difference between a distance, which is between the measurement head 22 positioned at the measurement point MP#1 and the fiducial member FM#1 and which is calculated based on the optical received result of the returning light RL described above, and a distance, which is between the measurement head 22 positioned at the measurement point MP#2 and the fiducial member FM#1 and which is calculated based on the optical received result of the returning light RL described above. Therefore, the measurement control apparatus 24 may not use the distance between measurement point MP#2 and the fiducial member FM#1 as the unknown parameter. For the same reason, the measurement control apparatus 24 may not use the distance between each of the measurement points MP#2 and MP#3 and each of the fiducial members FM#1 to FM#4 as the unknown parameter.

However, in a case where the measurement control apparatus 24 can calculate a distance between the fiducial point FP of the measurement head 22 and the fiducial member FM (namely, the distance between the measurement point MP and the fiducial member FM) as the distance between the measurement head 22 and the fiducial member FM based on the optical received result of the returning light RL described above, the measurement control apparatus 24 may not use the distances $d_1$ to $d_1$ described above as the unknown parameters. In the below-described description, for convenience of description, an example in which the distances $d_1$ to $d_1$ described above are the unknown parameters will be described.

In order to calculate the above-described unknown parameters, the measurement control apparatus 24 may solve the minimization problem represented in an Equation 1. The minimization problem represented in the Equation 1 is a minimization problem that uses the principle of multi-side surveying. A variable number i in the Equation 1 is a variable number used to identify the four fiducial members FM#1 to FM#4. "$d_{ij}$" in the Equation 1 represents a difference between a first distance, which is between the measurement head 22 positioned at the measurement point MP#i and the fiducial member #i and which is calculated from the optical received result of the returning light RL., and a second distance, which is between the measurement head 22 positioned at the measurement point MP#j and the fiducial member #i and which is calculated from the optical received result of the returning light RL, Namely, "$d_{ij}$" in the Equation 1 represents an actual change of the second distance between the measurement point MP#j and the fiducial member #i relative to the first distance between the measurement point MP#i and the fiducial member #i. The "$f_{ij}(x)$" in the Equation 1 is represented by an Equation 2. "$\|T_i\text{-}P_j\|$" in the Equation represents the second distance between the measurement point MP#j and the fiducial member #i that is calculated from the optical received result of the returning light RL. Therefore, "$f_{ij}(x)$" in the Equation 2 represents an ideal (in other words, theoretical) change of the second distance between the measurement point MP#j and the fiducial member #i relative to the first distance between the measurement point MP#i and the fiducial member #i. A calculation to solve the minimization problem represented by the Equation 1 is a calculation for calculating the above-described unknown parameters that satisfy a condition that the actual change of the second distance between the measurement point MP#j and the fiducial member FM#i relative to the first distance between the measurement point MP#i and the fiducial member FM#i and the ideal change of the second distance between the measurement point MP#j and the fiducial member FM#i relative to the first distance between the measurement point MP#i and the fiducial member FM#i are minimized.

[Equation 1]

$$\min_{x} \sum_{i=1,2,3,4, j=1,2,3} (f_{ij}(x) - d_{ij})^2$$

[Equation 2]

$$f_{ij}(x) = \left\| T_i - P_j \right\| - d_i$$

Here, in the example illustrated in FIG. 17, since the three measurement points MP#1 to MP#3 and the four fiducial members FM#1 to FM#4 are used, a simultaneous equation including 3*4 = 12 equations may be generated by using the function "$f_{ij}(x)$" represented by the Equation 2. On the other hand, since there are 25 unknown parameters, there is a shortage of 13 (=25-12) equations. In this case, four new equations can be generated by using "$f_{ji}(x)$" represented by the Equation 2 by adding one new measurement point MP, although three unknown parameters corresponding to the position of the measurement point MP are added. Therefore, the measurement control apparatus 24 may set the number of measurement points MP (namely, the variable number J described above) so that the simultaneous equation including the equations the number of which is equal to or greater than the number of unknown parameters is generated. Namely, the measurement control apparatus 24 may set the number of times at least one of the processing head 11 and the stage 141 moves at the above-described step S108 in FIG. 12 (namely, the variable number J) so that the simultaneous equation including the equations the number of which is equal to or greater than the number of unknown parameters is generated.

Alternatively, in a case where the measurement coordinate system is formed (defined) as illustrated in FIG. 15, the number of unknown parameters is reduced as described above. Specifically, in a case where the measurement coordinate system is formed (defined) as illustrated in FIG. 15, the X position ($X_{p1}$) of the measurement point MP#1, the Y position ($Y_{p1}$) of the measurement point MP#1, the Z position ($Z_{p1}$) of the measurement point MP#1, the Y position ($Y_{p2}$) of the measurement point MP#2, the Z position ($Z_{p2}$) of the measurement point MP#2, and the Z position ($Z_{p3}$) of the measurement point MP#3 are no longer unknown parameters. As a result, the number of unknown parameters is reduced from 25 to 19. Therefore, the number of equations required to solve the minimization problem represented by the Equation 1 is reduced.

In order to solve the minimization problem described above, the measurement control apparatus 24 calculates the distance between the measurement head 22 positioned at the measurement point MP#j and the fiducial member FM#i based on the optical received result of the returning light RL from the fiducial member FM#i by the measurement head 22 positioned at the measurement point MP#j. The measurement control apparatus 24 perform an operation for calculating the distance between the measurement head 22 positioned at the measurement point MP#j and the fiducial member FM#i for all combinations of the measurement points MP#j and the fiducial members FM#i. Then, the measurement control apparatus 24 solves the minimization problem represented by the Equation 1 by using the calculated distances. As a result, as illustrated in FIG. 18, the measurement control apparatus 24 can calculate the positions of the measurement points MP#1 to MP#J in the measurement coordinate system.

Incidentally, although it is not illustrated in the drawings, the measurement control apparatus 24 may calculate the positions of the fiducial members FM in the measurement coordinate system by solving the above-described minimization problem. Namely, the measurement control apparatus 24 may calculate the positions of at least four fiducial members FM in the measurement coordinate system by solving the above-described minimization problem.

The positions of the measurement points MP#1 to MP#J illustrated in FIG. 18 may be regarded as the positions of the measurement points MP#1 to MP#J in a space in which at least one of the processing head 11 and the stage 141 moves along the translational axis, respectively. Namely, the positions of the measurement points MP#1 to MP#J illustrated in FIG. 18 may be regarded as the positions of the measurement points MP#1 to MP#J in the space in which at least one of the processing head 11 and the stage 141 moves translationally along the translational axis to the plurality of different positions, respectively.

Then, the measurement control apparatus 24 transforms the positions of the measurement points MP#1 to MP#J in the measurement coordinate system to the positions of the measurement points MP#1 to MP#J in the machine coordinate system. Specifically, since the measurement control apparatus 24 forms the measurement coordinate system in the machine coordinate system, the measurement control apparatus 24 can generate a coordinate transformation matrix for transforming a position in one of the machine coordinate system and the measurement coordinate system to a position of the other one of the machine coordinate system and the measurement coordinate system. The measurement control apparatus 24 may use this coordinate transformation matrix to transform the position of the measurement point MP#j in the measurement coordinate system to the position of the measurement point MP#j in the machine coordinate system. The measurement control apparatus 24 may transform the positions of the measurement points MP#1 to MP#J in the measurement coordinate system to the positions of the measurement points MP#1 to MP#J in the machine coordinate system, respectively, by repeating this transformation operation for all of the measurement points MP#1 to MP#J.

Alternatively, in a case where the measurement point MP#1 is used as the origin of the measurement coordinate system, and the X-axis, the Y-axis, and the Z-axis of the measurement coordinate system correspond to the X-axis, the Y-axis, and the Z-axis of the machine coordinate system, respectively, as illustrated in FIG. 15, the measurement control apparatus 24 may transform the position in the measurement point MP#j in the measurement coordinate system to the position in the measurement point MP#j in the machine coordinate system by adding a coordinate value indicating the position of the measurement point MP#1 in the machine coordinate system to a coordinate value indicating the position of the measurement point MP#j in the measurement coordinate system. The position (especially, the position along the X-axis and the Z-axis) of the measurement point MP#1 in the machine coordinate system may be calculated from the measured result by the head position measurement apparatus 13, which measures the position of the processing head 11, after the processing head 11 has moved based on the head driving control signal for controlling the head driving system 12 to move the processing head 11 to the initial head position. Alternatively, the initial head position used to generate the head driving control signal for controlling the head driving system 12 to move the processing head 11 to the initial head position may be used as the position (especially, the position along the X-axis and the Z-axis) of the measurement point MP#1 in the machine coordinate system. Furthermore, the position (especially, the position along the Y-axis) of the measurement point MP#1 in the machine coordinate system may be calculated from the measured result of the position measurement apparatus 143, which measures the position of the stage 141, after the stage 141 has moved based on the stage driving control signal for controlling the stage driving system 142 to move the stage 141 to the initial stage position. Alternatively, the initial stage position used to generate the stage driving control signal for controlling the stage driving system 142 to move the stage 141 to the initial stage position may be used as the position (especially, the position along the Y-axis) of the measurement point MP#1 in the machine coordinate system.

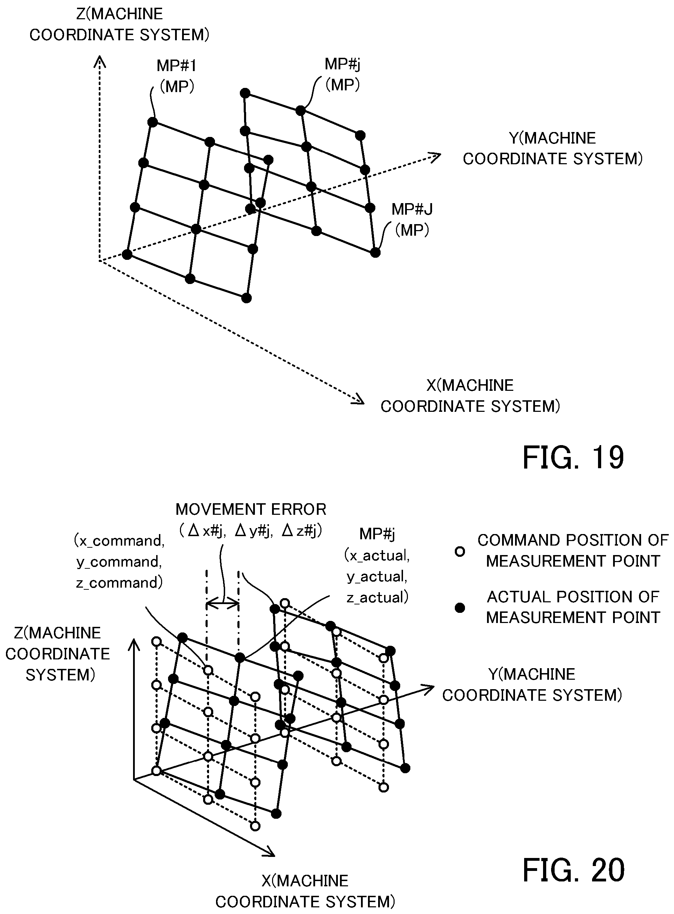

As a result, as illustrated in FIG. 19, the measurement control apparatus 24 can calculate the positions of the measurement points MP#1 to MP#J in the machine coordinate system. The positions of the measurement points MP#1 to MP#J illustrated in FIG. 19 may be regarded as the positions of the measurement points MP#1 to MP#J in a space in which at least one of the processing head 11 and the stage 141 moves along the translational axis, respectively. Namely, the positions of the measurement points MP#1 to MP#J illustrated in FIG. 19 may be regarded as the positions of the measurement points MP#1 to MP#J in the space in which at least one of the processing head 11 and the stage 141 moves translationally along the translational axis to the plurality of different positions, respectively. Especially, the positions of the measurement points MP#1 to MP#J illustrated in FIG. 19 may be regarded as the actual positions of the measurement points MP#1 to MP#J in the space in which at least one of the processing head 11 and the stage 141 moves along the translational axis, respectively. Namely, the positions of measurement points MP#1 to MP#J illustrated in FIG. 19 may be regarded as the actual positions of measurement points MP#1 to MP#J in the space in which at least one of the processing head 11 and the stage 141 moves translationally along the translational axis to the plurality of different positions.

Incidentally, in the above-described description, the measurement control apparatus 24 calculates the positions of the measurement points MP#1 to MP#J in the measurement coordinate system, and then calculates the positions of the measurement points MP#1 to MP#J in the machine coordinate system. However, the measurement control apparatus 24 may calculate the positions of the measurement points MP#1 to MP#J in the machine coordinate system without calculating the positions of the measurement points MP#1 to MP#J in the measurement coordinate system. For example, in a case where the stage 141 does not move along the translational axis, the position of the fiducial point FP of the measurement head 22 in the machine coordinate system after at least ono of the processing head 11 and the stage 141 moves for the j-th time at the step S101 or the step S108 may be used as the position of the measurement point MP#j in the machine coordinate system as it is.

In FIG. 12 again, then, the measurement control apparatus 24 calculates the movement error occurring in the translational movement of at least one of the processing head 11 and the stage 141, based on the actual position of the measurement point MP#j in the machine coordinate system calculated at the step S110 (a step S111).

Specifically, the movement error occurring in the translational movement of the processing head 11 corresponds to the difference between the actual position of the processing head 11 and the target position of the processing head 11. Similarly, the movement error occurring in the translational movement of the stage 141 corresponds to the difference between the actual position of the stage 141 and the target position of the stage 141. Here, in the present example embodiment, the example in which the processing head 11 is movable translationally along each of the translational axis (X) and the translational axis (Z), and the stage 141 is movable translationally along the translational axis (Y) is described as described above. Therefore, in the below-described description, the operation for calculating the movement error occurring in a case where the processing head 11 moves along each of the translation axis (X) and the translational axis (Z) and the stage 141 moves along the translational axis (Y) will be described specifically. However, the measurement control apparatus 24 may calculate the movement error that occurs in a case where the processing head 11 moves translationally along the translational axis (Y) by performing an operation that is the same as the operation described below as described in detail later, even in a case where the processing head 11 is translating along the translational axis (Y). Similarly, the measurement control apparatus 24 may calculate the movement error occurring in a case where the stage 141 moves translationally along at least one of the translational axis (X) and the translational axis (Z) by performing an operation that is the same as the operation described below even in a case where the stage 141 moves translationally along at least one of the translational axis (X) and the translational axis (Z).

Here, the X position of the measurement point MP#j illustrated in FIG. 19 indicates an actual X position of the measurement head 22 in a situation where the measurement head 22 is positioned at the measurement point MP#j. The Y position of the measurement point MP#j illustrated in FIG. 19 indicates an actual Y position of the measurement head 22 in a situation where the measurement head 22 is positioned at the measurement point MP#j. The X position of the measurement point MP#j illustrated in FIG. 19 indicates an actual Z position of the measurement head 22 in a situation where the measurement head 22 is positioned at the measurement point MP#j.

Furthermore, since the measurement head 22 is attached to the processing head 11, the X position of the measurement point MP#j illustrated in FIG. 19 may be considered to actually indicate an actual X position x_actual#j of the processing head 11 in a situation where the measurement head 22 is positioned at the measurement point MP#j. Specifically, a tool tip point (TCP: Tool Center Point) is usually used as the position of the processing head 11. The measurement head 22 may be attached to the processing head 11 so that the fiducial point FP of the measurement head 22 is positioned at the tool tip point. In this case, the X position of the measurement point MP#j illustrated in FIG. 19 indicates the actual X position x_actual#j of the processing head 11 itself in a situation where the measurement head 22 is positioned at the measurement point MP#j. Similarly, the Z position of the measurement point MP#j illustrated in FIG. 19 indicates an actual Z position z_actual#j of the processing head 11 in a situation where the measurement head 22 is positioned at the measurement point MP#j. On the other hand, in a case where the fiducial point FP of the measurement head 22 is away from the tool tip point by a predetermined X shift amount along the X-axis direction of the machine coordinate system, a position that is acquired by adding the predetermined X shift amount to the X position of the measurement point MP#j illustrated in FIG. 19 is used as the actual X position x_actual#j of the processing head 11 in a situation where the measurement head 22 is positioned at the measurement point MP#j. Similarly, in a case where the fiducial point FP of the measurement head 22 is away from the tool tip point by a predetermined Z shift amount along the Z-axis direction of the machine coordinate system, a position that is acquired by adding the predetermined Z shift amount to the Z position of the measurement point MP#j illustrated in FIG. 19 is used as the actual Z position z_actual#j of the processing head 11 in a situation where the measurement head 22 is positioned at the measurement point MP#j.

In this manner, the measurement control apparatus 24 may calculate the position of each of the processing head 11 and the stage 141 in a situation where the measurement head 22 is positioned at the measurement point MP#j, based on the position of the measurement point MP#j calculated at the step S110. In this case, the measurement control apparatus 24 may calculate, as the movement error occurring in the translational movement of the processing head 11, a difference between the actual X position x_actual#j of the processing head 11 calculated from the measurement point MP#j and a command X position x_command#j at which the processing head 11 should be positioned in a situation where the measurement head 22 is positioned at the measurement point MP#j, as a movement error $\Delta x$#j. The measurement control apparatus 24 may calculate, as the movement error occurring in the translational movement of the stage 141, a difference between an actual Y position y_actual#j of the stage 141 calculated from the measurement point MP#j and a command Y position y_command#j at which the stage 141 should be positioned in a situation where the measurement head 22 is positioned at the measurement point MP#j, as a movement error $\Delta y$#j. The measurement control apparatus 24 may calculate, as the movement error occurring in the translational movement of the processing head 11, a difference between the actual Z position z_actual#j of the processing head 11 calculated from the measurement point MP#j and a command Z position z_command#j at which the processing head 11 should be positioned in a situation where the measurement head 22 is positioned at the measurement point MP#j, as a movement error $\Delta z$#j.

Incidentally, the movement error of the processing head 11 may be simply referred to as the difference between the actual position of the processing head 11 and the command position of the processing head 11. Namely, the movement error of the processing head 11 may be simply referred to as the difference in the coordinate values between a point at which the processing head 11 is actually positioned and a point at which the processing head 11 should be positioned. Similarly, the movement error of the stage 141 may be simply referred to as the difference between the actual position of the stage 141 and the command position of the stage 141. Namely, the movement error of the stage 141 may be simply referred to as the difference between the coordinate values between a point at which the stage 141 is actually positioned and a point at which the stage 141 should be positioned.

The target position of the processing head 11, which is used to generate the head driving control signal for controlling the head driving system 12, may be used as the command X position x_command#j and the command Z position z_command#j. The measured result by the head position measurement apparatus 13, which measures the position of the processing head 11, may be used as the command X position x_command#j and the command Z position z_command#j. The target position, which is calculated from a target movement distance of the processing head 11 that is usable to generate the head driving control signal for controlling the head driving system 12, may be used as the command X position x_command#j and the command Z position z_command#j. Incidentally, the command X position x_command#j and the command Z position z_command#j may be regarded as command values related to the movement of the processing head 11.

The target position of the stage 141, which is used to generate the stage driving control signal for controlling the stage driving system 142, may be used as the command Y position y_command#j. The measured result by the position measurement apparatus 143, which measures the position of the stage 141, may be used as the command Y position y_command#j. The target position, which is calculated from a target movement distance of the stage 141 that is usable to generate the stage driving control signal for controlling the stage driving system 142, may be used as the command Y position y_command#j. Incidentally, the command Y position y_command#j may be regarded as a command value related to the movement of the stage 141.

As a result, the measurement control apparatus 24 may calculate the movement error $\Delta x$#j along the translation axis (X), the movement error $\Delta y$#j along the translation axis (Y), and the movement error $\Delta z$#j along the translation axis (Z), as the movement errors occurring in a case where the processing head 11 and the stage 141 move so that the processing head 11 is positioned at the command X position x_command#j and the command Z position z_command#j and the stage 141 is positioned at the command Y position y_command#j. Namely, the measurement control apparatus 24 may generate the information related to the movement error including the movement error $\Delta x$#j, the movement error $\Delta y$#j, and the movement error $\Delta z$#j.

Incidentally, in a case where the stage 141 is movable translationally along the translational axis (X) instead of the processing head 11, the measurement control apparatus 24 may calculate, as the movement error $\Delta x$#j, a difference between an actual X position x_actual#j of the stage 141 calculated from the measurement point MP#j and a command X position x_command#j at which the stage 141 should be positioned in a situation where the measurement head 22 is positioned at the measurement point MP#j. In this case, the target position of the stage 141, which is used to generate the stage driving control signal for controlling the stage driving system 142, may be used as the command X position x_command#j. The measured result by the position measurement apparatus 143, which measures the position of the stage 141, may be used as the command X position x_command#j. The target position, which is calculated from a target movement distance of the stage 141 that is usable to generate the stage driving control signal for controlling the stage driving system 142, may be used as the command X position x_command#j. Incidentally, the command X position x_command#j may be regarded as a command value related to the movement of the stage 141.

Moreover, in a case where the processing head 11 is movable translationally along the translational axis (Y) instead of the stage 141, the measurement control apparatus 24 may calculate, as the movement error of the processing head 11, a difference between an actual Y position y_actual#j of the processing head 11 calculated from the measurement point MP#j and a command Y position y_command#j at which the processing head 11 should be positioned in a situation where the measurement head 22 is positioned at the measurement point MP#j, as the movement error $\Delta y$#j. In this case, the target position of the processing head 11, which is used to generate the stage driving control signal for controlling the stage driving system 142, may be used as the command Y position y_command#j. The measured result by the head position measurement apparatus 13, which measures the position of the processing head 11, may be used as the command Y position y_command#j. The target position, which is calculated from a target movement distance of the processing head 11 that is usable to generate the head driving control signal for controlling the head driving system 12, may be used as the command Y position y_command#j. Incidentally, the command Y position y_command#j may be regarded as a command value related to the movement of the processing head 11.

Moreover, in a case where the stage 141 is movable translationally along the translational axis (Z) instead of the processing head 11, the measurement control apparatus 24 may calculate, as the movement error $\Delta z\#j$, a difference between an actual Z position $z\_actual\#j$ of the stage 141 calculated from the measurement point MP#j and a command Z position $z\_command\#j$ at which the stage 141 should be positioned in a situation where the measurement head 22 is positioned at the measurement point MP#j. In this case, the target position of the stage 141, which is used to generate the stage driving control signal for controlling the stage driving system 142, may be used as the command Z position $z\_command\#j$. The measured result by the position measurement apparatus 143, which measures the position of the stage 141, may be used as the command Z position $z\_command\#j$. The target position, which is calculated from a target movement distance of the stage 141 that is usable to generate the stage driving control signal for controlling the stage driving system 142, may be used as the command Z position $z\_command\#j$. Incidentally, the command Z position $z\_command\#j$ may be regarded as a command value related to the movement of the stage 141.

The measurement control apparatus 24 may repeat this operation as many times as the number of measurement points MP. As a result, the measurement control apparatus 24 may calculate the movement error at each position in the machine coordinate system. In other words, the measurement control apparatus 24 may calculate the movement error at each position in the space in which at least one of the processing head 11 and the stage 141 moves along the translational axis. The measurement control apparatus 24 may calculate the movement error at each position in the space in which at least one of the processing head 11 and the stage 141 moves along the translation axis to the plurality of different positions. Namely, the measurement control apparatus 24 may calculate a movement errors ($\Delta x\#1$, $\Delta y\#1$, $\Delta z\#1$) occurring at a first position ($x\_command\#1$, $y\_command\#1$, $z\_command\#1$) in the machine coordinate system, a movement errors ($\Delta x\#2$, $\Delta y\#2$, $\Delta z\#2$) occurring at a second position ($x\_command\#2$, $y\_command\#2$, $z\_command\#2$) in the machine coordinate system, ..., and a movement errors ($\Delta x\#J$, $\Delta y\#J$, $\Delta z\#J$) occurring at a J-th position ($x\_command\#J$, $y\_command\#J$, $z\_command\#J$) in the machine coordinate system. The measurement control apparatus 24 may calculate the movement errors ($\Delta x\#1$, $\Delta y\#1$, $\Delta z\#1$) occurring in a case where at least one of the processing head 11 and the stage 141 moves so as to be positioned at the first position ($x\_command\#1$, $y\_command\#1$, $z\_command\#1$) in the machine coordinate system, the movement errors ($\Delta x\#2$, $\Delta y\#2$, $\Delta z\#2$) occurring in a case where at least one of the processing head 11 and the stage 141 moves so as to be positioned at the second position ($x\_command\#2$, $y\_command\#2$, $z\_command\#2$) in the machine coordinate system, ..., and the movement errors ($\Delta x\#J$, $\Delta y\#J$, $\Delta z\#J$) occurring in a case where at least one of the processing head 11 and the stage 141 moves so as to be positioned at the J-th position ($x\_command\#J$, $y\_command\#J$, $z\_command\#J$) in the machine coordinate system.

Incidentally, the measurement control apparatus 24 may generate, as the information related to the movement error, a function that expresses the movement error occurring at any position in the machine coordinate system, in addition to or instead of the movement errors ($\Delta x\#J$, $\Delta y\#J$, $\Delta z\#J$). Specifically, the measurement control apparatus 24 may calculate a function that outputs the movement error occurring at any position in the machine coordinate system in a case where coordinate information indicating that position is input thereto. In this case, the measurement control apparatus 24 may generate the function itself. The measurement control apparatus 24 may generate a parameter (for example, a coefficient and the like) of the function.

The measurement control apparatus 24 may generate, as the information related to the movement error, a function that expresses the actual position (namely, $x\_actual\#j$, $z\_actual\#j$) of the processing head 11 in a case where the processing head 11 moves based on the head driving control signal for moving the processing head 11 to a desired position in the machine coordinate system, in addition to or instead of the movement errors ($\Delta x\#J$, $\Delta y\#J$, $\Delta z\#J$).. he measurement control apparatus 24 may generate a function that expresses the actual position (namely, $y\_actual\#j$) of the stage 141 in a case where the stage 141 moves based on the stage driving control signal for moving the stage 141 to a desired position in the machine coordinate system, in addition to or instead of the movement errors ($\Delta x\#J$, $\Delta y\#J$, $\Delta z\#J$). In this case, the measurement control apparatus 24 may generate the function itself. The measurement control apparatus 24 may generate a parameter (for example, a coefficient and the like) of the function.

After the information related to the movement error is generated, the measurement control apparatus 24 may generate error correction information for correcting the movement error based on the information related to the movement error.

For example, the measurement control apparatus 24 may generate, as the error correction information, a correction value C#j for correcting the command X position $x\_command\#j$, the command Y position $y\_command\#j$, and the command Z position $z\_command\#j$ described above. Specifically, in a case where the processing head 11 moves based on the head driving control signal for moving the processing head 11 to a desired position in the machine coordinate system, the processing head 11 is actually positioned not at the command X position $x\_command\#j$ but at a position acquired by adding the movement error $\Delta x\#j$ to the command X position $x\_command\#j$. Therefore, if a position acquired by subtracting the movement error $\Delta x\#j$ from the command X position x_command#j is used as new command X position x_command#j, the processing head 11 is expected to be positioned at the command X position x_command#j. Therefore, the measurement control apparatus 24 may set the movement error $\Delta x\#j$ to a correction value Cx#j for correcting the command X position x_command#j. For the same reason, the measurement control apparatus 24 may set the movement error $\Delta y\#j$ to a correction value Cy#j for correcting the command Y position y_command#j. The measurement control apparatus 24 may set the movement error $\Delta z\#j$ to a correction value Cz#j for correcting the command Z position z_command#j. Namely, the measurement control apparatus 24 may generate the error correction information that includes a plurality of information sets each of which includes any position (x_command#j, y_command#j, z_command#j) in the machine coordinate system and the correction values (Cx#j, Cy#j, Cz#j) at this position.

For example, the measurement control apparatus 24 may generate, as the error correction information, a function that expresses the correction value C#j at any position in the machine coordinate system. For example, the measurement control apparatus 24 may generate a function that outputs at least one of the correction value Cx#j, the correction value Cy#j, and the correction value Cz#j in a case where at least one of the command X position x_command#j, the command Y position y_command#j, and the command Z position z_command#j is input thereto. A function that expresses at least one of the correction value Cx#j, the correction value Cy#j, and the correction value Cz#j by means of an exponentiation is one example of this function. A function $"Cx\#j = ax \times X + bx \times X^2 + ..."$ is one example of the function that expresses at least one of the correction value Cx#j, the correction value Cy#j, and the correction value Cz#j by means of the exponentiation. Incidentally, "X" in this function represents the command X position x_command#j, and "ax" and "bx" represents coefficients. In this case, the measurement control apparatus 24 may generate the function itself. The measurement control apparatus 24 may generate a parameter (for example, a coefficient and the like) of the function.

The measurement control apparatus 24 may output the error correction information to the machine tool 1 (especially, the processing control apparatus 16) as the information for controlling the machine tool 1. In this case, the processing control apparatus 16 may control the translational movement of at least one of the processing head 11 and the stage 141 based on the error correction information. Specifically, the processing control apparatus 16 may correct the command position of at least one of the processing head 11 and the stage 141 based on the error correction information, and may use the corrected command position to generate the driving control signal for moving at least one of the processing head 11 and the stage 141 translationally. As a result, even in a case where the movement error occurs in the translational movement of the processing head 11, the machine tool 1 can move the processing head 11 translationally so that the processing head 11 is positioned at the original command position before correction in the same manner as in a case where no movement error occurs in the translational movement of the processing head 11. Namely, the machine tool 1 can move the processing head 11 translationally with high accuracy. Similarly, even in a case where the movement error occurs in the translational movement of the stage 141, the machine tool 1 can move the stage 141 translationally so that the stage 141 is positioned at the original command position before correction in the same manner as in a case where no movement error occurs in the translational movement of the stage 141. Namely, the machine tool 1 can move the stage 141 translationally with high accuracy. As a result, the machine tool 1 can process the workpiece W with high accuracy.

The processing control apparatus 16 may correct the measured result by the head position measurement apparatus 13, which measures the position of the processing head 11, based on the error correction information, instead of controlling the translational movement of the processing head 11 based on the error correction information. Specifically, the processing control apparatus 16 usually controls the head driving system 12 based on the head driving control signal so that the position of the processing head 11 measured by the head position measurement apparatus 13 becomes the command position. Namely, the processing control apparatus 16 usually moves the processing head 11 until the position of the processing head 11 measured by the head position measurement apparatus 13 becomes the command position. Therefore, in a case where the movement error of the processing head 11 occurs, the head position measurement apparatus 13 outputs, as the measured result of the position of the processing head 11, not the actual position of the processing head 11 that reflects the movement error but the command position of the processing head 11 that does not reflect the movement error. In this case, the processing control apparatus 16 may correct the position of the processing head 11 measured by the head position measurement apparatus 13 based on the error correction information so that the measured result of the head position measurement apparatus 13 indicates the actual position of the processing head 11 that reflects the movement error. As a result, the processing control apparatus 16 can move the processing head 11 translationally until the corrected position of the processing head 11 becomes the command position.

Incidentally, the head position measurement apparatus 13 may detect the movement distance of the processing head 11, in addition to or instead of detecting the position of the processing head 11. In this case, the processing control apparatus 16 may correct the measured result of the head position measurement apparatus 13, which measures the movement distance of the processing head 11, based on the error correction information. Namely, the processing control apparatus 16 may correct the movement distance of the processing head 11 measured by the head position measurement apparatus 13 based on the error correction information.

The processing control apparatus 16 may correct the measured result by the position measurement apparatus 143, which measures the position of the stage 141, based on the error correction information, instead of controlling the translational movement of the stage 141 based on the error correction information. Specifically, the processing control apparatus 16 usually controls the stage driving system 142 based on the stage driving control signal so that the position of the stage 141 measured by the position measurement apparatus 143 becomes the command position. Namely, the processing control apparatus 16 usually moves the stage 141 until the position of the stage 141 measured by the position measurement apparatus 143 becomes the command position. Therefore, in a case where the movement error of the stage 141 occurs, the position measurement apparatus 143 outputs, as the measured result of the position of the stage 141, not the actual position of the stage 141 that reflects the movement error but the command position of the stage 141 that does not reflect the movement error. In this case, the processing control apparatus 16 may correct the position of the stage 141 measured by the position measurement apparatus 143 based on the error correction information so that the measured result of the position measurement apparatus 143 indicates the actual position of the stage 141 that reflects the movement error. As a result, the processing control apparatus 16 can move the stage 141 translationally until the corrected position of the stage 141 becomes the command position.

Incidentally, the position measurement apparatus 143 may detect the movement distance of the stage 141, in addition to or instead of detecting the position of the stage 141. In this case, the processing control apparatus 16 may correct the measured result of the position measurement apparatus 143, which measures the movement distance of the stage 141, based on the error correction information. Namely, the processing control apparatus 16 may correct the movement distance of the stage 141 measured by the position measurement apparatus 143 based on the error correction information.

The measurement control apparatus 24 may generate, based on the information related to the movement error, processing path correction information for correcting a processing path indicating a processing route of the workpiece W by the machine tool 1, as the information for controlling the machine tool 1. The processing path may indicate a movement route of a tool tip point, for example. The processing path may indicate the movement route of the tool tip point relative to the workpiece W, for example. The processing path may indicate a movement route of a processing position at which the machine tool 1 processes the workpiece W, for example. The processing path may indicate the movement path of processing position, at which the machine tool 1 processes the workpiece W, relative to the workpiece W, for example. The processing path is usually generated based on a three-dimensional shape of the workpiece W before processing and a target three-dimensional shape of the workpiece W after processing. The processing path correction information may be information for correcting the processing path generated based on the three-dimensional shape of the workpiece W before processing and the target three-dimensional shape of the workpiece W after processing. In this case, the measurement control apparatus 24 may generate the processing path correction information for correcting the processing path so that the workpiece W is processed in the same manner as in a case where no movement error occurs in the translational movement of at least one of the processing head 11 and the stage 141, even in a case where the movement error occurs in the translational movement of at least one of the processing head 11 and the stage 141. The processing control apparatus 16 of the machine tool 1 may correct the processing path based on the processing path correction information. Alternatively, the measurement control apparatus 24 may correct the processing path and output the corrected processing path to the processing control apparatus 16 as the information for controlling the machine tool 1. As a result, the machine tool 1 can process the workpiece W in the same manner as in a case where no movement error occurs in the translational movement of at least one of the processing head 11 and the stage 141, even in a case where the movement error occurs in the translational movement of at least one of the processing head 11 and the stage 141.

The measurement control apparatus 24 may generate, based on the information related to the movement error, measurement path correction information for correcting a measurement path indicating a measurement path of the workpiece W by the measurement system 2 in a case where the measurement system 2 measures the three-dimensional shape of the workpiece W. The measurement path may indicate the movement path of the tool tip point, as with the processing path described above. The measurement path may indicate the movement path of the tool tip point relative to the workpiece W, as with the processing path described above. The measurement path may indicate a movement path of a measurement position at which the measurement system 2 measures the workpiece W, for example. The measurement path may indicate a movement path of the fiducial point FP of the measurement head 22, for example. The measurement path may indicate a movement path of the pivot point PV of the measurement head 22, for example. The measurement path may indicate the movement path of the measurement position, at which the measurement system 2 measures the workpiece W, relative to the workpiece W. The measurement position may mean an irradiation position of the measurement light ML on the surface of the workpiece W. The measurement path is usually generated based on the three-dimensional shape of the workpiece W. The measurement path correction information may be information for correcting the measurement path generated based on the three-dimensional shape of the workpiece W. In this case, the measurement control apparatus 24 may generate the measurement path correction information for correcting the measurement path so that the workpiece W is measured in the same manner as in a case where no movement error occurs in the translational movement of at least one of the processing head 11 and the stage 141, even in a case where the movement error occurs in the translational movement of at least one of the processing head 11 and the stage 141. The processing control apparatus 16 of the machine tool 1 may correct the measurement path based on the measurement path correction information. Alternatively, the measurement control apparatus 24 may correct the measurement path and output the corrected measurement path to the processing control apparatus 16 as the information for controlling the machine tool 1. As a result, the machine tool 1 can move at least one of the processing head 11 and the stage 141 translationally in the same manner as in a case where no movement error occurs in the translational movement of at least one of the processing head 11 and the stage 141, even in a case where the movement error occurs in the translational movement of at least one of the processing head 11 and the stage 141. As a result, the measurement system 2 can measure the workpiece W in the same manner as in a case where no movement error occurs in the translational movement of at least one of the processing head 11 and the stage 141, even in a case where the movement error occurs in the translational movement of at least one of the processing head 11 and the stage 141. Incidentally, the measurement control apparatus 24 may generate, based on the information related to the movement error, the measurement path correction information for correcting the measurement path indicating the measurement route of the workpiece W by the measurement system 2 in a case where the measurement system 2 measures at least one of a position, a posture, and a size of the workpiece W described below. Furthermore, the processing control apparatus 16 may correct the measurement path based on the generated measurement path correction information.

The measurement control apparatus 24 may generate, based on the information related to the movement error, driving correction information for correcting the driving control signal generated by the processing control apparatus 16 to control the translational movement of at least one of the processing head 11 and the stage 141, as the information for controlling the machine tool 1. Namely, the measurement control apparatus 24 may generate, based on information related to the movement error, the driving correction information for correcting the driving control signal generated by the processing control apparatus 16 to control at least one of the head driving system 12 and the stage driving system 142, as the information for controlling the machine tool 1. In this case, the measurement control apparatus 24 may generate the driving correction information for correcting the driving control signal generated by the processing control apparatus 16 so that the workpiece W is processed in the same manner as in a case where no movement error occurs in the translational movement of at least one of the processing head 11 and the stage 141, even in a case where the movement error occurs in the translational movement of at least one of the processing head 11 and the stage 141. The processing control apparatus 16 of the machine tool 1 may correct the driving control signal based on the driving correction information. As a result, the machine tool 1 can process the workpiece W in the same manner as in a case where no movement error occurs in the translational movement of at least one of the processing head 11 and the stage 141, even in a case where the movement error occurs in the translational movement of at least one of the processing head 11 and the stage 141.

The measurement control apparatus 24 may correct the driving control signal, which is generated by the processing control apparatus 16, based on the information related to the movement error. For example, the measurement control apparatus 24 may acquire the driving control signal, which is generated by the processing control apparatus 16, from the processing control apparatus 16, and correct the acquired driving control signal. In this case, the measurement control apparatus 24 may correct the driving control signal generated by the processing control apparatus 16 so that the workpiece W is processed in the same manner as in a case where no movement error occurs in the translational movement of at least one of the processing head 11 and the stage 141, even in a case where the movement error occurs in the translational movement of at least one of the processing head 11 and the stage 141. The measurement control apparatus 24 may output the corrected driving control signal to the processing control apparatus 16 as the information for controlling the machine tool 1. Therefore, an operation for correcting the driving control signal may be considered to be equivalent to an operation for generating the information for controlling the machine tool 1. The processing control apparatus 16 of the machine tool 1 may control at least one of the head driving system 12 and the stage driving system 142 based on the driving control signal (a corrected driving signal) corrected by the measurement control apparatus 24. As a result, the machine tool 1 can process the workpiece W in the same manner as in a case where no movement error occurs in the translational movement of at least one of the processing head 11 and the stage 141, even in a case where the movement error occurs in the translational movement of at least one of the processing head 11 and the stage 141. Incidentally, in this case, the measurement control apparatus 24 may control at least one of the head driving system 12 and the stage driving system 142 based on the corrected driving control signal (the corrected driving signal) instead of the processing control apparatus 16.

The measurement control apparatus 24 may generate the driving control signal based on the information related to the movement error. In this case, the measurement control apparatus 24 may generate the driving control signal so that the workpiece W is processed in the same manner as in a case where no movement error occurs in the translational movement of at least one of the processing head 11 and the stage 141, even in a case where the movement error occurs in the translational movement of at least one of the processing head 11 and the stage 141. The measurement control apparatus 24 may output the generated driving control signal to the processing control apparatus 16 as the information for controlling the machine tool 1. Therefore, an operation for generating the driving control signal may be considered to be equivalent to an operation for generating the information for controlling the machine tool 1. The processing control apparatus 16 of the machine tool 1 may control at least one of the head driving system 12 and the stage driving system 142 based on the driving control signal generated by the measurement control apparatus 24. As a result, the machine tool 1 can process the workpiece W in the same manner as in a case where no movement error occurs in the translational movement of at least one of the processing head 11 and the stage 141, even in a case where the movement error occurs in the translational movement of at least one of the processing head 11 and the stage 141. Incidentally, in this case, the measurement control apparatus 24 may control at least one of the head driving system 12 and the stage driving system 142 based on the generated driving control signal, instead of the processing control apparatus 16.

**(2-2-2) Specific Flow of Second Movement Error Calculation Operation for calculating movement error occurring in rotational movement of at least one of processing head 11 and stage 141**

Next, the second movement error calculation operation for calculating the movement error occurring in the rotational movement of at least one of the processing head 11 and the stage 141 will be described. In the below-described explanation, a part of the second movement error calculation operation that is different from the first movement error calculation operation described above will be mainly described. Therefore, in order to omit the redundant description, a description of a part of the second movement error calculation operation that is the same as the first movement error calculation operation described above is omitted. Namely, in the below-described explanation, an operation that is the same as the first movement error calculation operation may be performed in a case where there is no notation.

In a case where the movement error occurring in the rotational movement of the processing head 11 is calculated, the measurement head 22 may irradiate each of at least N fiducial members FM, which are included in the measurement range of the measurement head 22, with the measurement light ML by using the Galvano mirror 2228 to change the propagating direction of the measurement light ML each time the processing head 11 moves rotationally and stops. Namely, the measurement head 22 may irradiate each of at least N fiducial members FM, which are included in the measurement range of the measurement head 22, with the measurement light ML whose propagating direction is changed by the Galvano mirror 2228 each time the processing head 11 moves rotationally to each of a plurality of different positions. As a result, the measurement head 22 optically receives the returning light RL from each of at least N fiducial members FM each time the processing head 11 moves rotationally and stops. The measurement control apparatus 24 may calculate the movement error occurring in the rotational movement of the processing head 11 based on the optical received result of the returning light RL that is from each of at least N fiducial members FM and that is optically received by the measurement head 22 each time the processing head 11 moves rotationally to each of the plurality of different positions. Especially, the measurement control apparatus 24 may calculate the movement error occurring in the rotational movement of the processing head 11 in a space in which the processing head 11 moves rotationally to the plurality of different positions, based on the optical received result of the returning light RL that is from each of at least N fiducial members FM and that is optically received by the measurement head 22 each time the processing head 11 moves rotationally to each of the plurality of different positions.

Incidentally, the measurement head 22 may irradiate each of at least N fiducial members FM included in the measurement range of the measurement head 22 with the measurement light ML by using the Galvano mirror 2228 to sequentially change the propagating direction of the measurement light ML in a period during which the processing head 11 is moving rotationally (in a state where the processing head 11 is not stopped). Even in this case, the measurement control apparatus 24 may calculate the movement error occurring in the rotational movement of the processing head 11 in the space in which the processing head 11 moves rotationally to the plurality of different positions, based on the optical received result of the returning light RL that is from each of at least N fiducial members FM and that is optically received by the measurement head 22 each time the processing head 11 moves rotationally to each of the plurality of different positions.

In a case where the movement error occurring in the rotational movement of the stage 141 is calculated, the measurement head 22 may irradiate each of at least N fiducial members FM, which are included in the measurement range of the measurement head 22, with the measurement light ML by using the Galvano mirror 2228 to change the propagating direction of the measurement light ML each time the stage 141 moves rotationally and stops. Namely, the measurement head 22 may irradiate each of at least N fiducial members FM, which are included in the measurement range of the measurement head 22, with the measurement light ML whose propagating direction is changed by the Galvano mirror 2228 each time the stage 141 moves rotationally to each of a plurality of different positions. As a result, the measurement head 22 optically receives the returning light RL from each of at least N fiducial members FM each time the stage 141 moves rotationally and stops. The measurement control apparatus 24 may calculate the movement error occurring in the rotational movement of the stage 141 based on the optical received result of the returning light RL that is from each of at least N fiducial members FM and that is optically received by the measurement head 22 each time the stage 141 moves rotationally to each of the plurality of different positions. Especially, the measurement control apparatus 24 may calculate the movement error occurring in the rotational movement of the stage 141 in a space in which the stage 141 moves rotationally to the plurality of different positions, based on the optical received result of the returning light RL that is from each of at least N fiducial members FM and that is optically received by the measurement head 22 each time the stage 141 moves rotationally to each of the plurality of different positions.

Incidentally, the measurement head 22 may irradiate each of at least N fiducial members FM included in the measurement range of the measurement head 22 with the measurement light ML by using the Galvano mirror 2228 to sequentially change the propagating direction of the measurement light ML in a period during which the stage 141 is moving rotationally (in a state where the stage 141 is not stopped). Even in this case, the measurement control apparatus 24 may calculate the movement error occurring in the rotational movement of the stage 141 in the space in which the stage 141 moves rotationally to the plurality of different positions, based on the optical received result of the returning light RL that is from each of at least N fiducial members FM and that is optically received by the measurement head 22 each time the stage 141 moves rotationally to each of the plurality of different positions.

In a case where the movement error occurring in the rotational movement is calculated, the workpiece W is placed on the stage 141. For example, in a case where the movement error occurring in the rotational movement is calculated, the workpiece W with the fiducial member FM may be placed on the stage 141. For example, in a case where the movement error occurring in the rotational movement is calculated, the workpiece W without the fiducial member FM may be placed on the stage 141. However, in a case where the movement error occurring in the rotational movement is calculated, the workpiece W may not be placed on the stage 141. In the below-described description, for convenience of description, the first movement error calculation operation performed in a case where the workpiece W with the fiducial member FM is placed on the stage 141 will be described. However, even in a case where the workpiece W without the fiducial member FM is placed on the stage 141 or the workpiece W is not placed on the stage 141, the processing system SYS may calculate the movement error occurring in the rotational movement by performing the first movement error calculation operation described below.

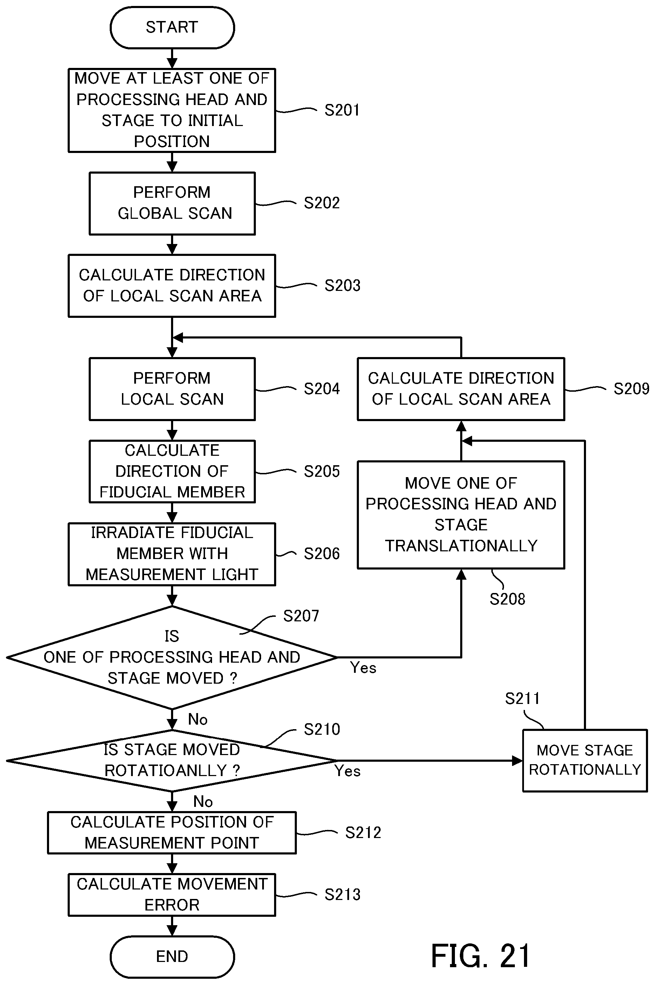

Next, with reference to FIG. 21, a flow of the second movement error calculation operation for calculating the movement error occurring in the rotational movement of at least one of the processing head 11 (the measurement head 22) and the stage 141 will be described. FIG. 21 is a flowchart that illustrates the flow of the second movement error calculation operation for calculating the movement error occurring in the rotational movement of at least one of the processing head 11 and the stage 141.

Incidentally, in the present example embodiment, the processing head 11 does not rotate and the stage 141 rotates as described above. Therefore, it can be said that the below-described description is mainly an operation for calculating the movement error occurring in the rotational movement of the stage 141. However, even in a case where the processing head 11 rotates, the below-described operation may be performed to calculate the movement error occurring in the rotational movement of the processing head 11. This is because each of the rotational movement of the processing head 11 and the rotational movement of the stage 141 may be regarded as the rotational movement of the stage 141 relative to the processing head 11. Namely, the measurement system 2 may perform the below-described operation to calculate the movement error occurring in the rotational movement of the processing head 11 by regarding the rotational movement of the processing head 11 as the relative rotational movement of the stage 141 relative to the processing head 11.

As illustrated in FIG. 21, first, the measurement control apparatus 24 moves at least one of the processing head 11 and the stage 141 to an initial position, and then stops it at the initial position in the machine coordinate system (a step S201). Namely, the measurement control apparatus 24 controls at least one of the head driving system 12 and the stage driving system 142 so that at least one of the processing head 11 and the stage 141 moves to the initial position in the machine coordinate system (the step S201). Incidentally, an operation at the step S201 may be the same as an operation at the step S101 in FIG. 12 described above. Therefore, a detailed description of the operation at the step S201 is omitted.

However, at the step S201, the measurement control apparatus 24 corrects (namely, cancel) the movement error occurring in the translational movement of at least one of the processing head 11 and the stage 141, based on the error correction information (namely, the information for correcting the movement error occurring in the translational movement of at least one of the processing head 11 and the stage 141) generated in the first movement error calculation operation described above. Namely, the measurement control apparatus 24 moves at least one of the processing head 11 and the stage 141 translationally based on the error correction information generated in the first movement error calculation operation described above. Therefore, in the present example embodiment, the processing system SYS may perform the second movement error calculation operation after performing the first movement error calculation operation described above. In this case, even in a case where the movement error occurs in the translation movement of the processing head 11, the processing head 11 can move to the initial position and stop. Namely, the actual position of the processing head 11 in the machine coordinate system is the same as the initial head position in the machine coordinate system. Similarly, even in a case where the movement error occurs in the translational movement of the stage 141, the stage 141 can move to the initial stage position and stop. Namely, the actual position of the stage 141 in the machine coordinate system is the same as the initial stage position in the machine coordinate system.

Alternatively, in the second movement calculation operation, the measurement control apparatus 24 may not correct the movement error occurring in the translational movement of at least one of the processing head 11 and the stage 141, based on the error correction information generated in the first movement error calculation operation. In this case, the measurement control apparatus 24 may use, as the initial position, a position that is calculated from any one of the measurement points MP#1 to MP#J calculated in the first movement error calculation operation described above. As one example, the measurement control apparatus 24 may use, as the initial position, a position that is calculated from the measurement point MP#m (wherein, m is a variable number representing an integer that is equal to or greater than 1 and that is equal to or less than J) calculated in the first movement error calculation operation described above. Specifically, as described above, the measurement control apparatus 24 may calculate the X position x_actual#m at which the processing head 11 is actually positioned after moving based on the head driving control signal generated based on the command X position x_command#m, the Y position y_actual#m at which the processing head 11 is actually positioned after moving based on the head driving control signal generated based on the command Y position y_command#m, and the Z position z_actual#m at which the processing head 11 is actually positioned after moving based on the head driving control signal generated based on the command Z position z_command#m, form the position of the measurement point MP#m. In this case, the measurement control apparatus 24 may use the X position x_actual#m and the Z position z_actual#m as the initial head position, and may use the Y position y_actual#m as the initial stage position. In this case, the measurement control apparatus 24 may move the processing head 11 to the X position x_actual#m and the Z position z_actual#m based on the head driving control signal generated based on the command X position x_command#m and the command Z position z_command#m, and may move the stage 141 to the Y position y_actual#m based on the stage driving control signal generated based on the command Y position y_command#m.

In any case, at the step S201 in the second movement error calculation operation, the processing head 11 and the stage 141 are positioned based on the information related to the movement error generated by the first movement error calculation operation. In this case, information related to the actual position of the processing head 11 and the stage 141 that have moved at the step S201 is known to the measurement control apparatus 24. In this respect, it may be said that the second movement calculation operation is different from the first movement error calculation operation in which the information related to the actual positions of the processing head 11 and the stage 141 that have moved at the step S101 is unknown to the measurement control apparatus 24. Incidentally, the measurement control apparatus 24 may not use the information related to the movement error generated by the first movement error calculation operation to move at least one of the processing head 11 and the stage 141 in the second movement error calculation operation.

Then, the measurement control apparatus 24 performs the global scan (a step S202). Incidentally, an operation at the step S202 may be the same as an operation at the step S102 in FIG. 12 described above. Therefore, a detailed description of the operation at the step S202 is omitted.

Then, the measurement control apparatus 24 calculates the direction of at least N local scan areas LSA from the measurement head 22 based on the result of the global scan (a step S203). Incidentally, an operation at the step S203 may be the same as an operation at the step S103 in FIG. 12 described above. Therefore, a detailed description of the operation at the step S203 is omitted.

Incidentally, in the present example embodiment, an example in which the variable number N is set to 3 in a case where the second movement error calculation operation is performed will be described. In this case, the plurality of fiducial members FM may be positioned on the workpiece W and the stage 141 so that at least three fiducial members FM are included in the measurement range of the measurement head 22. The measurement control apparatus 24 may calculate the directions of at least three local scan areas LSA, in which at least three fiducial members FM are positioned, respectively, in the measurement range (namely, in the global scan area GSA).

Then, the measurement control apparatus 24 performs the local scan (a step S204). Incidentally, an operation at the step S204 may be the same as an operation at the step S1024 in FIG. 12 described above. Therefore, a detailed description of the operation at the step S204 is omitted.

Then, the measurement control apparatus 24 calculates the directions of at least three fiducial members FM from the measurement head 22 based on the result of the local scan (a step S205). Incidentally, an operation at the step S205 may be the same as an operation at the step S105 in FIG. 12 described above. Therefore, a detailed description of the operation at the step S205 is omitted.

Then, the measurement control apparatus 24 controls the measurement head 22 so as to irradiate at least three fiducial members FM with the measurement light ML (a step S206). Incidentally, an operation at the step S206 may be the same as an operation at the step S106 in FIG. 12 described above. Therefore, a detailed description of the operation at the step S206 is omitted.

Then, the measurement control apparatus 24 determines whether or not at least one of the processing head 11 and the stage 141 should be moved translationally (a step S207). Incidentally, an operation at the step S207 may be the same as an operation at the step S107 in FIG. 12 described above. Therefore, a detailed description of the operation at the step S207 is omitted.

As a result of the determination at the step S207, in a case where it is determined that at least one of the processing head 11 and the stage 141 should be moved translationally (the step S207: Yes), the measurement control apparatus 24 moves at least one of the processing head 11 and the stage 141 translationally in the machine coordinate system (a step S208), for example. Specifically, for example, in a case where it is determined that the processing head 11 should be moved translationally as a result of the determination at the step S207 (the step S207: Yes), the measurement control apparatus 24 moves the processing head 11 translationally in the machine coordinate system (the step S208). For example, in a case where it is determined that the stage 141 should be moved translationally as a result of the determination at the step S207 (the step S207: Yes), the measurement control apparatus 24 moves the stage 141 translationally in the machine coordinate system (the step S208). Incidentally, an operation at the step S208 may be the same as an operation at the step S108 in FIG. 12 described above. Therefore, a detailed description of the operation at the step S208 is omitted.

However, at the step S208, the measurement control apparatus 24 corrects (namely, cancel) the movement error occurring in the translational movement of at least one of the processing head 11 and the stage 141, based on the error correction information (namely, the information for correcting the movement error occurring in the translational movement of at least one of the processing head 11 and the stage 141) generated in the first movement error calculation operation described above. Namely, the measurement control apparatus 24 moves at least one of the processing head 11 and the stage 141 translationally based on the error correction information generated in the first movement error calculation operation described above. In this case, even in a case where the movement error occurs in the translation movement of the processing head 11, the processing head 11 can move to the desired head position and stop. Namely, the actual position of the processing head 11 in the machine coordinate system is the same as the desired head position in the machine coordinate system. Similarly, even in a case where the movement error occurs in the translational movement of the stage 141, the stage 141 can move to the desired stage position and stop. Namely, the actual position of the stage 141 in the machine coordinate system is the same as the desired stage position in the machine coordinate system.

Alternatively, in the second movement calculation operation, the measurement control apparatus 24 may not correct the movement error occurring in the translational movement of at least one of the processing head 11 and the stage 141, based on the error correction information generated in the first movement error calculation operation. In this case, the measurement control apparatus 24 may use, as the desired head position and the desired stage position, a position that is calculated from any one of the measurement points MP#1 to MP#J calculated in the first movement error calculation operation described above. As one example, the measurement control apparatus 24 may use, as the desired head position and the desired stage position, a position that is calculated from the measurement point MP#n (wherein, n is a variable number representing an integer that is equal to or greater than 1 and that is equal to or less than N) calculated in the first movement error calculation operation described above. Specifically, as described above, the measurement control apparatus 24 may calculate the X position x_actual#n at which the processing head 11 is actually positioned after moving based on the head driving control signal generated based on the command X position x_command#n, the Y position y_actual#n at which the processing head 11 is actually positioned after moving based on the head driving control signal generated based on the command Y position y_command#n, and the Z position z_actual#n at which the processing head 11 is actually positioned after moving based on the head driving control signal generated based on the command Z position z_command#n, form the position of the measurement point MP#n. In this case, the measurement control apparatus 24 may use the X position x_actual#n and the Z position z_actual#n as the desired head position, and may use the Y position y_actual#n as the desired stage position. In this case, the measurement control apparatus 24 may move the processing head 11 to the X position x_actual#n and the Z position z_actual#n based on the head driving control signal generated based on the command X position x_command#n and the command Z position z_command#n, and may move the stage 141 to the Y position y_actual#n based on the stage driving control signal generated based on the command Y position y_command#n.

In any case, at the step S208 in the second movement error calculation operation, the processing head 11 and the stage 141 are positioned based on the information related to the movement error generated by the first movement error calculation operation. In this case, information related to the actual position of the processing head 11 and the stage 141 that have moved at the step S208 is known to the measurement control apparatus 24. In this respect, it may be said that the second movement calculation operation is different from the first movement error calculation operation in which the information related to the actual positions of the processing head 11 and the stage 141 that have moved at the step S108 is unknown to the measurement control apparatus 24. Incidentally, the measurement control apparatus 24 may not use the information related to the movement error generated by the first movement error calculation operation to move at least one of the processing head 11 and the stage 141 in the second movement error calculation operation.

Then, the measurement control apparatus 24 calculates the directions of at least three local scan areas LSA from the measurement head 22 (a step S209). Incidentally, an operation at the step S209 may be the same as an operation at the step S109 in FIG. 12 described above. Therefore, a detailed description of the operation at the step S209 is omitted.

After the directions of at least three local scan areas LSA are calculated at the step S209 (alternatively, at the step S203), the measurement control apparatus 24 performs the local scan (the step S204) and calculates the directions of at least three fiducial members FM from the measurement head 22 based on the result of the local scan (the step S205). Then, the measurement control apparatus 24 controls the measurement head 22 so irradiate at least three fiducial members FM with the measurement light ML (the step S206).

Then, the measurement control apparatus 24 determines whether or not at least one of the processing head 11 and the stage 141 should be moved translationally (a step S207). In the present example embodiment, the measurement control apparatus 24 may determine that at least one of the processing head 11 and the stage 141 should be moved translationally until the translational movement of at least one of the processing head 11 and the stage 141 changes the relative positional relationship between the processing head 11 and the stage 141 among at least three different positional relationship. Namely, the measurement control apparatus 24 may determine that at least one of the processing head 11 and the stage 141 should be moved translationally until the measurement head 22 irradiates at least three fiducial members FM with the measurement light ML in a situation where the relative positional relationship between the processing head 11 and the stage 141 becomes each of at least three different positional relationship. Therefore, one example of a purpose of moving at least one of the processing head 11 and the stage 141 translationally may be considered to set the relative positional relationship between the processing head 11 and the stage 141 to each of at least three different positional relationship. Furthermore, in a case where at least one of the processing head 11 and the stage 141 moves translationally at the step S208, a space in which the movement error can be calculated in the machine coordinate system is expanded. One example of the purpose of moving at least one of the processing head 11 and the stage 141 translationally may be considered to expand the space in which the movement error can be calculated in the machine coordinate system.

As one example, the measurement control apparatus 24 may determine that at least one of the processing head 11 and the stage 141 should be moved translationally until the measurement head 22 irradiates at least three fiducial members FM with the measurement light ML in a situation where the relative positional relationship between the processing head 11 and the stage 141 is a first positional relationship, the measurement head 22 irradiates at least three fiducial members FM with the measurement light ML in a situation where the relative positional relationship between the processing head 11 and the stage 141 is a second positional relationship that is different from the first positional relationship, and the measurement head 22 irradiates at least three fiducial members FM with the measurement light ML in a situation where the relative positional relationship between the processing head 11 and the stage 141 is a third positional relationship that is different from the first and second positional relationships.

On the other hand, as a result of the determination at the step S207, in a case where it is determined that the processing head 11 and the stage 141 may not be moved translationally (the step S207: No), the measurement control apparatus 24 determines whether or not the stage 141 should be moved rotationally (a step S210). In other words, the stage 141 does not rotate in a period during which the operation from the step S202 to the step S209 is performed.

For example, in a case where the number of times the stage 141 has moved rotationally is less than a required movement number, the measurement control apparatus 24 may determine that the stage 141 should be moved rotationally. For example, in a case where the number of times the stage 141 has moved rotationally is equal to or greater than the required movement number, the measurement control apparatus 24 may determine that the stage 141 may not be moved rotationally.

As a result of the determination at the step S210, in a case where it is determined that the stage 141 should be moved rotationally (the step S210: Yes), for example, the measurement control apparatus 24 moves the stage 141 rotationally in the machine coordinate system (a step S211). For example, the measurement control apparatus 24 may move the stage 141 rotationally around at least one of the rotational axes (X) and the rotational axis (Z) in the machine coordinate system.

As one example, in a case where the stage 141 is moved rotationally around the rotational axis (X) so that a rotation angle of the stage 141 around the rotational axis (X) becomes a desired X angle, the processing control apparatus 16, which controls the stage driving system 142, generates the stage driving control signal, which is for controlling the stage driving system 142 to move the stage 141 rotationally around the rotational axis (X) until the rotation angle of the stage 141 around the rotational axis (X) becomes the desired X angle, based on the desired X angle under the control of the measurement control apparatus 24. Incidentally, information related to the desired X angle that is used to generate the stage driving control signal may be regarded a command value related to the movement of the stage 141. Then, the processing control apparatus 16 controls the stage driving system 142 based on the generated stage driving control signal under the control of the measurement control apparatus 24. As a result, the stage driving system 142 moves the stage 141 rotationally around the rotational axis (X) so that the rotational angle of the stage 141 around the rotational axis (X) becomes the desired X angle. As a result, stage 141 moves rotationally around the rotational axis (X) until the rotation angle of the stage 141 around the rotational axis (X) becomes the desired X angle, and then stops.

However, at this point, the rotation angle of the stage 141 around the rotational axis (X) may not be the same as the desired X angle because the movement error occurring in the rotational movement of the stage 141 is not corrected yet. Namely, an actual rotational angle of the stage 141 around the rotational axis (X) may not be the same as the desired X angle.

As another example, in a case where the stage 141 is moved rotationally around the rotational axis (Z) so that a rotation angle of the stage 141 around the rotational axis (Z) becomes a desired Z angle, the processing control apparatus 16, which controls the stage driving system 142, generates the stage driving control signal, which is for controlling the stage driving system 142 to move the stage 141 rotationally around the rotational axis (Z) until the rotation angle of the stage 141 around the rotational axis (Z) becomes the desired Z angle, based on the desired Z angle under the control of the measurement control apparatus 24. Incidentally, information related to the desired Z angle that is used to generate the stage driving control signal may be regarded a command value related to the movement of the stage 141. Then, the processing control apparatus 16 controls the stage driving system 142 based on the generated stage driving control signal under the control of the measurement control apparatus 24. As a result, the stage driving system 142 moves the stage 141 rotationally around the rotational axis (Z) so that the rotational angle of the stage 141 around the rotational axis (Z) becomes the desired Z angle. As a result, stage 141 moves rotationally around the rotational axis (Z) until the rotation angle of the stage 141 around the rotational axis (Z) becomes the desired Z angle, and then stops.

However, at this point, the rotation angle of the stage 141 around the rotational axis (Z) may not be the same as the desired Z angle because the movement error occurring in the rotational movement of the stage 141 is not corrected yet. Namely, an actual rotational angle of the stage 141 around the rotational axis (Z) may not be the same as the desired Z angle.

Incidentally, in a case where both the processing head 11 and the stage 141 are rotatable, the measurement control apparatus 24 does not rotate the processing head 11 and the stage 141 simultaneously at the step S211. For example, the measurement control apparatus 24 does not rotate the stage 141 in parallel with the rotation of the processing head 11 in a case where the processing head 11 is rotated at the step S211. On the other hand, the measurement control apparatus 24 does not rotate the processing head 11 in parallel with the rotation of the stage 141 in a case where the stage 141 is rotated in a step S211. However, the measurement control apparatus 24 may rotate the processing head 11 and the stage 141 simultaneously at the step S211.

Then, the measurement control apparatus 24 calculates the directions of at least three local scan areas LSA from the measurement head 22 (the step S209). The measurement control apparatus 24 performs the local scan (the step S204) and calculates the directions of at least three fiducial members FM from the measurement head 22 based on the result of the local scan (the step S205). Then, the measurement control apparatus 24 controls the measurement head 22 so as to irradiate at least three fiducial members FM with the measurement light ML (the step S206). Then, the measurement control apparatus 24 determines whether or not at least one of the processing head 11 and the stage 141 should be moved translationally (the step S207).

In this manner, in the present example embodiment, the measurement head 22 optically receives the returning light RL from each of at least three fiducial members FM each time the stage 141 moves along the rotational axis and stops. Especially, the measurement head 22 optically receives the returning light RL from each of the at least three fiducial members FM in a situation where the positional relationship between the processing head 11 and the stage 141 is each of at least three different positional relationships each time the stage 141 moves along the rotational axis and stops. Namely, the measurement system 2 repeats an operation for changing the positional relationship between the processing head 11 and the stage 141 by using the head driving system 12 and the stage driving system 142 to move at least one of the processing head 11 and the stage 141 translationally (the step S208) and an operation for optically receiving the returning light RL from each of at least three fiducial members FM by using the measurement head 22 (the step S206) each time the stage 141 moves along the rotational axis and stops.

Incidentally, in a case where the processing head 11 is rotatable, the measurement head 22 may optically receive the returning light RL from each of at least three fiducial members FM each time the processing head 11 moves along the rotational axis and stops. Especially, the measurement head 22 may optically receive the returning light RL from each of the at least three fiducial members FM in a situation where the positional relationship between the processing head 11 and the stage 141 is each of at least three different positional relationships each time the processing head 11 moves along the rotational axis and stops. Namely, the measurement system 2 repeats the operation for changing the positional relationship between the processing head 11 and the stage 141 by using the head driving system 12 and the stage driving system 142 to move at least one of the processing head 11 and the stage 141 translationally (the step S208) and an operation for optically receiving the returning light RL from each of at least three fiducial members FM by using the measurement head 22 (the step S206) each time the processing head 11 moves along the rotational axis and stops.

In a case where at least one of the processing head 11 and the stage 141 is moved rotationally at the step S210, the measurement control apparatus 24 may move at least one of the processing head 11 and the stage 141 rotationally along the same rotational direction toward the same way in order to eliminate an effect of backlash components that occur in the rotational movement of at least one of the processing head 11 and the stage 141. For example, the measurement control apparatus 24 may move the stage 141 by a desired rotation angle each time toward one direction around each of the rotational axis (X) and the rotational axis (Z) without changing the rotational direction and the rotational way of the stage 141.

On the other hand, as a result of the determination at the step S210, in a case where it is determined that the stage 141 may not be moved rotationally (the step S210: No), the measurement control apparatus 24 calculates actual positions of at least three fiducial members FM based on the optical received result of the returning light RL at the step S206 (a step S212).

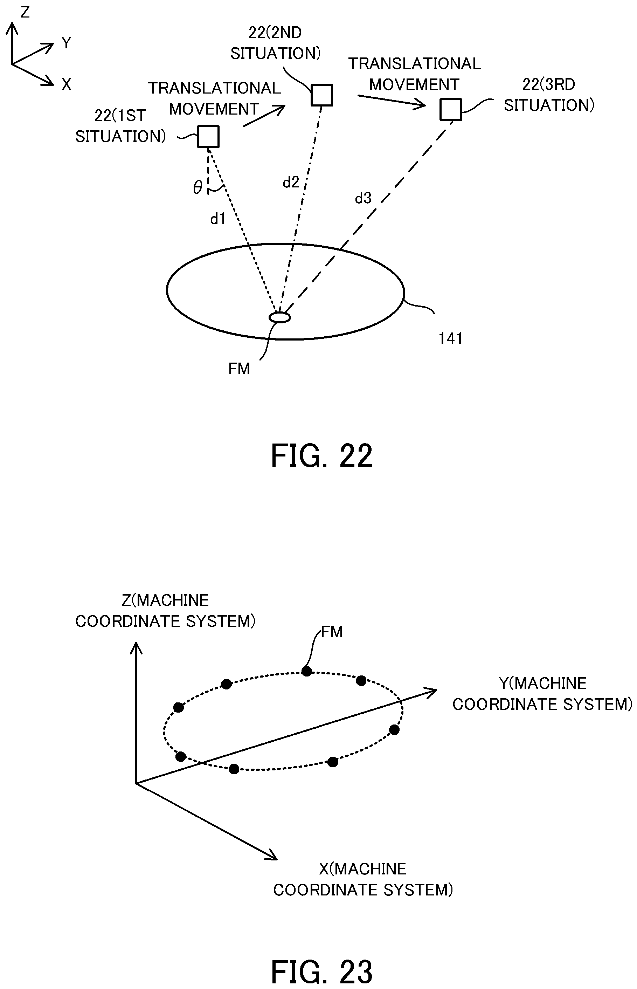

Here, with reference to FIG. 22, an outline of an operation for calculating the position of the fiducial member FM at the step S212 in FIG. 21 will be described. As described above, the measurement head 22 optically receives the returning light RL from each of at least three fiducial members FM in a situation where the positional relationship between the processing head 11 and the stage 141 is each of at least three different positional relationships each time the stage 141 moves rotationally and stops. For example, as illustrated in FIG. 22, the measurement head 22 optically receives the returning light RL from the fiducial member FM in a first situation where the positional relationship between the processing head 11 and the stage 141 is a first positional relationship, optically receives the returning light RL from the fiducial member FM in a second situation where the positional relationship between the processing head 11 and the stage 141 is a second positional relationship that is different from the first positional relationship, and optically receives the returning light RL from the fiducial member FM in a third situation where the positional relationship between the processing head 11 and the stage 141 is a third positional relationship that is different from the first and second positional relationships. As described above, the positions (the positions in the machine coordinate system) of the processing head 11 and the stage 141 in each of the first to third situations are known to the measurement control apparatus 24. In this case, the measurement control apparatus 24 may calculate a distance d1 between the measurement head 22 and the fiducial member FM in the first situation based on the optical received result of the returning light RL by the measurement head 22 in the first situation. Furthermore, the measurement control apparatus 24 may calculate a distance d2 between the measurement head 22 and the fiducial member FM in the second situation based on the optical received result of the returning light RL by the measurement head 22 in the second situation. Furthermore, the measurement control apparatus 24 may calculate a distance d3 between the measurement head 22 and the fiducial member FM in the third situation based on the optical received result of the returning light RL by the measurement head 22 in the third situation. Then, the measurement control apparatus 24 calculates the position of the fiducial member FM in the machine coordinate system based on the distances d1 to d3 and the positions (the positions in the machine coordinate system) of the processing head 11 and stage 141 in each of the first to third situations. For example, the measurement control apparatus 24 may calculate, as the position of the fiducial member FM, a position of an intersection of a sphere whose center is at the measurement head 22 in the first situation and whose radius is the distance d1, a sphere whose center is at the measurement head 22 in the second situation and whose radius is the distance d2, and a sphere whose center is at the measurement head 22 in the third situation and whose radius is the distance d3.

Incidentally, as described above, the measurement control apparatus 24 may calculate the direction along which the measurement light ML is emitted from the measurement head 22 based on the information related to the driving state of the Galvano mirror 2228. Namely, the measurement control apparatus 24 may calculate an azimuth angle $\theta$, which represents the direction along which the measurement light ML is emitted from the measurement head 22, based on the information related to the driving state of the Galvano mirror 2228, as illustrated in FIG. 22. Incidentally, in the example illustrated in FIG. 22, an angle between an axis extending along the direction along which the measurement light ML is emitted from the measurement head 22 and an vertical axis passing through the fiducial point FP of the measurement head 22 is used as the azimuth angle θ. In this case, the measurement control apparatus 24 may calculate the position of the fiducial member FM based on the distances d1 and d2, the positions (the positions in the machine coordinate system) of the processing head 11 and stage 141 in each of the first and second situations, and the direction along which the measurement light ML is emitted from the measurement head 22 in each of the first and second situations. In this case, at least one of the processing head 11 and the stage 141 may move translationally so that the positional relationship between the processing head 11 and the stage 141 changes between at least two different positional relationships each time the stage 141 moves rotationally and stops. Namely, the measurement head 22 may optically receive the returning light RL from the fiducial member FM in the first situation where the positional relationship between the processing head 11 and the stage 141 is the first positional relationship, and may optically receive the returning light RL from the fiducial member FM in the second situation where the positional relationship between the processing head 11 and the stage 141 is the second positional relationship that is different from the first positional relationship, but may not optically receive the returning light RL from the fiducial member FM in the third situation where the positional relationship between the processing head 11 and the stage 141 is the third positional relationship that is different from the first and second positional relationships.

Alternatively, in some case, the measurement control apparatus 24 may calculate the position of the fiducial member FM based on the distance d1, the positions (the positions in the machine coordinate system) of the processing head 11 and stage 141 in the first situation, and the direction along which the measurement light ML is emitted from the measurement head 22 in the first situation. In this case, at least one of the processing head 11 and the stage 141 may not move translationally each time the stage 141 moves rotationally and stops. Namely, the measurement head 22 may optically receive the returning light RL from the fiducial member FM in the first situation where the positional relationship between the processing head 11 and the stage 141 is the first positional relationship, but may not optically receive the returning light RL from the fiducial member FM in each of the second situation where the positional relationship between the processing head 11 and the stage 141 is the second positional relationship that is different from the first positional relationship and the third situation where the positional relationship between the processing head 11 and the stage 141 is the third positional relationship that is different from the first and second positional relationships.

The measurement control apparatus 24 repeats an operation for calculating the position of the fiducial member FM as many times as the number of fiducial members FM. As a result, the measurement control apparatus 24 may calculate the positions of at least three fiducial members FM in a situation where the rotational angle of the processing head 11 and the stage 141 is a predetermined angle.

Furthermore, the measurement control apparatus 24 repeats an operation for calculating the positions of at least three fiducial members FM in a situation where the rotational angle of the stage 141 is the predetermined angle as many time as the number of the rotational angles of the stage 141. As a result, as illustrated in FIG. 23, the measurement control apparatus 24 may calculate the positions of the fiducial members FM, which move rotationally due to the rotational movement of the stage 141, in the machine coordinate system.

Incidentally, FIG. 23 illustrates one example of the position of the fiducial member FM in the machine coordinate system, which is calculated in a case where the stage 141 moves rotationally around the rotational axis (Z) at the step S211 in FIG. 21. Incidentally, the measurement control apparatus 24 may calculate the position of the fiducial member FM in the machine coordinate system, which is illustrated in FIG. 23, based on the positions of at least three fiducial members FM calculated in a situation where the rotational angle of the stage 141 is the predetermined angle. For example, the position of the fiducial member FM in the machine coordinate system, which is illustrated in FIG. 23, may be an average of the positions of at least three fiducial members FM, which are calculated in a situation where the rotational angle of stage 141 is the predetermined angle. For example, the position of the fiducial member FM in the machine coordinate system, which is illustrated in FIG. 23, may be a center of gravity or a center of the positions of at least three fiducial members FM, which are calculated in a situation where the rotational angle of stage 141 is the predetermined angle. Incidentally, the number of fiducial members FM used in the second movement error calculation operation in FIG. 21 is not limited to at least three. The number of fiducial members FM used in the second movement error calculation operation may be two or less, or four or more.

In FIG. 21 again, then, the measurement control apparatus 24 calculates the movement error occurring in the rotational movement of at least one of the processing head 11 and the stage 141 based on the actual position of the fiducial member FM in the machine coordinate system calculated at the step S212 (a step S213).

Specifically, the movement error occurring in the rotational movement of the processing head 11 corresponds to a difference between an actual rotational angle of the processing head 11 and a target rotational angle of the processing head 11. Similarly, the movement error of the stage 141 corresponds to a difference between an actual rotational angle of the stage 141 and a target rotational angle of the stage 141. Here, in the present example embodiment, the example in which the stage 141 moves rotationally around each of the rotational axis (X) and the rotational axis (Z) as described above. Therefore, in the below-described description, an operation for calculating the movement error occurring in a case where the stage 141 moves rotationally around each of the rotational axis (X) and the rotational axis (Z) will be described. However, as will be described in detail later, even in a case where the processing head 11 moves rotationally around at least one of the rotational axis (X), the rotational axis (Y), and the rotational axis (Z), the measurement control apparatus 24 may calculate the movement error occurring in a case where the processing head 11 moves rotationally around at least one of the rotation axis (X), the rotational axis (Y), and the rotational axis (Z) by performing an operation that is the same as the operation described below. Similarly, even in a case where the stage 141 moves rotationally around the rotational axis (Y), the measurement control apparatus 24 may calculate the movement error occurring in a case where the stage 141 moves rotationally around the rotational axis (Y) by performing an operation that is the same as the operation described below.

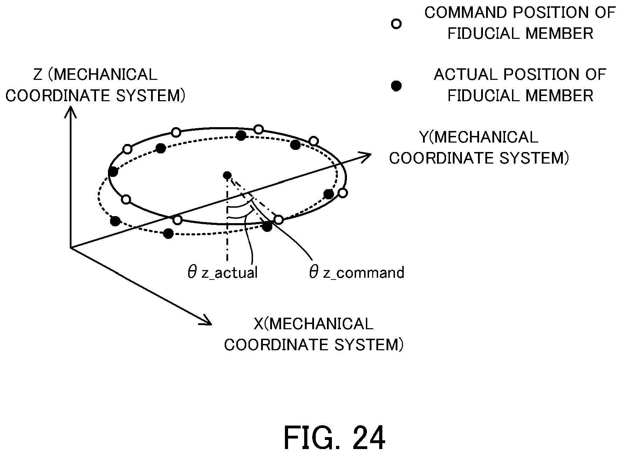

Here, the measurement control apparatus 24 may calculate the actual rotational angle of the stage 141 based on the actual position of the fiducial member FM illustrated in FIG. 23. For example, the measurement control apparatus 24 may calculate an actual X rotational angle $\theta x\_actual$ of the stage 141 around the rotational axis (X) based on the actual position of the fiducial member FM that moves due to the rotational movement of the stage 141 around the rotational axis (X). For example, the measurement control apparatus 24 may calculate an actual Z rotational angle $\theta z\_actual$ of the stage 141 around the rotational axis (Z) based on the actual position of the fiducial member FM that moves due to the rotational movement of the stage 141 around the rotational axis (Z). As a result, the measurement control apparatus 24 may calculate, as the movement error occurring in the rotation movement of the stage 141, a difference $\Delta\theta x$ between the actual X rotational angle $\theta x\_actual$ of the stage 141 and a command X rotational angle $\theta x\_command$ of the stage 141. The measurement control apparatus 24 may calculate, as the movement error occurring in the rotation movement of the stage 141, a difference $\Delta\theta z$ between the actual Z rotational angle $\theta z\_actual$ of the stage 141 and a command Z rotational angle $\theta z\_command$ of the stage 141. Incidentally, FIG. 24 schematically illustrates the difference $\Delta\theta z$ between the actual Z rotational angle $\theta z\_actual$ of the stage 141 and the command Z rotational angle $\theta z\_command$ of the stage 141 as one example of the movement error occurring in the rotational movement of stage 141.

A target rotational angle of the processing head 11, which is used to generate the stage driving control signal for controlling the stage driving system 142, may be used as the command X rotational angle $\theta x\_command$ and the command Z rotational angle $\theta z\_command$. The measured result by the position measurement apparatus 143, which measures the position of the stage 141, may be used as the command X rotational angle $\theta x\_command$ and the command Z rotational angle $\theta z\_command$. A target rotational angle, which is calculated from a target rotational amount of the stage 141 that is usable to generate the stage driving control signal for controlling the stage driving system 142, may be used as the command X rotational angle $\theta x\_command$ and the command Z rotational angle $\theta z\_command$. Incidentally, the command X rotational angle $\theta x\_command$ and the command Z rotational angle $\theta z\_command$ may be regarded as command values related to the movement of the stage 141.

Incidentally, in a case where the stage 141 is rotatable around the rotational axis (Y), the measurement control apparatus 24 may calculate an actual Y rotational angle $\theta y\_actual$ of the stage 141 around the rotational axis (Y) based on the actual position of the fiducial member FM that moves due to the rotational movement of the stage 141 around the rotational axis (Y). Then, the measurement control apparatus 24 may calculate, as the movement error occurring in the rotational movement of the stage 141, a difference $\Delta\theta y$ between the actual Y rotational angle $\theta y\_actual$ of the stage 141 and a command Y rotational angle $\theta y\_command$ of the stage 141.

Moreover, in a case where not the stage 141 but the processing head 11 is rotatable around the rotational axis (X), the measurement control apparatus 24 may calculate an actual X rotational angle $\theta x\_actual$ of the processing head 11 around the rotational axis (X) based on the actual position of the fiducial member FM that moves relative to the processing head 11 due to rotational movement of the processing head 11 around the rotational axis (X). Then, the measurement control apparatus 24 may calculate, as the movement error occurring in the rotational movement of the processing head 11, a difference $\Delta\theta x$ between the actual X rotational angle $\theta x\_actual$ of the processing head 11 and a command X rotational angle $\theta x\_command$ of the processing head 11.

Moreover, in a case where not the stage 141 but the processing head 11 is rotatable around the rotational axis (Y), the measurement control apparatus 24 may calculate an actual Y rotational angle $\theta y\_actual$ of the processing head 11 around the rotational axis (Y) based on the actual position of the fiducial member FM that moves relative to the processing head 11 due to rotational movement of the processing head 11 around the rotational axis (Y). Then, the measurement control apparatus 24 may calculate, as the movement error occurring in the rotational movement of the processing head 11, a difference $\Delta\theta y$ between the actual Y rotational angle $\theta y\_actual$ of the processing head 11 and a command Y rotational angle $\theta y\_command$ of the processing head 11.

Moreover, in a case where not the stage 141 but the processing head 11 is rotatable around the rotational axis (Z), the measurement control apparatus 24 may calculate an actual Z rotational angle $\theta z\_actual$ of the processing head 11 around the rotational axis (Z) based on the actual position of the fiducial member FM that moves relative to the processing head 11 due to rotational movement of the processing head 11 around the rotational axis (Z). Then, the measurement control apparatus 24 may calculate, as the movement error occurring in the rotational movement of the processing head 11, a difference $\Delta\theta z$ between the actual Z rotational angle $\theta z\_actual$ of the processing head 11 and a command Z rotational angle $\theta z\_command$ of the processing head 11.

Incidentally, the measurement control apparatus 24 may generate, as the information related to the movement error, a function that expresses the movement error, in addition to or instead of the movement errors ($\Delta\theta x$, $\Delta\theta z$) described. For example, the measurement control apparatus 24 may calculate a function that outputs the movement error occurring in the rotational movement based on any command rotational angle in a case where any command rotational angle is input thereto. In this case, the measurement control apparatus 24 may generate the function itself. The measurement control apparatus 24 may generate a parameter (for example, a coefficient and the like) of the function.

The measurement control apparatus 24 may generate, as the information related to the movement errors, a function that express the actual rotational angle of the stage 141 in a case where the stage 141 moves rotationally based on the stage driving control signal for moving the stage 141 rotationally by any command rotational angle, in addition to or instead of the movement errors ($\Delta\theta x$, $\Delta\theta z$) described above. In a case where the processing head 11 is rotatable, the measurement control apparatus 24 may generate, as the information related to the movement errors, a function that express the actual rotational angle of the processing head 11 in a case where the processing head 11 moves rotationally based on the head driving control signal for moving the processing head 11 rotationally by any command rotational angle, in addition to or instead of the movement errors ($\Delta\theta x$, $\Delta\theta z$) described above. In this case, the measurement control apparatus 24 may generate the function itself. The measurement control apparatus 24 may generate a parameter (for example, a coefficient and the like) of the function.

After the information related to the movement error is generated, the measurement control apparatus 24 may generate the error correction information for correcting the movement error based on the information related to the movement error.

For example, the measurement control apparatus 24 may generate, as the error correction information, a correction value Ca for correcting the command X rotational angle $\theta x\_command$ described above. Specifically, in a case where the stage 141 moves based on the stage driving control signal for moving the stage 141 rotationally by the command X rotational angle $\theta x\_command$, the stage 141 moves rotationally not by the X rotational angle $\theta x\_command$ but by a rotational angle acquired by adding the movement error $\Delta\theta x$ to the command X rotational angle $\theta x\_command$. Therefore, if

a rotational angle acquired by subtracting the movement error $\Delta\theta x$ from the command X rotational angle $\theta x\_command$ is used as new command X rotational angle $\theta x\_command$, the stage 141 is expected to move rotationally by the command X rotational angle $\theta x\_command$. Therefore, the measurement control apparatus 24 may set the movement error $\Delta\theta x$ to the correction value Ca for correcting the command X rotational angle $\theta x\_command$. In this case, the measurement control apparatus 24 may generate the error correction information that includes a plurality of information sets each of which of includes any command X rotational angle $\theta x\_command\#p$ and the correction value Ca#p for correcting this command X rotational angle. For the same reason, the measurement control apparatus 24 may set the movement error $\Delta\theta z$ to a correction value Cc for correcting the command Z rotational angle $\theta z\_command$. In this case, the measurement control apparatus 24 may generate the error correction information that includes a plurality of information sets each of which of includes any command Z rotational angle $\theta z\_command\#p$ and the correction value Cc#p for correcting this command Z rotational angle.

For example, the measurement control apparatus 24 may generate, as the error correction information, a function that express at least one of the correction values Ca and Cc in a case where at least one of any command X rotational angle $\theta x\_command$ and any command Z rotational angle $\theta z\_command$ is input. A function that expresses at least one of the correction values Ca#p and Cc#p by means of an exponentiation is one example of this function. A function "Ca#p = aa $\times$ A + ba $\times$ A$^2$ + ..." is one example of the function that expresses the correction values Ca#p and Cc#p by means of the exponentiation. Incidentally, "A" in this function represents the command X rotational angle $\theta x\_command\#p$, and "aa" and "ba" represents coefficients. In this case, the measurement control apparatus 24 may generate the function itself. The measurement control apparatus 24 may generate a parameter (for example, a coefficient and the like) of the function.

The measurement control apparatus 24 may output the error correction information to the machine tool 1 (especially, the processing control apparatus 16) as the information for controlling the machine tool 1 even in the second movement error calculation operation, as in the first movement error calculation operation. In this case, the processing control apparatus 16 may control the rotational movement of at least one of the processing head 11 and the stage 141 based on the error correction information. Specifically, the processing control apparatus 16 may correct the command rotational angle of at least one of the processing head 11 and the stage 141 based on the error correction information, and may use the corrected command rotational angle to generate the driving control signal for moving at least one of the processing head 11 and the stage 141 rotationally. As a result, even in a case where the movement error occurs in the rotational movement of the stage 141, the machine tool 1 can move the stage 141 rotationally by the original command rotational angle before correction in the same manner as in a case where no movement error occurs in the rotational movement of the stage 141. Namely, the machine tool 1 can move the stage 141 rotationally with high accuracy. In a case where the processing head 11 is rotatable, the machine tool 1 can move the processing head 11 rotationally by the original command rotational angle before correction even in a case where the movement error occurs in the rotational movement of the processing head 11, in the same manner as in a case where no movement error occurs in the rotational movement of the processing head 11. Namely, the machine tool 1 can move the processing head 11 rotationally with high accuracy. As a result, the machine tool 1 can process the workpiece W with high accuracy.

The processing control apparatus 16 may correct the measured result by the head position measurement apparatus 13, which measures the position of the processing head 11, based on the error correction information, instead of controlling the rotational movement of the processing head 11 based on the error correction information, even in the second movement error calculation operation, as in the first movement error calculation operation. The processing control apparatus 16 may correct the measured result by the position measurement apparatus 143, which measures the position of the stage 141, based on the error correction information, instead of controlling the rotational movement of the stage 141 based on the error correction information, even in the second movement error calculation operation, as in the first movement error calculation operation.

The measurement control apparatus 24 may generate, based on the information related to the movement error, the processing path correction information for correcting the processing path indicating the processing route of the workpiece W by the machine tool 1, as the information for controlling the machine tool 1, even in the second movement error calculation operation, as in the first movement error calculation operation. The measurement control apparatus 24 may generate, based on the information related to the movement error, the measurement path correction information for correcting the measurement path indicating the measurement path of the workpiece W by the measurement system 2, even in the second movement error calculation operation, as in the first movement error calculation operation.

The measurement control apparatus 24 may generate, based on the information related to the movement error, the driving correction information for correcting the driving control signal generated by the processing control apparatus 16 to control the rotational movement of at least one of the processing head 11 and the stage 141, as the information for controlling the machine tool 1, even in the second movement error calculation operation, as in the first movement error calculation operation. The measurement control apparatus 24 may correct the driving control signal, which is generated by the processing control apparatus 16, based on the information related to the movement error, even in the second movement error calculation operation, as in the first movement error calculation operation. Incidentally, in this case, the measurement control apparatus 24 may control at least one of the head driving system 12 and the stage driving system 142 based on the corrected driving control signal (the corrected driving signal) instead of the processing control apparatus 16. The measurement control apparatus 24 may generate the driving control signal based on the information related to the movement error, even in the second movement error calculation operation, as in the first movement error calculation operation. Incidentally, in this case, the measurement control apparatus 24 may control at least one of the head driving system 12 and the stage driving system 142 based on the generated driving control signal, instead of the processing control apparatus 16.

Incidentally, the processing system SYS may perform the operation for calculating the movement error occurring in the rotational movement of the stage 141 around the rotational axis (X) by moving the stage 141 rotationally around the rotational axis (X) at the step S210 in FIG. 21 and the operation for calculating the movement error occurring in the rotational movement of the stage 141 around the rotational axis (Z) by moving the stage 141 rotationally around the rotational axis (Z) at the step S210 in FIG. 21 separately. Namely, the processing system SYS may perform an operation for calculating the movement error occurring in the rotational movement of at least one of the processing head 11 and the stage 141 around one rotational axis by moving at least one of the processing head 11 and the stage 141 rotationally around the one rotational axis at the step S210 in FIG. 21 and an operation for calculating the movement error occurring in the rotational movement of at least one of the processing head 11 and the stage 141 around another rotational axis by moving at least one of the processing head 11 and the stage 141 rotationally around the another rotational axis at the step S210 in FIG. 21 separately.

Moreover, the processing system SYS may perform, as the second movement error calculation operation, an operation for calculating the movement error occurring in the rotational movement of at least one of the processing head 11 and the stage 141 by using the principle of the multi-side surveying, as in the first movement error calculation operation. In this case, the processing system SYS may not use the position of any one of the measurement points MP#1 to MP#J as the initial position at the step S201 in FIG. 21. Furthermore, the position of any one of the measurement points MP#1 to MP#J may not be used as the desired position to which the processing head 11 moves at the step S208 in FIG. 21. Even in this case, the measurement control apparatus 24 may calculate the positions of the measurement point MP and the fiducial member FM in a state where the rotational angle of at least one of the processing head 11 and the stage 141 is a predetermined rotational angle by solving the minimization problem represented in the Equation described above. The measurement control apparatus 24 repeats this operation each time at least one of the processing head 11 and the stage 141 moves rotationally and stops. As a result, the measurement control apparatus 24 may calculate the movement error occurring in the rotational movement of at least one of the processing head 11 and the stage 141. The processing system SYS may not perform the second movement error calculation operation after performing the first movement error calculation operation described above. The processing system SYS may perform the second movement error calculation operation before performing the first movement error calculation operation described above. In this case, the processing system SYS may perform the first movement error calculation operation after performing the second movement error calculation operation.

### (2-2-3) Operation performed after Movement Error Calculation Operation is performed

After the movement error calculation operation described above is performed, the machine tool 1 may process the workpiece W under the control of the processing control apparatus 16. In this case, the processing control apparatus 16 may control the movement of at least one of the processing head 11 and the stage 141 based on the error correction information acquired from the measurement control apparatus 24. As a result, even in a case where the movement error occurs in the movement of the processing head 11, the machine tool 1 can move the processing head 11 so that the processing head 11 is positioned at the command position in the same manner as in a case where no movement error occurs in the movement of the processing head 11. Namely, the machine tool 1 can move the processing head 11 with high accuracy. Similarly, even in a case where the movement error occurs in the movement of the stage 141, the machine tool 1 can move the stage 141 so that the stage 141 is positioned at the non-corrected command position in the same manner as in a case where no movement error occurs in the movement of the stage 141. Namely, the machine tool 1 can move the stage 141 translationally with high accuracy. As a result, the machine tool 1 can process the workpiece W with high accuracy.

After the machine tool 1 finishes processing the workpiece W, the measurement system 2 may measure the three-dimensional shape of the workpiece W that has been processed by the machine tool 1. Specifically, the tool change apparatus 15 of the machine tool 1 may detach the tool 113 attached to the main spindle 111 and attach the measurement head 22 to the main spindle 111. Then, the measurement system 2 may measure the three-dimensional shape of the workpiece W, which has been processed by the machine tool 1, by using the measurement head 22 attached to the main spindle 111. In this case, the processing control apparatus 16 may control the movement of at least one of the processing head 11 and the stage 141 based on the error correction information acquired from the measurement control apparatus 24. Namely, the processing control apparatus 16 may control the movement of at least one of the measurement head 22 attached to the processing head 11 and the stage 141 based on the error correction information acquired from the measurement control apparatus 24. As a result, even in a case where the movement error occurs in the movement of the processing head 11, the machine tool 1 can move the processing head 11 so that the processing head 11 is positioned at the command position in the same manner as in a case where no movement error occurs in the movement of the processing head 11. Namely, the machine tool 1 can move the processing head 11 with high accuracy. As a result, the machine tool 1 can move the measurement head 22 attached to the processing head 11 with high accuracy. Similarly, even in a case where the movement error occurs in the movement of the stage 141, the machine tool 1 can move the stage 141 so that the stage 141 is positioned at the non-corrected command position in the same manner as in a case where no movement error occurs in the movement of the stage 141. Namely, the machine tool 1 can move the stage 141 translationally with high accuracy. As a result, the machine tool 1 can measure the three-dimensional shape of the workpiece W properly.

In a case where the three-dimensional shape of the workpiece W measured by measurement system 2 is different from a target shape of the workpiece W, the machine tool 1 may perform an additional processing on the workpiece W so that the three-dimensional shape of the workpiece W becomes the target shape of the workpiece W. On the other hand, in a case where the three-dimensional shape of the workpiece W measured by the measurement system 2 is the same as the target shape of the workpiece W, the machine tool 1 may not perform the additional processing on the workpiece W. For example, the measurement control apparatus 24 may calculate the three-dimensional shape of the workpiece W by optically receiving the returning light RL from each of a plurality of parts on the workpiece W that is generated by irradiating each of the plurality of parts with the measurement light ML from the measurement head 22. Then, the measurement control apparatus 24 may determine whether or not the additional processing should be performed on the workpiece W by comparing the calculated three-dimensional shape of the workpiece W with a reference model indicating the target shape of the workpiece W (for example, a CAD model indicating the target shape of the workpiece W). In a case where the additional processing should be performed on the workpiece W, the measurement control apparatus 24 may generate additional processing information based on a comparison result between the calculated three-dimensional shape of the workpiece W and the reference model indicating the target shape of the workpiece W. The additional processing information may include, for example, at least one of a position of the additional processing and an amount of the additional processing on the workpiece W. Alternatively, the additional processing information may include information related to the calculated three-dimensional shape of the workpiece W. The measurement control apparatus 24 may output the generated additional processing information to the processing control apparatus 16 of the machine tool 1. The processing control apparatus 16 may control the machine tool 1 to perform the additional processing on the workpiece W based on the additional processing information output from the measurement control apparatus 24.

Before the measurement system 2 starts measuring the three-dimensional shape of the workpiece W, the processing system SYS may perform the movement error calculation operation described above again. For example, there is a possibility that the movement error varies in a period during which the machine tool 1 processes the workpiece W. For example, there is a possibility that the movement error of the stage 141 on which the workpiece W is placed varies due to a change of a weight of the workpiece W as the workpiece W is processed. For example, there is a possibility that the movement error of the stage 141 varies due to a change of a temperature of the stage 141 as the workpiece W is processed. For example, there is a possibility that the movement error of the processing head 11 varies due to a change of a temperature of the processing head 11 as the workpiece W is processed. For example, there is a possibility that the movement error of the processing head 11 varies due to a change of a temperature of the head driving system 12 as the workpiece W is processed. In this case, in a case where the movement error calculation operation is performed again before the measurement system 2 starts measuring the three-dimensional shape of the workpiece W, the processing control apparatus 16 can control the movement of at least one of the processing head 11 and the stage 141 by taking into account the variation of the movement error. Therefore, the processing control apparatus 16 can move at least one of the processing head 11 and the stage 141 with higher accuracy, compared to a case where the movement error calculation operation is not performed again.

### (2-2-4) Other Example of Movement Error Calculation Operation

In the above-described description, the measurement control apparatus 24 of the measurement system 2 performs a first operation for calculating the distance between the measurement head 22 and the fiducial member FM based on the optical received result of the returning light RL from the fiducial member FM by the measurement head 22 (the step S110 in FIG. 12 or the step S212 in FIG. 21), a second operation for calculating the position of at least one of the measurement point MP and the fiducial member FM based on the calculated distance (the step S110 in FIG. 12 or the step S212 in FIG. 21), a third operation for generating the information related to the movement error based on the position of at least one of the measurement point MP and the fiducial member FM as information for controlling the machine tool (the step S111 in FIG. 12 or the step S213 in FIG. 21), a fourth operation for generating the error correction information for correcting the movement error based on the information related to the movement error as the information for controlling the machine tool (the step S111 in FIG. 12 or the step S213 in FIG. 21), and a fifth operation for generating the information for controlling the machine tool 1 (especially, information that is different from the information generated by the third and fourth operations) based on the information related to the movement error (the step S111 in FIG. 12 or the step S213 in FIG. 21). However, the processing control apparatus 16 of the machine tool 1 may perform at least one of the first to fifth operations.

For example, the processing control apparatus 16 may perform the first operation. In this case, the measurement control apparatus 24 may output information related to the optical received result of the returning light RL from the fiducial member FM by the measurement head 22 to the machine tool 1 (especially, the processing control apparatus 16) as the information for controlling the machine tool 1. The processing control apparatus 16 may perform the first operation for calculate the distance between the measurement head 22 and the fiducial member FM based on the optical received result of the returning light RL from the fiducial member FM by the measurement head 22.

For example, the measurement control apparatus 24 may perform the first operation and the processing control apparatus 16 may perform the second operation. In this case, the measurement control apparatus 24 may output information related to the distance between the measurement head 22 and the fiducial member FM, which is calculated by the first operation, to the machine tool 1 (especially, the processing control apparatus 16) as the information for controlling the machine tool 1. The processing control apparatus 16 may perform the second operation for calculating the position of at least one of the measurement point MP and the fiducial member FM based on the information related to the distance acquired from the measurement control apparatus 24.

For example, the measurement control apparatus 24 may perform the first and second operations, and the processing control apparatus 16 may perform the third operation. In this case, the measurement control apparatus 24 may output information related to the position of at least one of the measurement point MP and the fiducial member FM, which is calculated in the second operation, to the machine tool 1 (especially, the processing control apparatus 16) as the information for controlling the machine tool 1. The processing control apparatus 16 may perform the third operation for generating the information related to the movement error based on the information related to the position of at least one of the measurement point MP and the fiducial member FM acquired from the measurement control apparatus 24.

For example, the measurement control apparatus 24 may perform the first to third operations, and the processing control apparatus 16 may perform the fourth operation. In this case, the measurement control apparatus 24 may output the information related to the movement error, which is generated in the third operation, to the machine tool 1 (especially, the processing control apparatus 16) as the information for controlling the machine tool 1. The processing control apparatus 16 may perform the fourth operation for generating the error correction information for correcting the movement error based on the information related to the movement error acquired from the measurement control apparatus 24.

The processing control apparatus 16 of the machine tool 1 may control the movement of at least one of the processing head 11 and the stage 141 based on information acquired from the measurement control apparatus 24 of the measurement system 2. For example, in a case where the processing control apparatus 16 acquires, from the measurement control apparatus 24, the information related to the optical received result of the returning light RL from the fiducial member FM by the measurement head 22, the processing control apparatus 16 may control the movement of at least one of the processing head 11 and the stage 141 based on the information related to the measured result and the commanded position of at least one of the processing head 11 and the stage 141. As one example, the processing control apparatus 16 may correct the command position of at least one of the processing head 11 and the stage 141 based on the information related to the light reception result so that at least one of the processing head 11 and the stage 141 moves in the same way as in a case where no movement error occurs even in a case where the movement error occurs. In this case, the processing control apparatus 16 may generate the information related to the distance between the measurement head 22 and the fiducial member FM based on the measured result, calculate the position of at least one of the measurement point MP and the fiducial member FM based on the generated information related to the distance, and generate the information related to the movement error based on the calculated position of at least one of the measurement point MP and the fiducial member FM, in the same way as the processing of the measurement control apparatus 24 described above. Then, the processing control apparatus 16 may correct the commanded position of at least one of the processing head 11 and the stage 141 based on the generated information related to the movement error. For example, in a case where the processing control apparatus 16 acquires, from the measurement control apparatus 24, the information related to the distance between the measurement head 22 and the fiducial member FM, the processing control apparatus 16 may control the movement of at least one of the processing head 11 and the stage 141 based on the information related to the distance and the command position of at least one of the processing head 11 and the stage 141. As one example, the processing control apparatus 16 may correct the command position of at least one of the processing head 11 and the stage 141 based on the information related to distance so that at least one of the processing head 11 and the stage 141 moves in the same way as in a case where no movement error occurs even in a case where the movement error occurs. In this case, the processing control apparatus 16 may calculate the position of at least one of the measurement point MP and the fiducial member FM based on the information related to the distance, and generate the information related to the movement error based on the calculated position of at least one of the measurement point MP and the fiducial member FM, in the same way as the processing of the measurement control apparatus 24 described above. Then, the processing control apparatus 16 may correct the commanded position of at least one of the processing head 11 and the stage 141 based on the generated information related to the movement error. For example, in a case where the processing control apparatus 16 acquires, from the measurement control apparatus 24, the information related to the position of at least one of the measurement points MP and the fiducial member FM, the processing control apparatus 16 may control the movement of at least one of the processing head 11 and the stage 141 based on the information related to the position and the command position of at least one of the processing head 11 and the stage 141. As one example, the processing control apparatus 16 may correct the command position of at least one of the processing head 11 and the stage 141 based on the information related to the position so that at least one of the processing head 11 and the stage 141 moves in the same way as in a case where no movement error occurs even in a case where the movement error occurs. In this case, the processing control apparatus 16 may generate the information related to the movement error based on the information related to the position of at least one of the measurement point MP and the fiducial member FM, in the same way as the processing of the measurement control apparatus 24 described above. Then, the processing control apparatus 16 may correct the commanded position of at least one of the processing head 11 and the stage 141 based on the generated information related to the movement error. For example, in a case where the processing control apparatus 16 acquires, from the measurement control apparatus 24, the information related to the movement error, the processing control apparatus 16 may control the movement of at least one of the processing head 11 and the stage 141 based on the information related to the movement error and the command position of at least one of the processing head 11 and the stage 141. As one example, the processing control apparatus 16 may correct the command position of at least one of the processing head 11 and the stage 141 based on the information related to the movement error so that at least one of the processing head 11 and the stage 141 moves in the same way as in a case where no movement error occurs even in a case where the movement error occur.

In the above-described description, the measurement control apparatus 24 (alternatively, the processing control apparatus 16) calculates the position of at least one of the measurement point MP and the fiducial member FM based on the optical received result of the returning light RL from the fiducial member FM by the measurement head 22, and generates the information related to the movement error based on the position of at least one of the measurement point MP and the fiducial member FM at the step S110 in FIG. 12 or the step S212 in FIG. 21. Here, the information related to the position of at least one of the measurement point MP and the fiducial member FM, which is used to generate the information related to the movement error, is generated based on the distance between the measurement head 22 and the fiducial member FM. Therefore, the operation for generating the information related to the movement error based on the position of at least one of the measurement point MP and the fiducial member FM may be considered to be equivalent to the operation for generating the information related to the movement error based on the distance between the measurement head 22 and the fiducial member FM. Since the information related to the movement error is the information for controlling the machine tool 1, the operation for generating the information for controlling the machine tool 1 based on the position of at least one of the measurement point MP and the fiducial member FM may be considered to be equivalent to the operation for generating the information for controlling the machine tool 1 based on the distance between the measurement head 22 and the fiducial member FM. Moreover, it can be said that the information related to the position of at least one of the measurement point MP and the fiducial member FM, which is used to generate the information related to the movement error, is generated based on the optical received result of the returning light RL from the fiducial member FM by the measurement head 22. Therefore, the operation for generating the information related to the movement error based on the position of at least one of the measurement point MP and the fiducial member FM may be considered to be equivalent to the operation for generating the information related to the movement error based on the optical received result of the returning light RL from the fiducial member FM by the measurement head 22. Since the information related to the movement error is the information for controlling the machine tool 1, the operation for generating the information for controlling the machine tool 1 based on the position of at least one of the measurement point MP and the fiducial member FM may be considered to be equivalent to the operation for generating the information for controlling the machine tool 1 based on the optical received result of the returning light RL from the fiducial member FM by the measurement head 22.

Incidentally, in a case where the measurement control apparatus 24 (alternatively, the processing control apparatus 16) calculates the position of at least one of the measurement point MP and the fiducial member FM based on the optical received result of the returning light RL from the fiducial member FM by the measurement head 22, the measurement control apparatus 24 (alternatively, the processing control apparatus 16) may calculate the distance between the measurement head 22 and the fiducial member FM from the position of at least one of the measurement point MP and the fiducial member FM. This operation may be regarded as the operation for calculating the distance between the measurement head 22 and the fiducial member FM based on the optical received result of the returning light RL from the fiducial member FM by the measurement head 22.

The measurement control apparatus 24 may output the information related to the position of the fiducial member FM, which is calculated at the step S110 in FIG. 12 or the step S212 in FIG. 21, to the machine tool 1 (especially, the processing control apparatus 16) as the information for controlling the machine tool 1. In this case, the processing control apparatus 16 may control the operation of the machine tool 1 based on the information related to the position of the fiducial member FM. For example, the processing control apparatus 16 may correct or generate the processing path based on the information related to the position of the fiducial member FM. For example, the processing control apparatus 16 may correct or generate the head driving control signal based on the information related to the position of the fiducial member FM. For example, the processing control apparatus 16 may correct or generate the stage driving control signal based on the information related to the position of the fiducial member FM.

(3) Technical effects of machine tool 1

## (3) Technical Effect of Machine Tool 1

As described above, in the present example embodiment, the measurement control apparatus 24 may calculate the movement error occurring in the movement of at least one of the processing head 11 and the stage 141 based on the optical received result of the returning light RL from the fiducial member FM. Therefore, the machine tool 1 can move at least one of the processing head 11 and the stage 141 with high accuracy. Therefore, the machine tool 1 can process the workpiece W with high accuracy. Furthermore, the measurement system 2 can measure the three-dimensional shape of the workpiece W properly.

Furthermore, in the present example embodiment, the fiducial member FM is positioned on each of the stage 141 and the workpiece W. Therefore, as described with reference to FIG. 11(a) and FIG. 11(b), it is more likely that at least N fiducial members FM are included in the measurement range of the measurement head 22, compared to a case where the fiducial member FM is positioned only on the stage 141. Therefore, it is less likely that the measurement control apparatus 24 is unable to irradiate at least N fiducial members FM with the measurement light ML. Therefore, there are fewer cases where the measurement control apparatus 24 is unable to calculate the movement error.

Furthermore, as described with reference to FIG. 11 (c), even in a case where the fiducial member FM is positioned on the workpiece W but the fiducial member FM is not positioned on the stage 141, it is more likely that at least N fiducial members FM are included in the measurement range of the measurement head 22, compared to a case where the fiducial member FM is positioned only on the stage 141. Therefore, it is less likely that the measurement control apparatus 24 is unable to irradiate at least N fiducial members FM with the measurement light ML. Therefore, there are fewer cases where the measurement control apparatus 24 is unable to calculate the movement error.

Furthermore, in the present example embodiment, the fiducial member FM is positioned on both the stage 141 and the workpiece W. As a result, the measurement head 22 can irradiate at least N fiducial members FM with the measurement light ML in a situation where the workpiece W is placed on the stage 141. Therefore, compared to a case where the measurement head 22 irradiates at least N fiducial members FM with the measurement light ML in a situation where the workpiece W is not placed on the stage 141, the measurement head 22 can irradiate at least N fiducial members FM with the measurement light ML in an environment that is closer to an environment in which the machine tool 1 actually processes the workpiece W. Therefore, the movement error calculated based on the optical received result of the returning light RL from the fiducial member FM onto which the measurement light ML is irradiated in a situation where the workpiece W is placed on the stage 141 is closer to the movement error occurring in the environment in which the machine tool 1 actually processes the workpiece W than the movement error calculated based on the optical received result of the returning light RL from the fiducial member FM onto which the measurement light ML is irradiated in a situation where the workpiece W is not placed on the stage 141. Therefore, the measurement control apparatus 24 can calculate the movement error with high accuracy.

Furthermore, even in a case where the fiducial member FM is positioned on the workpiece W but the fiducial member FM is not positioned on the stage 141, the measurement head 22 can irradiate at least N fiducial members FM with the measurement light ML in a situation where the workpiece W is placed on the stage 141. Therefore, compared to a case where the measurement head 22 irradiates at least N fiducial members FM with the measurement light ML in a situation where the workpiece W is not placed on the stage 141, the measurement head 22 can irradiate at least N fiducial members FM with the measurement light ML in an environment that is closer to the environment in which the machine tool 1 actually processes the workpiece W. Therefore, the movement error calculated based on the optical received result of the returning light RL from the fiducial member FM onto which the measurement light ML is irradiated in a situation where the workpiece W is placed on the stage 141 is closer to the movement error occurring in the environment in which the machine tool 1 actually processes the workpiece W than the movement error calculated based on the optical received result of the returning light RL from the fiducial member FM onto which the measurement light ML is irradiated in a situation where the workpiece W is not placed on the stage 141. Therefore, the measurement control apparatus 24 can calculate the movement error with high accuracy.

Furthermore, since the fiducial member FM is positioned on the workpiece W, it is more likely that the measurement head 22, which is positioned above the workpiece W, can irradiate at least N fiducial members FM with the measurement light ML. As a result, the measurement control apparatus 24 can properly calculate the movement error occurring in a space above the workpiece W. Here, when the machine tool 1 processes the workpiece W, it is more likely that the processing head 11 is positioned above the workpiece W. As a result, in a case where the movement error occurring in the space above the workpiece W is calculated properly, the processing system SYS can properly correct the error occurring in the movement of at least one of the processing head 11 and the stage 141 in a situation where the processing head 11 is positioned above the workpiece W in order to process the workpiece W, compared to a case where the movement error occurring in the space above the workpiece W is not calculated properly. Namely, the processing system SYS can properly correct the error occurring in the movement of at least one of the processing head 11 and the stage 141 in a case where the processing head 11 processes the workpiece W. As a result, the machine tool 1 can process the workpiece W with high accuracy.

Furthermore, in the present example embodiment, the measurement head 22 irradiates at least N fiducial members FM with the measurement light ML that is the collimated light. As a result, the measurement control apparatus 24 can calculate the movement error without being affected by a defocus of the measurement light ML. Specifically, the measurement head 22 irradiates at least N fiducial members FM with the measurement light ML by using the Galvano mirror 2228 to change the propagating direction of the measurement light ML as described above. In this case, there is a possibility that the distance between the measurement head 22 and one fiducial member FM is greatly different from the distance between the measurement head 22 and other fiducial member FM. In this case, if the measurement light ML is convergent light, there is a possibility that the measurement head 22 irradiate one fiducial member FM with the measurement light ML that is in a focused state and irradiate other fiducial member FM with the measurement light ML that is in a defocused state. As a result, there is a possibility that the optical received result of the returning light RL from the fiducial member FM unintentionally varies due to a difference in the focused state of the measurement light ML. However, in the present example embodiment, since the fiducial member FM is irradiated with the measurement light ML that is the collimated light, it is less likely that the optical received result of the returning light RL from the fiducial member FM unintentionally varies due to difference in the focus state of the measurement light ML. Therefore, the measurement control apparatus 24 can calculate the movement error without being affected by the defocus of the measurement light ML.

### (4) Modified Example

Next, a modified example of the processing system SYS will be described. Incidentally, although the fiducial member FM is positioned on the workpiece W in the above-described description, the fiducial member FM may not be positioned on the workpiece W in the modified example described below.

### (4-1) First Modified Example

The processing system SYS in a first modified example may calculate the movement error by using a method described below. Specifically, in the first modified example, at the step S111 in FIG. 12, the measurement control apparatus 24 may calculate the movement error occurring in a first space SP1 in the machine coordinate system, and then, may calculate the movement error occurring in a second space SP2, which is different from the first space SP1, in the machine coordinate system based on a calculated result of the movement error occurring in the first space SP1 in the machine coordinate system.

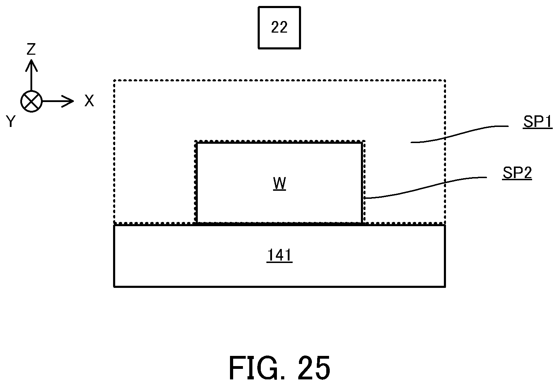

FIG. 25 illustrates examples of the first space SP1 and the second space SP2. As illustrated in FIG. 25, the second space SP2 may include a space that is occupied by the workpiece W in a situation where the workpiece W is placed on the stage 141. On the other hand, the first space SP1 may include a space other than the second space SP2. Typically, the first space SP1 may include a space around the second space SP2. The first space SP1 may include a space that is not occupied by the workpiece W in a situation where the workpiece W is placed on the stage 141. In this case, the measurement control apparatus 24 may calculate the movement error occurring in at least a part of the first space SP1, into which the measurement head 22 may enter in a situation where the workpiece W is placed on the stage 141, by performing the first movement error calculation operation described above in a situation where the workpiece W is placed on the stage 141. On the other hand, even if the above-described first movement error calculation operation is performed in a situation where the workpiece W is placed on the stage 141, the measurement control apparatus 24 cannot calculate the movement error occurring in the second space SP2 into which the measurement head 22 cannot enter in a situation where the workpiece W is placed on the stage 141. However, in the first modified example, the measurement control apparatus 24 may calculate the movement error occurring in the second space SP2, into which the measurement head 22 cannot enter in a situation where the workpiece W is placed on the stage 141, from the movement error occurring in the first space SP1, into which the measurement head 22 may enter in a situation where the workpiece W is placed on the stage 141.

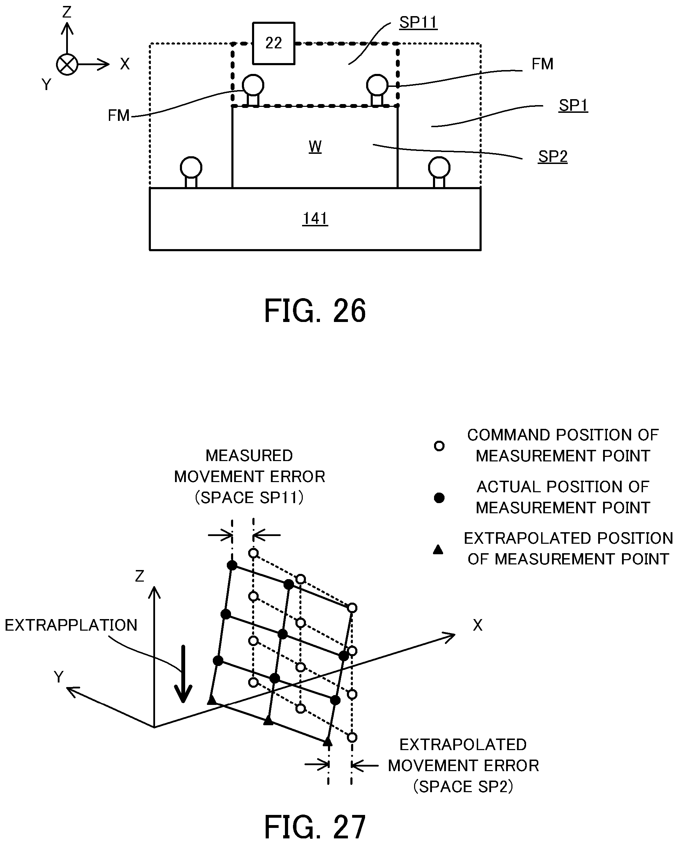

As a first specific example, as illustrated in FIG. 26, the measurement control apparatus 24 may calculate the movement error occurring in the second space SP2 based on the movement error occurring in a space SP11 that is positioned above the workpiece W and that is one example of the first space SP1.

In this case, the measurement control apparatus 24 may calculate the movement error occurring in at least the space SP11 by performing the first movement error calculation operation described above in a situation where the workpiece W is placed on the stage 141. Specifically, the measurement control apparatus 24 may move at least one of the processing head 11 and the stage 141 so that the measurement head 22 is positioned in at least the space SP11 at the step S108 in FIG. 12. As a result, the measurement control apparatus 24 may calculate the position of the measurement point MP in the space SP11 (namely, the position of the measurement head 22) (the step S110 in FIG. 12). Then, the measurement control apparatus 24 may calculate the movement error occurring in the space SP11 based on the position of the measurement point MP in the space SP11.

Here, in a case where the movement error occurring in the space SP11 is calculated, the fiducial member FM may be positioned on the workpiece W placed on the stage 141. As a result, it is more likely that at least N fiducial members FM are included in the measurement range of the measurement head 22 positioned in the space SP11 that is above the workpiece W, as described above with reference to FIG. 11(a) to FIG. 11(c). As a result, the measurement head 22 positioned in the space SP11 can irradiate at least N fiducial members FM with the measurement light ML, and the measurement control apparatus 24 can calculate the movement error occurring in at least partial space of the space SP11. Incidentally, in this case, the fiducial member FM may not be positioned on the stage 141, and the fiducial member FM may be positioned only on the workpiece W placed on the stage 141.

Then, the measurement control apparatus 24 may calculate the movement error occurring in at least partial space of the second space SP2 based on the movement error occurring in at least partial space of the space SP11. For example, the measurement control apparatus 24 may calculate the movement error occurring in at least partial space of the second space SP2 in the machine coordinate system by interpolating the movement error occurring in at least partial space of the space SP11. Especially, since the space SP11 and the second space SP2 are adjacent to each other, the measurement control apparatus 24 may calculate the movement error occurring in the second space SP2 by extrapolating the movement error occurring in at least partial space of space SP11, as illustrated in FIG. 27.

Alternatively, the measurement control apparatus 24 may calculate the movement error occurring in at least partial space of the second space SP2 based on the position of the measurement point MP (namely, the position of the measurement head 22) in at least partial space of the space SP11, which has been calculated to calculate the movement error occurring in at least partial space of the space SP11. For example, the measurement control apparatus 24 may calculate (in this case, estimate) the position of the measurement point MP (namely, the position of the measurement head 22) in at least partial space of the second space SP2 based on the position of the measurement point MP in at least partial space of the space SP11. For example, the measurement control apparatus 24 may calculate the position of the measurement point MP in at least partial space of the second space SP2 by interpolating the position of the measurement point MP in at least partial space of the space SP11. Especially, since the space SP11 and the second space SP2 are adjacent to each other, the measurement control apparatus 24 may calculate the position of the measurement point MP in at least partial space of the second space SP2 by extrapolating the position of the measurement point MP in at least partial space of the space SP11, as illustrated in FIG. 27. Then, the measurement control apparatus 24 may calculate the movement error occurring in at least partial space of the second space SP2 based on the position of the measurement point MP in at least partial space of the second space SP2.

Alternatively, the measurement control apparatus 24 may calculate the movement error occurring in at least a part of the second space SP2 without calculating the position of the measurement point MP in the second space SP2 or by calculating the position of the measurement point MP in at least partial space of the second space SP2, based on the position of the measurement point MP in at least partial space of the space SP11. Alternatively, the measurement control apparatus 24 may generate the error correction information for correcting the movement error occurring in at least partial space of the second space SP2 without calculating the movement error occurring in the second space or by calculating the movement error occurring in at least partial space of the second space SP2, based on the position of the measurement point MP in at least partial space of the space SP11. Alternatively, the measurement control apparatus 24 may calculate the movement error occurring in at least partial space in the space SP11 as described above, and then generate the error correction information for correcting the movement error occurring in at least partial space in the space SP11. Then, the measurement control apparatus 24 may generate the error correction information for correcting the movement error occurring in at least partial space of the second space SP2, based on the error correction information for correcting the movement error occurring in at least partial space of the space SP11. In any case, the information related to the movement error occurring in at least partial space of the second space SP2, into which the measurement head 22 cannot enter, or the error correction information for correcting the movement error is generated.

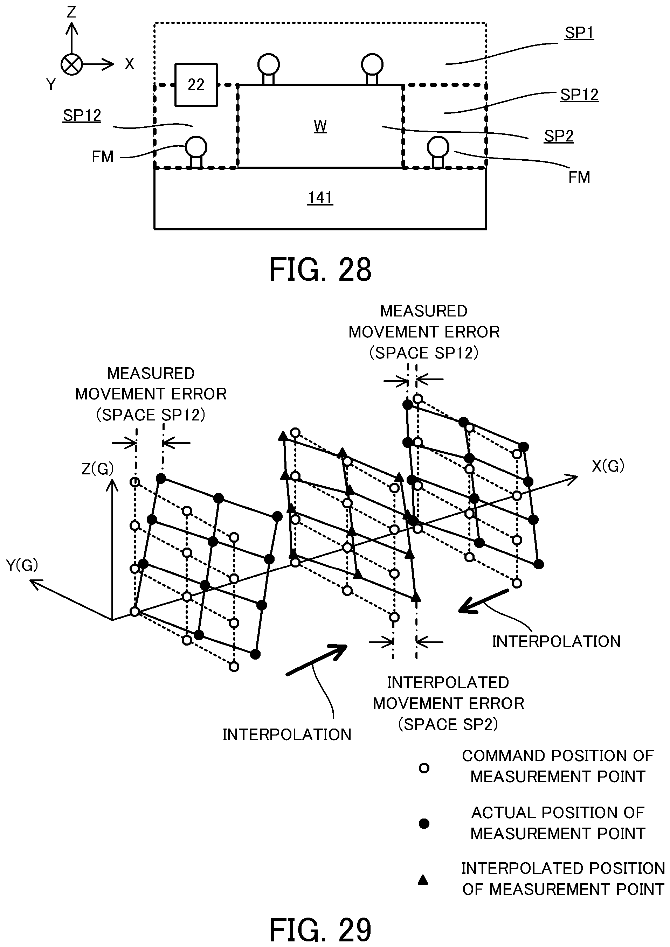

As a second example, as illustrated in FIG. 28, the measurement control apparatus 24 may calculate the movement error occurring in at least partial space of the second space SP2 based on the movement error occurring in at least partial space of the space SP12 that is positioned on a lateral side of the workpiece W and that is one example of the first space SP1. Incidentally, the above-described description of an operation for calculating the movement error occurring in at least partial space of the second space SP2 based on the movement error occurring in at least partial space of the space SP11 may be used as a description of an operation for calculating the movement error occurring in at least partial space of the second space SP2 based on the movement error occurring in at least partial space of the space SP12 by replacing the term "space SP11" with the term "space SP12". Therefore, the description of the operation for calculating the movement error occurring in at least partial space of the second space SP2 based on the movement error occurring in at least partial space of the space SP12 is omitted. Incidentally, in this case, the fiducial member FM may not be positioned on the workpiece W placed on the stage 141, and the fiducial member FM may be positioned only on the stage 141.

Incidentally, in this case, the fiducial member FM may not be positioned on the stage 141, and the fiducial member FM may be positioned only on the workpiece W placed on the stage 141. In a case where the fiducial member FM that is positioned on the workpiece W placed on stage 141 is used, the measurement control apparatus 24 may calculate the movement error occurring in at least partial space of the second space SP2 based on the movement error that occurs in at least partial space of the space SP12 and that is calculated by performing the first movement error calculation operation described above.

However, in a case where the measurement control apparatus 24 calculates the movement error occurring in at least partial space of the second space SP2 based on the movement error occurring in at least partial space of the space SP12, the measurement control apparatus 24 may calculate the movement error occurring in at least partial space of the second space SP2 by interpolating the movement error occurring in the space SP12, as illustrated in FIG. 29, because the space SP12 surrounds the second space SP2 at least partially. As illustrated in FIG. 29, the measurement control apparatus 24 may calculate the position of the measurement point MP in at least partial space of the second space SP2 by interpolating the position of the measurement point MP in at least partial space of the space SP12, and calculate the movement error occurring in at least partial space of the second space SP2 based on the position of the measurement point MP in at least partial space of the second space SP2.

Moreover, in a case where the movement error occurring in at least partial space of the space SP12 is calculated, the fiducial member FM may be formed on the stage 141. As a result, it is more likely that at least N fiducial members FM are included in the measurement range of the measurement head 22 positioned in at least partial space of the space SP12 that is at the lateral side of the workpiece W, as described above with reference to FIG. 11(a) to FIG. 11(c). As a result, the measurement head 22, which is positioned in at least partial space of the space SP12, can irradiate at least N fiducial members FM with the measurement light ML, and the measurement control apparatus 24 can calculate the movement error occurring in at least partial space of the space SP12.

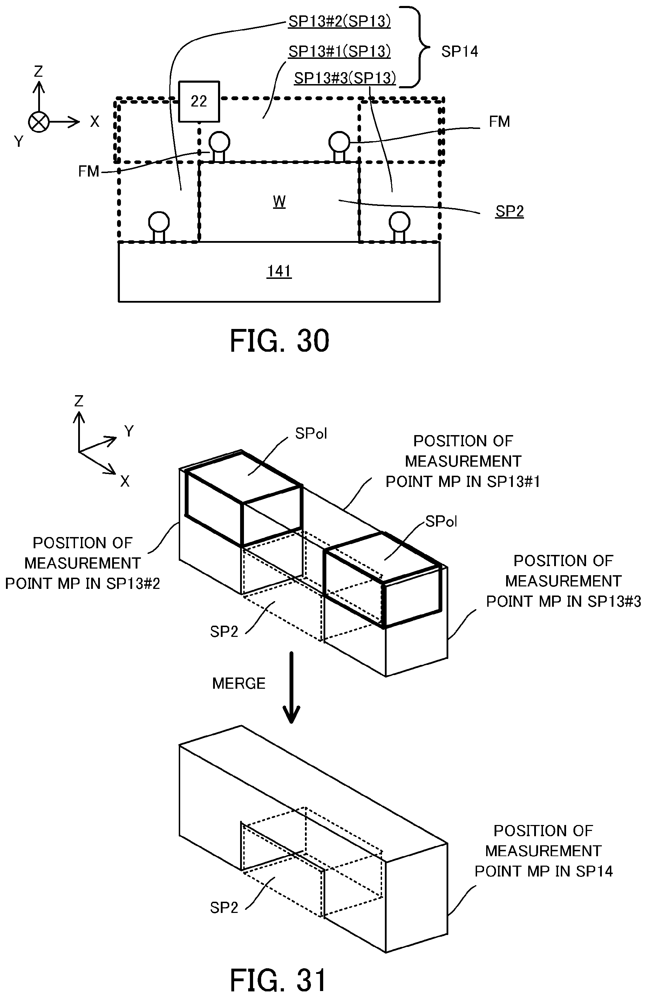

As a third specific example, as illustrated in FIG. 30, the movement error occurring in at least partial space of the second space SP2 may be calculated based on the movement error occurring in at least partial space of a plurality of spaces SP13 each of which is one example of the first space SP1. FIG. 30 illustrates an example in which a space SP13#1 that is positioned above the workpiece W, a space SP13#2 that is positioned at the lateral side of the workpiece W on the -X side of the workpiece W, and a space SP13#3 that is positioned at the lateral side of the workpiece W on the +X side of the workpiece W are used as the plurality of spaces SP13. At least two of the plurality of spaces SP13 may partially overlap. Incidentally, the above-described description of an operation for calculating the movement error occurring in at least partial space of the second space SP2 based on the movement error occurring in at least partial space of the space SP11 may be used as a description of an operation for calculating the movement error occurring in at least partial space of the second space SP2 based on the movement error occurring in at least partial space of the plurality of spaces SP13 by replacing the term "the space SP11" with the term "each of the plurality of spaces SP13". Therefore, the description of the operation for calculating the movement error occurring in at least partial space of the second space SP2 based on the movement error occurring in at least partial space of the plurality of spaces SP13 is omitted.

However, in the third specific example, the measurement control apparatus 24 may calculate the position of the measurement point MP in a single space SP14, which includes the plurality of spaces SP13, by combining (in other words, synthesizing or merging) the positions of the measurement points MP (namely, the positions of the measurement head 22) in the plurality of spaces SP13, as illustrated in FIG. 31. Specifically, the measurement control apparatus 24 performs the first movement error calculation operation described above for each of the plurality of spaces SP13. For example, the measurement control apparatus 24 calculates the position of the measurement point MP in the space SP13#1 by performing the first movement error calculation operation described above for the space SP13#1, calculates the position of the measurement point MP in the space SP13#2 by performing the first movement error calculation operation described above for the space SP13#2, and calculates the position of the measurement point MP in the space SP13#3 by performing the first movement error calculation operation described above for the space SP13#3. Then, the measurement control apparatus 24 combines the position of the measurement point MP in the space SP13#1, the position of the measurement point MP in the space SP13#2, and the position of the measurement point MP in the space SP13#3. In this case, the measurement control apparatus 24 may combine the positions of the measurement points MP in the plurality of spaces SP13 based on the position of the measurement point MP in an overlapping area SPo13 in which at least two of the plurality of spaces SP13 overlap. Specifically, the measurement control apparatus 24 combines the positions of the measurement points MP in the plurality of spaces SP13 relative to one of the plurality of spaces SP13, under the assumption that the position of the measurement point MP in the overlapping area SPoI remains identical in at least two of the plurality of spaces SP13. Then, the measurement control apparatus 24 may calculate the movement error occurring in at least partial space of the space SP14 based on the position of the measurement point MP in the space SP14. Then, the measurement control apparatus 24 may calculate the movement error occurring in at least partial space of the second space SP2 based on the movement error occurring in at least partial space of the space SP14.

In this manner, in the first modified example, the measurement control apparatus 24 can calculate the movement error occurring in the second space SP2, into which the measurement head 22 cannot enter in a situation where the workpiece W is placed on the stage 141. Therefore, the measurement control apparatus 24 can calculate the movement error occurring in a wider space that includes both the first space SP1, into which the measurement head 22 can enter in a situation where the workpiece W is placed on the stage 141, and the second space SP2, into which the measurement head 22 cannot enter in a situation where the workpiece W is placed on the stage 141.

Furthermore, even in the first modified example, it is more likely that at least N fiducial members FM are included in the measurement range of the measurement head 22 in a case where the fiducial member FM is positioned on both the workpiece W and the stage 141, compared to a case where the fiducial member FM is positioned only on the stage 141, as described above with reference to FIG. 11(a) to FIG. 11(c). Therefore, it is less likely that the measurement control apparatus 24 is unable to irradiate at least N fiducial members FM with the measurement light ML. Therefore, there are fewer cases where the measurement control apparatus 24 is unable to calculate the movement error.

Furthermore, even in the first modified example, it is more likely that at least N fiducial members FM are included in the measurement range of the measurement head 22 in a case where the fiducial member FM is positioned on at least the workpiece W, compared to a case where the fiducial member FM is positioned only on the stage 141, as described above with reference to FIG. 11(a) to FIG. 11(c). Therefore, it is less likely that the measurement control apparatus 24 is unable to irradiate at least N fiducial members FM with the measurement light ML. Therefore, there are fewer cases where the measurement control apparatus 24 is unable to calculate the movement error.

Incidentally, in the first modified example, the measurement system 2 calculates the movement error occurring in the movement of at least one of the processing head 11 and the stage 141 by using the measurement head 22 attached to the processing head 11 (especially, the main spindle 111). However, in the first modified example, the measurement system 2 may calculate the movement error occurring in the movement of at least one of the processing head 11 and the stage 141 by using another movement error calculation method that is different from one movement error calculation method that calculates the measurement error by using the measurement head 22 attached to the processing head 11 (especially, the main spindle 111). In this case, the measurement system 2 may calculate the movement error occurring in the first space SP1 by using another movement error calculation method, and then calculate the movement error occurring in the second space SP2 based on the measured result of the movement error occurring in the first space SP1. As one example of another movement error calculation method, there is a method that irradiates a reflection mirror (a fiducial member) positioned at the main spindle 111 with measurement light from a laser head while moving at least one of the processing head 11 and the stage 141, detects a position of the reflection mirror (namely, a position of the main spindle 111) by detecting interfering light between the measurement light and reflection light thereof with an interferometer positioned on the stage 141, and calculates the movement error occurring in the movement of at least one of the processing head 11 and the stage 141 based on the position of the main spindle 111. As one example of another movement error calculation method, there is a method that irradiates a reflection mirror (a fiducial member) positioned on the stage 141 with measurement light from an auto-collimator attached to the main spindle 111 while moving at least one of the processing head 11 and the stage 141, detects a posture of the reflection mirror (a posture of the stage 141) by detecting a change of a focal position of reflection light from the reflection light with the auto-collimator, and calculates the movement error occurring in the movement of at least one of the processing head 11 and the stage 141 based on the posture of the stage 141. As one example of another movement error calculation method, there is a method that calculates the movement error occurring in the movement of at least one of the processing head 11 and the stage 141 by using a displacement meter attached to the main spindle 111 to measure a straightness of a straightedge placed on the stage 141 while moving at least one of the processing head 11 and the stage 141. As one example of another movement error calculation method, there is a method that calculates the movement error occurring in the movement of at least one of the processing head 11 and the stage 141 by using a touch probe or non-contact sensor attached to the main spindle 111 to measure an artifact (namely, a measurement fiducial member whose shape has been calibrated in advance) placed on the stage 141 while moving at least one of the processing head 11 and the stage 141. As one example of another movement error calculation method, there is a method that calculates a distance from a laser interferometer to a reflection mirror by irradiating the reflection mirror (a retro-reflector and a fiducial member) attached to the main spindle 111 with measurement light from the laser interferometer positioned on the stage 141 while moving at least one of the processing head 11 and the stage 141, and calculates the movement error occurring in the movement of at least one of the processing head 11 and the stage 141 by calculating a position of the reflection mirror (namely, the position of the main spindle 111) based on the calculated distance and a direction along which the measurement light is emitted from the interferometer (namely, a direction of the reflection mirror from the interferometer). As one example of another movement error calculation method, there is a method that calculates a distance from each of a plurality of laser interferometers to a reflection mirror by irradiating the reflection mirror (a retro-reflector) attached to the main spindle 111 with measurement light from the plurality of laser interferometers positioned on the stage 141 while moving at least one of the processing head 11 and the stage 141, and calculates the movement error occurring in the movement of at least one of the processing head 11 and the stage 141 by calculating a position of the reflection mirror (namely, the position of the main spindle 111) based on the calculated distance. As one example of another movement error calculation method, there is a method for calculating a motion accuracy of a machine tool by using a ball bar as defined in an ISO (International Organization for Standardization) 10791-6. As one example of another movement error calculation method, there is a method that calculates the movement error occurring in the movement of at least one of the processing head 11 and the stage 141 by laser ranging a diagonal of a three-dimensional grid in a space in which at least one of the processing head 11 and the stage 141 moves. As one example of another movement error calculation method, there is an R-test that uses a triaxial displacement meter instead of the ball bar described above. As one example of another movement error calculation method, there is a method that calculates the movement error occurring in the movement of at least one of the processing head 11 and the stage 141 by measuring a fiducial sphere positioned on the stage 141 with a touch probe attached to the main spindle 111 while moving at least one of the processing head 11 and the stage 141. As one example of another movement error calculation method, there is a method that processes a test sample with the machine tool 1 while moving at least one of the processing head 11 and the stage 141, and calculates the movement error occurring in the movement of at least one of the processing head 11 and the stage 141 by measuring a processed part of the test sample. These movement error calculation methods described in this paragraph are mainly categorized into a method of calculating the movement error by calculating the position of the moving processing head 11 (main spindle 111), a method of calculating the movement error by calculating the position of the moving stage 141 (typically, a fiducial member placed on the stage 141), and a method of calculating the movement error without calculating the positions of the processing head 11 (the main spindle 111) and the stage 141 (typically, the fiducial member placed on the stage 141). However, the movement error may be calculated by using a movement error calculation method that is different from the movement error calculation method described here as one example.

Incidentally, even in at least one of the second to fourteenth modified examples described below, the measurement system 2 may calculate the movement error occurring in the movement of at least one of the processing head 11 and the stage 141 by using another movement error calculation method that is different from one movement error calculation method that calculates the measurement error by using the measurement head 22 attached to the processing head 11 (especially, the main spindle 111).

### (4-2) Second Modified Example

The processing system SYS in a second modified example may calculate the movement error by using a method described below. Specifically, in the first modified example described above, the measurement control apparatus 24 calculates the movement error occurring in the second space SP2 based on the movement error occurring in the first space SP1, which is calculated by the first movement error calculation operation performed in a second situation where the workpiece W is placed on the stage 141. On the other hand, in the second modified example, the measurement control apparatus 24 may calculate the movement error occurring in the second space SP2 in a situation where the second situation where the workpiece W is placed on the stage 141 based on not only the movement error occurring in the first space SP1, which is calculated by the first movement error calculation operation performed in the second situation where the workpiece W is placed on the stage 141, but also the movement error occurring in the first space SP1, which is calculated by the first movement error calculation operation performed in a first situation where the workpiece W is not placed on the stage 141. Namely, the second modified example may be different from the first modified example in that it uses the movement error calculated by the first movement error calculation operation performed in the first situation where the workpiece W is not placed on the stage 141. Other feature of the second modified example may be the same as other feature of the first modified example. Next, the second modified example will be described in more detail.

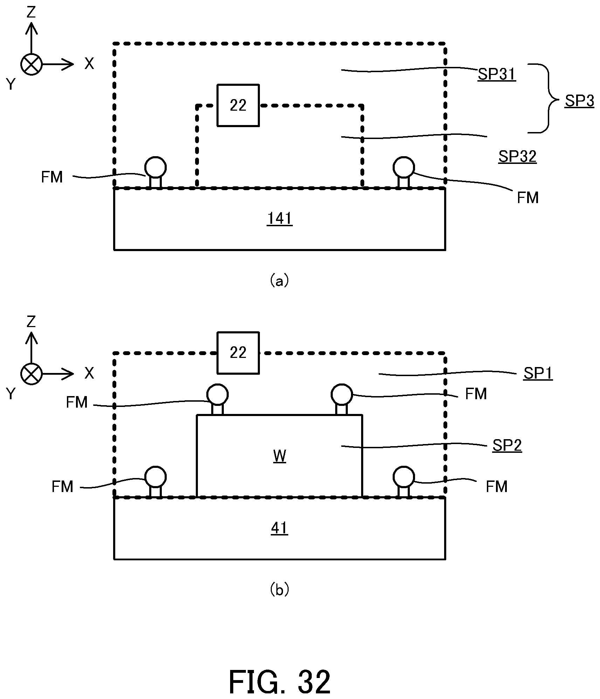

FIG. 32(a) illustrates the measurement head 22 in the first situation where the workpiece W is not placed on the stage 141. In this case, the measurement head 22 may enter a third space SP3 that is above the stage 141 on which the workpiece W is not placed. The third space SP3 may include a space SP32 that corresponds to the second space SP2 described above and that is occupied by the workpiece W in the second situation where the workpiece W is placed. Incidentally, the space SP32 may be a space that is the same as the second space SP2, or may be a space that partially overlaps with the second space SP2. The space SP3 may include a space SP31 that corresponds to the space SP1 described above and that is not occupied by workpiece W in the second situation where workpiece W is placed on the stage. Incidentally, the space SP31 may be a space that is the same as the first space SP1, or may be a space that partially overlaps with the first space SP1.

In this case, the measurement control apparatus 24 may calculate the movement error occurring in at least partial space of the third space SP3 by performing the first movement error calculation operation described above in the first situation where the workpiece W is not placed on the stage 141. Namely, the measurement control apparatus 24 may calculate the movement error occurring in at least partial area of the third space SP3 by performing the first movement error calculation operation described above in the first situation where the workpiece W is not placed on the stage 141 and the measurement head 22 is positioned in the third space SP3. For example, the measurement control apparatus 24 may calculate the movement error occurring in at least partial area of the space SP31 by performing the first movement error calculation operation described above in the first situation where the workpiece W is not placed on the stage 141 and the measurement head 22 is positioned in the third space SP31. However, the measurement control apparatus 24 may not perform the first movement error calculation operation described above in the first situation where the workpiece W is not placed on the stage 141 and the measurement head 22 is positioned in the space SP31. For example, the measurement control apparatus 24 may calculate the movement error occurring in at least partial space of the space SP32 by performing the first movement error calculation operation described above in the first situation where the workpiece W is not placed on the stage 141 and the measurement head 22 is positioned in at least partial space of the space SP32. However, the measurement control apparatus 24 may not perform the first movement error calculation operation described above in the first situation where the workpiece W is not placed on the stage 141 and the measurement head 22 is positioned in the space SP32. As a result, the measurement control apparatus 24 calculates the movement error occurring in at least one of at least partial space of the space SP31 and at least partial space of the space SP32 as the movement error occurring in at least one of the at least partial space of the third space SP3.

On the other hand, FIG. 32 (b) illustrates the measurement head 22 in the second situation where the workpiece W is placed on the stage 141. In this case, the measurement control apparatus 24 may calculate the movement error occurring in the first space SP1 by performing the first movement error calculation operation described above in the second situation where the workpiece W is placed on the stage 141. Namely, the measurement control apparatus 24 may calculate the movement error occurring in at least partial area of the first space SP1 by performing the first movement error calculation operation described above in the second situation where the workpiece W is placed on the stage 141 and the measurement head 22 is positioned in the first space SP1.

Incidentally, in a case where the first movement error calculation operation is performed in the first situation, the measurement head 22 irradiates at least four (alternatively, N) fiducial members FM placed on the stage 141 with the measurement light ML because the workpiece W is not placed on the stage 141. On the other hand, in a case where the first movement error calculation operation is performed in the second situation, the measurement head 22 irradiates at least four (alternatively, N) fiducial members FM placed on at least one of the stage 141 and the workpiece W with the measurement light ML because the workpiece W is placed on the stage 141. In this case, at least four fiducial members FM that are irradiated with the measurement light ML in the first situation may be the same as at least four fiducial members FM that are irradiated with the measurement light ML in the second situation. Alternatively, at least one of at least four fiducial members FM that are irradiated with the measurement light ML in the first situation may be different from at least one of at least four fiducial members FM that are irradiated with the measurement light ML in the second situation.

Then, the measurement control apparatus 24 may calculate (in this case, estimate) the movement error occurring in at least partial space of the second space SP2 in the second situation where the workpiece W is placed on the stage 141, based on the movement error occurring in at least partial area of the third space SP3 and the movement error occurring in at least partial area of the first space SP1. For example, the measurement control apparatus 24 may estimate a trend of a difference between the movement error occurring in the first situation and the movement error occurring in the second situation based on the movement error occurring in at least partial area of the third space SP3 and the movement error occurring in at least part of the first space SP1, and calculate the measurement error occurring in at least partial area of the second space SP2 in the second situation by converting the measurement error occurring in at least partial space of the third space SP3 based on the trend of the difference. As one example, the measurement control apparatus 24 may estimate the trend of the difference between the movement error occurring in the first situation and the movement error occurring in the second situation comparing the movement error occurring in at least partial area of the space SP31 of the third space SP3 and the movement error occurring in at least part of the first space SP1, and calculate the measurement error occurring in at least partial area of the second space SP2 in the second situation by converting the measurement error occurring in at least partial space of the space SP32 of the third space SP3 based on the trend of the difference. For example, the measurement control apparatus 24 may calculate conversion information (for example, a conversion matrix or a conversion formula) for converting the movement error occurring in at least partial area of the third space SP3 into the movement error occurring in at least partial area of the first space SP1, and may calculate the movement error occurring in at least partial space of the second space SP2 in the second situation by converting the movement error occurring in at least partial area of the third space SP3 with the conversion information. As one example, the measurement control apparatus 24 may calculate the conversion information (for example, the conversion matrix or the conversion formula) for converting the movement error occurring in at least partial area of the space SP31 of the third space SP3 into the movement error occurring in at least partial area of the first space SP1, and calculates the movement error occurring in at least partial area of the second space SP2 in the second situation by converting the movement error occurring in at least partial area of the space SP32 of the third space SP3 with the conversion information.

Alternatively, the measurement control apparatus 24 may calculate the movement error occurring in at least partial area of the second space SP2 based on the position of the measurement point MP (namely, the position of the measurement head 22) in each of the first space SP1 and the third space SP3, which have been calculated to calculate the movement error occurring in each of at least partial area of the first space SP1 and at least partial area of the third space SP3. For example, the measurement control apparatus 24 may calculate (in this case, estimate) the position of the measurement point MP in the second space SP2 (namely, the position of the measurement head 22) based on the position of the measurement point MP in each of the first space SP1 and the third space SP3. Then, the measurement control apparatus 24 may calculate the movement error occurring in at least partial space of the second space SP2 based on the position of the measurement point MP in the second space SP2. Alternatively, the measurement control apparatus 24 may calculate the movement error occurring in at least partial space of the second space SP2 without calculating the position of the measurement point MP in the second space SP2 or by calculating the position of the measurement point MP in the second space SP2 based on the position of the measurement point MP in each of the first space SP1 and the third space SP3. Alternatively, the measurement control apparatus 24 may generate the error correction information for correcting the movement error occurring in at least partial area of the second space SP2 without calculating the movement error occurring in at least partial area of the second space SP2 or by calculating the movement error occurring in at least partial area of the second space SP2 based on the position of the measurement points MP in each of the first space SP1 and the third space SP3. Alternatively, the measurement control apparatus 24 may calculate the movement error occurring in each of at least partial space of the first space SP1 and at least partial space of the third space SP3, and then further generate the error correction information for correcting the movement error occurring in each of at least partial space of the first space SP1 and at least partial space of the third space SP3. Then, the measurement control apparatus 24 may generate the error correction information for correcting the movement error occurring in at least partial area of the second space SP2, based on the error correction information for correcting the movement error occurring in each of at least part area of the first space SP1 and at least partial area of the third space SP3. In any case, the information related to the movement error occurring in at least partial of the second space SP2, into which the measurement head 22 cannot enter in the second situation, or the error correction information for correcting the movement error is generated.

In this manner, in the second modified example, the measurement control apparatus 24 can calculate the movement error occurring in the second space SP2, into which the measurement head 22 cannot enter in the second situation where the workpiece W is placed on the stage 141, as in the first modified example,. Especially, in the second modified example, the measurement control apparatus 24 can calculate the movement error occurring in the second space SP2 in the second situation by using the movement error occurring in the third space SP3 in the first situation where the workpiece W is not placed on the stage 141. Therefore, compared to a case where the movement error occurring in the second space SP2 in the second situation is calculated without using the movement error occurring in the third space SP3 in the first situation, the movement error occurring in the second space SP2 in the second situation can be calculated with higher accuracy.

### (4-3) Third Modified Example

In a third modified example, the processing system SYS (especially, the measurement system 2) may perform a workpiece position calculation operation for calculating a position of the workpiece W. Typically, the measurement system 2 may perform the workpiece position calculation operation for calculating the position of the workpiece W in parallel with the movement error calculation operation described above. However, the measurement system 2 may perform the workpiece position calculation operation for calculating the position of the workpiece W after performing the movement error calculation operation described above.

Incidentally, the measurement system 2 may calculate at least one of a posture of the workpiece W and a size of the workpiece W in addition to or instead of the position of the workpiece W by performing the workpiece position calculation operation, as described later. Therefore, the workpiece position calculation operation may be regarded as an operation for calculating at least one of the position of the workpiece W, the posture of the workpiece W, and the size of the workpiece W.

In order to perform the workpiece position calculation operation, in the third modified example, at least one fiducial member FM is positioned on the workpiece W placed on the stage 141. In this case, at least N reference components FM included in the measurement range of the measurement head 22 in the above-described movement error calculation operation may include at least one fiducial member FM positioned on the workpiece W. Namely, at least N fiducial members FM included in the measurement range of the measurement head 22 in the movement error calculation operation described above may include at least one fiducial member FM positioned on the workpiece W for performing the workpiece position calculation operation. As a result, in the movement error calculation operation described above, the measurement head 22 optically receives the returning light RL from the fiducial member FM positioned on the workpiece W by using the optical detector 2226. Namely, the processing system SYS can perform the workpiece position calculation operation in parallel with the movement error calculation operation.

Then, the measurement control apparatus 24 may calculate the position of the workpiece W on which the fiducial member FM is positioned based on the optical received result of the returning light RL from the fiducial member FM positioned on the workpiece W. For example, in a case where the workpiece position calculation operation is performed in parallel with the movement error calculation operation described above, the measurement control apparatus 24 calculates the positions of at least N fiducial members FM based on the optical received result of the returning light RL from at least N fiducial members FM in the movement error calculation operation described above. In this case, the measurement control apparatus 24 may calculate the position of the workpiece W based on the position of at least one fiducial member FM positioned on the workpiece W, which is calculated by the movement error calculation operation.

Alternatively, in a case where the workpiece position calculation operation is performed after the movement error calculation operation described above, the processing head 11 and the stage 141 may move in a state where the movement error has been corrected in the workpiece position calculation operation. As a result, the accurate position of the measurement head 22, which irradiates the fiducial member FM positioned on the workpiece W with the measurement light ML, in the machine coordinate system becomes known information for the measurement control apparatus 24. In this case, the measurement control apparatus 24 may calculate the position of the fiducial member FM positioned on the workpiece W based on the optical received result of the returning light RL from the fiducial member FM, without using the principle of multi-side surveying used in in the movement error calculation operation. The measurement control apparatus 24 may calculate the position of the fiducial member FM positioned on the workpiece W again based on the optical received result of the returning light RL from the fiducial member FM, without using the position of the fiducial member FM calculated in the movement error calculation operation. Specifically, as described with reference to FIG. 8, the measurement control apparatus 24 may calculate the distance between the measurement head 22 and the fiducial member FM positioned on the workpiece W based on the optical received result of the returning light RL from the fiducial member FM, calculates the direction along which the measurement light ML is emitted from the measurement head 22 as the direction of the fiducial member FM from the measurement head 22 based on the information related to the driving state of the Galvano mirror 2228, and may calculates the position of at least one fiducial member FM positioned on the workpiece W based on the calculated distance between the measurement head 22 and the fiducial member FM, the calculated direction of the fiducial member FM from the measurement head 22, and the position of the measurement head 22 in the machine coordinate system. Then, the measurement control apparatus 24 may calculate the position of the workpiece W based on the position of at least one fiducial member FM positioned on the workpiece W.

However, even in a case where the workpiece position calculation operation is performed after the movement error calculation operation, the measurement control apparatus 24 may calculate the position of the workpiece W by using the position of the fiducial member FM positioned on the workpiece W, which is calculated in the movement error calculation operation. Moreover, even in a case where the workpiece position calculation operation is performed in parallel with the movement error calculation operation, the measurement control apparatus 24 may calculate the position of the fiducial member FM positioned on the workpiece W again based on the optical received result of the returning light RL from the fiducial member FM positioned on the workpiece W, without using the position of the fiducial member FM calculated by the movement error calculation operation.

Incidentally, an operation for calculating the position of the fiducial member FM positioned on the workpiece W in order to calculate the position of the workpiece W after the movement error calculation operation is performed may be considered to be equivalent to an operation for calculating the position of the fiducial member FM positioned on the workpiece W based on the information related to the movement error generated by the movement error calculation operation and the optical received result of the returning light RL from the fiducial member FM positioned on the workpiece W by the optical detector 2226. Furthermore, since the information related to the movement error is generated based on the optical received result of the returning light RL from at least N fiducial members FM calculated by the measurement light EL in the movement error calculation operation, the operation for calculating the position of the fiducial member FM positioned on the workpiece W in order to calculate the position of the workpiece W after the movement error calculation operation is performed may be considered to be equivalent to an operation for calculating the position of the fiducial member FM positioned on the workpiece W based on the optical received result of the returning light RL from at least N fiducial members FM calculated by the measurement light EL in the movement error calculation operation and the optical received result of the returning light RL from the fiducial member FM irradiated with the measurement light EL in the workpiece state calculation operation. Furthermore, since the information related to the movement error is generated based on the position of the measurement point MP (the position of the measurement head 22) calculated in the movement error calculation operation, the operation for calculating the position of the fiducial member FM positioned on the workpiece W in order to calculate the position of the workpiece W after the movement error calculation operation is performed may be considered to be equivalent to an operation for calculating the position of the fiducial member FM positioned on the workpiece W based on the position of the measurement point MP (position of the measurement head 22) calculated in the movement error calculation operation and the optical received result of the returning light RL from the fiducial member FM irradiated with the measurement light EL in the workpiece state calculation operation.

Moreover, in a case where the workpiece position calculation operation is performed in parallel with the movement error calculation operation, the measurement control apparatus 24 may extract the position of at least one fiducial member FM positioned on the workpiece W from among the positions of at least N fiducial members FM calculated by the movement error calculation operation, and calculate the position of the workpiece W based on the extracted position of the at least one fiducial member FM. In this case, the measurement control apparatus 24 may calculate the position of the workpiece W based on the information related to the movement error generated by the movement error calculation operation, in addition to the extracted position of the at least one fiducial member FM. For example, in a case where the extracted position of the at least one fiducial member FM includes an error component caused by the movement error, the measurement control apparatus 24 may correct the extracted position of the at least one fiducial member FM so that the error component is eliminated from the extracted position of the at least one fiducial member FM based on the information related to the movement error, and calculate the position of the workpiece W based on the corrected and extracted position of the at least one fiducial member FM. However, in a case where the extracted position of the at least one fiducial member FM does not include the error component caused by the movement error, the measurement control apparatus 24 may calculate the position of the workpiece W based on the extracted position of the at least one fiducial member FM without using the information related to the movement error.

In a case where the plurality of fiducial members FM are positioned on the workpiece W, the measurement control apparatus 24 may calculate the position of any one of the plurality of fiducial members FM based on the optical received result of the returning light RL from any one of the plurality of fiducial members FM, and calculate the position of the workpiece W based on the position of any one of the plurality of fiducial members FM. Alternatively, the measurement control apparatus 24 may calculate the positions of at least two of the plurality of fiducial members FM based on the optical received result of the returning light RL from at least two of the plurality of fiducial members FM, and calculate the position of the workpiece W based on the positions of at least two of the plurality of fiducial members FM. Alternatively, the measurement control apparatus 24 may calculate the positions of at least three of the plurality of fiducial members FM based on the optical received result of the returning light RL from at least three of the plurality of fiducial members FM, and calculate the position of the workpiece W based on the positions of at least three of the plurality of fiducial members FM.

Especially in the present example embodiment, in order to calculate the position of the workpiece W based on the positions of the fiducial members FM positioned on the workpiece W, the fiducial members FM positioned on the workpiece W may include the fiducial member FM positioned at a datum of the workpiece W. Namely, at least one fiducial member FM may be positioned on the datum DT of the workpiece W. Incidentally, the datum DT of the workpiece W is a part that serves as a base for the workpiece W. Incidentally, it can be said that the datum DT of the workpiece W is a part that serves as a base for processing the workpiece W. Incidentally, it can be said that the datum DT of the workpiece W is a part that serves as a base for measuring the workpiece W.

In this case, the measurement control apparatus 24 may calculate the position of the fiducial member FM positioned on the datum DT based on the optical received result of the returning light RL from the fiducial member FM positioned on the datum DT. Then, the measurement control apparatus 24 may calculate the position of the datum DT as the position of the workpiece W, based on the position of the fiducial member FM positioned on the datum DT.

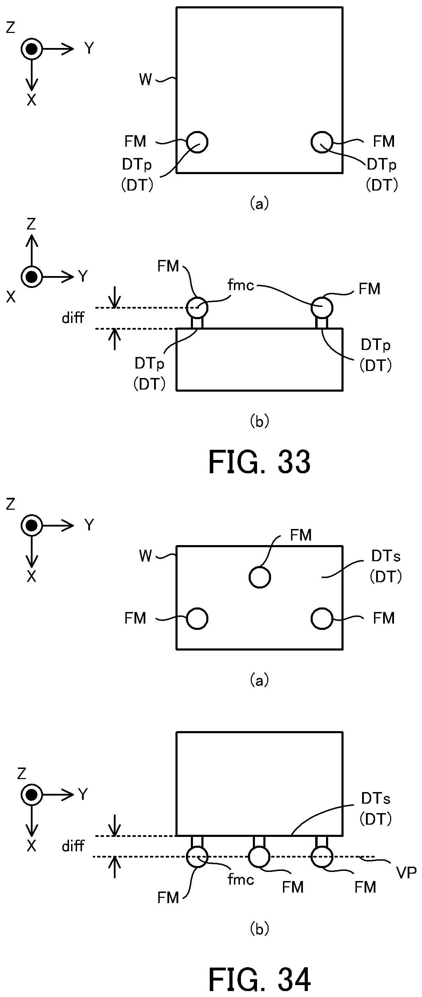

A datum point DTp indicating a fiducial point of the workpiece W is one example of the datum DT of the workpiece W. In this case, as illustrated in FIG. 33(a) and FIG. 33(b), at least one fiducial member FM may be positioned at a position that has a predetermined positional relationship with at least one datum point DTp of the workpiece W. FIG. 33(a) and 33(b) illustrate an example in which at least two fiducial members FM are positioned at at least two positions that have the predetermined positional relationship with at least two datum points DTp set on the upper surface of the workpiece W.

A state in which "the fiducial member FM and the datum point DTp have the predetermined positional relationship" may include a state in which "the fiducial member FM is positioned on the datum point DTp". The state in which "the fiducial member FM and the datum point DTp have the predetermined positional relationship" may include a state in which "the fiducial member FM is positioned so that the position of the fiducial member FM is the same as the position of the datum point DTp". The state in which "the fiducial member FM and the datum point DTp have the predetermined positional relationship" may include a state in which "the fiducial member FM is not positioned on the datum point DTp, but the position of the datum point DTp can be calculated from the position of the fiducial member FM". Incidentally, information related to the positional relationship between the fiducial member FM and the datum point DTp is known information for the measurement control apparatus 24.

In this case, the measurement control apparatus 24 may calculate the position of the datum point DTp based on the optical received result of the returning light RL from the fiducial member FM, which has the predetermined positional relationship with the datum point DTp. For example, the measurement control apparatus 24 may calculate the position of the fiducial member FM, which has the predetermined positional relationship with the datum point DTp, based on the optical received result of the returning light RL from the fiducial member FM, which has the predetermined positional relationship with the datum point DTp. Then, the measurement control apparatus 24 may calculate the position of the datum point DTp of the workpiece W based on the position of the fiducial member FM that has the predetermined positional relationship with the datum point DTp.

Here, in an example illustrated in FIG. 33(a) and FIG. 33(b), the position of the fiducial member FM positioned on the datum point DTp is not the same as the position of the datum point DTp. Specifically, FIG. 33(a) and FIG. 33(b) illustrate an example in which the fiducial member FM is a sphere (for example, a ball lens). In this case, the measurement control apparatus 24 may calculate a position of a center fmc of the sphere that is the fiducial member FM as the position of the fiducial member FM. On the other hand, in the example illustrated in FIG. 33(a) and FIG. 33(b), the position of the center fmc of the sphere that is the fiducial member FM is not the same as the position of the datum point DTp due to a size of the fiducial member FM, a size of the support member that supports the fiducial member FM, and the like. However, the information related to the positional relationship between the fiducial member FM and the datum point DTp is known information for the measurement control apparatus 24. In this case, the measurement control apparatus 24 may calculate the position of the datum point DTp based on the information related to the positional relationship between the fiducial member FM and the datum point DTp and the position of the fiducial member FM. For example, the measurement control apparatus 24 may calculate the position of the datum point DTp by adding a difference diff between the position of the fiducial member FM and the position of the datum point DTp to the position of the fiducial member FM. However, in a case where the position of the fiducial member FM is the same as the position of the datum point DTp, the position of the fiducial member FM may be used as the position of the datum point DTp as it is.

A datum surface DTs indicating a fiducial surface of the workpiece W is one example of the datum DT of the workpiece W. In this case, as illustrated in FIG. 34(a) and FIG. 34(b), at least one fiducial member FM may be positioned at a position that has a predetermined positional relationship with at least one datum surface DTs of the workpiece W. FIG. 34(a) and 34(b) illustrate an example in which at least three fiducial members FM are positioned at positions that have the predetermined positional relationship with the datum surface DTs of the workpiece W. Incidentally, FIG. 34(a) and 34(b) illustrate an example in which a side surface of the workpiece W is set to the datum surface DTs.

A state in which "the fiducial member FM and the datum surface DTs have the predetermined positional relationship" may include a state in which "the fiducial member FM is positioned on the datum surface DTs". The state in which "the fiducial member FM and the datum surface DTs have the predetermined positional relationship" may include a state in which "the fiducial member FM is positioned so that the position of the fiducial member FM is the same as a position included in the datum surface DTs". The state in which "the fiducial member FM and the datum surface DTs have the predetermined positional relationship" may include a state in which "the fiducial member FM is not positioned on the datum surface DTs, but the position of the datum surface DTs can be calculated from the position of the fiducial member FM". Incidentally, information related to the positional relationship between the fiducial member FM and the datum surface DTs is known information for the measurement control apparatus 24.

In this case, the measurement control apparatus 24 may calculate the position of the datum surface DTs based on the optical received result of the returning light RL from at least three fiducial members FM positioned on the datum surface DTs. For example, the measurement control apparatus 24 may calculate the positions of at least three fiducial members FM positioned on the datum surface DTs based on the optical received result of the returning light RL from the at least three fiducial members FM positioned on the datum surface DTs. Then, the measurement control apparatus 24 may calculate the position of the datum surface DTs of the workpiece W based on the positions of the at least three fiducial members FM positioned on the datum surface DTs. For example, the measurement control apparatus 24 may determine a virtual plane VP that includes (in other words, passes through) the positions of at least three fiducial members FM positioned on the datum surface DTs, and calculate the position of the virtual plane VP as the position of the datum surface DTs of the workpiece W.

Incidentally, in a case where the positions of at least three fiducial members FM positioned on the datum surface DTs are not the same as the position of the datum surface DTs, the measurement control apparatus 24 may calculate the position of the datum surface DTs based on information related to the positional relationship between the fiducial members FM and the datum surface DTs and the positions of at least three fiducial members FM, even in the example illustrated in FIG. 34(a) and 34(b), as in the example illustrated in FIG. 33(a) and FIG. 33(b). For example, the measurement control apparatus 24 may calculate the position of the datum surface DTs by adding a difference diff between the positions of at least three fiducial members FM and the position of the datum surface DTs to the position of the virtual plane VP that includes the positions of at least three fiducial members FM. However, in a case where the position of the datum surface DTs is the same as the position of the fiducial member FM, the position of the virtual plane VP, which includes the positions of at least three fiducial members FM, may be used as the position of the datum surface DTs as it is.

The measurement control apparatus 24 may calculate the position of the workpiece W based on the position of the datum DT.

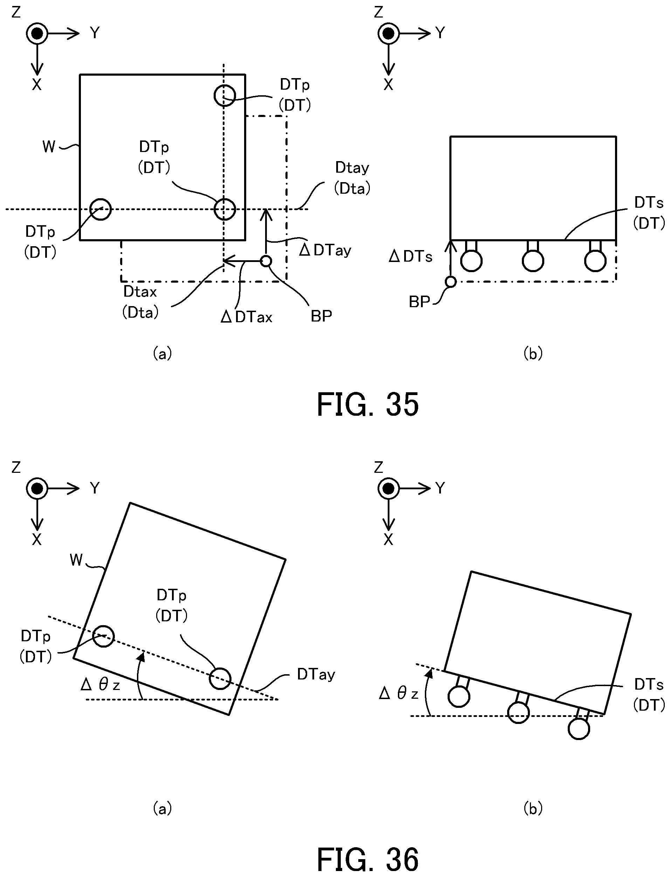

For example, the measurement control apparatus 24 may calculate the position of the workpiece W based on a datum axis DTa connecting at least two datum points DTp, as illustrated in FIG. 35(a). For example, the measurement control apparatus 24 may calculate a position of the datum axis DTa as the position of the workpiece W. For example, the measurement control apparatus 24 may calculate the position of the datum axis DTa along a direction intersecting the datum axis DTa as the position of the workpiece W along the direction intersecting the datum axis DTa. In the example illustrated in FIG. 35(a), a datum axis DTax connecting two datum points DTp positioned along the X-axis direction and a datum axis DTay connecting two datum points DTp positioned along the Y-axis direction may be generated. In this case, the measurement control apparatus 24 may calculate the position of the datum axis DTax along the Y-axis direction intersecting the datum axis DTax as the position of the workpiece W along the Y-axis direction, and calculate the position of the datum axis DTay along the X-axis direction intersecting the datum axis DTay as the position of the workpiece W along the X-axis direction. Alternatively, the measurement control apparatus 24 may calculate the position of the workpiece W by calculating a shift amount of the datum axis DTa from a base position BP. Especially, the measurement control apparatus 24 may calculate the position of the workpiece W along the direction intersecting the datum axis DTa by calculating the shift amount of the datum axis DTa from the base position BP along the direction intersecting the datum axis DTa. For example, the measurement control apparatus 24 may calculate the position of the workpiece W along the Y-axis direction by calculating the shift amount $\Delta$DTax of the datum axis DTax from the base position BP along the Y-axis direction that intersects the datum axis DTax. For example, the measurement control apparatus 24 may calculate the position of the workpiece W along the X-axis direction by calculating the shift amount $\Delta$DTay of the datum axis DTay from the base position BP along the X-axis direction that intersects the datum axis DTay.

For example, the measurement control apparatus 24 may calculate the position of the workpiece W based on the datum surface DTs, as illustrated in FIG. 35(b). For example, the measurement control apparatus 24 may calculate the position of the datum surface DTs as the position of the workpiece W. For example, the measurement control apparatus 24 may calculate the position of the datum surface DTs along the direction intersecting the datum surface DTs as the position of the workpiece W along the direction intersecting the datum surface DTs. In the example illustrated in FIG. 35(b), because the datum surface DTs intersects the X-axis, the measurement control apparatus 24 may calculate the position of the datum surface DTs along the X-axis direction as the position of the workpiece W along the X-axis direction. Alternatively, the measurement control apparatus 24 may calculate the position of the workpiece W by calculating a shift amount of the datum surface DTs from the base position BP. Especially, the measurement control apparatus 24 may calculate the position of the workpiece W along the direction intersecting the datum surface DTs by calculating the shift amount of the datum surface DTs from the base position BP along the direction intersecting the datum surface DTs. For example, the measurement control apparatus 24 may calculate the position of the workpiece W along the X-axis direction by calculating the shift amount $\Delta$DTs from the base position BP of the datum surface DTs along the X-axis direction that intersects the datum surface DTs.

The measurement control apparatus 24 may calculate the posture of the workpiece W based on the position of the datum DT.

For example, the measurement control apparatus 24 may calculate the posture of the workpiece W based on an angle (a rotation amount) between the datum axis DTa and each of the X-axis, Y-axis, and Z-axis of the machine coordinate system, as illustrated in FIG. 36(a). In the example illustrated in FIG. 36(a), the measurement control apparatus 24 may generate the datum axis Dtay that is an axis along the XY plane in a situation where the posture of the workpiece W is a base posture. In this case, the measurement control apparatus 24 may calculate the angle (the rotation amount) between the datum axis DTay and the X-axis or the Y-axis as the posture of the workpiece W around the Z-axis.

For example, the measurement control apparatus 24 may calculate the posture of the workpiece W based on an angle (a rotation amount) between the datum surface DTs and each of the X-axis, Y-axis, and Z-axis of the machine coordinate system, as illustrated in FIG. 36(b). In the example illustrated in FIG. 36(b), the datum surface DTs is a surface that is orthogonal to the X-axis in a situation where the posture of the workpiece W is the base posture. In this case, the measurement control apparatus 24 may calculate the angle (the rotation amount) between the datum surface DTs and the X-axis or the Y-axis as the posture of the workpiece W around the Z-axis.

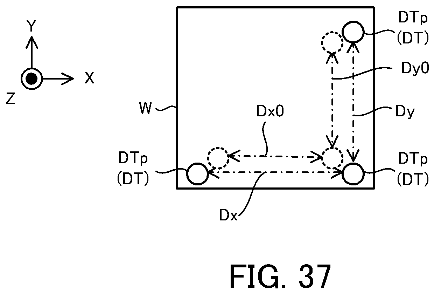

The measurement control apparatus 24 may calculate the size of the workpiece W based on the position of the datum DT. For example, the measurement control apparatus 24 may calculate the size of the workpiece W based on the positions of two datum points DTp, as illustrated in FIG. 37. Specifically, the measurement control apparatus 24 may calculate a distance between two datum points DTp based on the positions of the two datum points DTp. Then, the measurement control apparatus 24 may calculate an expansion ratio of the workpiece W based on the calculated result of the distance between the two datum points DTp and a base distance. The expansion ratio of the workpiece W may be a ratio of the calculated result of the distance between the two datum points DTp to the base distance. Then, the measurement control apparatus 24 may calculate the size of the workpiece W based on the expansion ratio of the workpiece W and a base size of the workpiece W. For example, the measurement control apparatus 24 may calculate, as the size of the workpiece W, a value obtained by multiplying the expansion rate of the workpiece W by the base size of the workpiece W. Incidentally, one reason why the workpiece W is expanded is a heat transferred to the workpiece W. Therefore, the expansion rate may be regarded as a thermal expansion rate.

In the example illustrated in FIG. 37, the measurement control apparatus 24 may calculate a distance Dx between two datum points DTp arranged along the X-axis, and calculate the expansion rate of the workpiece W in the X-axis direction based on the distance Dx and a base distance Dx0. Then, the measurement control apparatus 24 may calculate the size of the workpiece W in the X-axis direction based on the expansion rate of the workpiece W in the X-axis direction and the base size of the workpiece W in the X-axis direction. Similarly, the measurement control apparatus 24 may calculate a distance Dy between two datum points DTp arranged along the Y-axis, and calculate the expansion ratio of the workpiece W in the Y-axis direction based on the distance Dy and a base distance Dy0. Then, the measurement control apparatus 24 may calculate the size of the workpiece W in the Y-axis direction based on the expansion ratio of the workpiece W in the Y-axis direction and the base of the workpiece W in the Y-axis direction.

Incidentally, the measurement control apparatus 24 may calculate at least one of the position of the workpiece W, the posture of the workpiece W, and the size of the workpiece W, based on the position of the fiducial member FM positioned on the datum DT or positioned on any part of the workpiece W that is different from the datum DT, without calculating the position of the datum DT. The measurement control apparatus 24 may calculate at least one of the position of the workpiece W, the posture of the workpiece W, and the size of the workpiece W based on the optical received result of the returning light RL from the fiducial member FM positioned on the datum DT or positioned on any part of the workpiece W that is different from the datum DT, without calculating the position of the datum DT. The measurement control apparatus 24 may calculate at least one of the position of the workpiece W, the posture of the workpiece W, and the size of the workpiece W, based on the distance between the measurement head 22 and the fiducial member FM positioned at any part of the workpiece W, without calculating the position of the datum DT.

The measurement control apparatus 24 may calculate a change in the position of the workpiece W between two different times by calculating the position of the workpiece W at each of the two different times. The measurement control apparatus 24 may calculate a change in the position of the datum DT of the workpiece W between the two different times by calculating the position of the datum DT of the workpiece W at each of the two different times. The measurement control apparatus 24 may calculate a change in the posture of the workpiece W between two different times by calculating the posture of the workpiece W at each of the two different times. The measurement control apparatus 24 may calculate a change in the size of the workpiece W between two different times by calculating the size of the workpiece W at each of the two different times.

After at least one of the position, the posture, and the size of the workpiece W is calculated, the measurement control apparatus 24 may generate the processing path correction information for correcting the processing path indicating the processing route of the workpiece W by the machine tool 1 as information for controlling the machine tool 1 based on workpiece position calculation information indicating a calculated result of at least one of the position, the posture, and the size of the workpiece W. In this case, the measurement control apparatus 24 may generate the processing path correction information for correcting the processing path so that the workpiece W is processed in the same manner as in a case where the position of the workpiece W is a desired position, even in a case where the calculated position of the workpiece W is different from the desired position. The measurement control apparatus 24 may generate the processing path correction information for correcting the processing path so that the workpiece W is processed in the same manner as in a case where the posture of the workpiece W is a desired posture, even in a case where the calculated posture of the workpiece W is different from the desired posture. The measurement control apparatus 24 may generate the processing path correction information for correcting the processing path so that the workpiece W is processed in the same manner as in a case where the size of the workpiece W is a desired size, even in a case where the calculated size of the workpiece W is different from the desired size. The processing control apparatus 16 of the machine tool 1 may correct the processing path based on the processing path correction information. Alternatively, the measurement control apparatus 24 may correct the processing path and output the corrected processing path to the processing control apparatus 16 as the information for controlling the machine tool 1. As a result, the machine tool 1 can process the workpiece W in the same manner as in a case where at least one of the position, the posture, and the size of the workpiece W is in a desired state, even in a case where at least one of the position, the posture, and the size of the workpiece W is not in the desired state.

After at least one of the position, the posture, and the size of the workpiece W is calculated, the measurement control apparatus 24 may generate the measurement path correction information for correcting the measurement path indicating the measurement route of the workpiece W by the measurement system 2 based on the workpiece position calculation information indicating the calculated result of at least one of the position, the posture, and the size of the workpiece W. In this case, the measurement control apparatus 24 may generate the measurement path correction information for correcting the measurement path so that the workpiece W is measured in the same manner as in a case where the position of the workpiece W is the desired position, even in a case where the calculated position of the workpiece W is different from the desired position. The measurement control apparatus 24 may generate the measurement path correction information for correcting the measurement path so that the workpiece W is measured in the same manner as in a case where the posture of the workpiece W is the desired posture, even in a case where the calculated posture of the workpiece W is different from the desired posture. The measurement control apparatus 24 may generate the measurement path correction information for correcting the measurement path so that the workpiece W is measured in the same manner as in a case where the size of the workpiece W is the desired size, even in a case where the calculated size of the workpiece W is different from the desired size. The processing control apparatus 16 of the machine tool 1 may correct the measurement path based on the measurement path correction information. Alternatively, the measurement control apparatus 24 may correct the measurement path and output the corrected measurement path to the processing control apparatus 16 as the information for controlling the machine tool 1. As a result, the machine tool 1 can move at least one of the processing head 11 and the stage 141 in the same manner as in a case where at least one of the position, the posture, and the size of the workpiece W is in a desired state, even in a case where at least one of the position, the posture, and the size of the workpiece W is not in the desired state. As a result, the measurement system 2 can measure the workpiece W in the same manner as in a case where at least one of the position, the posture, and the size of the workpiece W is in a desired state, even in a case where at least one of the position, the posture, and the size of the workpiece W is not in the desired state.

Incidentally, since at least one of the position, the posture, and the size of the workpiece W is calculated based on the optical received result of the returning light RL from the fiducial member FM positioned on the workpiece W, an operation for generating at least one of the processing path correction information and the measurement path correction information based on the workpiece position calculation information may be considered to be equivalent to an operation for generating at least one of the processing path correction information and the measurement path correction information based on the optical received result of the returning light RL from the fiducial member FM positioned on the workpiece W. Alternatively, in some cases, the measurement control apparatus 24 may generate at least one of the processing path correction information and the measurement path correction information based on the optical received result of the returning light RL from the fiducial member FM positioned on the workpiece W, without calculating at least one of the position, the posture, and the size of the workpiece W.

The measurement control apparatus 24 may output the workpiece position calculation information indicating the calculated result of at least one of the position, the posture, and the size of the workpiece W to the processing control apparatus 16 as the information for controlling the machine tool 1, in addition to or instead of at least one of the processing path correction information and the measurement path correction information. In this case, the processing control apparatus 16 may generate at least one of the processing path correction information and the measurement path correction information based on the workpiece position calculation information. The processing control apparatus 16 may correct at least one of the processing path and the measurement path based on the workpiece position calculation information.

The measurement control apparatus 24 may output information related to the position of the fiducial member FM, which is used to calculate at least one of the position, the posture, and the size of the workpiece W, to the processing control apparatus 16 as the information for controlling the machine tool 1, in addition to or instead of at least one of the processing path correction information and the measurement path correction information. In this case, the processing control apparatus 16 may calculate at least one of the position, the posture, and the size of the workpiece W based on the information related to the position of the fiducial member FM. Incidentally, in a case where the measurement control apparatus 24 outputs the information related to the position of the fiducial member FM to the processing control apparatus 16, the measurement control apparatus 24 may not calculate at least one of the position, the posture, and the size of the workpiece W based on the information related to the position of the fiducial member FM. Then, the processing control apparatus 16 may generate at least one of the processing path correction information and the measurement path correction information based on the workpiece position calculation information indicating the calculated result of at least one of the position, the posture, and the size of the workpiece W. The processing control apparatus 16 may correct at least one of the processing path and the measurement path based on the workpiece position calculation information.

The measurement control apparatus 24 may output information related to the optical received result of the returning light RL from the fiducial member FM, which is used to calculate the position of the fiducial member FM, to the processing control apparatus 16 as the information for controlling the machine tool 1, in addition to or instead of at least one of the processing path correction information and the measurement path correction information. In this case, the processing control apparatus 16 may calculate the position of the fiducial member FM based on the information related to the optical received result of the returning light RL from the fiducial member FM. Then, the processing control apparatus 16 may calculate at least one of the position, the posture, and the size of the workpiece W based on the information related to the position of the fiducial member FM. Incidentally, in a case where the measurement control apparatus 24 outputs the information related to the optical received result of the returning light RL from the fiducial member FM to the processing control apparatus 16, the measurement control apparatus 24 may not calculate at least one of the position, the posture, and the size of the workpiece W based on the information related to the optical received result of the returning light RL from the fiducial member FM. Then, the processing control apparatus 16 may generate at least one of the processing path correction information and the measurement path correction information based on the workpiece position calculation information indicating the calculated result of at least one of the position, the posture, and the size of the workpiece W. The processing control apparatus 16 may correct at least one of the processing path and the measurement path based on the workpiece position calculation information.

Incidentally, in a case where the workpiece W does not include the datum DT (in a case where the datum DT is not formed on the workpiece W), the measurement system 2 may perform the movement error calculation operation described above in a situation where the workpiece W is placed on the stage 141. In this case, the measurement system 2 may tentatively calculate at least one of the position of the workpiece W, the posture of the workpiece W, and the size of the workpiece W, based on the optical received result of the returning light RL from the fiducial member FM positioned on a part of the workpiece W that is different from the datum DT. The measurement system 2 may generate the information for controlling the machine tool 1 based on the tentatively calculated result of at least one of the position of the workpiece W, the posture of the workpiece W, and the size of the workpiece W. Then, the machine tool 1 may process the workpiece W so as to form the datum DT on the workpiece W. Then, at least one fiducial member FM may be placed on the datum DT formed on the workpiece W. Then, the measurement system 2 may perform the workpiece position calculation operation based on the optical received result of the returning light RL from the fiducial member FM on the datum DT formed by the machine tool 1.

Moreover, the measurement system 2 may perform the workpiece position calculation operation based on the optical received result of the returning light RL from a feature point of the workpiece W, in addition to or instead of the optical received result of the returning light RL from the fiducial member FM positioned on the workpiece W. Namely, the feature points of the workpiece W may be used as the fiducial member FM positioned on the workpiece W. In this case, the measurement system 2 may irradiate the workpiece W itself with the measurement light ML, in addition to or instead of the fiducial member FM placed on the workpiece W. As a result, even in a case where the fiducial member FM is not placed on the workpiece W, the measurement system 2 can perform the workpiece position calculation operation.

The feature points of the workpiece W may be a part of the workpiece W satisfying a condition that the feature point of the workpiece W is distinguishable from other part of the workpiece W that is different from the feature point. For example, the feature point of the workpiece W may be a part of the workpiece W satisfying a condition that a characteristic of the feature point of the workpiece W is distinguishable from a characteristic of other part of the workpiece W that is different from the feature points. At least one of a vertex, a corner, and an edge of an area of the workpiece W that is distinguishable from other area of the workpiece W may be used as the feature point of the workpiece W. A boundary of one area of the workpiece W that is distinguishable from other area of the workpiece W may be used as the feature point of the workpiece W.

Alternatively, the measurement system 2 may perform the workpiece position calculation operation based on the optical received result of the returning light RL from any part of the workpiece W, in addition to or instead of the optical received result of the returning light RL from the feature point of the workpiece W. Namely, any part of the workpiece W may be used as the fiducial member FM placed on the workpiece W. In this case, even in a case where the fiducial member FM is not placed on the workpiece W, the measurement system 2 can perform the workpiece position calculation operation.

The measurement system 2 may perform the workpiece position calculation operation based on the optical received result of the returning light RL from the feature point (alternatively, any part) of the workpiece W, independently of the movement error calculation operation. For example, the measurement system 2 may perform the workpiece position calculation operation for calculating at least one of the position of the workpiece W, the posture of the workpiece W, and the size of the workpiece W based on the optical received result of the returning light RL from the feature point (alternatively, any part) of the workpiece W after the movement error calculation operation is performed and before the machine tool 1 starts processing the workpiece W.

Incidentally, the processing system SYS in at least one of the first modified example to the second modified example described above may perform the workpiece position calculation operation described in the third modified example. Namely, the third modified example may be combined with at least one of the first modified example to the second modified example.

### (4-4) Fourth Modified Example

The processing system SYS in a fourth modified example is configured to switch the measurement light ML emitted from the measurement head 22 between the convergent light and the collimated light. Incidentally, the processing system SYS in the fourth modified example is referred to as a processing system SYS4 in the below-described description for convenience of description.

The processing system SYS4 may irradiate the fiducial member FM with the measurement light ML that is the parallel light in a case where the movement error calculation operation described above is performed. As a result, the processing system SYS4 can calculate the movement error without being affected by the defocus of the measurement light ML as described above. For the same reason, the processing system SYS4 may irradiate the fiducial member FM with the measurement light ML that is the collimated light in a case where the workpiece position calculation operation in the third modified example is performed in parallel with the movement error calculation operation described above.

The processing system SYS4 may irradiate the fiducial member FM with the measurement light ML that is the convergent light in a case where the workpiece position calculation operation in the third modified example is performed separately from the movement error calculation operation described above. This is because the processing system SYS4 may not irradiate each of the plurality of fiducial members FM with the measurement light ML in a state where the plurality of fiducial members FM are included in the measurement range of the measurement head 22 in a case where the workpiece position calculation operation in the third modified example is performed separately from the movement error calculation operation described above. Specifically, the processing system SYS4 may irradiate a first fiducial member FM with the measurement light ML in a state where the first fiducial member FM is included in the measurement range of the measurement head 22, and then move the measurement head 22 so that a second fiducial member FM is included in the measurement range of the measurement head 22, and then irradiate the second fiducial member FM with the measurement light ML. As a result, the distance between the measurement head 22 and each of the plurality of fiducial members FM that are irradiated with the measurement light ML in sequence does not change greatly. As a result, an influence of the defocus of the measurement light ML described above is reduced. Therefore, the processing system SY4 may irradiate the fiducial members FM positioned on the workpiece W with the measurement light ML that is the convergent light. As a result, the processing system SYS4 can calculate at least one of the position, the posture, and the size of the workpiece W with higher accuracy, compared to a case where the measurement light ML that is the collimated light is used.

The processing system SYS4 may irradiate the workpiece W with the measurement light ML that is the convergent light in a case where the processing system SYS4 measures a three-dimensional shape of the workpiece W. This is because the influence of the defocus of the measurement light ML described above is reduced as in a case where the workpiece position calculation operation in the third modified example is performed separately from the movement error calculation operation described above. Therefore, the processing system SYS4 may irradiate the workpiece W with the measurement light ML that is the convergent light. As a result, the processing system SYS4 can calculate the three-dimensional shape of the workpiece W with higher accuracy, compared to a case where the measurement light ML that is the collimated light is used. However, the processing system SYS4 may irradiate the workpiece W with the measurement light ML that is the collimated light in a case where the three-dimensional shape of the workpiece W is measured.

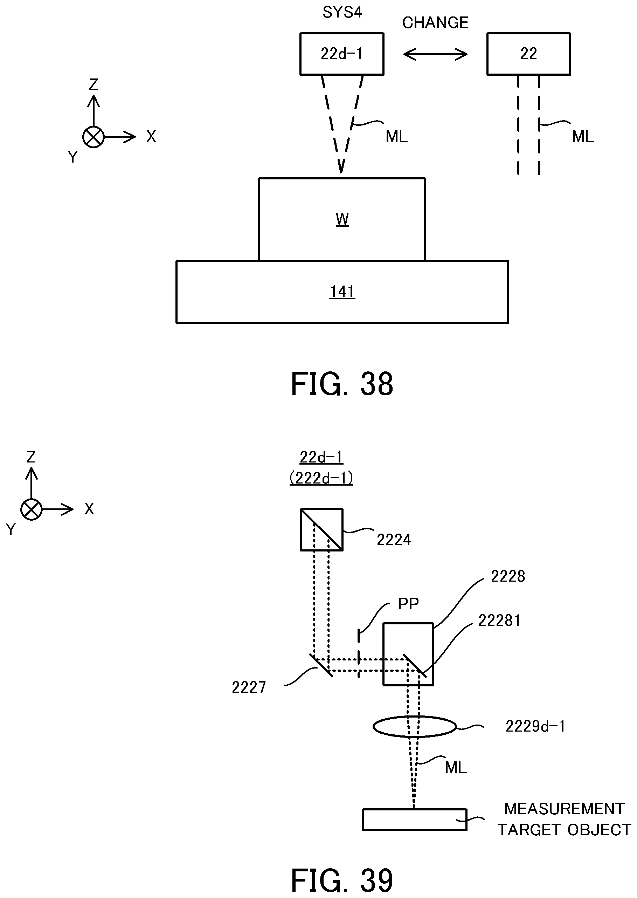

Next, with reference to FIG. 38 to FIG. 40, one example of the processing system SYS4 in the fourth modified example will be described.

FIG. 38 illustrates a first specific example of the processing system SYS4. As illustrated in FIG. 38, the first specific example of the processing system SYS4 is different from the processing system SYS described above in that it may further include a measurement head 22d-1 configured to emit the measurement light ML that is the convergent light in addition to the measurement head 22 configured to emit the measurement light ML that is the collimated light as described above. Other feature of the first specific example of the processing system SYS4 may be the same as other feature of the processing system SYS. FIG. 39 illustrates one example of a configuration of the measurement head 22d-1. As illustrated in FIG. 39, the measurement head 22d-1 is different from the measurement head 22 in that it includes an optical system 222d-1 instead of the optical system 222. Other feature of the measurement head 22d-1 may be the same as other feature of the measurement head 22. The optical system 222d-1 is different from the optical system 222 in that it includes a condensing optical system 2229d-1. Other feature of optical system 222d-1 may be the same as other feature of optical system 222. Incidentally, a fθ lens is one example of the condensing optical system 2229d-1.

The condensing optical system 2229d-1 is positioned on the optical path of the measurement light ML between the Galvano mirror 2228 and the measurement target object. The condensing optical system 2229d-1 condenses the measurement light ML emitted from the Galvano mirror 2228 onto a predetermined condensed plane. The condensed plane may be set, for example, on or near the surface of the measurement target object. As a result, the measurement head 22d-1 can irradiate the measurement target object (for example, at least one of the workpiece W and the fiducial member FM) with the measurement light ML that is the convergent light. The condensing optical system 2229d-1 may typically have a finite focal length. In a case where the measurement target object is irradiated with the measurement light ML that is the convergent light, a diameter of a spot formed by the measurement light ML on the surface of the measurement target object is relatively small, which results in an advantage of relatively high measurement accuracy.

The condensing optical system 2229d-1 may be a telecentric optical system on the measurement target object side. In this case, even in a case where the propagating direction of the measurement light ML emitted from the condensing optical system 2229d-1 is changed by the Galvano mirror 2228, the propagating direction of the measurement light ML emitted from the condensing optical system 2229d-1 is parallel to an optical axis of the condensing optical system 2229d-1

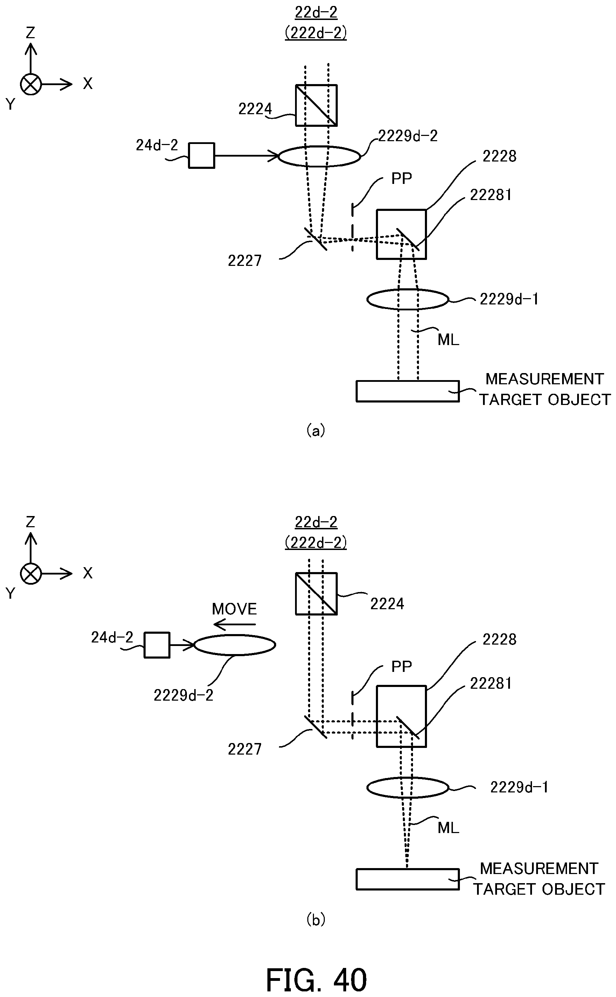

FIG. 40(a) and 40(b) illustrate a second specific example of processing system SYS4. As illustrated in FIG. 40(a) and 40(b), the second specific example of the processing system SYS4 is different from the processing system SYS described above in that it may include a measurement head 22d-2, which is configured to selectively emit the measurement light ML that is the convergent light and the measurement light ML that is the collimated light, instead of the measurement head 22. Other feature of the second specific example of the processing system SYS4 may be the same as other feature of the processing system SYS. As illustrated in FIG. 40(a) and FIG. 40(b), the measurement head 22d-2 is different from the measurement head 22d-1 illustrated in FIG. 39 in that it includes an optical system 222d-2 instead of the optical system 222d-1. Other feature of the measurement head 22d-2 may be the same as other feature of the measurement head 22d-1. The optical system 222d-2 is different from the optical system 222d-1 in that it includes a condensing optical system 2229d-2. Other feature of the optical system 222d-2 may be the same as other feature of the optical system 222d-1.

The condensing optical system 2229d-2 is positioned on the optical path of the measurement light ML between the condensing optical system 2229d-1 and the optical detector 2226. In the example illustrated in FIG. 40(a) and FIG. 40(b), the condensing optical system 2229d-2 is positioned on the optical path of the measurement light ML between the beam splitter 2224 and the mirror 2227. The condensing optical system 2229d-2 forms a condensed position of the measurement light ML at a focal position PP of the condensing optical system 2229d-1 (alternatively, near the focal position PP, the same applies in the below-described description) on the optical detector 2226 side. As a result, as illustrated in FIG. 40(a), the measurement light ML that is the collimated light is emitted from the condensing optical system 2229d-1.

The condensing optical system 2229d-2 may be movable with respect to the optical path of the measurement light ML. Specifically, for example, the measurement head 22d-2 may include a driving system 24d-2 that is configured to move the condensing optical system 2229d-2. The driving system 24d-2 may move the condensing optical system 2229d-2 to insert or remove the condensing optical system 2229d-2 into / from the optical path of the measurement light ML. The driving system 24d-2 may move the condensing optical system 2229d-2 to change a state of the condensing optical system 2229d-2 between a state in which the condensing optical system 2229d-2 is positioned on the optical path of the measurement light ML (see FIG. 40(a)) and a state in which the condensing optical system 2229d-2 is not positioned on the optical path of the measurement light ML (see FIG. 40(b)).

In a case where the condensing optical system 2229d-2 is positioned on the optical path of the measurement light ML, the measurement light ML emitted from the condensing optical system 2229d-1 becomes the collimated light, as illustrated in FIG. 40(a). Namely, the measurement head 22d-1 may irradiate the measurement target object with the measurement light ML, which is the collimated light, through an optical system that includes both the condensing optical systems 2229d-1 and 2229d-2. On the other hand, in a case where the condensing optical system 2229d-2 is not positioned on the optical path of the measurement light ML, the measurement light ML emitted from the condensing optical system 2229d-1 becomes the convergent light, as illustrated in FIG. 40(b). Namely, the measurement head 22d-1 may irradiate the measurement target object with the measurement light ML, which is the convergent light, through an optical system that includes the condensing optical system 2229d-1 but does not include the condensing optical system 2229d-2. As a result, the measurement head 22d-2 can selectively emit the measurement light ML that is the convergent light and the measurement light ML that is the collimated light.

Moreover, the condensing optical system 2229d-2 may be a variable focal length optical system whose focal length is changeable. The variable focal length optical system may be referred to as a magnification varying optical system or a zoom optical system. In a case where the light-condensing optical system 2229d-1 is the variable focal length optical system, a state of the light-condensing optical system 2229d-1 is equivalent to a state illustrated in FIG. 40(b), namely, a state in which the measurement light ML emitted from the condensing optical system 2229d-1 becomes the convergent light by setting the focal length to infinity. On the other hand, the state of the condensing optical system 2229d-1 is equivalent to the state illustrated in FIG. 40(a), namely, a state in which the measurement light ML emitted from the condensing optical system 2229d-1 becomes collimated light by setting the focal length of the variable focal length optical system to a finite focal length.

Incidentally, the processing system SYS in at least one of the first modified example to the third modified example described above may be configured to switch the measurement light ML emitted from the measurement head 22 between the convergent light and the collimated light in the same manner as the processing system SYS in the fourth modified example. Namely, the fourth modified example may be combined with at least one of the first modified example to the third modified example.

### (4-5) Fifth Modified Example

The processing system SYS in a fifth modified example may calculate the movement error by using a method described below. Specifically, in the above-described description, the measurement control apparatus 24 uses the principle of multi-side surveying to calculate the position of the measurement point MP in the above-described first movement error calculation operation. On the other hand, in the fifth modified example, the measurement control apparatus 24 may not use the principle of the multi-side surveying to calculate the position of the measurement point MP in the above-described first movement error calculation operation. In the below-described description, an operation specific to the fifth modified example will be described mainly. Therefore, in a case where there is no description, an operation that is the same as the first movement error calculation operation described above may be performed.

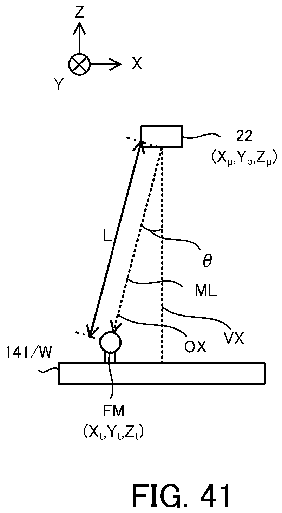

Specifically, as illustrated in FIG. 41(a) and FIG. 41(b), even in the fifth modified example, the measurement head 22 irradiates the fiducial member FM with the measurement light ML and optically receives the returning light RL from the fiducial member FM at the step S106 in FIG. 12 described above. Then, the measurement control apparatus 24 calculates a distance L from the measurement head 22 to the fiducial member FM based on the optical received returning light RL from the fiducial member FM. In the fifth modified example, the measurement control apparatus 24 further calculates a direction along which the measurement light ML is emitted from the measurement head 22 based on the driving state of the Galvano mirror 2228. In the examples illustrated in FIG. 41(a) and FIG. 41(b), the measurement control apparatus 24 may calculate the azimuth angle θ, which represents the direction along which the measurement light ML is emitted from the measurement head 22, based on the information related to the driving state of the Galvano mirror 2228. Incidentally, in the example illustrated in FIG. 41(a) and FIG. 41(b), an angle between an optical directional axis OX, which extends in a direction along which the measurement light ML is emitted from the measurement head 22, and a vertical axis VX, which is along a vertical direction and which passes through the fiducial point FP of the measurement head 22, is used as the azimuth angle θ. Furthermore, in the fifth modified example, the position (Xt, Yt, Zt) of the fiducial member FM in the machine coordinate system is known information for the measurement control apparatus 24.

Then, the measurement control apparatus 24 calculates the position of the measurement head 22 (namely, the position of the measurement point MP) based on the distance L, the azimuth angle θ (especially, azimuth angles θx and θy), and the position (Xt, Yt, Zt) of the fiducial member FM. For example, the measurement control apparatus 24 may calculate the position $X_p$ of the measurement point MP in the X-axis direction of the machine coordinate system by using an equation "$X_p = Xt + L \times \sin \theta x$". For example, the measurement control apparatus 24 may calculate the position $Y_p$ of the measurement point MP in the Y-axis direction of the machine coordinate system by using an equation "$Y_p = Yt + L \times \sin \theta y$". For example, the measurement control apparatus 24 may calculate the position $Z_p$ of the measurement point MP in the Z-axis direction of the machine coordinate system by using an equation "$Z_p = Zt + L \times \cos \theta z$". Incidentally, in the fifth modified example, the measurement control apparatus 24 may not use the measurement coordinate system.

The measurement control apparatus 24 repeats the same operation while moving at least one of the processing head 11 and the stage 141 (the step S108 in FIG. 12). Incidentally, in a case where the stage 141 moves, the fiducial member FM moves du9e to the movement of the stage 141. In this case, the measurement control apparatus 24 may calculate the position $(X_p, Y_p, Z_p)$ of the measurement point MP by adding the movement distance of the stage 141 to the position $(X_t, Y_t, Z_t)$ of the fiducial member FM, which is known information. As a result, in the fifth modified example, the positions of the plurality of measurement points MP (namely, the actual positions of the measurement head 22) are calculated in the same manner as the first movement error calculation operation described above. As a result, in the fifth modified example, the movement error may be calculated in the same manner as in the first movement error calculation operation described above.

Moreover, in the fifth modified example, since the principle of the multi-side surveying may not be used to calculate the movement error, the number of fiducial members FM that are irradiated with the measurement light ML to calculate the movement error may be equal to or less than four. Therefore, a cost for positioning the fiducial members FM is reducible.

Typically, in the fifth modified example, the measurement control apparatus 24 may calculate the movement error based on the optical received result of the returning light RL from a single fiducial member FM. Therefore, the cost for arranging the fiducial members FM is reducible more.

Moreover, even in the fifth modified example, the fiducial member FM, which is irradiated with the measurement light ML to calculate the movement error, may be positioned on the workpiece W. Namely, the measurement head 22 may irradiate the fiducial member FM, which is positioned on the workpiece W, with the measurement light ML. In this case, the measurement head 22 may irradiate the fiducial member FM with the measurement light ML in a state where the workpiece W is placed on the stage 141. Therefore, the measurement head 22 can irradiate the fiducial member FM with the measurement light ML in an environment that is closer to an environment in which the machine tool 1 actually processes the workpiece W, compared to a case where the measurement head 22 irradiates the fiducial member FM with the measurement light ML in a state where the workpiece W is not placed on the stage 141. Therefore, the movement error calculated based on the optical received result of the returning light RL from the fiducial member FM that is irradiated with the measurement light ML in a state where the workpiece W is placed on the stage 141 is closer to the movement error occurring in the environment in which the machine tool 1 actually processes the workpiece W than the movement error calculated based on the optical received result of the returning light RL from the fiducial member FM that is irradiated with the measurement light ML in a state where the workpiece W is not placed on the stage 141. Therefore, the measurement control apparatus 24 can calculate the movement error with high accuracy.

However, the fiducial member FM that is irradiated with the measurement light ML to calculate the movement error may be positioned on the stage 141. Namely, the measurement head 22 may irradiate the fiducial member FM, which is positioned on the stage 141, with the measurement light ML. Even in this case, the measurement control apparatus 24 can calculate the movement error.

In order to calculate the movement error, the measurement head 22 may irradiate a plurality of fiducial members FM with the measurement light ML. In this case, each of the plurality of fiducial members FM may be positioned on at least one of the stage 141 and the workpiece W placed on the stage 141. For example, the fiducial member FM may be positioned on the workpiece W placed on the stage 141 and the fiducial member FM may be positioned on the stage 141. For example, the fiducial member FM may be positioned on the workpiece W and the fiducial member FM may not be positioned on the stage 141. For example, the fiducial member FM may not be positioned on the stage 141 and the fiducial member FM may be positioned on the workpiece W placed on the stage 141. For example, the fiducial member FM may not be positioned on the workpiece W, the fiducial member FM may be positioned on the stage 141.

Incidentally, the processing system SYS in at least one of the first modified example to the fourth modified example described above may calculate the position of the measurement point MP by using the method described in the fifth modified example. Namely, the fifth modified example may be combined with at least one of the first modified example to the fourth modified example.

### (4-6) Sixth Modified Example

The processing system SYS in a sixth modified example may perform an operation described below to calculate the movement error occurring in the rotational movement of at least one of the processing head 11 and the stage 141. Specifically, the measurement control apparatus 24 may calculate the movement error occurring in the rotational movement of one of the processing head 11 and the stage 141 by moving the processing head 11 and the stage 141 rotationally and moving the other of the processing head 11 and the stage 141 translationally so as to follow one of the processing head 11 and the stage 141.

In the below-described description, the operation for calculating the movement error occurring in the rotational movement of the stage 141 will be described for convenience of description. However, the below-described description may be used as a description of the operation for calculating the movement error occurring in the rotational movement of the processing head 11 by replacing the rotational movement of the stage 141 with the rotational movement of the processing head 11 and replacing the translational movement of the processing head 11 with the translational movement of the stage 141.

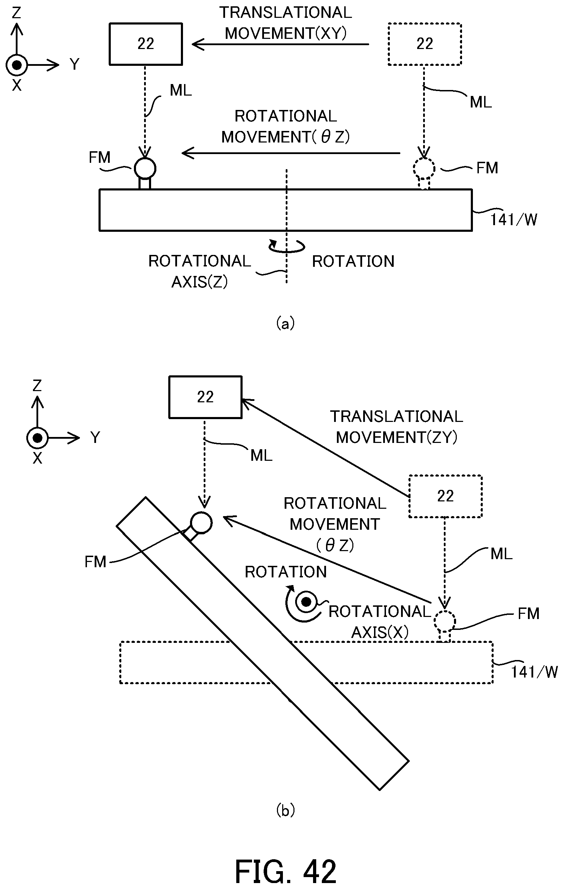

In this case, the measurement control apparatus 24 may calculate the movement error occurring in the rotational movement of the stage 141 around the rotational axis (X) by moving the stage 141 rotationally around the rotational axis (X) and by moving the processing head 11 translationally so that the measurement head 22 follows one fiducial member FM placed on the stage 141 moving rotationally around the rotational axis (X), as illustrated in FIG. 42 (a). In this case, it is preferable that the processing head 11 be movable translationally along each of the translational axis (Y) and the translational axis (Z) so as to allow the processing head 11 to move translationally so that the measurement head 22 follows the one fiducial member FM placed on the stage 141 moving rotationally around the rotational axis (X).

Furthermore, the measurement control apparatus 24 may calculate the movement error occurring in the rotational movement of the stage 141 around the rotational axis (Z) by moving the stage 141 rotationally around the rotational axis (Z) and by moving the processing head 11 translationally so that the measurement head 22 follows one fiducial member FM placed on the stage 141 moving rotationally around the rotational axis (Z), as illustrated in FIG. 42 (b). In this case, it is preferable that the processing head 11 be movable translationally along each of the translational axis (X) and the translational axis (Y) so as to allow the processing head 11 to move translationally so that the measurement head 22 follows the one fiducial member FM placed on the stage 141 moving rotationally around the rotational axis (Z).

Furthermore, in a case where the stage 141 is movable rotationally around the rotational axis (Y), the measurement control apparatus 24 may calculate the movement error occurring in the rotational movement of the stage 141 around the rotational axis (Y) by moving the stage 141 rotationally around the rotational axis (Y) and by moving the processing head 11 translationally so that the measurement head 22 follows one fiducial member FM placed on the stage 141 moving rotationally around the rotational axis (Y). In this case, it is preferable that the processing head 11 be movable translationally along each of the translational axis (X) and the translational axis (Z) so as to allow the processing head 11 to move translationally so that the measurement head 22 follows the one fiducial member FM placed on the stage 141 moving rotationally around the rotational axis (Y).

Especially, the measurement control apparatus 24 may move the processing head 11 so that a positional relationship between one fiducial member FM that moves due to the rotational movement of the stage 141 and the measurement head 22 that moves to follow the one fiducial member FM does not change. In other words, the measurement control apparatus 24 may move the processing head 11 so that the positional relationship between the moving fiducial member FM and the measurement head 22 that moves to follow the fiducial member FM is maintained.

The measurement head 22 may irradiate the fiducial member FM with the measurement light ML intermittently or continuously onto in a period during which the measurement head 22 follows the fiducial member FM. As a result, the measurement head 22 may optically receive the returning light RL from the fiducial member FM intermittently or continuously in the period during which the measurement head 22 follows the fiducial member FM.

At a position at which the rotational movement of stage 141 has ended, the measurement control apparatus 24 may calculate the movement error occurring in the rotational movement of the stage 141 based on the optical received result of the returning light RL from the fiducial member FM. Specifically, the measurement control apparatus 24 may calculate the distance between the measurement head 22 and the fiducial member FM based on the optical received result of the returning light RL from the fiducial member FM. Especially, since the fiducial member FM moves, the measurement control apparatus 24 may calculate the distance between the measurement head 22 and the fiducial member FM at each position on a movement trajectory of the fiducial member FM.

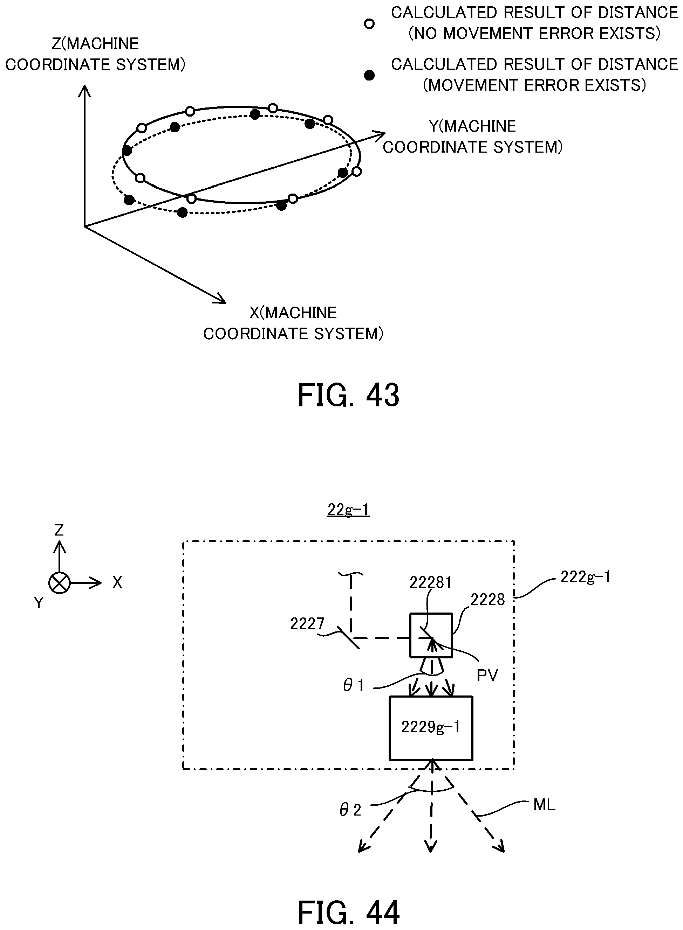

Here, in a case where no movement error occurs in the rotational movement of the stage 141, the distance between the measurement head 22 and the fiducial member FM does not vary regardless of the position on the movement trajectory of the fiducial member FM as illustrated in FIG. 43. Incidentally, FIG. 43 illustrates the distance between the measurement head 22 and the fiducial member FM, which is calculated from the returning light RL of the fiducial member FM in a situation where the stage 141 moves rotationally around the rotational axis (Z), in relation to the movement trajectory of the fiducial member FM around the rotational axis (Z). On the other hand, in a case where the movement error occurs in the rotational movement of the stage 141, it is more likely that the distance between the measurement head 22 and the fiducial member FM varies depending on the position on the movement trajectory of the fiducial member FM as illustrated in FIG. 43. Therefore, the measurement control apparatus 24 may calculate, as the movement error at each position on the movement trajectory of the fiducial member FM, a varied amount of the distance between the measurement head 22 and the fiducial member FM from a reference value. Since each position on the moving trajectory of the fiducial member FM corresponds to the rotational angle of the stage 141, the measurement control apparatus 24 may calculate, as the movement error occurring in a case where the rotational angle of the stage 141 is one command rotational angle, the varied amount of the distance between the measurement head 22 and the fiducial member FM from the reference value in a case where the rotational angle of the stage 141 is the one command rotational angle.

Incidentally, the processing system SYS in at least one of the first modified example to the fifth modified example described above may calculate the movement error occurring in the rotational movement of at least one of the processing head 11 and the stage 141 by using a method that is the same as the processing system SYS in the sixth modified example. Namely, the sixth modified example may be combined with at least one of the first modified example to the fifth modified example.

### (4-7) Seventh Modified Example

In the processing system SYS in a seventh modified example, the configuration of the measurement head 22 may be changed as described below. In the below-described description, an example of the measurement head 22 in the seventh modified example will be described.

### (4-7-1) First Specific Example of Measurement Head 22 in Seventh Modified Example

First, with reference to FIG. 44, a first specific example of the measurement head 22 in the seventh modified example will be described. FIG. 44 is a cross-sectional view that illustrates a configuration of the first specific example of the measurement head 22 in the seventh modified example. In the below-described description, the first specific example of the measurement head 22 in the seventh modified example is referred to as a "measurement head 22g-1".

As illustrated in FIG. 44, the measurement head 22g-1 is different from the measurement head 22 in that it includes an optical system 222g-1 instead of the optical system 222. Other feature of the measurement head 22g-1 may be the same as other feature of the measurement head 22. The optical system 222g-1 is different from the optical system 222 in that it includes a relay optical system 2229g-1. Other feature of optical system 222g-1 may be the same as other feature of optical system 222.

The relay optical system 2229g-1 is positioned on the optical path of the measurement light ML between the Galvano mirror 2228 and the measurement target object. The relay optical system 2229g-1 irradiates the measurement target object with the measurement light ML from Galvano mirror 2228.

In a case where the Galvano mirror 2228 changes the propagating direction of the measurement light ML, a deflected angle $\theta 2$ of the measurement light emitted from the relay optical system 2229g-1 is greater than a deflected angle $\theta 1$ of the measurement light emitted from the Galvano mirror 2228. In other words, in a case where the scanning mirror 22281 of the Galvano mirror 2228 rotates, the deflected angle $\theta 2$ of the measurement light emitted from the relay optical system 2229g-1 is greater than the deflected angle $\theta 1$ of the measurement light emitted from the Galvano mirror 2228. Namely, the relay optical system 2229g-1 is designed so that the deflected angle $\theta 2$ of the measurement light emitted from the relay optical system 2229g-1 is greater than the deflected angle $\theta 1$ of the measurement light emitted from the Galvano mirror 2228 in a case where the Galvano mirror 2228 changes the propagating direction of the measurement light ML. The relay optical system 2229g-1 is designed so that the deflected angle $\theta 2$ of the measurement light emitted from the relay optical system 2229g-1 is greater than the deflected angle $\theta 1$ of the measurement light emitted from the Galvano mirror 2228 in a case where the scanning mirror 22281 of the Galvano mirror 2228 rotates. In this case, the measurement range of the measurement head 22g-1 is larger, compared to a case where the measurement head 22g-1 does not include the relay optical system 2229g-1. As a result, it is more likely that at least N fiducial members FM, which are irradiated with the measurement light ML to calculate the movement error, is included in the measurement range of the measurement head 22g-1.

The relay optical system 2229g-1 may include a refractive optical element (so-called lens). In this case, the relay optical system 2229g-1 may be an afocal system. Namely, the relay optical system 2229g-1 may be an afocal system into which the measurement light ML, which is the collimated light, enters, and from which the measurement light ML, which is the collimated light, is emitted. An angular magnification of the relay optical system 2229g-1, which is the afocal system, may be a positive angular magnification, and may be an angular magnification that is equal to or greater than +1.1. Moreover, the angular magnification of the relay optical system 2229g-1, which is the afocal system, may be a negative angular magnification, and may be an angular magnification that is equal to or greater than -1.1. An absolute value of the angular magnification of the relay optical system 2229g-1 may be equal to or greater than 1.1, and may be equal to or greater than 2 or equal to or greater than 3.

The relay optical system 2229g-1, which includes the refractive optical element, may include a real image optical system that includes the refractive optical element and that forms a real image. For example, the relay optical system 2229g-1 may include an optical system that forms a real image of the scanning mirror 22281 of the Galvano mirror 2228. The relay optical system 2229g-1 may form the real image of the scanning mirror 22281 of the Galvano mirror 2228 in a space on an emission side of the relay optical system 2229g-1. In this case, an image plane on which the relay optical system 2229g-1 forms the real image may be considered to be optically conjugate to the scanning mirror 22281 of the Galvano mirror 2228. In this case, the relay optical system 2229g-1 may be considered to form the pivot point PV, which is positioned on the scanning mirror 22281 of the Galvano mirror 2228 described above, at a position at which the relay optical system 2229g-1 forms the real image. The relay optical system 2229g-1 may be considered to relay the pivot point PV positioned on the scanning mirror 22281 of the Galvano mirror 2228 described above. Therefore, in this case, the pivot point PV described above may be considered to be positioned at the position at which the relay optical system 2229g-1 forms the real image. Incidentally, the relay optical system 2229g-1 that forms the real image may be an optical system that forms an intermediate image within it.

The relay optical system 2229g-1, which includes the refractive optical element, may include a real image optical system that includes the refractive optical element and that forms a virtual image. For example, the relay optical system 2229g-1 may include an optical system that forms a virtual image of the scanning mirror 22281 of the Galvano mirror 2228. The relay optical system 2229g-1 may form the virtual image of the scanning mirror 22281 of the Galvano mirror 2228 in the relay optical system 2229g-1. In this case, an image plane on which the relay optical system 2229g-1 forms the virtual image may be considered to be optically conjugate with the scanning mirror 22281 of the Galvano mirror 2228. In this case, the relay optical system 2229g-1 may be considered to form the pivot point PV, which is positioned on the scanning mirror 22281 of the Galvano mirror 2228 described above, at a position at which the relay optical system 2229g-1 forms the virtual image. The relay optical system 2229g-1 may be considered to relay the pivot point PV positioned on the scanning mirror 22281 of the Galvano mirror 2228 described above. Therefore, in this case, the pivot point PV described above may be considered to be positioned at the position at which the relay optical system 2229g-1 forms the virtual image. Incidentally, the relay optical system 2229g-1 that forms the virtual image may be an optical system that forms an intermediate image outside it.

In a case where the relay optical system 2229g-1 forms the virtual image of the scanning mirror 22281, a part of a plurality of optical members of the relay optical system 2229g-1 is positioned on the measurement target object side of the virtual image, and other part of the plurality of optical members of the relay optical system 2229g-1 is positioned on the Galvano mirror 2228 side of the virtual image. Here, in a case where the optical member positioned on the Galvano mirror 2228 side of the virtual image is referred to as a first partial optical system and the optical member positioned on the measurement target side of the virtual image is referred to as a second partial optical system, the second partial optical system may include one or more meniscus-shaped lenses whose concave surfaces face toward the virtual image. Alternatively, the second partial optical system may be composed only of one or more meniscus-shaped lenses whose concave surfaces face toward the virtual image.

### (4-7-2) Second Specific Example of Measurement Head 22 in Seventh Modified Example

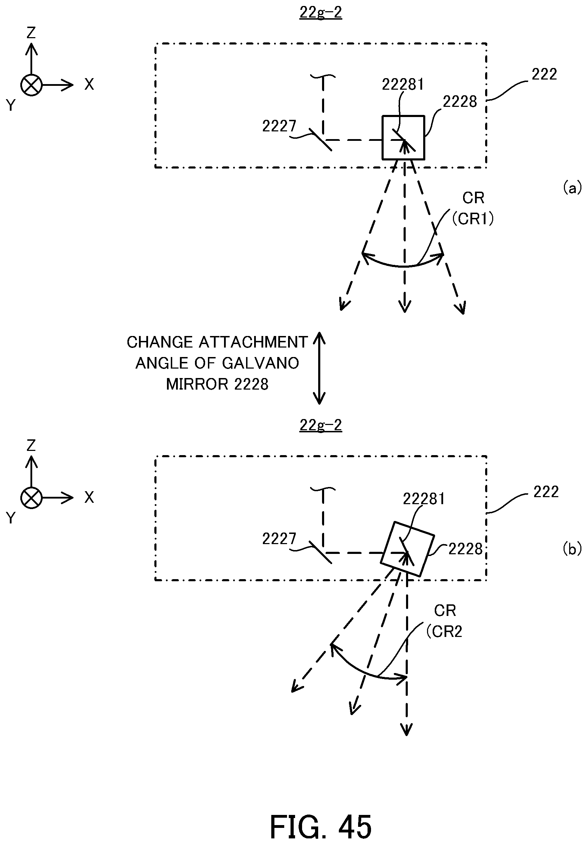

Next, with reference to each of FIG. 45(a) and FIG. 45(b), a second specific example of the measurement head 22 in the seventh modified example will be described. Each of FIG. 45(a) and FIG. 45(b) is a cross-sectional view that illustrates a configuration of the second specific example of the measurement head 22 in the seventh modified example. In the below-described description, the second specific example of the measurement head 22 in the seventh modified example is referred to as a "measurement head 22g-2".

As illustrated in FIG. 45(a) and FIG. 45(b), the measurement head 22g-2 is different from the measurement head 22 in that a changing range CR of the propagating direction of the measurement light ML emitted from the Galvano mirror 2228 is changeable. Other feature of the measurement head 22g-2 may be the same as those of the measurement head 22. Here, FIG. 45(a) illustrates a state in which the changing range of the propagating direction of the measurement light ML of the measurement head 22g-2 is set to a first range CR1, and FIG. 45(b) illustrates a state in which the changing range of the propagating direction of the measurement light ML of the measurement head 22g-2 is set to a second range CR2.

The changing range CR of the propagating direction of the measurement light ML emitted from the Galvano mirror 2228 may mean a range through which the measurement light ML, whose propagating direction is changed by the Galvano mirror 2228, passes. The changing range CR of the propagating direction of the measurement light ML emitted from the Galvano mirror 2228 may mean a maximum range of a range that can be occupied by the optical path of the measurement light, whose propagating direction is changed by the Galvano mirror 2228. For example, in a case where the changing range CR is set to the first range CR1 as illustrated in FIG. 45(a), the measurement light ML whose propagating direction is changed by the Galvano mirror 2228 passes through the first range CR1 and enters the measurement target object. On the other hand, in a case where the changing range CR is set to the second range CR2 that is different from the first range CR1 at least partially as illustrated in FIG. 45(a), the measurement light ML whose propagating direction is changed by the Galvano mirror 2228 passes through the second range CR2 and enters the measurement target object. Incidentally, the changing range CR of the propagating direction of the measurement light ML emitted from the Galvano mirror 2228 may be referred to as a directional orientation of the measurement light ML emitted from the Galvano mirror 2228.

As a result, it is more likely that at least N fiducial members FM, which should be irradiated with the measurement light ML to calculate the movement error, is included in the measurement range of the measurement head 22g-2, compared to a case where the changing range CR is not changeable. Conversely, the measurement head 22g-2 may change the changing range CR so that at least N fiducial members FM, which should be irradiated with the measurement light ML to calculate the movement error, is included in the measurement range of the measurement head 22g-2.

Especially in the seventh modified example, the measurement head 22g-2 may change the changing range CR of the propagating direction of the measurement light ML emitted from the Galvano mirror 2228 by changing an attachment angle of the Galvano mirror 2228, as illustrated in FIG. 45(a) and (b). The attachment angle of the Galvano mirror 2228 may mean the attachment angle of the Galvano mirror 2228 relative to a housing of the optical system 222. The attachment angle of the Galvano mirror 2228 may mean the attachment angle of the Galvano mirror 2228 relative to the propagating direction of the measurement light ML emitted from the mirror 2227.

In other words, the measurement head 22g-2 may change the changing range CR of the propagating direction of the measurement light ML emitted from the Galvano mirror 2228 by changing a posture of the Galvano mirror 2228, as illustrated in each of FIG. 45(a) and FIG. 45(b). The posture of the Galvano mirror 2228 may mean the posture of the Galvano mirror 2228 relative to the housing of the optical system 222. The attachment angle of the Galvano mirror 2228 may mean the posture of the Galvano mirror 2228 relative to the propagating direction of the measurement light ML emitted from the mirror 2227.

The measurement head 22g-2 may change the attachment angle of the Galvano mirror 2228 by using a driving system that is configured to move the Galvano mirror 2228. Alternatively, an operator of the processing system SYS may change the attachment angle of the Galvano mirror 2228. In a case where the operator changes the attachment angle of the Galvano mirror 2228, the Galvano mirror 2228 may be fixed with a fastening member such as a screw so that the attachment angle of the Galvano mirror 2228 does not change unintentionally after the operator has changed the attachment angle of the Galvano mirror 2228. When the operator intends to change the attachment angle of the Galvano mirror 2228, the Galvano mirror 2228 may be released from its fixed position.

Incidentally, in a case where the head driving system 12 is configured to rotate the measurement head 22 along at least one of the θX direction, the θY direction, and the θZ direction, the head driving system 12 may be regarded as the driving system that is configured to move the Galvano mirror 2228.

### (4-7-3) Third Specific Example of Measurement Head 22 in Seventh Modified Example

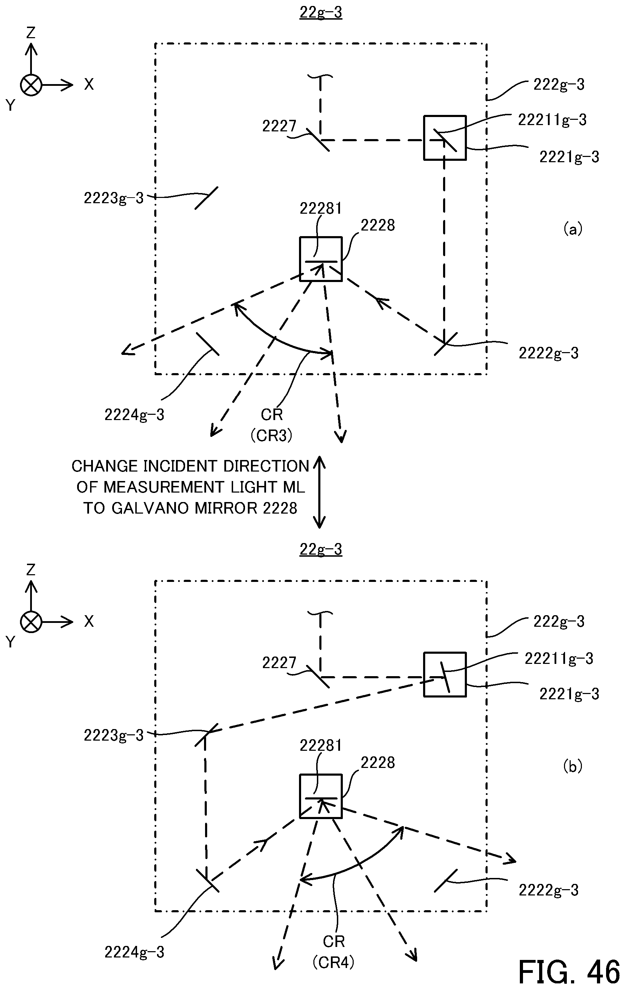

Next, with reference to each of FIG. 46(a) and FIG. 45(b), a third specific example of the measurement head 22 in seventh modified example will be described. Each of FIG. 46(a) and FIG. 46(b) is a cross-sectional view that illustrates a configuration of the third specific example of the measurement head 22 in the seventh modified example. In the below-described description, the third specific example of the measurement head 22 in the seventh modified example is referred to as a "measurement head 22g-3". Here, FIG. 46(a) illustrates a state in which the changing range of the propagating direction of the measurement light ML of the measurement head 22g-3 is set to a third range CR3, and FIG. 45(b) illustrates a state in which the changing range of the propagating direction of the measurement light ML of the measurement head 22g-3 is set to a fourth range CR4.

As illustrated in FIG. 46(a) and FIG. 46(b), the measurement head 22g-3 is different from the measurement head 22 in that the changing range CR of the propagating direction of the measurement light ML emitted from the Galvano mirror 2228 is changeable. Namely, the measurement head 22g-3 is configured to change the changing range CR of the propagating direction of the measurement light ML emitted from the Galvano mirror 2228, as with the measurement head 22g-2. The measurement head 22g-2 is different from the measurement head 22 in that it includes an optical system 222g-3 instead of the optical system 222 in order to change the changing range CR. Other feature of the measurement head 22g-3 may be the same as those of the measurement head 22.

The optical system 222g-3 is different from the optical system 222 in that it includes a Galvano mirror 2221g-3, a mirror 2222g-3, a mirror 2223g-3, and a mirror 2224g-3. Other feature of the optical system 222g-3 may be the same as other feature of the optical system 222.

The Galvano mirror 2221g-3 is positioned on the optical path of the measurement light ML between the mirror 2227 and the Galvano mirror 2228. The Galvano mirror 2221g-3 includes a scanning mirror 22211g-3. The scanning mirror 22211g-3 is a tilt angle variable mirror whose angle relative to the optical path of the measurement light ML entering the scanning mirror 22211g-3 is changeable. The scanning mirror 22211g-3 is configured to change its angle relative to the optical path of the measurement light ML entering the scanning mirror 22211g-3 by rotating around a rotational axis that intersects the optical path on an entrance side of the measurement light ML entering the scanning mirror 22211g-3.

The Galvano mirror 2221g-3 rotates the scanning mirror 22211g-3 to change a direction along which the measurement light ML is emitted from the Galvano mirror 2221g-3. Specifically, the Galvano mirror 2221g-3 rotates the scanning mirror 22211g-3 to change the direction along which the measurement light ML is emitted from the Galvano mirror 2221g-3 between a first direction along which the measurement light ML emitted from the Galvano mirror 2221g-3 is directed toward the mirror 2222g-3 and a second direction along which the measurement light ML emitted from Galvano mirror 2221G-3 is directed toward the mirror 2223g-3. Namely, the Galvano mirror 2221g-3 switches the optical path of the measurement light ML emitted from the Galvano mirror 2221g-3 between a first optical path along which the measurement light ML propagates toward the mirror 2222g-3 and a second optical path along which the measurement light ML propagates toward the mirror 2223g-3. Therefore, the Galvano mirror 2221g-3 may be referred to as an optical path switching element.

As illustrated in FIG. 46 (a), in a case where the direction along which the measurement light ML is emitted from the Galvano mirror 2221g-3 is set to the first direction along which the measurement light ML emitted from the Galvano mirror 2221g-3 is directed toward the mirror 2222g-3, the Galvano mirror 2221g-3 emits the measurement light ML toward the mirror 2222g-3. The mirror 2222g-3 is a reflective optical element that reflects the measurement light ML, which has entered the mirror 2222g-3, toward the Galvano mirror 2228. Especially, the mirror 2222g-3 reflects the measurement light ML, which has entered the mirror 2222g-3, so that the measurement light ML that has been reflected by mirror 2222g-3 enters the Galvano mirror 2228 from a first entrance direction. As a result, the measurement light ML enters the Galvano mirror 2228 from the first entrance direction. The Galvano mirror 2228 reflects the measurement light ML, which has entered the Galvano mirror 2228 from the first entrance direction, by using the scanning mirror 22281. In this case, the changing range CR of the propagating direction of the measurement light ML emitted from the Galvano mirror 2228 is set to the third range CR3 that is determined based on the first entrance direction.

On the other hand, as illustrated in FIG. 46 (b), in a case where the direction along which the measurement light ML is emitted from the Galvano mirror 2221g-3 is set to the second direction along which the measurement light ML emitted from the Galvano mirror 2221g-3 is directed toward the mirror 2223g-3, the Galvano mirror 2221g-3 emits the measurement light ML toward the mirror 2223g-3. The mirror 2223g-3 is a reflective optical element that reflects the measurement light ML, which has entered the mirror 2223g-3, toward the mirror 2224g-3. The mirror 2224g-3 is a reflective optical element that reflects the measurement light ML, which has entered the mirror 2224g-3, toward the Galvano mirror 2228. Especially, the mirror 2224g-3 reflects the measurement light ML, which has entered the mirror 2224g-3, so that the measurement light ML that has been reflected by mirror 2224g-3 enters the Galvano mirror 2228 from a second entrance direction that is different from the first entrance direction. As a result, the measurement light ML enters the Galvano mirror 2228 from the second entrance direction. The Galvano mirror 2228 reflects the measurement light ML, which has entered the Galvano mirror 2228 from the second entrance direction, by using the scanning mirror 22281. In this case, the changing range CR of the propagating direction of the measurement light ML emitted from the Galvano mirror 2228 is set to the fourth range CR4 that is determined based on the second entrance direction. Since the second entrance direction is different from the first entrance direction as described above, the fourth range CR4 determined based on the second incidence direction is typically at least partially different from the third range CR3 determined based on the first entrance direction.

Incidentally, as illustrated in FIG. 46(a), the optical path of the measurement light ML from the Galvano mirror 2221g-3 to the Galvano mirror 2228 (especially, the scanning mirror 22281) may be considered to be positioned between the optical path of the measurement light ML entering the Galvano mirror 2221g-3 and the optical path of the measurement light ML reflected by the Galvano mirror 2228 (especially, the scanning mirror 22281).

In this manner, the measurement head 22g-3 in the third modified example is configured to change the changing range CR of the propagating direction of the measurement light ML emitted from the Galvano mirror 2228, as with the measurement head 22g-2 in the second modified example. As a result, the measurement head 22g-3 in the third modified example can achieve an effect that is the same as an effect achievable by the measurement head 22g-2 in the second modified example.

Incidentally, in a case where the head driving system 12 is configured to rotate the measurement head 22 along at least one of the θX direction, the θY direction, and the θZ direction, the measurement head 22-g-3 may be rotated along at least one of the θX direction, the θY direction, and the θZ direction.

## (4-7-4) Fourth Specific Example of Measurement Head 22 in Seventh Modified Example

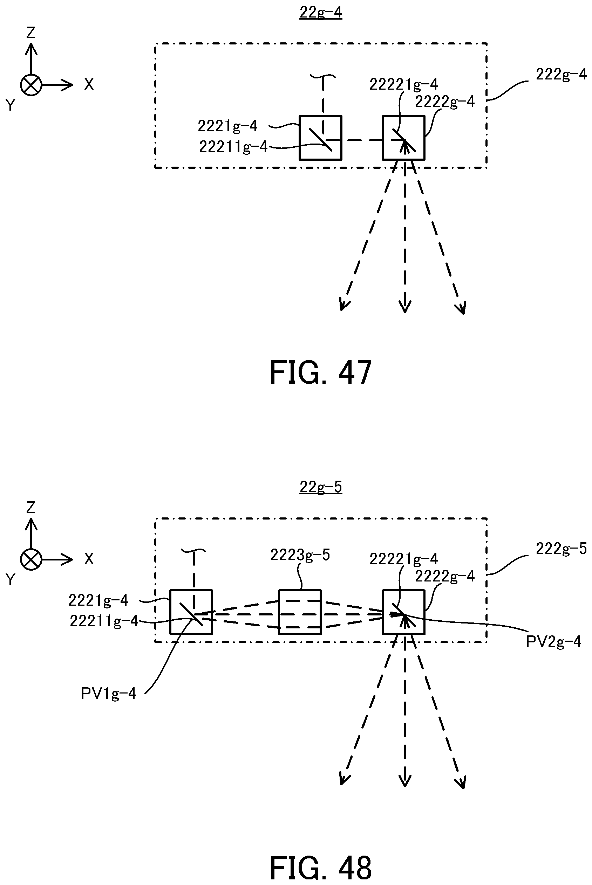

Next, with reference to FIG. 47, a fourth specific example of the measurement head 22 in the seventh modified example will be described. FIG. 47 is a cross-sectional view that illustrates a configuration of the fourth specific example of the measurement head 22 in the seventh modified example. In the below-described description, the fourth specific example of the measurement head 22 in the seventh modified example is referred to as a "measurement head 22g-4".

As illustrated in FIG. 47, the measurement head 22g-4 is different from the measurement head 22 in that it includes an optical system 222g-4 instead of the optical system 222. Other feature of the measurement head 22g-4 may be the same as other feature of the measurement head 22. The optical system 222g-4 is different from the optical system 222 in that it includes a Galvano mirror 2221g-4 and a Galvano mirror 2222g-4 instead of the Galvano mirror 2228. Other feature of the optical system 222g-4 may be the same as other feature of the optical system 222.

The measurement light ML that has been reflected by the non-illustrated mirror 2227 enters the Galvano mirror 2221g-4. The Galvano mirror 2221g-4 is configured to change the propagating direction of the measurement light ML emitted from the Galvano mirror 2221g-4 so as to change the irradiation position of the measurement light ML on the measurement target object. Therefore, the Galvano mirror 2221g-4 may be referred to as a direction change member. The Galvano mirror 2221g-4 may include a scanning mirror 22211g-4, which may be referred to as a reflection member. The scanning mirror 22211g-4 is a tilt angle variable mirror whose angle relative to the optical path of the measurement light ML entering the scanning mirror 22211g-4 is changeable. The scanning mirror 22211g-4 is configured to change its angle relative to the optical path of the measurement light ML entering the scanning mirror 22211g-4 by rotating around a rotational axis that intersects the optical path on an entrance side of the measurement light ML entering the scanning mirror 22211g-4. The scanning mirror 22211g-4 may change the propagating direction of the measurement light ML so as to change the irradiation position of the measurement light ML on the measurement target object along one of the X-axis and the Y-axis.

The measurement light ML emitted from the Galvano mirror 2221g-4 enters the Galvano mirror 2222g-4. The Galvano mirror 2222g-4 is configured to change the propagating direction of the measurement light ML emitted from the Galvano mirror 2222g-4 so as to change the irradiation position of the measurement light ML on the measurement target object. Therefore, the Galvano mirror 2222g-4 may be referred to as a direction change member. The Galvano mirror 2222g-4 may include a scanning mirror 22221g-4, which may be referred to as a reflection member. The scanning mirror 22221g-4 is a tilt angle variable mirror whose angle relative to the optical path of the measurement light ML entering the scanning mirror 22221g-4 is changeable. The scanning mirror 22221g-4 is configured to change its angle relative to the optical path of the measurement light ML entering the scanning mirror 22221g-4 by rotating around a rotational axis that intersects the optical path on an entrance side of the measurement light ML entering the scanning mirror 22221g-4. The scanning mirror 22221g-4 may change the propagating direction of the measurement light ML so as to change the irradiation position of the measurement light ML on the measurement target object along the other one of the X-axis and the Y-axis. In this case, the rotational axis of the scanning mirror 22221g-4 is in a skew relationship with the rotational axis of the scanning mirror 22211g-4. In this case, the pivot point PV may be positioned at a position between the scanning mirror 22211g-4 and the scanning mirror 22221g-4. Moreover, there may be the pivot point PV for each direction in which the irradiation position of the measurement light ML changes. In this case, the plurality of pivot points PV may be positioned on the rotational axis of the scanning mirror 22211g-4 and on the rotational axis of the scanning mirror 22221g-4.

Therefore, the optical system including the Galvano mirrors 2221g-4 and 2222g-4 may be configured to serve as the Galvano mirror 2228 described above. Therefore, the measurement head 22g-4 can irradiate the measurement target object with the measurement light ML and optically receive the returning light RL from the measurement target object, as with the measurement head 22 described above.

### (4-7-5) Fifth Specific Example of Measurement Head 22 in Seventh Modified Example

Next, with reference to FIG. 48, a fifth specific example of the measurement head 22 in the seventh modified example will be described. FIG. 48 is a cross-sectional view that illustrates a configuration of the fifth specific example of the measurement head 22 in the seventh modified example. In the below-described description, the fifth specific example of the measurement head 22 in the seventh modified example 7 is referred to as a "measurement head 22g-5".

As illustrated in FIG. 48, the measurement head 22g-5 is different from the measurement head 22g-4 described above in that it includes an optical system 222g-5 instead of the optical system 222g-4. Other feature of the measurement head 22g-5 may be the same as other feature of the measurement head 22g-4. The optical system 222g-5 is different from the optical system 222g-4 in that it includes a relay optical system 2223g-5. Other feature of the optical system 222g-5 may be the same as other feature of the optical system 222g-4.

The relay optical system 2223g-5 is positioned on the optical path of the measurement light ML between the Galvano mirror 2221g-4 and the Galvano mirror 2222g-4. The relay optical system 2223g-5 allows the Galvano mirror 2221g-4 to be optically conjugate to the Galvano mirror 2222g-4. Specifically, the relay optical system 2223g-5 allows the scanning mirror 22211g-4 of Galvano mirror 2221g-4 to be optically conjugate to the scanning mirror 22221g-4 of Galvano mirror 2222g-4. As a result, a pivot point PV1g-4 of the Galvano mirror 2221g-4 is optically conjugate to a pivot point PV2g-4 of the Galvano mirror 2222g-4. Therefore, even in a case where the Galvano mirror 2221g-4 changes the propagating direction of the measurement light ML emitted from the Galvano mirror 2221g-4, the pivot point PV2g-4 does not move on the scanning mirror 22221g-4 of the Galvano mirror 2222g-4. Namely, a position of the pivot point PV2g-4 does not change on the scanning mirror 22221g-4 of the Galvano mirror 2222g-4. Therefore, even in a case where the pivot point PV2g-4 is used as the fiducial point FP of the measurement head 22 described above, it is less likely that the measurement accuracy of the distance between the measurement head 22 and the measurement target object deteriorates.

Incidentally, in the above-described measurement head 22g-4, there is a possibility that the pivot point PV2g-4 moves on the scanning mirror 22221g-4 of the Galvano mirror 2222g-4. In this case, even though the actual distance between the measurement head 22 and the measurement target object does not change, there is a possibility that the calculated result of the distance between the measurement head 22 and the measurement target object varies due to the movement of the pivot point PV2g-4, which is used as the fiducial point FP of the measurement head 22g-4. In this case, the measurement control apparatus 24 may correct the calculated result of the distance between the measurement head 22 and the measurement target object based on the movement distance of the pivot point PV2g-4. As a result, even in a case where the pivot point PV2g-4 moves, the measurement control apparatus 24 can calculate the distance between the measurement head 22 and the measurement target object with high accuracy.

Moreover, in the fifth specific example, a magnification of the relay optical system 2223g-5 may be equal to 1.

### (4-7-6) Sixth Specific Example of Measurement Head 22 in Seventh Modified Example

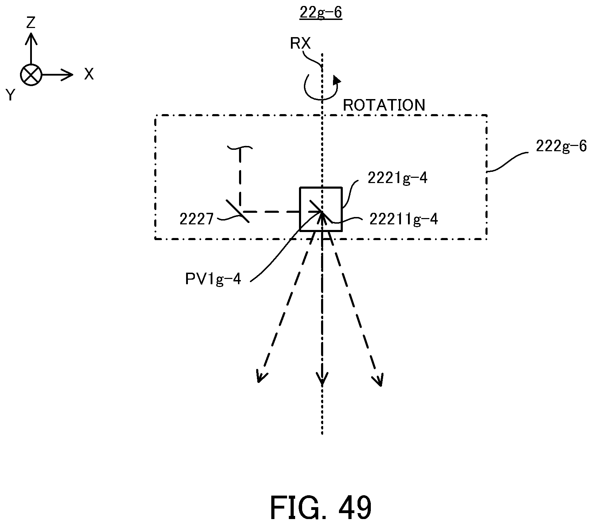

Next, with reference to FIG. 49, a sixth specific example of the measurement head 22 in the seventh modified example will be described. FIG. 49 is a cross-sectional view that illustrates a configuration of the sixth specific example of the measurement head 22 in the seventh modified example. In the below-described description, the sixth specific example of the measurement head 22 in the seventh modified example is referred to as a "measurement head 22g-6".

As illustrated in FIG. 49, the measurement head 22g-6 is different from the measurement head 22g-4 described above in that it includes an optical system 222g-6 instead of the optical system 222g-4. Other feature of the measurement head 22g-6 may be the same as other feature of the measurement head 22g-4. The optical system 222g-6 is different from the optical system 222g-4 in that it includes the Galvano mirror 2221g-4 but may not include the Galvano mirror 2222g-4. Other feature of the optical system 222g-6 may be the same as other feature of the optical system 222g-4.

Here, the scanning mirror 22211g-4 changes the propagating direction of the measurement light ML so as to change the irradiation position of the measurement light ML on the measurement target object along one of the X-axis and the Y-axis as described above. Therefore, the measurement head 22g-6, which does not include the Galvano mirror 2222g-4, cannot change the irradiation position of the measurement light ML on the measurement object along the other one of the X-axis and the Y-axis. Namely, the measurement head 22g-6 cannot scan the surface of the measurement target object with the measurement light ML two-dimensionally. Therefore, in a case where the measurement head 22g-6 is used, the processing control apparatus 16 may rotate the main spindle 111, to which the measurement head 22g-6 is attached, around the rotational axis RX under the control of the measurement control apparatus 24. As a result, even the measurement head 22g-6 can scan the surface of the measurement target object with the measurement light ML two-dimensionally.

Incidentally, the measurement head 22g-6 or the head housing 112 may include a rotational angle detection apparatus that detects a rotational angle of the measurement head 22g-6 relative to the head housing 112. Alternatively, in a case where the head housing 112 includes the rotational angle detection apparatus, the rotational angle detection apparatus may detect the rotational angle of the main spindle 111.

Incidentally, in a case where the main spindle 111 to which the measurement head 22g-6 is attached rotates around the rotational axis RX, it is preferable that the pivot point PV of the Galvano mirror 2221g-4 be positioned on the rotational axis RX of the main spindle 111. Even in the above-described example embodiment and each modified example, the pivot point PV of the Galvano mirror 2228 may be positioned on the rotational axis RX of the main spindle 111.

Incidentally, the processing system SYS in at least one of the first modified example to the sixth modified example may include the measurement head 22 described in the seventh modified example (for example, at least one of the measurement heads 22g-1 to 22g-6). Namely, the seventh modified example may be combined with at least one of the first modified example to the sixth modified example.

## (4-8) Eighth Modified Example

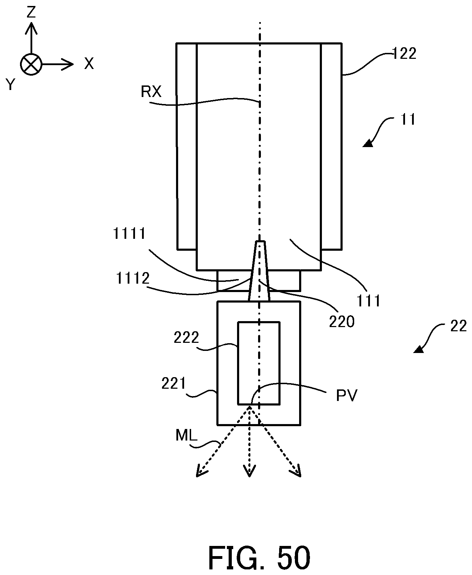

In an eighth modified example, as illustrated in FIG. 50, the pivot point PV of the Galvano mirror 2228 may be positioned at a position distant from the rotational axis RX of the main spindle 111. Specifically, the pivot point PV of the Galvano mirror 2228 may be positioned at a position distant from the rotational axis RX of the main spindle 111 in a direction intersecting the rotational axis RX. Even in this case, the fact remains that the Galvano mirror 2228 can change the propagating direction of the measurement light ML.

Here, in a case where the pivot point PV is positioned at the position distant from the rotational axis RX of the main spindle 111, the distance between the measurement head 22 and the measurement target object (for example, the fiducial member FM) changes due to a change of a posture of the main spindle 111. On the other hand, in a case where the pivot point PV is positioned on the rotational axis RX of the main spindle 111, the distance between the measurement head 22 and the measurement target object (for example, the fiducial member FM) does not change due to the change of the posture of the main spindle 111.

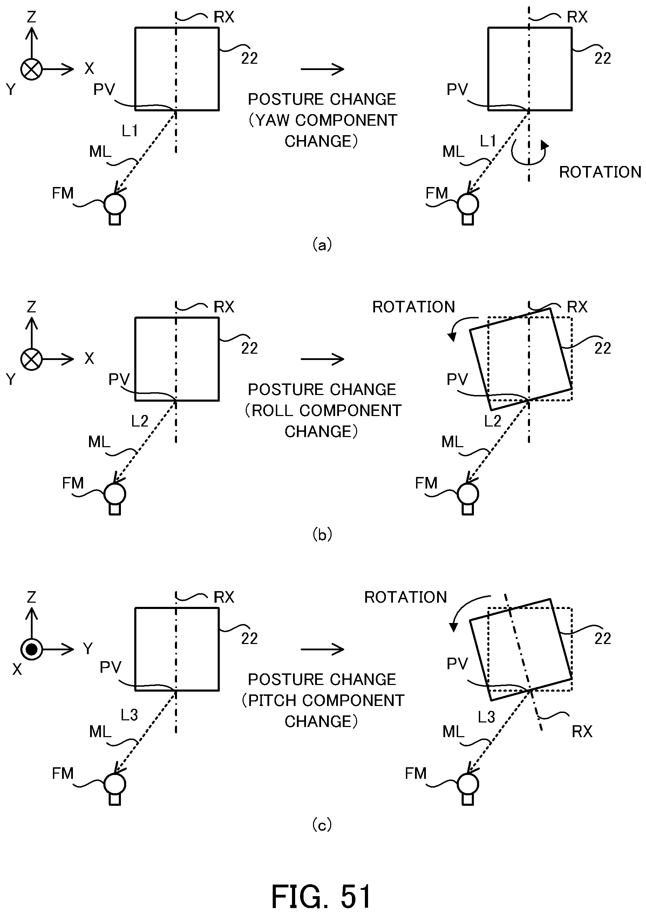

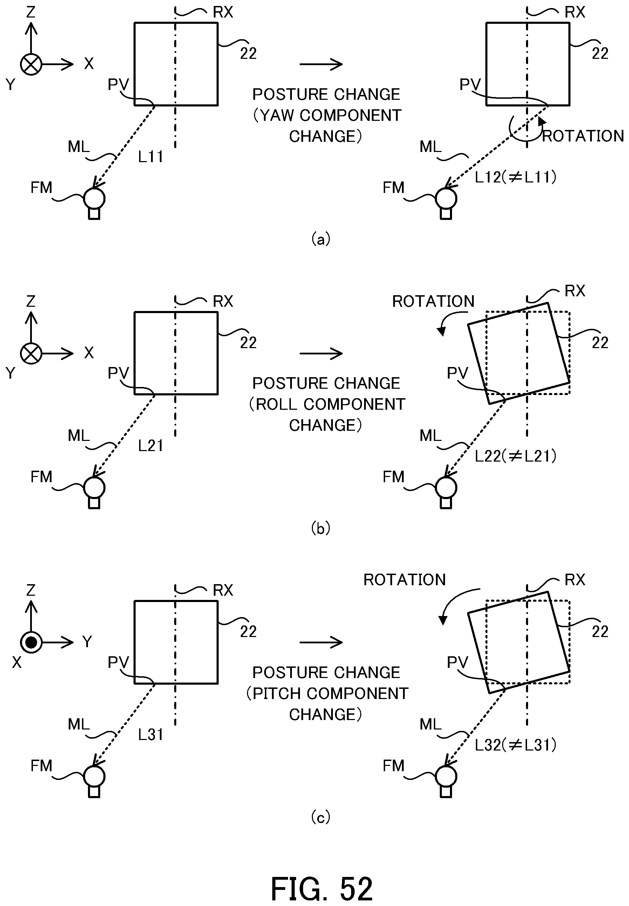

For example, as illustrated in FIG. 51(a), in a case where the posture of the main spindle 111 changes around the rotational axis (Z) in a situation where the pivot point PV is positioned on the rotational axis RX, the distance between the measurement head 22 and the fiducial member FM remains unchanged at a distance L1. As a result, the distance between the measurement head 22 and the fiducial member FM, which is calculated from the optical received result of the returning light RL of the fiducial member FM, also remains unchanged at the distance L1. On the other hand, for example, as illustrated in FIG. 52(a), in a case where the posture of the main spindle 111 changes in the same manner around the rotational axis (Z) in a situation where the pivot point PV is positioned at the position distant from the rotational axis RX, the distance between the measurement head 22 and the fiducial member FM changes from a distance L11 to a distance L12 that is different from the distance L11. As a result, the distance between the measurement head 22 and the fiducial member FM, which is calculated from the optical received result of the returning light RL of the fiducial member FM, also changes from the distance L11 to the distance L12.

For example, as illustrated in FIG. 51(b), in a case where the posture of the main spindle 111 changes around the rotational axis (Y) in a situation where the pivot point PV is positioned on the rotational axis RX, the distance between the measurement head 22 and the fiducial member FM remains unchanged at a distance L2. As a result, the distance between the measurement head 22 and the fiducial member FM, which is calculated from the optical received result of the returning light RL of the fiducial member FM, also remains unchanged at the distance L2. On the other hand, for example, as illustrated in FIG. 52(b), in a case where the posture of the main spindle 111 changes in the same manner around the rotational axis (Y) in a situation where the pivot point PV is positioned at the position distant from the rotational axis RX, the distance between the measurement head 22 and the fiducial member FM changes from a distance L21 to a distance L22 that is different from the distance L21. As a result, the distance between the measurement head 22 and the fiducial member FM, which is calculated from the optical received result of the returning light RL of the fiducial member FM, also changes from the distance L21 to the distance L22.

For example, as illustrated in FIG. 51(c), in a case where the posture of the main spindle 111 changes around the rotational axis (X) in a situation where the pivot point PV is positioned on the rotational axis RX, the distance between the measurement head 22 and the fiducial member FM remains unchanged at a distance L3. As a result, the distance between the measurement head 22 and the fiducial member FM, which is calculated from the optical received result of the returning light RL of the fiducial member FM, also remains unchanged at the distance L3. On the other hand, for example, as illustrated in FIG. 52(c), in a case where the posture of the main spindle 111 changes in the same manner around the rotational axis (X) in a situation where the pivot point PV is positioned at the position distant from the rotational axis RX, the distance between the measurement head 22 and the fiducial member FM changes from a distance L31 to a distance L32 that is different from the distance L31. As a result, the distance between the measurement head 22 and the fiducial member FM, which is calculated from the optical received result of the returning light RL of the fiducial member FM, also changes from the distance L31 to the distance L32.

Therefore, in a case where the pivot point PV is positioned at the position distant from the rotational axis RX of the main spindle 111, the measurement control apparatus 24 may calculate the posture of the main spindle 111 based on the distance between the measurement head 22 and the fiducial member FM. As one example, the measurement control apparatus 24 may repeat an operation for changing the posture of the main spindle 111 until the pivot point PV is positioned at at least three different positions in the machine coordinate system. The measurement head 22 may irradiate at least one fiducial member FM with the measurement light ML and optically receive the returning light RL from at least one fiducial member FM each time the posture of the main spindle 111 is changed. Then, the measurement head 22 may calculate the distance from the measurement head 22 to at least one fiducial member FM. Then, the measurement control apparatus 24 may calculate the posture of the main spindle 111 based on the calculated distance. For example, the measurement control apparatus 24 may calculate at least one of the posture of the main spindle 111 around the rotational axis (X), the posture of the main spindle 111 around the rotational axis (Y), and the posture of the main spindle 111 around the rotational axis (Z) based on the calculated distance.

Furthermore, the measurement system 2 may repeat the above-described operation for calculating the posture of the main spindle 111 while moving the processing head 11 translationally. As a result, the measurement control apparatus 24 may calculate a change of the posture of the spindle 111 occurring in the translational movement of the processing head 11. Information related to the change of the posture of the main spindle 111 occurring in the translational movement of the processing head 11 may be used as the information related to the movement error occurring in the translational movement of the processing head 11 described above. As a result, the processing head 11 can move translationally without unintentionally changing the posture of the main spindle 111.

Incidentally, even in the processing system SYS in at least one of the first modified example to the seventh modified example described above, the pivot point PV of the Galvano mirror 2228 may be positioned at a position distant from the rotational axis RX of the main spindle 111. Namely, the eighth modified example may be combined with at least one of the first modified example to the seventh modified example.

### (4-9) Ninth Modified Example

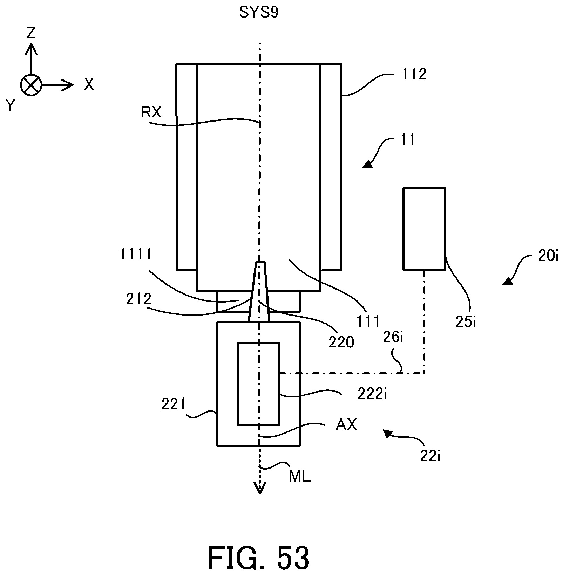

Next, the processing system SYS in a ninth modified example will be described. Incidentally, in the below-described description, the processing system SYS in the ninth modified example is referred to as a processing system SYS9 for convenience of description. The processing system SYS9 in the ninth modified example is different from the processing system SYS described above in that it includes a measurement apparatus 20i instead of the measurement apparatus 20. Other feature of the processing system SYS9 may be the same as other feature of the processing system SYS. Next, with reference to FIG. 53, the measurement apparatus 20i in the ninth modified example will be described. FIG. 53 is a cross-sectional view that illustrates a configuration of the measurement apparatus 20i in the ninth modified example.

As illustrated in FIG. 53, the measurement apparatus 20i is different from the measurement apparatus 20 in that it includes a measurement head 22i instead of the measurement head 22. Furthermore, the measurement apparatus 20i is different from the measurement apparatus 20 in that it includes an optical detection apparatus 25i. Other feature of the measurement apparatus 20i may be the same as other feature of the measurement apparatus 20.

The measurement head 22i is different from the measurement head 22 in that it includes an optical system 222i instead of the optical system 222. Other feature of the measurement head 22i may be the same as other feature of the measurement head 22. The optical system 222i is different from the optical system 222 in that it may not include the optical detector (for example, the optical detector 2226 described above) that detects (namely, optically receives to detect, the same applies in the ninth modified example) the returning light RL and the reference light RB. Other feature of the optical system 222i may be the same as other feature of the optical system 222.

The optical detection apparatus 25i includes an optical detector (for example, the optical detector 2226 described above) that detects the returning light RL and the reference light RB. Namely, the measurement apparatus 20i in the ninth modified example is different from the measurement apparatus 20 described above, in which the optical detector that detects the returning light RL and the reference light RB is positioned inside the measurement head 22i, in that the optical detector that detects the returning light RL and the reference light RB is positioned outside the measurement head 22i.

The measurement head 22i (especially, the optical system 222i) and the optical detection apparatus 25i are optically connected through an optical transmission member 26i. An optical fiber and a light pipe are examples of the optical transmission member 26i.

The returning light RL from the measurement target object may be transmitted from the measurement head 22i to the optical detection apparatus 25i through the optical transmission member 26i. The reference light RB may also be transmitted from the measurement head 22i to the optical detection apparatus 25i through the optical transmission member 26i. The optical transmission apparatus 25i may detect the interfering light generated by the interference between the returning light RL, which enters the optical transmission apparatus 25i through the optical transmission member 26i, and the reference light RB, which enters the optical transmission apparatus 25i through the optical transmission member 26i. Namely, the returning light RL and the reference light RB interfere with each other in the optical transmission apparatus 25i, and the optical transmission apparatus 25i may detect the interfering light generated by this interference.

Alternatively, the returning light RL and the reference light RB may interfere with each other in the measurement head 22i (specifically, in the optical system 222i). The interfering light generated by this interference may be transmitted from the measurement head 22i to the optical detection apparatus 25i through the optical transmission member 26i. The optical transmission apparatus 25i may detect the interfering light entering the optical transmission apparatus 25i through the optical transmission member 26i.

In any case, the optical detection apparatus 25i, which is positioned outside the measurement head 22i, can detect (optically receive) the interfering light that is generated by the interference between the returning light RL and the reference light RB. As a result, the measurement apparatus 20i can perform an operation that is the same as an operation performed the measurement apparatus 20 described above. Furthermore, in the ninth modified example, since the detector that detects the returning light RL and the reference light RB are positioned outside the measurement head 22i, a size of the measurement head 22i is reducible.

Furthermore, since the size of the measurement head 22i is reducible, the measurement head 22i can move closer to the workpiece W. Alternatively, the measurement head 22i can move into a narrower space around the workpiece W. As a result, the above-described movement error can be calculated in a wider space around the workpiece W.

Next, a specific example of the measurement apparatus 20i, in which the detector that detects the returning light RL and the reference light RB is positioned outside the measurement head 22i, will be described.

### (4-9-1) First Specific Example of Measurement Apparatus 20i

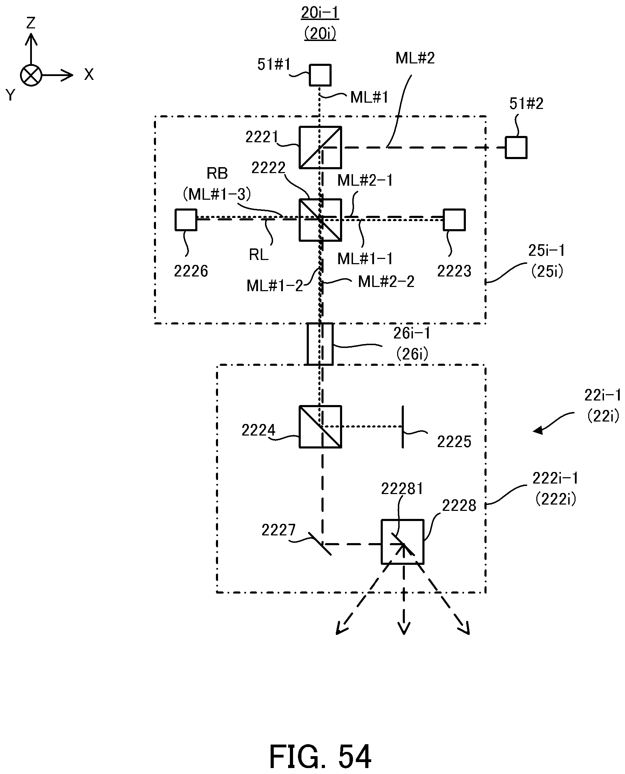

First, with reference to FIG. 54, a first specific example of the measurement apparatus 20i in the ninth modified example will be described. FIG. 54 is a cross-sectional view that illustrates a configuration of the first specific example of the measurement apparatus 20i in the ninth modified example. In the below-described description, the first specific example of the measurement apparatus 20i in the ninth modified example is referred to as a measurement apparatus 20i-1.

As illustrated in FIG. 54, the measurement apparatus 20i-1 includes a measurement head 22i-1, which is a first specific example of the measurement head 22i, and an optical detection apparatus 25i-1, which is a first specific example of the optical detection apparatus 25i. The measurement head 22i-1 includes an optical system 222i-1, which is a first specific example of the optical system 222i. The measurement head 22i-1 (especially, the optical system 222i-1) is optically connected to the optical detection apparatus 25i-1 through an optical transmission member 26i-1, which is a first specific example of the optical transmission member 26i.

The optical system 222i-1 includes the beam splitter 2224, the mirror 2225, the mirror 2227, and the Galvano mirror 2228 that are included in the optical system 222 described above. On the other hand, the optical detection apparatus 25i-1 includes the beam splitter 2221, the beam splitter 2222, the optical detector 2223, and the optical detector 2226 that are included in the optical system 222 described above.

In a case where, each of the measurement lights ML#1-2 and ML#2-2 emitted from the beam splitter 2222 are transmitted from the optical detection apparatus 25i-1 to the measurement head 22i-1 (especially, the optical system 222i-1) through the optical transmission member 26i-1. Each of the measurement lights ML#1-2 and ML#2-2, which has been transmitted to the optical system 222i-1 through the optical transmission member 26i-1, enters the beam splitter 2224. As a result, the mirror 2225 can generate the reference light RB by reflecting the measurement light ML#1-2 that has entered the mirror 2225 through the beam splitter 2224. Furthermore, the measurement target object is irradiated with the measurement light ML#2-2 that has entered the beam splitter 2224 through the mirror 2227 and the Galvano mirror 2228.

The returning light from the measurement target object enters the beam splitter 2224 through the Galvano mirror 2228 and the mirror 2227. The reference light RB generated by the mirror 2225 also enters the beam splitter 2224. Each of the returning light RL and the reference light RB emitted from the beam splitter 2224 is transmitted from the measurement head 22i-1 (especially, the optical system 222i-1) to the optical detection apparatus 25i-1 through the optical transmission member 26i-1. The returning light RL and the reference light RB, which has been transmitted to the optical detection apparatus 25i-1 through the optical transmission member 26i-1, enters the optical detector 2226 through the beam splitter 2222. As a result, the optical detector 2226 detects the interfering light generated by the interference between the returning light RL and the reference light RB.

### (4-9-2) Second Specific Example of Measurement Apparatus 20i

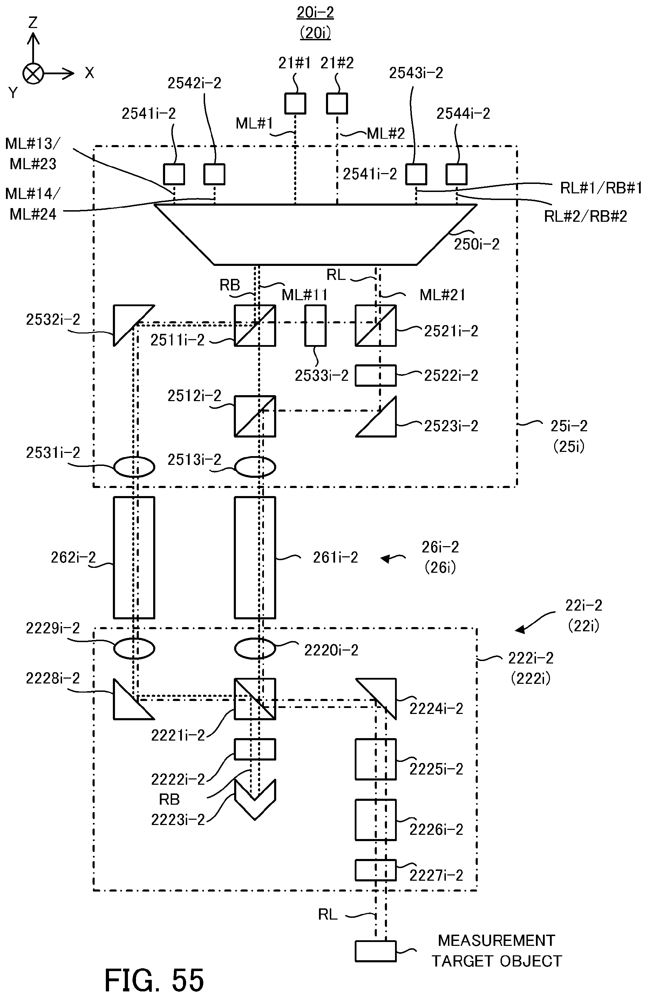

Next, with reference to FIG. 55, a second specific example of the measurement apparatus 20i in the ninth modified example will be described. FIG. 55 is a cross-sectional view that illustrates a configuration of the second specific example of the measurement apparatus 20i in the ninth modified example. In the below-described description, the second specific example of the measurement apparatus 20i in the ninth modified example is referred to as a measurement apparatus 20i-2.

As illustrated in FIG. 55, the measurement apparatus 20i-2 includes a measurement head 22i-2, which is a second specific example of the measurement head 22i, and an optical detection apparatus 25i-2, which is a second specific example of the optical detection apparatus 25i. The measurement head 22i-2 includes an optical system 222i-2, which is a second specific example of the optical system 222i. The measurement head 22i-2 (especially, the optical system 222i-2) is optically connected to the optical detection apparatus 25i-2 through an optical transmission member 26i-2, which is a second specific example of the optical transmission member 26i.

The optical detection apparatus 25i-2 includes a prism unit 250i-2, a polarization beam splitter 2511i-2, a polarization beam splitter 2512i-2, a lens 2513i-2, a polarization beam splitter 2521i-2, a 1/2 wave plate 2522i-2, a mirror 2523i-2, a lens 25311-2, a mirror 2532i-2, a 1/2 wave plate 2533i-2, an optical detector 25411-2, an optical detector 2542i-2, an optical detector 2543i-2, and an optical detector 2544i-2. The optical system 222i-2 includes a lens 2220i-2, a polarization beam splitter 2221i-2, a 1/4 wave plate 2222i-2, a retro-reflector 2223i-2, a polarization beam splitter 2224i-2, a Galvano mirror 2225i-2, a condensing optical system 2226i-2, a 1/4 wave plate 2227i-2, a mirror 2228i-2, and a lens 2229i-2.

The measurement light source 21#1 emits the measurement light ML#1 that is s-polarized light. The measurement light source 21#2 emits the measurement light ML#2 that is s-polarized light. The measurement lights ML#1 and ML#2 emitted by the measurement light sources 21#1 and 21#2, respectively, enter the prism unit 250i-2. The prism unit 250i-2 is a known prism unit disclosed in JP2015-072137A. Therefore, a detailed description of the prism unit 250i-2 is omitted.

The prism unit 250i-2 splits the measurement light ML#1 into measurement light ML#11 that is p-polarized light and measurement light ML#12 that is s-polarized light. The prism unit 250i-2 splits the measurement light ML#2 into measurement light ML#21 that is p-polarized light and measurement light ML#22 that is s-polarized light. Incidentally, in the second specific example, the p-polarized light and the s-polarized light may be defined with respect to a non-illustrated polarization split surface in the prism unit 250i-2. Here, the p-polarized light may be referred to as a first polarized light, and the s-polarized light may be referred to as a second polarized light that is orthogonal to the first polarized light. The prism unit 250i-2 emits the measurement light ML#11 toward the polarization beam splitter 2511i-2. The prism unit 250i-2 emits the measurement light ML#21 toward the polarization beam splitter 2521i-2.

The measurement light ML#11, which has been emitted from the prism unit 250i-2, passes through the polarization beam splitter 2511i-2, then passes through the polarization beam splitter 2512i-2, and then enters a polarization maintaining optical fiber 261i-2 of the optical transmission member 26i-2 through the lens 2513i-2. Incidentally, the lens 2513i-2 is an optical element for inputting the measurement light ML#11, which is the collimated light, into the polarization maintaining optical fiber 2611-2. The lens 2513i-2 condenses the measurement light ML#11 at an input end surface of the polarization maintaining optical fiber 261i-2, especially in a core of the polarization maintaining optical fiber 2611-2. As a result, the measurement light ML#11 is transmitted from the optical detection apparatus 25i-2 to the measurement head 22i-2 (especially, the optical system 222i-2) through the polarization maintaining optical fiber 2611-2.

The measurement light ML#11, which has been transmitted from the optical detection apparatus 25i-2 to the measurement head 22i-2, enters the polarization beam splitter 2221i-2 through the lens 2220i-2. Incidentally, the lens 2220i-2 is an optical element that converts the measurement light ML#11, which has been transmitted through the polarization maintaining optical fiber 2611-2, back into the collimated light. The measurement light ML#11, which has entered the polarization beam splitter 2221i-2, passes through the polarization beam splitter 2221i-2 and then passes through the 1/4-wave plate 2222i-2. As a result, the measurement light ML#11, which is circular polarized light, is emitted from the 1/4 wave plate 2222i-2. The measurement light ML#11, which has been emitted from the 1/4 wave plate 2222i-2, is reflected by the retro-reflector 2223i-2. The measurement light ML#11, which has been reflected by the retro-reflector 2223i-2, passes through the 1/4-wave plate 2222i-2 as the reference light RB. As a result, the 1/4-wave plate 2222i-2 emits the reference light RB that is the s-polarized light. The reference light RB, which has been emitted from the 1/4-wave plate 2222i-2, is reflected by the polarization beam splitter 2221i-2, and then reflected by the mirror 2228i-2, and then enters a polarization maintaining optical fiber 262i-2 of the optical transmission member 26i-2 through the lens 2229i-2. Incidentally, the lens 2229i-2 is an optical element for inputting the reference light RB, which is the collimated light, into the polarization maintaining optical fiber 262i-2. The lens 2229i-2 condenses the reference light RB at an input end surface of the polarization maintaining optical fiber 262i-2, especially in a core of the polarization maintaining optical fiber 262i-2. As a result, the reference light RB is transmitted from the measurement head 22i-2 (especially, the optical system 222i-2) to the optical detection apparatus 25i-2 through the polarization maintaining fiber 262i-2.

The reference light RB, which has been transmitted from the measurement head 22i-2 to the optical detection apparatus 25i-2, enters the mirror 2532i-2 through the lens 2531i-2. Incidentally, the lens 2531i-2 is an optical element that converts the reference light RB, which has been transmitted through the polarization maintaining optical fiber 262i-2, back into the collimated light. The reference light RB, which has entered the mirror 2532i-2, is reflected by the mirror 2532i-2, and then reflected by the polarization beam splitter 2511i-2, and then enters the prism unit 250i-2.

On the other hand, the measurement light ML#21, which has been emitted from the prism unit 250i-2, passes through the polarization beam splitter 2521i-2 and then passes through the 1/2 wave plate 2522i-2. As a result, the measurement light ML#21, which is the s-polarized light, is emitted from the 1/2 wave plate 2522i-2. The measurement light ML#21, which has been emitted from the 1/2 wave plate 2522i-2, is reflected by the mirror 2523i-2, then is reflected by the polarization beam splitter 2512i-2, and then enters the polarization maintaining fiber 261i-2 of the optical transmission member 26i-2 through the lens 2513i-2. Incidentally, the lens 2513i-2 is an optical element for inputting the measurement light ML#21, which is the collimated light, into the polarization maintaining optical fiber 261i-2. The lens 2513i-2 condenses the measurement light ML#21 at the input end face of the polarization maintaining optical fiber 261i-2, especially in the core of the polarization maintaining optical fiber 261i-2. As a result, the measurement light ML#21 from the lens 2513i-2 is transmitted from the optical detection apparatus 25i-2 to the measurement head 22i-2 (especially, the optical system 222i-2) through the polarization maintaining optical fiber 261i-2. Namely, the measurement apparatus 20i-2 transmits the measurement lights ML#11 and ML#21 from the optical detection apparatus 25i-2 to the measurement head 22i-2 (especially, the optical system 222i-2) through the same polarization maintaining optical fiber 261i-2.

The measurement light ML#21, which has been transmitted from the optical detection apparatus 25i-2 to the measurement head 22i-2, enters the polarization beam splitter 2221i-2 through the lens 2220i-2. Incidentally, the lens 2220i-2 is an optical element that converts the measurement light ML#21, which has been transmitted through the polarization maintaining optical fiber 261i-2, back into the collimated light. The measurement light ML#21, which has entered the polarization beam splitter 2221i-2, is reflected by the polarization beam splitter 2221i-2, then is reflected by the mirror 2224i-2, and enters the Galvano mirror 2225i-2. The Galvano mirror 2225i-2 has a configuration that is the same as a configuration of the Galvano mirror 2228 described above. The Galvano mirror 2225i-2 changes the propagating direction of the measurement light ML#21 to change the irradiation position of the measurement light ML#21 on the measurement target object along each of the X-axis and the Y-axis. The measurement target object is irradiated with the measurement light ML#21, which has been emitted from the Galvano mirror 2225i-2, through the condensing optical system 2226i-2 and the 1/4-wave plate 2227i-2. Therefore, the measurement target object is irradiated with the measurement light ML#21 that is the circular polarized light. The measurement light ML#21, which has been reflected by the measurement target object, passes through the 1/4 wave plate 2227i-2 as the returning light RL. As a result, the returning light RL, which is the p-polarized light, is emitted from the 1/4 wave plate 2227i-2. The returning light RL, which has been emitted from the 1/4 wave plate 2227i-2, enters the mirror 2224i-2 through the condensing optical system 2226i-2 and the Galvano mirror 2225i-2, then is reflected by the mirror 2224i-2, then passes through the polarization beam splitter 2221i-2, then is reflected by the mirror 2228i-2, and then enters the polarization maintaining fiber 262i-2 of optical transmission member 26i-2 through lens 2229i-2. Incidentally, the lens 2229i-2 is an optical element for inputting the returning light RL, which is the collimated light, into the polarization maintaining optical fiber 262i-2. The lens 2229i-2 condenses the returning light RL at the input end surface of the polarization maintaining optical fiber 262i-2, especially in the core of the polarization maintaining optical fiber 262i-2. As a result, the returning light RL is transmitted from the measurement head 22i-2 (especially, the optical system 222i-2) to the optical detection apparatus 25i-2 through the polarization maintaining optical fiber 262i-2. Namely, the measurement apparatus 20i-2 transmits the reference light RB and the returning light RL from the measurement head 22i-2 (especially, the optical system 222i-2) to the optical detection apparatus 25i-2 through the same polarization maintaining optical fiber 262i-2.

The returning light RL, which has been transmitted from the measurement head 22i-2 to the optical detection apparatus 25i-2, enters the mirror 2532i-2 through the lens 2531i-2. The lens 2531i-2 is an optical element that converts the returning light RL, which has been transmitted through the polarization maintaining optical fiber 262i-2, back into the collimated light. The returning light RL, which has entered the mirror 2532i-2, is reflected by the mirror 2532i-2, then passes through the polarization beam splitter 2511i-2, and then passes through the 1/2 wave plate 2533i-2. As a result, the returning light RL, which is the s-polarized light, is emitted from the 1/2 wave plate 2533i-2. The returning light RL, which has been emitted from the 1/2 wave plate 2533i-2, is reflected by the polarization beam splitter 2521i-2 and enters the prism unit 250i-2.

The prism unit 250i-2 splits the reference light RB, which has entered the prism unit 250i-2, into two reference lights RB#1 and RB#2. The prism unit 250i-2 splits the returning light RL, which has entered the prism unit 250i-2, into two returning lights RL#1 and RL#2. The reference beam RB#1 and the return beam RL#1 enter the optical detector 2543i-3. As a result, the optical detector 2543i-3 detects interfering light generated by an interference between the reference beam RB#1 and the return beam RL#1. The reference beam RB#2 and the return beam RL#2 enter the optical detector 2544i-3. As a result, the optical detector 2544i-2 detects interfering light generated by an interference between the reference light RB#2 and the returning light RL#2.

On the other hand, the prism unit 250i-2 splits the measurement light ML#12 into two measurement lights ML#13 and ML#14. The prism unit 250i-2 splits the measurement light ML#22 into two measurement lights ML#23 and ML#24. The measurement lights ML#13 and ML#23 enter the optical detector 2541i-2. As a result, the optical detector 2541i-3 detects interfering light generated by an interference between measurement light ML#13 and the measurement light ML#23. The measurement lights ML#14 and ML#24 enter the optical detector 2542i-2. As a result, the optical detector 2542i-2 detects interfering light generated by an interference between the measurement light ML#14 and the measurement light ML#24.

Here, the position (a position along the time axis) of the pulsed light of the interfering light detected by each of the optical detectors 2543i-2 and 2544i-2 changes depending on the positional relationship between the measurement head 22i-2 and the measurement target object. This is because the interfering light detected by each of the optical detectors 2543i-2 and 2544i-2 is the interfering light generated by the interference between the returning light RL, which propagates from the measurement target object to each of the optical detectors 2543i-2 and 2544i-2, and the reference light RB, which propagates to each of the optical detectors 2543i-2 and 2544i-2 without passing through the measurement target object. On the other hand, the position (the position on the time axis) of the pulsed light of the interfering light detected by each of the optical detectors 2541i-2 and 2542i-2 does not change depending on the positional relationship between the measurement head 22i-2 and the measurement target object (namely, substantially, the positional relationship between the processing head 11 and the measurement target object). Therefore, the measurement system 2 including the measurement head 22i-2 can calculate the distance between the measurement head 22i-2 and the measurement target object based on the difference in time between the pulse light of the interfering light detected by each of the optical detectors 2543i-2 and 2544i-2 and the pulse light of the interfering light detected by each of the optical detectors 2541i-2 and 2542i-2, as with the measurement head 22 described above.

Here, as described above, the measurement apparatus 20i-2 transmits the measurement lights ML#11 and ML#21 from the optical detection apparatus 25i-2 to the measurement head 22i-2 (especially, the optical system 222i-2) through the same polarization maintaining optical fiber 261i-2. As a result, an influence of external disturbances on the measurement light ML#11 is the same as an influence of external disturbances on the measurement light ML#12. As a result, a noise included in the detected result by each of the optical detectors 2543i-2 and 2544i-2 is reduced, compared to a case where the measurement light ML#11 and ML#21 are transmitted through two different polarization maintaining optical fibers, respectively. Therefore, the measurement system 2 including the measurement apparatus 20i-2 can calculate the distance between the measurement head 22i-2 and the measurement target object with higher accuracy. As a result, the measurement system 2 can calculate the positions of each of the measurement head 22i-2 and the measurement target object with higher accuracy.

Furthermore, as described above, the measurement apparatus 20i-2 transmits the reference light RB and the returning light RL from the measurement head 22i-2 (especially, the optical system 222i-2) to the optical detection apparatus 25i-2 through the same polarization maintaining optical fiber 262i-2. As a result, an influence of external disturbances on the reference light RB is the same as an influence of external disturbances on the returning light RL. As a result, a noise included in the detected result by each of the optical detectors 2543i-2 and 2544i-2 is reduced, compared to a case where the reference light RB and the returning light RL are transmitted through two different polarization maintaining optical fibers, respectively. Therefore, the measurement system 2 including the measurement apparatus 20i-2 can calculate the distance between the measurement head 22i-2 and the measurement target object with higher accuracy. As a result, the measurement system 2 can calculate the positions of each of the measurement head 22i-2 and the measurement target object with higher accuracy.

## (4-9-3) Third Specific Example of Measurement Apparatus 20i

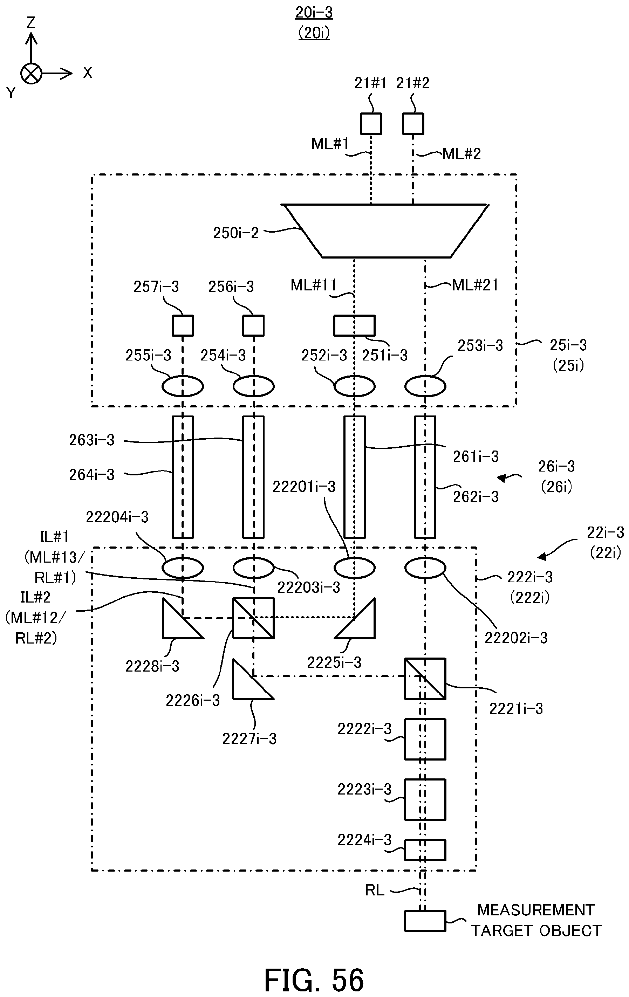

Next, with reference to FIG. 56, a third specific example of the measurement apparatus 20i in the ninth modified example will be described. FIG. 56 is a cross-sectional view that illustrates a configuration of the third specific example of the measurement apparatus 20i in the ninth modified example. Incidentally, in the below-described description, the third specific example of the measurement apparatus 20i in the ninth modified example is referred to as a measurement apparatus 20i-3.

As illustrated in FIG. 56, the measurement apparatus 20i-3 includes the measurement head 22i-3, which is a third specific example of the measurement head 22i, and an optical detection apparatus 25i-3, which is a third specific example of the optical detection apparatus 25i. The measurement head 22i-3 includes an optical system 222i-3, which is a third specific example of the optical system 222i. The measurement head 22i-3 (especially, the optical system 222i-3) is optically connected to the optical detection apparatus 25i-3 through an optical transmission member 26i-3, which is a third specific example of the optical transmission member 26i.

The optical detection apparatus 25i-3 includes a prism unit 250i-2, a 1/2 wave plate 251i-3, a lens 252i-3, a lens 253i-3, a lens 254i-3, a lens 255i-3, an optical detector 256i-3, and an optical detector 257i-3. The optical system 222i-3 includes a lens 22201i-3, a lens 22202i-3, a lens 22203i-3, a lens 22204i-3, a polarization beam splitter 2221i-3, a Galvano mirror 2222i-3, a condensing optical system 2223i-3, a 1/4 wave plate 2224i-3, a mirror 2225i-3, a half mirror 2226i-3, a mirror 2227i-3, and a mirror 2228i-3.

The prism unit 250i-2 of the optical detection apparatus 25i-3 illustrated in FIG. 56 emits the measurement light ML#11 that is the p-polarized light and emits the measurement light ML#21 that is the p-polarized light, as with the prism unit 250i-2 of the optical detection apparatus 25i-2 illustrated in FIG. 55. Incidentally, even in the third specific example, the p-polarized light and the s-polarized light may be defined with respect to the non-illustrated polarization split surface in the prism unit 250i-2. Here, the p-polarized light may be referred to as the first polarized light, and the s-polarized light may be referred to as the second polarized light that is orthogonal to the first polarized light.

The measurement light ML#11, which has been emitted from the prism unit 250i-2, enters the 1/2 wave plate 251i-3. As a result, the measurement light ML#11, which is the s-polarized light, is emitted from the 1/2 wave plate 251i-3. The measurement light ML#11, which has been emitted from the 1/2 wave plate 251i-3, enters a polarization maintaining fiber 261i-3 of the optical transmission member 26i-3 through the lens 252i-3. Incidentally, the lens 252i-3 is an optical element for inputting the measurement light ML#11, which is the collimated light, into the polarization maintaining optical fiber 261i-3. The lens 252i-3 condenses the measurement light ML#11 at an input end surface of the polarization maintaining optical fiber 261i-3, especially in a core of the polarization maintaining optical fiber 261i-3. As a result, the measurement light ML#11 is transmitted from the optical detection apparatus 25i-3 to the measurement head 22i-3 (especially, the optical system 222i-3) through the polarization maintaining optical fiber 2611-3.

The measurement light ML#11, which has been transmitted from the optical detection apparatus 25i-3 to the measurement head 22i-3, enters the mirror 2225i-3 through the lens 22201i-3. Incidentally, the lens 22201i-3 is an optical element that converts the measurement light ML#11, which has been transmitted through the polarization maintaining optical fiber 261i-3, back into the collimated light. The measurement light ML#11, which has entered the mirror 2225i-3, is reflected by the mirror 2225i-3 and enters the half mirror 2226i-3.

On the other hand, the measurement light ML#21, which has been emitted from the prism unit 250i-2, enters a polarization maintaining fiber 262i-3 of the optical transmission member 26i-2 through the lens 253i-3. Incidentally, the lens 253i-3 is an optical element for inputting the measurement light ML#21, which is the collimated light, into the polarization maintaining fiber 262i-3. The lens 253i-3 condenses the measurement light ML#21 at an input end surface of the polarization maintaining optical fiber 262i-3, especially in a core of the polarization maintaining optical fiber 262i-3. As a result, the measurement light ML#21 is transmitted from the optical detection apparatus 25i-3 to the measurement head 22i-3 (especially, the optical system 222i-3) through the polarization maintaining optical fiber 262i-3.

The measurement light ML#21, which has been transmitted from the optical detection apparatus 25i-3 to the measurement head 22i-3, enters the polarization beam splitter 2221i-3 through the lens 22202i-3. Incidentally, the lens 22202i-3 is an optical element that converts the measurement light ML#21, which has been transmitted through the polarization maintaining optical fiber 262i-3, back into the collimated light. The measurement light ML#21, which has entered the polarization beam splitter 2221i-3, passes through the polarization beam splitter 2221i-3 and enters the Galvano mirror 2222i-3. The Galvano mirror 2222i-3 has a configuration that is the same as a configuration of the Galvano mirror 2228 described above. The Galvano mirror 2225i-2 changes the propagating direction of the measurement light ML#21 to change the irradiation position of the measurement light ML#21 on the measurement target object along each of the X-axis and the Y-axis. The measurement target object is irradiated with the measurement light ML#21, which has been emitted from the Galvano mirror 2222i-3, through the condensing optical system 2223i-3 and the 1/4 wave plate 2224i-3. Therefore, the measurement target object is irradiated with the measurement light ML#21 that is the circular polarized light. The measurement light ML#21, which has been reflected by the measurement target object, passes through the 1/4 wave plate 2224i-3 as the returning light RL. As a result, the returning light RL, which is the s-polarized light, is emitted from the 1/4 wave plate 2224i-3. The returning light RL, which has been emitted from the 1/4 wave plate 2224i-3, enters the polarization beam splitter 2221i-3 through the condensing optical system 2223i-3 and the Galvano mirror 2222i-3, then is reflected by the polarization beam splitter 2221i-3, then is reflected by the mirror 2227i-3, and enters the half mirror 2226i-3.

Measurement light ML#12, which corresponds to a half of the measurement light ML#11 entering the half mirror 2226i-3, passes through half mirror 2226i-3. Measurement light ML#13, which corresponds to the other half of the measurement light ML#11 entering the half mirror 2226i-3, is reflected by the half mirror 2226i-3. Similarly, returning light RL#1, which corresponds to a half of the returning light RL entering half mirror 2226i-3, passes through the half mirror 2226i-3. Returning light RL#2, which corresponds to other half of the returning light RL entering the half mirror 2226i-3, is reflected by the half mirror 2226i-3.

The returning light RL#1, which has passed through the half mirror 2226i-3, and the measurement light ML#13, which has been reflected by the half mirror 2226i-3, interfere with each other. As a result, interfering light IL#1 is generated. The returning light RL#2, which has been reflected by the half mirror 2226i-3, and the measurement light ML#12, which has passed through the half mirror 2226i-3, interfere with each other. As a result, interfering light IL#2 is generated.

The interfering light IL#1 enters an optical fiber 263i-3 of the optical transmission member 26i-2 through the lens 22203i-3. Incidentally, the lens 22203i-3 is an optical element for inputting the interfering light IL#1, which is the collimated light, into the optical fiber 263i-3. As a result, the interfering light IL#1 is transmitted from the measurement head 22i-3 (especially, the optical system 222i-3) to the optical detection apparatus 25i-3 through the optical fiber 263i-3. The interfering light IL#1, which has been transmitted from the measurement head 22i-3 to the optical detection apparatus 25i-3, enters the optical detector 256i-3 through the lens 254i-3. Incidentally, the lens 254i-3 is an optical element that converts the interfering light IL#1, which has been transmitted through the polarization maintaining optical fiber 263i-3, back into the collimated light. As a result, the optical detector 256i-3 detects the interfering light #1.

The interfering light IL#2 enters an optical fiber 264i-3 of the optical transmission member 26i-2 through the lens 22204i-3. Incidentally, the lens 22204i-3 is an optical element for inputting the interfering light IL#2, which is the collimated light, into the optical fiber 264i-3. As a result, the interfering light IL#2 is transmitted from the measurement head 22i-3 (especially, the optical system 222i-3) to the optical detection apparatus 25i-3 through the optical fiber 264i-3. The interfering light IL#2, which has been transmitted from the measurement head 22i-3 to the optical detection apparatus 25i-3, enters the optical detector 257i-3 through the lens 255i-3. Incidentally, the lens 255i-3 is an optical element that converts the interfering light IL#2, which has been transmitted through the polarization maintaining optical fiber 264i-3, back into the collimated light. As a result, the optical detector 257i-3 detects the interfering light #2.

Therefore, the measurement system 2 including the measurement head 22i-3 can calculate the distance between the measurement head 22i-3 and the measurement target object based on the measured result by each of the optical detectors 256i-3 and 257i-3.

Here, as described above, the measurement apparatus 20i-3 transmits the interfering lights IL#1 and IL#2 generated in the measurement head 22i-3 from the optical detection apparatus 25i-3 to the measurement head 22i-3 (especially, the optical system 222i-3) through the optical fibers 263i-3 and 264i-3, respectively. Therefore, a noise included in the detected result by each of the optical detectors 256i-3 and 257i-3 is reduced, compared to a case where the measurement light ML#12, the measurement light ML#13, the returning light RL#1, and the returning light RL#2 are transmitted through the optical fibers 263i-3 and 264i-3. This is because the interfering lights IL#1 and IL#2 are lights on which an intensity modulation is performed, and are less susceptible to external disturbances than the measurement light ML#12, the measurement light ML#13, the returning light RL#1 and the returning light RL#2. Therefore, the measurement system 2 including the measurement apparatus 20i-3 can calculate the distance between the measurement head 22i-3 and the measurement target object with higher accuracy. As a result, the measurement system 2 can calculate the position of each of the measurement head 22i-3 and the measurement target object with higher accuracy.

Incidentally, the processing system SYS in at least one of the first modified example to the eighth modified example described above may include the measurement head 22i in the ninth modified example. Namely, the ninth modified example may be combined with at least one of the first modified example to the eighth modified example.

## (4-10) Tenth Modified Example

The processing system SYS in a tenth modified example may perform an operation described below to calculate the distance between the measurement head 22 and the measurement target object based on the optical received result of the returning light RL from the measurement target object. In the below-described description, an operation for calculating the distance between the fiducial member FM, which is one example of the measurement target object, and the measurement head 22 will be described as one example.

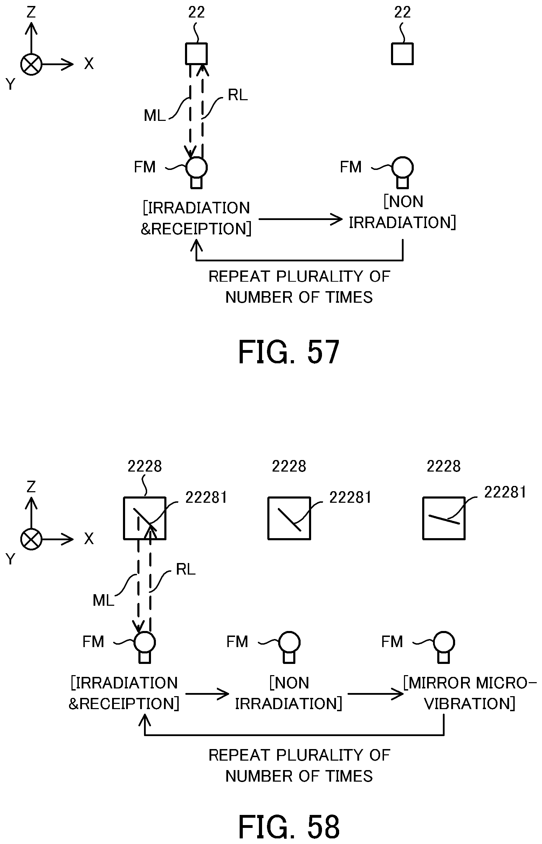

Specifically, as illustrated in FIG. 57, the measurement head 22 may repeat, a plurality of number of times, a unit measurement operation for irradiating one fiducial member FM with the measurement light ML and optically receiving the returning light RL from the one fiducial member FM, under the control of the measurement control apparatus 24. Incidentally, although FIG. 57 illustrates the optical path of the measurement light ML and the optical path of the returning light RL separately for the sake of clarity, the optical path of the measurement light ML and the optical path of the returning light RL may overlap with each other. In this case, the measurement control apparatus 24 may repeat an operation for calculating the distance between the measurement head 22 and the one fiducial member FM as a tentative value based on the optical received result of the returning light RL in a single unit measurement operation as many times as the number of times the unit measurement operation has been performed. As a result, the measurement control apparatus 24 may calculate a plurality of tentative values of the distance. Then, the measurement control apparatus 24 may calculate a definitive value of the distance between the measurement head 22 and one fiducial member FM based on the plurality of tentative values of the distance. For example, the measurement control apparatus 24 may calculate an average value of the plurality of tentative values of the distance as the definitive value of the distance between the measurement head 22 and one fiducial member FM.

As a result, in the tenth modified example, the measurement control apparatus 24 can calculate the distance between the measurement head 22 and the fiducial member FM with higher accuracy, compared to a case where the definitive value of the distance between the measurement head 22 and the fiducial member FM is not calculated based on the plurality of tentative values of the distance. This is because an influence of external disturbances is averaged out by the plurality of unit measurement operations even though the optical received result of the returning light RL in a single unit measurement operation include the influence of external disturbances by accident.

In a case where the plurality of unit measurement operations are performed, the measurement head 22 may vibrate the scanning mirror 22281 of the Galvano mirror 2228 slightly each time the unit measurement operation is performed one time under the control of the measurement control apparatus 24 as illustrated in FIG. 58. Incidentally, FIG. 58 illustrates the optical path of the measurement light ML and the optical path of the returning light RL separately for the sake of clarity, the optical path of the measurement light ML and the optical path of the returning light RL may overlap with each other. Specifically, the measurement head 22 may set the rotational angle of the scanning mirror 22281 to a first angle that allows one fiducial member FM to be irradiated with the measurement light ML emitted from the scanning mirror 22281, then irradiate the one fiducial member FM with the measurement light ML and optically receive the returning light RL from the one fiducial member FM. Then, the measurement head 22 may stop emitting the measurement light ML. However, the measurement head 22 may continue to emit the measurement light ML. Then, the measurement head 22 may rotate the scanning mirror 22281 so that the rotational angle of the scanning mirror 22281 becomes a second angle that is different from the first angle. Then, the measurement head 22 may rotate the scanning mirror 22281 so that the rotational angle of the scanning mirror 22281 returns from the second angle to the first angle. In the tenth modified example, an operation for changing the rotational angle of the scanning mirror 22281 from the first angle to the second angle and then returning it from the second angle to the first angle is referred to as a slight vibration of the scanning mirror 22281. Then, the measurement head 22 may irradiate the one fiducial member FM with the measurement light ML and optically receive the returning light RL from the one fiducial member FM. Then, the measurement head 22 may repeat the same operation.

In a case where the scanning mirror 22281 is vibrated slightly, an influence of a size of a gap between the scanning mirror 22281 and a member surrounding the scanning mirror 22281 on the measurement accuracy of the distance is reducible, compared to a case where the scanning mirror 22281 is not vibrated slightly. This is because the size of the gap changes each time the unit measurement operation is performed due to the slight vibrations of the scanning mirror 22281, and as a result, the influence of the size of the gap on the measurement accuracy of the distance is averaged out. Therefore, the measurement control apparatus 24 can calculate the distance between the measurement head 22 and the fiducial member FM with higher accuracy while reducing the influence of the size of the gap between the scanning mirror 22281 and the member surrounding the scanning mirror 22281.

Incidentally, the gap between the scanning mirror 22281 and an area surrounding the scanning mirror 22281 may be referred to as a clearance. This gap may be formed to avoid a collision between the scanning mirror 22281 and the surrounding member due to rotation of the scanning mirror 22281.

Incidentally, the processing system SYS in at least one of the first modified example to the ninth modified example described above may calculate the distance between the measurement head 22 and the measurement target object by using the method described in the tenth modified example. Namely, the tenth modified example may be combined with at least one of the first modified example to the ninth modified example.

#### (4-11) Eleventh Modified Example

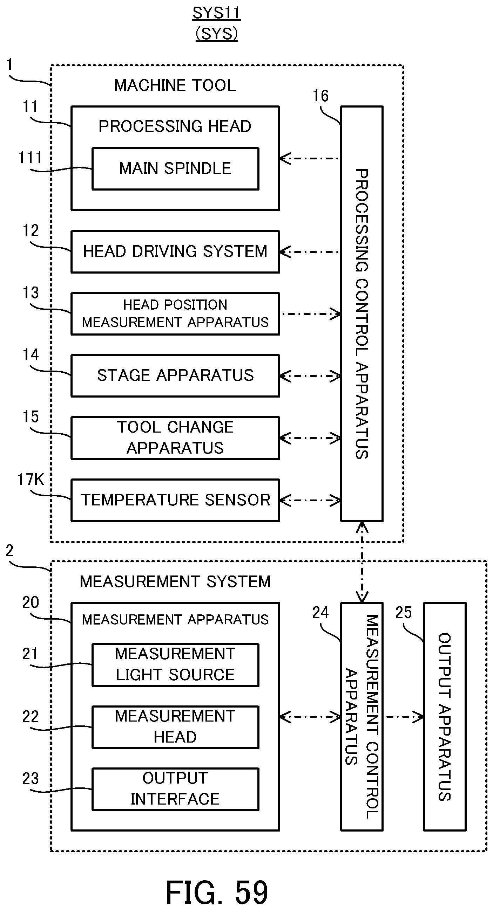

Next, with reference to FIG. 59, the processing system SYS of an eleventh modified example will be described. FIG. 59 is a block diagram that illustrates a system configuration of the processing system SYS of the eleventh modified example. Incidentally, in the below-described description, the processing system SYS in the eleventh modified example is referred to as a processing system SYS11 for convenience of description.

As illustrated in FIG. 59, the processing system SYS 11 in the eleventh modified example is different from the processing system SYS described above in that it includes a machine tool 1k instead of the machine tool 1. Other feature of the processing system SYS11 may be the same as other feature of the processing system SYS. The machine tool 1k is different from the machine tool 1 in that it includes a temperature sensor 17k. Other feature of the machine tool 1k may be the same as other feature of the machine tool 1.

The temperature sensor 17k is configured to detect a temperature of the machine tool 1k. Temperature information indicating a measured result of the temperature by the temperature sensor 17k may be output from the temperature sensor 17k to the processing control apparatus 16. The temperature information indicating the measured result of the temperature by the temperature sensor 17k may be output from the temperature sensor 17k to the measurement control apparatus 24 through the processing control apparatus 16.

The measurement control apparatus 24 may use the temperature information in calculating the position of the fiducial member FM based on the optical received result of the returning light RL from the fiducial member FM. Namely, the measurement control apparatus 24 may calculate the position of the fiducial member FM based on the optical received result of the returning light RL from the fiducial member FM and the temperature information. Incidentally, in the below-described description, the measurement control apparatus 24 may calculate the position of any measurement target object that is different from the fiducial member FM based on the optical received result of the returning light RL from any measurement target object that is different from the fiducial member FM and the temperature information, although a detailed description thereof is omitted in order to avoid a redundant description.

In this manner, in the eleventh modified example, the processing system SYS11 may perform a temperature countermeasure for reducing an influence caused by the temperature of the machine tool 1k. A specific example of the temperature countermeasure will be described in order.

#### (4-11-1) Temperature Countermeasure for Workpiece W and Stage 141

The temperature sensor 17k may be configured to measure a temperature of at least one of the workpiece W and the stage 141 as the temperature of the machine tool 1. In this case, the measurement control apparatus 24 may calculate the position of the fiducial member FM based on the optical received result of the returning light RL from the fiducial member FM and the temperature information related to the temperature of at least one of the workpiece W and the stage 141.

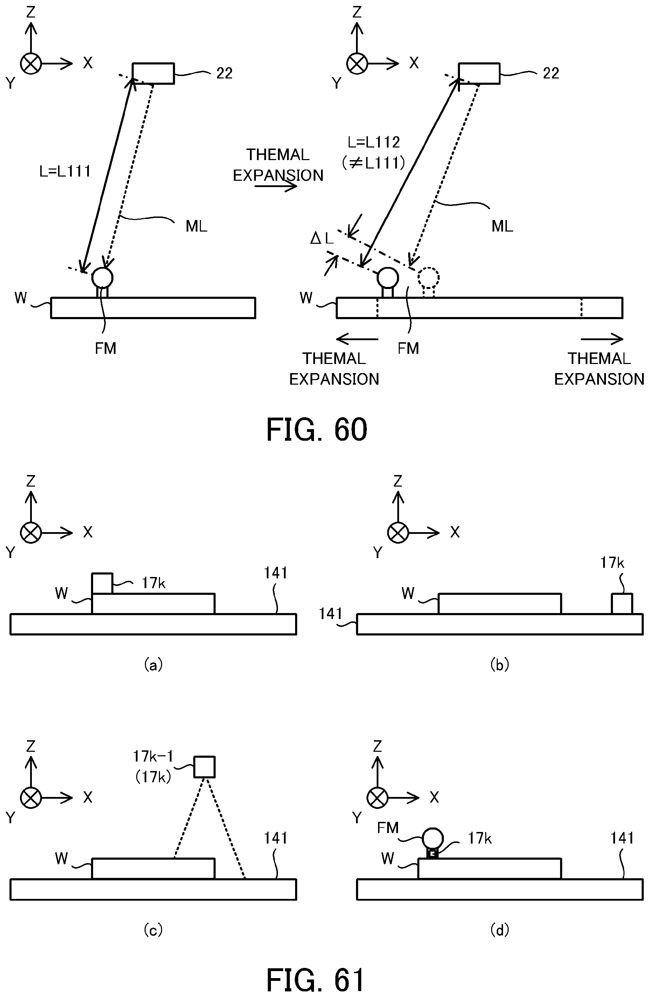

Specifically, as illustrated in FIG. 60, when the temperature of the workpiece W changes, there is a possibility that the workpiece W expands or contracts. Similarly, when the temperature of the stage 141 varies, there is a possibility that the workpiece W thermally expands or thermally contracts because the temperature of the stage 141 affects the temperature of the workpiece W placed on the stage 141. Furthermore, when the temperature of the stage 141 varies, there is a possibility that the stage 141 itself thermally expands or thermally contracts, although it is not illustrated in the drawings to avoid a redundant description. Furthermore, there is a possibility that the workpiece W placed on stage 141 deforms in accordance with the thermal expansion or the thermal contraction of the stage 141 and a state of the workpiece W is substantially equivalent to a state in which the workpiece W thermally expand or thermally contracts. Incidentally, FIG. 60 illustrates an example in which the workpiece W thermal expand. As a result, as illustrated in FIG. 60, the position of the fiducial member FM positioned on the workpiece W temporarily varies due to the thermal expansion or the thermal contraction of the workpiece W (namely, a deformation of the workpiece W, the same applies in the below-described description). Similarly, the position of the fiducial member FM positioned on the stage 141 temporarily varies due to the thermal expansion or the thermal contraction of the stage 141 (a deformation of the stage 141, the same applies in the below-described description). In this case, the measurement control apparatus 24 calculates a distance L112 that includes a variation component $\Delta L$ caused by the thermal expansion or the thermal contraction, rather than a distance L111 that should be calculated as the distance L between the measurement head 22 and the fiducial member FM.

Therefore, in the eleventh modified example, the measurement control apparatus 24 may calculate the variation component $\Delta L$ described above based on the temperature information. For example, the measurement control apparatus 24 may calculate the variation component $\Delta L$ by using a table or the like that indicates a relationship between the temperature of at least one of the stage 141 and the workpiece W indicated by the temperature information and the variation component $\Delta L$. Then, the measurement control apparatus 24 may correct the distance L, which is calculated based on the optical received result of the returning light RL, by using the variation component $\Delta L$ calculated based on the temperature information. For example, the measurement control apparatus 24 may correct the distance L by adding or subtracting the variation component $\Delta L$ to or from the distance L. Then, the measurement control apparatus 24 may calculate the position of at least one of the measurement point MP and the fiducial member FM described above by using the corrected distance L.

As a result, even in a case where at least one of the stage 141 and the workpiece W thermally expands or thermally contracts, the measurement control apparatus 24 can calculate the distance between the measurement head 22 and the fiducial member FM with high accuracy in the same manner as in a case where at least one of the stage 141 and the workpiece W does not thermally expand or thermally contract.

FIG .61(a) to FIG. 61(d) illustrate examples of the temperature sensor 17k that is configured to measure the temperature of at least one of the stage 141 and the workpiece W.

As illustrated in FIG. 61(a), the temperature sensor 17k may be positioned on the workpiece W. In this case, the temperature sensor 17k can properly measure the temperature of the workpiece W.

As illustrated in FIG. 61 (b), the temperature sensor 17k may be positioned on the stage 141. In this case, the temperature sensor 17k can properly measure the temperature of the stage 141. Incidentally, the temperature sensor 17k may be positioned on each of the stage 141 and the workpiece W.

As illustrated in FIG. 61(c), the temperature of at least one of the stage 141 and the workpiece W may be detected by using a thermography camera 17k-1 that is one example of the temperature sensor 17k. In this case, both of the stage 141 and the workpiece W may be included in an imaging range of the thermography camera 17k-1. In this case, the thermography camera 17k-1 may measure the temperature of the stage 141 and the temperature of the workpiece W simultaneously.

As illustrated in FIG. 61(d), the temperature sensor 17k may be positioned at the fiducial member FM. As one example, the temperature sensor 17k may be built into the fiducial member FM. Incidentally, a state in which the temperature sensor 17k is positioned at the fiducial member FM may include a state in which the temperature sensor 17k is positioned at the fiducial member FM itself. The state in which the temperature sensor 17k is positioned at the fiducial member FM may include a state in which the temperature sensor 17k is positioned at the support member that supports the fiducial member FM. In this case, in a case where the fiducial member FM at which the temperature sensor 17k is positioned is positioned on the stage 141, the temperature sensor 17k can properly measure the temperature of the stage 141. In a case where the fiducial member FM at which the temperature sensor 17k is positioned is positioned on the workpiece W, the temperature sensor 17k can properly measure the temperature of the workpiece W. In addition, in this case, a task load for separately positioning the temperature sensor 17k and the fiducial member FM is reduced.

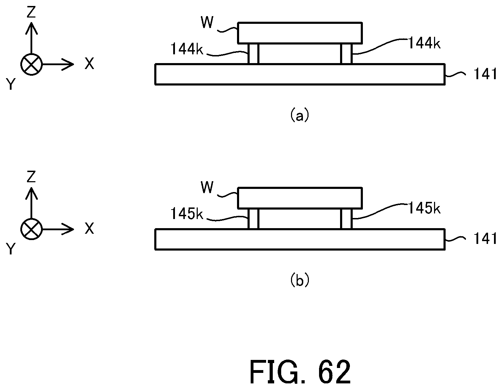

As described above, one reason why the workpiece W thermally expands or thermally contracts is that the workpiece W placed on the stage 141 deforms in accordance with the thermal expansion or the thermal contraction of the stage 141. In this case, as illustrated in FIG. 62(a), the workpiece W may be placed on the stage 141 through a support member 144k that is made of a low thermal expansion member. The low thermal expansion member may be a member whose linear expansion coefficient is equal to or less than a predetermined value. A value that is less than a linear thermal expansion coefficient of the stage 141 is one example of the predetermined value. Namely, in this example, the linear expansion coefficient of the support member 144k may be less than the linear expansion coefficient of the stage 141. In this case, even in a case where a heat of the stage 141 is transferred to the support member 144k, it is less likely that the support member 144k expands or contracts greatly. As a result, it is also less likely that the workpiece W supported by the support member 144k expands or contracts greatly. In this case, the measurement control apparatus 24 may calculate the position of the fiducial member FM without using the temperature information. Alternatively, in this case, the measurement control apparatus 24 may calculate the position of the fiducial member FM based on the temperature information.

As described above, one reason why the workpiece W thermally expands or thermally contracts is that the heat of the stage 141 is transferred to the workpiece W. In this case, as illustrated in FIG. 62(b), the workpiece W may be placed on the stage 141 through a support member 145k that is made of a heat insulating material. The heat insulating material may be a material whose thermal conductivity is equal to or less than a predetermined value. In this case, even in a case where the heat of the stage 141 is transferred to the support member 144k, the heat transferred to the support member 144k is not transferred to the workpiece W easily. As a result, it is less likely that the workpiece W expands or contracts greatly. In this case, the measurement control apparatus 24 may calculate the position of the fiducial member FM without using the temperature information. Alternatively, in this case, the measurement control apparatus 24 may calculate the position of the fiducial member FM based on the temperature information.

#### (4-11-2) Temperature Countermeasure for Optical Path Space

The temperature sensor 17k may be configured to measure a temperature of an optical path space, which includes the optical path of at least one of the measurement light ML and the returning light RL, as the temperature of the machine tool 1. For example, the temperature sensor 17k may be configured to measure the temperature of the optical path space that includes the optical path of at least one of the measurement light ML and the returning light RL between the measurement head 22 and the workpiece W. For example, the temperature sensor 17k may be configured to measure the temperature of the optical path space that includes the optical path of at least one of the measurement light ML and the returning light RL between the measurement head 22 and the stage 141. For example, the temperature sensor 17k may be configured to measure the temperature of the optical path space that includes the optical path of at least one of the measurement light ML and the returning light RL between the measurement head 22 and the fiducial member FM. In this case, the measurement control apparatus 24 may calculate the position of the fiducial member FM based on the optical received result of the returning light RL from the fiducial member FM and the temperature information related to the temperature of the optical path space.

When the temperature of the optical path space varies, a refractive index of the optical path space varies. As a result, an optical distance of the measurement light ML varies. As a result, the measurement control apparatus 24 calculates a distance including a variation component $\Delta L$ of the distance L caused by the variation of the refractive index the distance L between the measurement head 22 and the fiducial member FM. Therefore, in the eleventh modified example, the measurement control apparatus 24 may calculate the variation component $\Delta L$ described above based on the temperature information. For example, the measurement control apparatus 24 may calculate the variation component $\Delta L$ by using a table or the like that indicates a relationship between the temperature of the optical path space indicated by the temperature information and the variation component $\Delta L$. Then, the measurement control apparatus 24 may correct the distance L, which is calculated based on the optical received result of the returning light RL, by using the variation component $\Delta L$ calculated based on the temperature information. For example, the measurement control apparatus 24 may correct the distance L by adding or subtracting the variation component $\Delta L$ to or from the distance L. Then, the measurement control apparatus 24 may calculate the position of at least one of the measurement point MP and the fiducial member FM described above by using the corrected distance L.

As a result, even in a case where the temperature of the optical path space varies, the measurement control apparatus 24 can calculate the distance between the measurement head 22 and the fiducial member FM with high accuracy in the same manner as in a case where the temperature of the optical path space does not vary.

### (4-11-3) Temperature Countermeasure for Measurement Head 22

The temperature sensor 17k may be configured to measure the temperature of the measurement head 22. For example, the temperature sensor 17k may be positioned in the head housing 221, and measure a temperature of a space in the head housing 221 as the temperature of the measurement head 22. In this case, the measurement control apparatus 24 may calculate the position of the fiducial member FM based on the optical received result of the returning light RL from the fiducial member FM and the temperature information related to the temperature of at least one of the workpiece W and the stage 141.

Specifically, when the temperature of the measurement head 22 varies, there is a possibility that the measurement head 22 thermally expands or thermally contracts. In this case, the measurement control apparatus 24 calculates a distance including a variation component $\Delta L$ of the distance L caused by the thermal expansion or the thermal contraction of the measurement head 22 as the distance L between the measurement head 22 and the fiducial member FM. Therefore, in the eleventh modified example, the measurement control apparatus 24 may calculate the variation component $\Delta L$ described above based on the temperature information. For example, the measurement control apparatus 24 may calculate the variation component $\Delta L$ by using a table or the like that indicates a relationship between the temperature of the measurement head 22 indicated by the temperature information and the variation component $\Delta L$. Then, the measurement control apparatus 24 may correct the distance L, which is calculated based on the optical received result of the returning light RL, by using the variation component $\Delta L$ calculated based on the temperature information. For example, the measurement control apparatus 24 may correct the distance L by adding or subtracting the variation component $\Delta L$ to or from the distance L. Then, the measurement control apparatus 24 may calculate the position of at least one of the measurement point MP and the fiducial member FM described above by using the corrected distance L.

As a result, even in a case where the measurement head 22 thermally expands or thermally contracts, the measurement control apparatus 24 can calculate the distance between the measurement head 22 and the fiducial member FM with high accuracy in the same manner as in a case where the measurement head 22 does not thermally expands or thermally contracts.

Alternatively, an influence of the deformation of the measurement head 22 in the Z-axis direction (namely, the vertical direction) caused by the thermal expansion or the thermal contraction of the measurement head 22 on the distance L is greater than an influence of the deformation of the measurement head 22 in a direction (for example, at least one of the X-axis direction and the Y-axis direction) different from the Z-axis direction caused by the thermal expansion or the thermal contraction of the measurement head 22 on the distance L. Therefore, the measurement system 2 may calculate a deformed amount $\Delta mz$ of the measurement head 22 in the Z-axis direction (namely, the vertical direction) caused by the thermal expansion or the thermal contraction of the measurement head 22, and calculate the distance between the measurement head 22 and the fiducial member FM based on the calculated deformed amount Δmz.

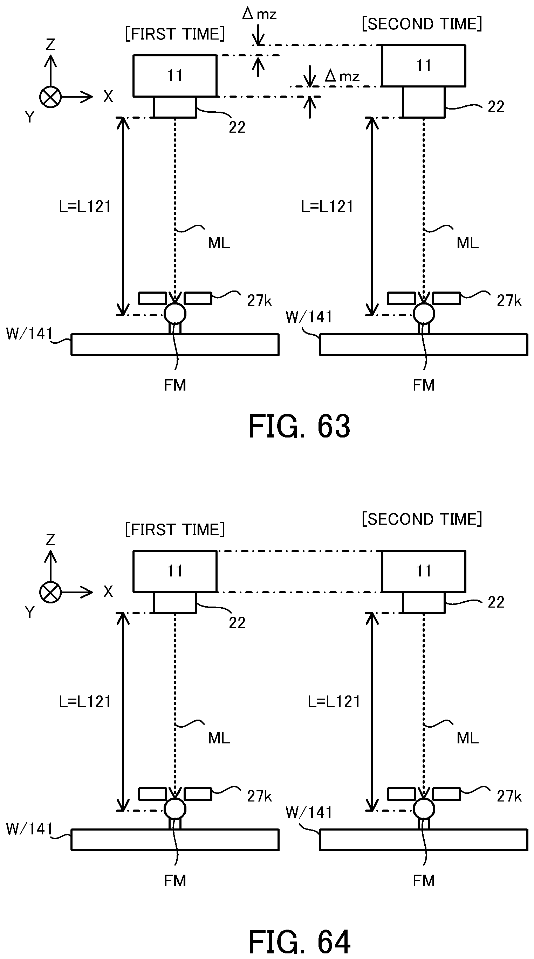

Specifically, as illustrated in FIG. 63, the measurement head 22 may irradiate the fiducial member FM with the measurement light ML and optically receive the returning light RL from the fiducial member FM at a first time under the control of the measurement control apparatus 24. Then, the measurement control apparatus 24 may calculate the distance between the measurement head 22 and the fiducial member FM at the first time based on the optical received result of the returning light RL. Furthermore, the measurement control apparatus 24 may acquire information related to the position of the processing head 11 (especially, the position in the Z-axis direction) at the first time from the head position measurement apparatus 13.

Incidentally, in a case where the deformed amount Δmz is calculated, the measurement head 22 may irradiate the fiducial member FM with the measurement light ML through a slit member 27k in which a slit is formed. The slit member 27k may be positioned so that the measurement head 22, the slit, and the fiducial member FM are aligned along the Z-axis. In this case, the measurement head 22 can properly irradiate the fiducial member FM with the measurement light ML that propagates along the Z-axis. As a result, the measurement control apparatus 24 may calculate the distance between the measurement head 22 and the fiducial member FM in the Z-axis direction based on the optical received result of the returning light RL.

Then, the measurement head 22 may irradiate the same fiducial member FM, which has been irradiated with the measurement light ML at the first time, with the measurement light ML and optically receive the returning light RL from the fiducial member FM at a second time that is different from the first time under the control of the measurement control apparatus 24. Then, the measurement control apparatus 24 may calculate the distance between the measurement head 22 and the fiducial member FM at the second time based on the optical received result of the returning light RL. In this case, the processing control apparatus 16 may control the head driving system 12 to move the processing head 11 along the Z-axis direction so that the distance calculated based on the optical received result of the returning light RL at the second time is the same as the distance calculated based on the optical received result of the returning light RL at the first time, under the control of the measurement control apparatus 24. Furthermore, the measurement control apparatus 24 may acquire, from the head position measurement apparatus 13 as information related to the position (especially, the position in the Z-axis direction) of the processing head 11 at the second time, information related to the position (especially, the position in the Z-axis direction) of the processing head 11 at a timing at which the distance calculated based on the optical received result of the returning light RL at the second time is the same as the distance calculated based on the optical received result of the returning light RL at the first time.

Here, in a case where the measurement head 22 deforms along the Z-axis direction due to the thermal expansion or the thermal contraction of the measurement head 22, the position (especially, the position in the Z-axis direction) of the processing head 11 at the second time is not the same as the position (especially, the position in the Z-axis direction) of the processing head 11 at the first time, as illustrated in FIG. 63. This is because the position of the processing head 11 in the Z-axis direction varies due to the deformation of the measurement head 22 in the Z-axis direction. On the other hand, in a case where the measurement head 22 does not deform along the Z-axis direction due to the thermal expansion or the thermal contraction of the measurement head 22, the position (especially, the position in the Z-axis direction) of the processing head 11 at the second time is the same as the position (especially, the position in the Z-axis direction) of the processing head 11 at the first time, as illustrated in FIG. 64. Therefore, the measurement control apparatus 24 may calculate the deformed amount Δmz of the measurement head 22 in the Z-axis direction (namely, the vertical direction) based on a difference between the position (especially, the position in the Z-axis direction) of the processing head 11 at the second time and the position (especially, the position in the Z-axis direction) of the processing head 11 at the first time. Specifically, the measurement control apparatus 24 may calculate, as the deformed amount Δmz of the measurement head 22 in the Z-axis direction (namely, the vertical direction), a difference in the Z-axis direction between the position (especially, the position in the Z-axis direction) of the processing head 11 at the second time and the position (especially, the position in the Z-axis direction) of the processing head 11 at the first time.

Incidentally, in order to promote heat dissipation from the measurement head 22, a heat source that generates heat in the head housing 221 may be thermally connected (coupled) to the head housing 221. In this case, the heat generated by the heat source may be released outside the head housing 221 through the head housing 221. A circuit board on which a drive circuit for driving the Galvano mirror 2228 is formed is one example of the heat source that generates the heat in the head housing 221. An actuator for driving the Galvano mirror 2228 is one example of the heat source that generates the heat in the head housing 221. Any circuit board positioned in the head housing 221 is one example of the heat source that generates the heat in the head housing 221.

Incidentally, the processing system SYS in at least one of the first modified example to the tenth modified example described above may include the temperature sensor 17k described in the eleventh modified example. Namely, the eleventh modified example may be combined with at least one of the first modified example to the tenth modified example.

### (4-12) Twelfth Modified Example

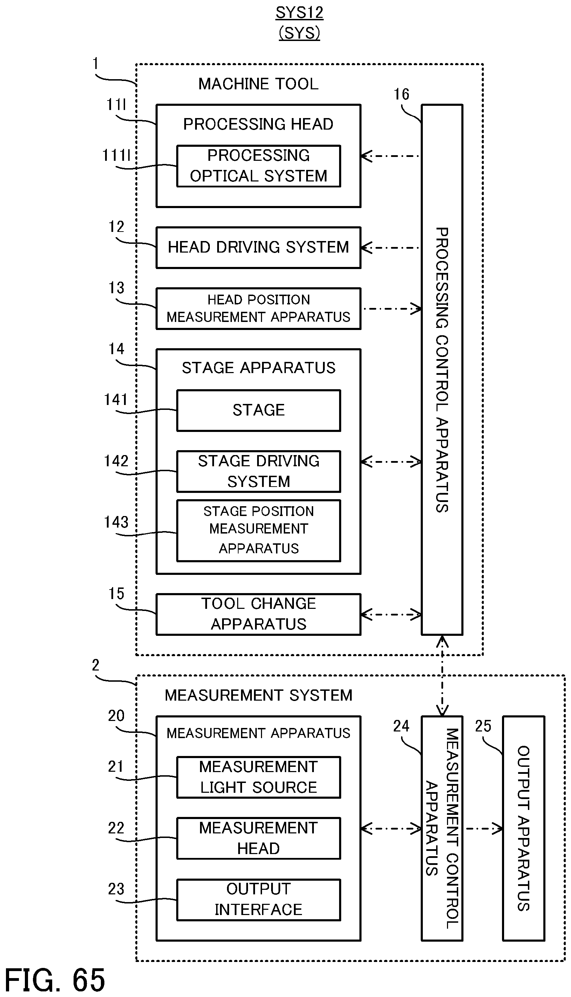

Next, with reference to FIG. 65, the processing system SYS in a twelfth modified example will be described. FIG. 65 is a block diagram that illustrates a system configuration of the processing system SYS in the twelfth modified example. Incidentally, in the below-described description, the processing system SYS in the twelfth modified example is referred to as a processing system SYS12 for convenience of description.

As illustrated in FIG. 65, the processing system SYS12 in the twelfth modified example is different from the processing system SYS described above in that it includes a machine tool 1l instead of the machine tool 1. Other feature of the processing system SYS12 may be the same as other feature of the processing system SYS. The machine tool 1l is different from the machine tool 1 in that it includes a processing head 11l instead of the processing head 11. Other feature of the machine tool 1l may be the same as other feature of the machine tool 1. The processing head 11l is different from the processing head 11 in that it is configured to process the workpiece W by using processing light. Other feature of the processing head 11l may be the same as other feature of the processing head 11.

In order to process the workpiece W by using the processing light, the processing head 11l may include a processing optical system 111l. The processing optical system 111l may be contained in a head housing of the processing head 11l. The processing optical system 111l may be attached to the processing head 11l. The processing optical system 111l emits the processing light, which is generated by a non-illustrated processing light source, toward the workpiece W. The machine tool 1l may process the workpiece W by irradiating the workpiece W with the processing light from the processing optical system 111l while moving at least one of the processing head 11l and the stage 141. For example, the machine tool 1l may perform an additive manufacturing on the workpiece W by irradiating the workpiece W with the processing light. The machine tool 1l may perform a subtractive manufacturing on the workpiece W by irradiating the workpiece W with the processing light. Incidentally, the machine tool 1l that processes the workpiece W by using the processing light may be referred to as an optical processing machine.

Incidentally, in a case where the processing optical system 111l is detachable from the processing head 11l, the measurement head 22 may be attached to an attachment part of the processing head 11l to which the processing optical system 111l is attached. In a case where the processing optical system 111l is not detachable from the processing head 11l, the measurement head 22 may be attached to a position that is relatively close to the attachment part of the processing head 11l to which the processing optical system 111l is attached. The measurement head 22 may be attached to a position that is as close as possible to the attachment part of the processing head 11l to which the processing optical system 111l is attached.

Moreover, the machine tool 1l may process the workpiece W by irradiating the workpiece W with an energy beam that is different from the processing light. At least one of a charged particle beam (for example, an electron beam or an ion beam) and an electromagnetic wave may be used as the energy beam.

Incidentally, the processing system SYS in at least one of the first modified example to the eleventh modified example described above may be configured to process the workpiece W by using the processing light. Namely, the twelfth modified example may be combined with at least one of the first modified example to the eleventh modified example.

### (4-13) Thirteenth Modified Example

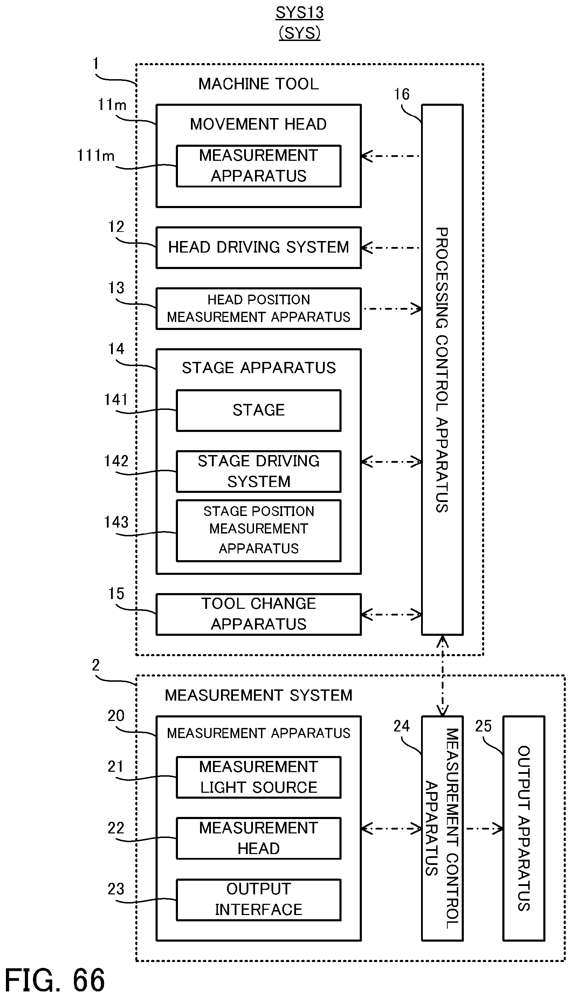

Next, with reference to FIG. 66, the processing system SYS in a thirteenth modified example will be described. FIG. 66 is a block diagram that illustrates a system configuration of the processing system SYS in the thirteenth modified example. Incidentally, in the below-described description, the processing system SYS in the thirteenth modified example is referred to as a processing system SYS13 for convenience of description.

As illustrated in FIG. 66, the processing system SYS13 in the thirteenth modified example is different from the processing system SYS described above in that it includes a machine tool 1m instead of the machine tool 1. Other feature of the processing system SYS13 may be the same as other feature of the processing system SYS. The machine tool 1m is different from the machine tool 1 in that it may not be configured to process the workpiece W. In this case, the machine tool 1m is different from the machine tool 1 in that it includes a movement head 11m that is movable by the head driving system 12, instead of the processing head 11. Other feature of the machine tool 1m may be the same as other feature of the machine tool 1. Incidentally, since the machine tool 1m may not be configured to process the workpiece W, the machine tool 1m including the movement head 11m is referred to as a "movement apparatus 1m" in the below-described description, in order to eliminate any misunderstandings that may arise from the term "machine tool".

As illustrated in FIG. 66, the movement head 11m is different from the processing head 11 in that it may not be configured to process the workpiece W. Other feature of the movement head 11m may be the same as other feature of the processing head 11.

The movement head 11m may include a measurement apparatus (a measurement unit) 111m. The measurement apparatus 111m may be contained in a head housing of the movement head 11m. The measurement apparatus 111m may be attached to the movement head 11m. The measurement apparatus 111m may be an apparatus that is configured to measure at least one of a position of the measurement target object, a shape of the measurement target object, a distance between the measurement apparatus 111m and the measurement target object, a direction of the measurement target object as seen from the measurement apparatus 111m, a reflectance of the measurement target object, a transmittance of the measurement target object, a temperature of the measurement target object, an internal structure of the measurement target object, and a surface roughness of the measurement target object. The measurement apparatus 111m is configured to measure the measurement target object. The measurement target object measured by the measurement apparatus 111m may be the same as or may be different from the measurement target object measured by the measurement system 2. As one example, the measurement apparatus 111m may be configured to measure the workpiece W. The measurement apparatus 111m may be configured to measure the measurement target object in a non-contact manner. The measurement apparatus 111m may be configured to optically measure the measurement target object. The measurement apparatus 111m may be configured to electrically measure the measurement target object. The measurement apparatus 111m may be configured to magnetically measure the measurement target object. The measurement apparatus 111m may be configured to thermally measure the measurement target object. The measurement apparatus 111m may be configured to measure the measurement target object by using a probe that physically contacts the measurement target object.

Incidentally, for example, in a case where the measurement apparatus 111m is configured to measure at least one of the position of the measurement target object, the shape of the measurement target object, the distance between the measurement target object and the measurement apparatus 111m, and the surface roughness shape of the measurement target object, the measurement apparatus 111m may measure the measurement target object by irradiating the measurement target object with light and optically receiving a returning light from the measurement target object that has been irradiated with the light. For example, the measurement apparatus 111m may be an interferometric measurement apparatus. However, the measurement apparatus 111m may not be the interferometric measurement apparatus as long as it is configured to measure the measurement target object. For example, measurement apparatus 111m may be a triangulation type of measurement apparatus. The measurement apparatus 111m may be a stereo-type of measurement apparatus. The measurement apparatus 111m may be a phase-shift-type of measurement apparatus. The measurement apparatus 111m may be a confocal-type of measurement apparatus. The measurement apparatus 111m may be a ToF (Time of Flight)-type of measurement apparatus. The measurement apparatus 111m may be an FMCW (Frequency Modulated Continuous Wave) type of measurement apparatus.

The movement apparatus 1m may measure the measurement target object by using the measurement apparatus 111m while moving at least one of the movement head 11m and the stage 141. Incidentally, in a case where the movement head 11m includes the measurement apparatus 111m that is configured to measure the measurement target object, the movement head 11m may be referred to as a measurement head. For example, in a case where the movement head 11m includes the measurement apparatus 111m, the movement apparatus 1m may be referred to as a workpiece measurement apparatus, a measurement apparatus, or an object measurement apparatus. In this case, the movement apparatus 1m may be configured to serve as a coordinate measuring machine (CMM: Coordinate Measuring Machine).

Incidentally, in a case where the measurement apparatus 111m is detachable from the movement head 11m, the measurement apparatus 111m may be attached to an attachment part of the movement head 11m to which the measurement apparatus 111m is attached. In a case where the measurement apparatus 111m is not detachable from the movement head 11m, the measurement head 22 may be attached to a position that is relatively close to the attachment part of the movement head 11m to which the measurement apparatus 111m is attached. The measurement head 22 may be attached to a position that is as close as possible to the attachment part of the movement head 11m to which the measurement apparatus 111m is attached.

Incidentally, the processing system SYS in at least one of the first modified example to the twelfth modified example described above may not be configured to process the workpiece W. The processing system SYS in at least one of the first modified example to the twelfth modified example described above may include the movement head 11m in the thirteenth modified example. Namely, the thirteenth modified example may be combined with at least one of the first modified example to the twelfth modified example.

### (4-14) Fourteenth Modified Example

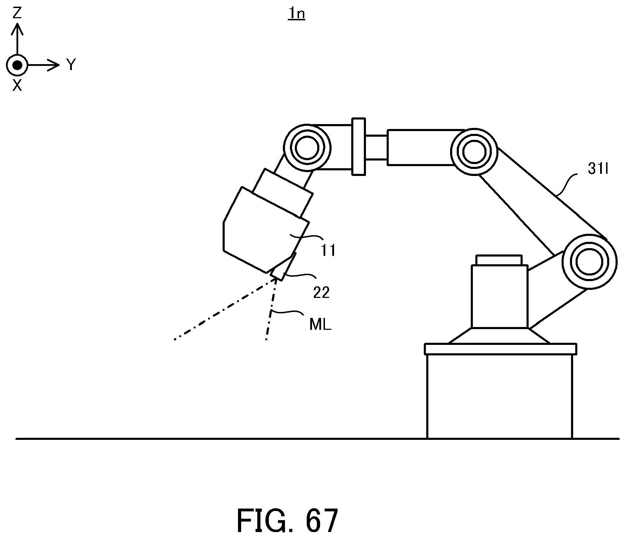

Next, the processing system SYS in a fourteenth modified example will be described. Incidentally, the processing system SYS in the fourteenth modified example is referred to as a processing system SYS14 in the below-described description for convenience of description. The processing system SYS14 in the fourteenth modified example is different from the processing system SYS described above in that it includes a machine tool 1n instead of the machine tool 1. Other feature of the processing system SYS14 may be the same as other feature of the processing system SYS. The machine tool 1n is different from the machine tool 1 in that it includes a head driving system 12n instead of the head driving system 12. Other feature of the machine tool 1n may be the same as other feature of the machine tool 1. Next, with reference to FIG. 67, the head driving system 12n in the fourteenth modified example will be described. FIG. 67 is a side view that illustrates a configuration of the head driving system 12n in the fourteenth modified example.

As illustrated in FIG. 67, the head driving system 12n may be different from the head driving system 12 in that it is a robot arm. The robot arm may be a manipulator having three or more degrees of freedom. The robot arm may serve as a robot having a so-called vertical articulated structure. The robot arm may serve as a robot having a horizontal articulated structure. The robot arm may serve as a cylindrical robot. The robot arm may serve as a Cartesian robot. The robot arm may serve as a parallel link robot. The processing head 11 may be attached to a tip of the robot arm. Namely, the processing head 11 may be attached to the robot arm as an end effector. Other feature of the head driving system 12n may be the same as other feature of the head driving system 12.

Incidentally, the processing system SYS in at least one of the first modified example to the thirteenth modified example described above may include the head driving system 12n instead of the head driving system 12. Namely, the fourteenth modified example may be combined with at least one of the first modified example to the thirteenth modified example.

## (4-15) Other Modified Example

In the above-described description, the measurement apparatus 20 is an interferometric measurement apparatus that uses the light comb light source as the measurement light source 21. However, the measurement apparatus 20 may be an interferometric measurement apparatus that uses a light source, which is different from the light comb light source, as the measurement light source 21. For example, the measurement apparatus 20 may be a measurement apparatus using an optical coherence tomography (OCT). One example of the measurement apparatus using the OCT is disclosed in JP2020-101499A. For example, the measurement apparatus 20 may be a measurement apparatus including a white-light confocal displacement meter. One example of the white-light confocal displacement meter is disclosed in JP2020-085633A. For example, the measurement apparatus 20 may be a measurement apparatus using a phase modulation method. One example of the measurement apparatus using the phase modulation method is disclosed in JP2010-025922A. For example, the measurement apparatus 20 may be a measurement apparatus using an intensity modulation method. One example of the measurement apparatus using the intensity modulation method is disclosed in JP2016-510415A and US2014/226145A1.

In the above-described description, the machine tool 1 includes the head driving system 12. Namely, the processing head 11 is movable. However, the machine tool 1 may not include the head driving system 12.

Namely, the processing head 11 may not be movable.

In the above-described description, the machine tool 1 includes the stage driving system 142. Namely, the stage 141 is movable. However, the machine tool 1 may not include the stage driving system 142. Namely, the stage 141 may not be movable.

Incidentally, the feature specific to at least one of the first modified example to the fourteenth modified example described above may be used by at least other one of the first modified example to the fourteenth modified example described. Namely, the processing system SYS, in which at least two modified example selected from the first modified example to the fourteenth modified example described are combined, may be used.

## (5) Supplementary Note

Regarding the above-described example embodiment, below described Supplementary notes are further disclosed.

[Supplementary Note 1]

A measurement system that is used for a machine tool, wherein

> the machine tool processes a workpiece by a tool, which is attached to a main spindle of a processing head in a detachable manner, while moving at least one of a stage, on which the workpiece is placed, and the processing head,
> the measurement system includes:

>> an optical apparatus that optically receives returning light, which is generated by irradiating a fiducial member positioned on at least one of the stage and the workpiece with the measurement light, from the fiducial member; and
>> a computing unit that calculates a distance between the optical apparatus and the fiducial member based on an optical received result of the returning light from the fiducial member by the optical apparatus.

[Supplementary Note 2]

The measurement system according to the Supplementary Note 1, wherein
the fiducial member is positioned on the workpiece placed on the stage.

[Supplementary Note 3]

The measurement system according to the Supplementary Note 1 or 2, wherein

> the optical apparatus optically receives the returning light, which is generated by irradiating each of a plurality of fiducial members positioned on at least one of the stage and the workpiece with the measurement light, from each of the plurality of fiducial members, and

at least one of the plurality of fiducial members is positioned on the workpiece placed on the stage.

[Supplementary Note 4]

The measurement system according to any one of the Supplementary Notes 1 to 3, wherein

the optical apparatus optically receives the returning light, which is generated by irradiating each of at least four fiducial members positioned on at least one of the stage and the workpiece with the measurement light, from each of the at least four fiducial members, and

at least one of the at least four fiducial members is positioned on the workpiece placed on the stage.

[Supplementary Note 5]

The measurement system according to any one of the Supplementary Notes 1 to 4, wherein the computing unit generates, based on the calculated distance, at least one of information related to a movement error occurring in a movement of the stage and information related to a movement error occurring in a movement of the processing head.

[Supplementary Note 6]

The measurement system according to any one of the Supplementary Notes 1 to 5, wherein the computing unit generates, based on the calculated distance, at least one of information for correcting a movement error occurring in a movement of the stage and information for correcting a movement error occurring in a movement of the processing head.

[Supplementary Note 7]

The measurement system according to any one of the Supplementary Notes 1 to 6, wherein the computing unit generates, based on the calculated distance, information for correcting a processing path of the workpiece by the machine tool.

[Supplementary Note 8]

The measurement system according to any one of the Supplementary Notes 1 to 7, wherein the computing unit corrects, based on the calculated distance, a processing path of the workpiece by the machine tool.

[Supplementary Note 9]

The measurement system according to any one of the Supplementary Notes 1 to 8, wherein the computing unit generates or corrects, based on the calculated distance, a driving control signal for controlling a driving system configured to move the processing head.

[Supplementary Note 10]

The measurement system according to any one of the Supplementary Notes 1 to 9, wherein the computing unit generates or corrects, based on the calculated distance, a driving control signal for controlling a driving system configured to move the stage.

[Supplementary Note 11]

The measurement system according to any one of the Supplementary Notes 1 to 10, wherein

the machine tool further includes a position measurement apparatus that measures a position of at least one of the processing head and the stage, the computing unit corrects, based on the calculated distance, a measured result of the position of at least one of the processing head and the stage by the position measurement apparatus.

[Supplementary Note 12]

The measurement system according to any one of the Supplementary Notes 1 to 11, wherein the computing unit generates, based on the calculated distance, information for controlling the machine tool.

[Supplementary Note 13]

The measurement system according to the Supplementary Note 5, wherein the computing unit generates, based on the information related to the movement error, at least one of information for correcting the movement error occurring in the movement of the stage and information for correcting the movement error occurring in the movement of the processing head.

[Supplementary Note 14]

The measurement system according to the Supplementary Note 5 or 13, wherein the computing unit generates, based on the information related to the movement error, information for correcting a processing path of the workpiece by the machine tool.

[Supplementary Note 15]

The measurement system according to any one of the Supplementary Notes 5 and 13 to 14, wherein the computing unit corrects, based on the information related to the movement error, a processing path of the workpiece by the machine tool.

[Supplementary Note 16]

The measurement system according to any one of the Supplementary Notes 5 and 13 to 15, wherein the computing unit generates or corrects, based on the information related to the movement error, a driving control signal for controlling a driving system configured to move the processing head.

[Supplementary Note 17]

The measurement system according to any one of the Supplementary Notes 5 and 13 to 16, wherein the computing unit generates or corrects, based on the information related to the movement error, a driving control signal for controlling a driving system configured to move the stage.

[Supplementary Note 18]

The measurement system according to any one of the Supplementary Notes 5 and 13 to 17, wherein

the machine tool further includes a position measurement apparatus that measures a position of at least one of the processing head and the stage, the computing unit corrects, based on the information related to the movement error, a measured result of the position of at least one of the processing head and the stage by the position measurement apparatus.

[Supplementary Note 19]

The measurement system according to any one of the Supplementary Notes 1 to 18, wherein the computing unit outputs distance information related to the calculated distance to a control apparatus that controls the machine tool.

[Supplementary Note 20]

The measurement system according to the Supplementary Note 19, wherein the computing unit generates, based on the distance information, at least one of information related to a movement error occurring in a movement of the stage and information related to a movement error occurring in a movement of the processing head.

[Supplementary Note 21]

The measurement system according to the Supplementary Note 20, wherein the computing unit generates, based on the information related to the movement error, at least one of information for correcting the movement error occurring in the movement of the stage and information for correcting the movement error occurring in the movement of the processing head.

[Supplementary Note 22]

The measurement system according to the Supplementary Note 20 or 21, wherein the computing unit generates, based on the information related to the movement error, information for correcting a processing path of the workpiece by the machine tool.

[Supplementary Note 23]

The measurement system according to any one of the Supplementary Notes 20 to 22, wherein the computing unit corrects, based on the information related to the movement error, a processing path of the workpiece by the machine tool.

[Supplementary Note 24]

The measurement system according to any one of the Supplementary Notes 20 to 23, wherein the computing unit generates or corrects, based on the information related to the movement error, a driving control signal for controlling a driving system configured to move the processing head.

[Supplementary Note 25]

The measurement system according to any one of the Supplementary Notes 20 to 24, wherein the computing unit generates or corrects, based on the information related to the movement error, a driving control signal for controlling a driving system configured to move the stage.

[Supplementary Note 26]

The measurement system according to any one of the Supplementary Notes 20 to 25, wherein

the machine tool further includes a position measurement apparatus that measures a position of at least one of the processing head and the stage, the computing unit corrects, based on the information related to the movement error, a measured result of the position of at least one of the processing head and the stage by the position measurement apparatus.

[Supplementary Note 27]

The measurement system according to any one of the Supplementary Notes 1 to 26, wherein

the optical apparatus optically receives the returning light, which is generated by irradiating the fiducial member with the measurement light, from the fiducial member each time the stage or the processing head moves to each of a plurality of different positions, and

the computing unit calculates a distance between the optical apparatus and the fiducial member in a space in which the stage or the processing head moves to each of the plurality of different positions, based on the optical received result of the returning light from the fiducial member which is optically received by the optical apparatus each time the stage or the processing head moves to each of the plurality of different positions, and calculates a position of the optical apparatus in the space based on the distance.

[Supplementary Note 28]

The measurement system according to the Supplementary Note 27, wherein
the computing unit generates, based on the calculated position of the optical apparatus in the space, at least one of information related to a movement error occurring in a movement of the stage in the space and information related to a movement error occurring in a movement of the processing head in the space.

[Supplementary Note 29]

The measurement system according to the Supplementary Note 28, wherein
the computing unit generates, based on the calculated position of the optical apparatus in the space, at least one of information for correcting the movement error occurring in the movement of the stage in the space and information for correcting the movement error occurring in the movement of the processing head in the space.

[Supplementary Note 30]

The measurement system according to the Supplementary Note 28 or 29, wherein

the optical apparatus optically receives the returning light, which is generated by irradiating the fiducial member with the measurement light, from the fiducial member each time the stage or the processing head moves to each of the plurality of different positions, in a situation where the optical apparatus is positioned in a first space that is different from a second space occupied by the workpiece placed on the stage, and

the computing unit generates information related to the movement error in the second space based on information related to the movement error in the first space that is generated based on the optical received result by the optical apparatus in a situation where the optical apparatus is positioned in the first space.

[Supplementary Note 31]

The measurement system according to any one of the Supplementary Notes 28 to 30, wherein

the optical apparatus optically receives the returning light, which is generated by irradiating the fiducial member with the measurement light, from the fiducial member each time the stage or the processing head moves to each of the plurality of different positions, in a situation where the optical apparatus is positioned in a first space that is different from a second space occupied by the workpiece placed on the stage, and

the computing unit calculates the position of the optical apparatus in the first space based on the optical received result by the optical apparatus in a situation where the optical apparatus is positioned in the first space, and calculates the position of the optical apparatus in the second space based on the position of the optical apparatus in the first space.

[Supplementary Note 32]

The measurement system according to any one of the Supplementary Notes 28 to 31, wherein

the optical apparatus optically receives the returning light, which is generated by irradiating the fiducial member with the measurement light, from the fiducial member each time the stage or the processing head moves to each of the plurality of different positions, in a situation where the optical apparatus is positioned in a first space that is different from a second space occupied by the workpiece placed on the stage, and

the computing unit calculates the position of the optical apparatus in the first space based on the optical received result by the optical apparatus in a situation where the optical apparatus is positioned in the first space, and generates the information related to the movement error in the second space based on the position of the optical apparatus in the first space.

[Supplementary Note 33]

The measurement system according to any one of the Supplementary Notes 28 to 32, wherein

the optical apparatus optically receives the returning light, which is generated by irradiating the fiducial member with the measurement light, from the fiducial member each time the stage or the processing head moves to each of the plurality of different positions, in a situation where the optical apparatus is positioned in a first space that is different from a second space occupied by the workpiece placed on the stage, and

the computing unit calculates the position of the optical apparatus in the first space based on the optical received result by the optical apparatus in a situation where the optical apparatus is positioned in the first space, and generates information for correcting the movement error in the second space based on the position of the optical apparatus in the first space.

[Supplementary Note 34]

The measurement system according to any one of the Supplementary Notes 28 to 33, wherein

the optical apparatus optically receives the returning light, which is generated by irradiating the fiducial member with the measurement light, from the fiducial member each time the stage or the processing head moves to each of the plurality of different positions, in a situation where the optical apparatus is positioned in a first space that is different from a second space occupied by the workpiece placed on the stage, and

the computing unit generates information for correcting the movement error in the first space based on the optical received result by the optical apparatus in a situation where the optical apparatus is positioned in the first space, and generates information for correcting the movement error in the second space based on the information for correcting the movement error in the first space.

[Supplementary Note 35]

The measurement system according to any one of the Supplementary Notes 30 to 34, wherein

the fiducial member is a second fiducial member, a fiducial member that is positioned on the stage in a case where the workpiece is not placed on the stage is a first fiducial member,

the optical apparatus optically receives the returning light, which is generated by irradiating the first fiducial member with the measurement light, from the first fiducial member each time the stage or the processing head moves to each of the plurality of different positions in a first situation where the workpiece is not placed on the stage, and optically receives the returning light, which is generated by irradiating the second fiducial member with the measurement light, from the second fiducial member each time the stage or the processing head moves to each of the plurality of different positions in a second situation where the workpiece is placed on the stage and the optical apparatus is positioned in the first space, and

the computing unit generates the information related to the movement error in the second space, which occurs in a situation where the workpiece is placed on the stage, based on information related to the movement error that is generated based on the optical received result by the optical apparatus in the first situation and information related to the movement error in the first space that is generated based on the optical received result by the optical apparatus in the second situation.

[Supplementary Note 36]

The measurement system according to any one of the Supplementary Notes 30 to 35, wherein

the fiducial member is a second fiducial member, a fiducial member that is positioned on the stage in a case where the workpiece is not placed on the stage is a first fiducial member,

the optical apparatus optically receives the returning light, which is generated by irradiating the first fiducial member with the measurement light, from the first fiducial member each time the stage or the processing head moves to each of the plurality of different positions in a first situation where the workpiece is not placed on the stage, and optically receives the returning light, which is generated by irradiating the second fiducial member with the measurement light, from the second fiducial member each time the stage or the processing head moves to each of the plurality of different positions in a second situation where the workpiece is placed on the stage and the optical apparatus is positioned in the first space, and

the computing unit calculates the position of the optical apparatus in the first situation based on the optical received result by the optical apparatus in the first situation, calculates the position of the optical apparatus in the first space in the second situation based on the optical received result by the optical apparatus in the second situation, and calculates the position of the optical apparatus in the second space in a situation where the workpiece is placed on the stage based on the position of the optical apparatus in the first situation and the position of the optical apparatus in the second situation.

[Supplementary Note 37]

The measurement system according to any one of the Supplementary Notes 30 to 36, wherein

the fiducial member is a second fiducial member,
a fiducial member that is positioned on the stage in a case where the workpiece is not placed on the stage is a first fiducial member,
the optical apparatus optically receives the returning light, which is generated by irradiating the first fiducial member with the measurement light, from the first fiducial member each time the stage or the processing head moves to each of the plurality of different positions in a first situation where the workpiece is not placed on the stage, and optically receives the returning light, which is generated by irradiating the second fiducial member with the measurement light, from the second fiducial member each time the stage or the processing head moves to each of the plurality of different positions in a second situation where the workpiece is placed on the stage and the optical apparatus is positioned in the first space, and
the computing unit calculates the position of the optical apparatus in the first situation based on the optical received result by the optical apparatus in the first situation, calculates the position of the optical apparatus in the first space in the second situation based on the optical received result by the optical apparatus in the second situation, and generates information related to the movement error in the second space occurring in a situation where the workpiece is placed on the stage based on the position of the optical apparatus in the first situation and the position of the optical apparatus in the second situation.

[Supplementary Note 38]

The measurement system according to any one of the Supplementary Notes 30 to 37, wherein

the fiducial member is a second fiducial member,
a fiducial member that is positioned on the stage in a case where the workpiece is not placed on the stage is a first fiducial member,
the optical apparatus optically receives the returning light, which is generated by irradiating the first fiducial member with the measurement light, from the first fiducial member each time the stage or the processing head moves to each of the plurality of different positions in a first situation where the workpiece is not placed on the stage, and optically receives the returning light, which is generated by irradiating the second fiducial member with the measurement light, from the second fiducial member each time the stage or the processing head moves to each of the plurality of different positions in a second situation where the workpiece is placed on the stage and the optical apparatus is positioned in the first space, and
the computing unit calculates the position of the optical apparatus in the first situation based on the optical received result by the optical apparatus in the first situation, calculates the position of the optical apparatus in the first space in the second situation based on the optical received result by the optical apparatus in the second situation, and generates information for correcting the movement error in the second space occurring in a situation where the workpiece is placed on the stage based on the position of the optical apparatus in the first situation and the position of the optical apparatus in the second situation.

[Supplementary Note 39]

The measurement system according to any one of the Supplementary Notes 30 to 38, wherein

the fiducial member is a second fiducial member,
a fiducial member that is positioned on the stage in a case where the workpiece is not placed on the stage is a first fiducial member,
the optical apparatus optically receives the returning light, which is generated by irradiating the first fiducial member with the measurement light, from the first fiducial member each time the stage or the processing head moves to each of the plurality of different positions in a first situation where the workpiece is not placed on the stage, and optically receives the returning light, which is generated by irradiating the second fiducial member with the measurement light, from the second fiducial member each time the stage or the processing head moves to each of the plurality of different positions in a second situation where the workpiece is placed on the stage and the optical apparatus is positioned in the first space, and
the computing unit generates information for correcting the movement error occurring in the first situation based on the optical received result by the optical apparatus in the first situation, generates information for correcting the movement error in the first space occurring in the first space in in the second situation based on the optical received result by the optical apparatus in the second situation, and generates information for correcting the movement error in the second space occurring in a situation where the workpiece is placed on the stage based on the information for correcting the movement error occurring in the first situation and the information for correcting the movement error in the first space occurring in the first space in the first situation.

[Supplementary Note 40]

The measurement system according to any one of the Supplementary Notes 35 to 39, wherein
the first situation is a situation where the optical apparatus is positioned in a third space that includes: a space occupied by the workpiece in a case where the workpiece is placed on the stage; and a space that is different from the space occupied by the workpiece in a case where the workpiece is placed on the stage.

[Supplementary Note 41]

The measurement system according to any one of the Supplementary Notes 30 to 40, wherein the first space includes a space around the second space.

[Supplementary Note 42]

The measurement system according to any one of the Supplementary Notes 30 to 41, wherein the first space includes at least one of a space above the second space and a space lateral to the second space.

[Supplementary Note 43]

The measurement system according to any one of the Supplementary Notes 1 to 42, wherein the computing unit calculates a position of the fiducial member, which is positioned on the workpiece placed on the stage, based on the optical received result of the returning light from the fiducial member by the optical apparatus.

[Supplementary Note 44]

The measurement system according to the Supplementary Note 43, wherein the computing unit:

generates at least one of information related to a movement error occurring in a movement of the stage in a space in which the stage moves to each of a plurality of different positions and information related to a movement error occurring in a movement of the processing head in a space in which the processing head moves to each of a plurality of different positions, based on the optical received result of the returning light from the fiducial member that is optically received by the optical apparatus each time the stage moves to each of the plurality of different positions and the optical received result of the returning light from the fiducial member that is optically received by the optical apparatus each time the processing head moves to each of the plurality of different positions, respectively; and calculates the position of the fiducial member based on the generated movement error in the space and the optical received result of the returning light from the fiducial member by the optical apparatus.

[Supplementary Note 45]

The measurement system according to the Supplementary Note 44, wherein the fiducial member is positioned on the workpiece place on the stage.

[Supplementary Note 46]

The measurement system according to the Supplementary Note 45, wherein the computing unit calculates at least one of a position of the workpiece, a posture of the workpiece, and a size of the workpiece based on the position of the fiducial member.

[Supplementary Note 47]

The measurement system according to any one of the Supplementary Notes 44 to 46, wherein at least two fiducial members are positioned on the workpiece place on the stage.

[Supplementary Note 48]

The measurement system according to the Supplementary Note 47, wherein the computing unit:

calculates positions of the at least two fiducial members based on the generated movement error in the space and the optical received result of the returning light from the at least two fiducial members by the optical apparatus; and calculates at least one of a position of the workpiece, a posture of the workpiece, and a size of the workpiece based on the positions of the at least two fiducial members.

[Supplementary Note 49]

The measurement system according to the Supplementary Note 43, wherein the fiducial member is positioned on the workpiece place on the stage.

[Supplementary Note 50]

The measurement system according to the Supplementary Note 49, wherein the computing unit calculates at least one of a position of the workpiece, a posture of the workpiece, and a size of the workpiece based on the position of the fiducial member.

[Supplementary Note 51]

The measurement system according to any one of the Supplementary Notes 43 and 49 to 50, wherein at least two fiducial members are positioned on the workpiece place on the stage.

[Supplementary Note 52]

The measurement system according to the Supplementary Note 51, wherein the computing unit:

calculates positions of the at least two fiducial members based on the generated movement error in the space and the optical received result of the returning light from the at least two fiducial members by the optical apparatus; and
calculates at least one of a position of the workpiece, a posture of the workpiece, and a size of the workpiece based on the positions of the at least two fiducial members.

[Supplementary Note 53]

The measurement system according to any one of the Supplementary Notes 1 to 52, wherein the computing unit calculates a position of the workpiece based on the optical received result of the returning light from the fiducial member by the optical apparatus.

[Supplementary Note 54]

The measurement system according to the Supplementary Note 53, wherein the fiducial member is positioned on the workpiece place on the stage.

[Supplementary Note 55]

The measurement system according to any one of the Supplementary Notes 1 to 54, wherein the computing unit generates information for correcting a processing path of the workpiece by the machine tool based on the optical received result of the returning light from the fiducial member by the optical apparatus.

[Supplementary Note 56]

The measurement system according to any one of the Supplementary Notes 1 to 55, wherein the computing unit corrects a processing path of the workpiece by the machine tool based on the optical received result of the returning light from the fiducial member by the optical apparatus.

[Supplementary Note 57]

The measurement system according to any one of the Supplementary Notes 1 to 56, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit generates information for correcting a processing path of the workpiece by the machine tool based on the optical received result of the returning light from the fiducial member by the optical apparatus.

[Supplementary Note 58]

The measurement system according to any one of the Supplementary Notes 1 to 57, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit corrects a processing path of the workpiece by the machine tool based on the optical received result of the returning light from the fiducial member by the optical apparatus.

[Supplementary Note 59]

The measurement system according to any one of the Supplementary Notes 53 to 58, wherein

the fiducial member is positioned on a datum of the workpiece placed on the stage, and
the computing unit calculates a position of the datum of the workpiece, which is a position of the workpiece, based on the optical received result of the returning light from the fiducial member by the optical apparatus.

[Supplementary Note 60]

The measurement system according to any one of the Supplementary Notes 53 to 59, wherein

the fiducial member is positioned on a datum of the workpiece placed on the stage, and
the computing unit calculates a position of the datum based on the optical received result of the returning light from the fiducial member by the optical apparatus.

[Supplementary Note 61]

The measurement system according to any one of the Supplementary Notes 53 to 60, wherein

the fiducial member is positioned on a datum of the workpiece placed on the stage, and
the computing unit:

generates at least one of information related to a movement error occurring in a movement of the stage in a space in which the stage moves and information related to a movement error occurring in a movement of the processing head in a space in which the processing head moves, based on the optical received result of the returning light from the fiducial member that is optically received by the optical apparatus each time the stage moves and the optical received result of the returning light from the fiducial member that is optically received by the optical apparatus each time the processing head moves, respectively; and
calculates a position of the datum based on the generated information related to the movement error in the space and the optical received result of the returning light from the fiducial member positioned on the datum by the optical apparatus.

[Supplementary Note 62]

The measurement system according to any one of the Supplementary Notes 59 to 61, wherein

the fiducial member is positioned so as to have a predetermined positional relationship relative to a datum point of the workpiece included in the datum, and
the computing unit calculates a position of the datum point as the position of the datum.

[Supplementary Note 63]

The measurement system according to any one of the Supplementary Notes 59 to 62, wherein

the fiducial member is positioned on a datum surface of the workpiece included in the datum, and
the computing unit calculates a position of the datum surface as the position of the datum.

[Supplementary Note 64]

The measurement system according to any one of the Supplementary Notes 59 to 63, wherein

the computing unit generates information for correcting a processing path of the workpiece by the machine tool based on the calculated position of the datum.

[Supplementary Note 65]

The measurement system according to any one of the Supplementary Notes 59 to 63, wherein
the computing unit corrects a processing path of the workpiece by the machine tool based on the calculated position of the datum.

[Supplementary Note 66]

The measurement system according to any one of the Supplementary Notes 59 to 65, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit generates information for correcting the measurement path based on the calculated position of the datum.

[Supplementary Note 67]

The measurement system according to any one of the Supplementary Notes 59 to 66, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit corrects the measurement path based on the calculated position of the datum.

[Supplementary Note 68]

The measurement system according to any one of the Supplementary Notes 1 to 67, wherein

at least two fiducial members are positioned on the workpiece placed on the stage, and
the computing unit calculates a position of each of the at least two fiducial members, which is positioned on the workpiece placed on the stage, based on the optical received result of the returning light from each of the at least four fiducial members by the optical apparatus.

[Supplementary Note 69]

The measurement system according to the Supplementary Note 68, wherein

the computing unit generates at least one of information related to a movement error occurring in a movement of the stage in a space in which the stage moves to each of a plurality of different positions and information related to a movement error occurring in a movement of the processing head in a space in which the processing head moves to each of a plurality of different positions, based on the optical received result of the returning light from each of the at least two fiducial members that is optically received by the optical apparatus each time the stage moves to each of the plurality of different positions and the optical received result of the returning light from each of the at least two fiducial members that is optically received by the optical apparatus each time the processing head moves to each of the plurality of different positions, respectively, and the computing unit calculates the positions of the at least two fiducial members based on the generated movement error in the space and the optical received result of the returning light from the at least two fiducial members positioned on the workpiece by the optical apparatus.

[Supplementary Note 70]

The measurement system according to any one of the Supplementary Notes 1 to 69, wherein

at least two fiducial members are positioned on the workpiece placed on the stage, and the computing unit calculates at least one of a position of the workpiece, a posture of the workpiece, and a size of the workpiece based on the optical received result of the returning light from each of the at least two fiducial members by the optical apparatus.

[Supplementary Note 71]

The measurement system according to the Supplementary Note 70, wherein
the computing unit generates information for correcting a processing path of the workpiece by the machine tool based on a calculated result of at least one of the position of the workpiece, the posture of the workpiece, and the size of the workpiece.

[Supplementary Note 72]

The measurement system according to the Supplementary Note 70 or 71, wherein
the computing unit corrects a processing path of the workpiece by the machine tool based on a calculated result of at least one of the position of the workpiece, the posture of the workpiece, and the size of the workpiece.

[Supplementary Note 73]

The measurement system according to any one of the Supplementary Notes 70 to 72, wherein

the optical apparatus optically receives returning light, which is generated by irradiating the workpiece with the measurement light along a measurement path, from the workpiece, the computing unit calculates a three-dimensional shape of the workpiece based on an optical received result of the returning light, which is generated by irradiating the workpiece with the measurement light along the measurement path, from the workpiece by the optical apparatus, and the computing unit generates information for correcting the measurement path based on a calculated result of at least one of the position of the workpiece, the posture of the workpiece, and the size of the workpiece.

[Supplementary Note 74]

The measurement system according to any one of the Supplementary Notes 70 to 73, wherein

the optical apparatus optically receives returning light, which is generated by irradiating the workpiece with the measurement light along a measurement path, from the workpiece, the computing unit calculates a three-dimensional shape of the workpiece based on an optical received result of the returning light, which is generated by irradiating the workpiece with the measurement light along the measurement path, from the workpiece by the optical apparatus, and the computing unit corrects the measurement path based on a calculated result of at least one of the position of the workpiece, the posture of the workpiece, and the size of the workpiece.

[Supplementary Note 75]

The measurement system according to any one of the Supplementary Notes 70 to 74, wherein

each of the at least two fiducial members is positioned on a datum of the workpiece placed on the stage,

the computing unit calculates a position of the datum of the workpiece based on the optical received result of the returning light from each of the at least two fiducial members by the optical apparatus, and
the computing unit calculates at least one of the position of the workpiece, the posture of the workpiece, and the size of the workpiece based on the calculated position of the datum.

[Supplementary Note 76]

The measurement system according to any one of the Supplementary Notes 70 to 75, wherein

each of the at least two fiducial members is positioned on a datum of the workpiece placed on the stage, and
the computing unit calculates a position of the datum based on the optical received result of the returning light from each of the at least two fiducial members by the optical apparatus.

[Supplementary Note 77]

The measurement system according to any one of the Supplementary Notes 70 to 76, wherein

each of the at least two fiducial members is positioned on a datum of the workpiece placed on the stage,
the computing unit:

generates at least one of information related to a movement error occurring in a movement of the stage in a space in which the stage moves to each of a plurality of different positions and information related to a movement error occurring in a movement of the processing head in a space in which the processing head moves to each of a plurality of different positions, based on the optical received result of the returning light from each of the at least two fiducial members that is optically received by the optical apparatus each time the stage moves to each of the plurality of different positions and the optical received result of the returning light from each of the at least two fiducial members that is optically received by the optical apparatus each time the processing head moves to each of the plurality of different positions, respectively; and
the computing unit calculates a position of the datum based on the generated movement error in the space and the optical received result of the returning light from the at least two fiducial members positioned on the datum by the optical apparatus.

[Supplementary Note 78]

The measurement system according to any one of the Supplementary Notes 70 to 77, wherein

each of the at least two fiducial members is positioned so as to have a predetermined positional relationship relative to a datum point of the workpiece included in the datum, and
the computing unit calculates a position of the datum point as the position of the datum.

[Supplementary Note 79]

The measurement system according to any one of the Supplementary Notes 70 to 78, wherein

each of the at least two fiducial members is positioned on a datum surface of the workpiece included in the datum, and
the computing unit calculates a position of the datum surface as the position of the datum.

[Supplementary Note 80]

The measurement system according to any one of the Supplementary Notes 75 to 79, wherein
the computing unit generates information for correcting a processing path of the workpiece by the machine tool based on the calculated position of the datum.

[Supplementary Note 81]

The measurement system according to any one of the Supplementary Notes 75 to 80, wherein
the computing unit corrects a processing path of the workpiece by the machine tool based on the calculated position of the datum.

[Supplementary Note 82]

The measurement system according to any one of the Supplementary Notes 75 to 81, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit generates information for correcting the measurement path based on the calculated position of the datum.

[Supplementary Note 83]

The measurement system according to any one of the Supplementary Notes 75 to 82, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit corrects the measurement path based on the calculated position of the datum.

[Supplementary Note 84]

The measurement system according to any one of the Supplementary Notes 1 to 83, wherein

the optical apparatus optically receives returning light, which is generated by irradiating a predetermined part of the workpiece with the measurement light, from the predetermined part, and

the computing unit calculates a position of the predetermined part based on an optical received result of the returning light from the predetermined part by the optical apparatus.

[Supplementary Note 85]

The measurement system according to any one of the Supplementary Notes 1 to 84, wherein

the optical apparatus optically receives returning light, which is generated by irradiating each of at least two predetermined parts of the workpiece with the measurement light, from each of the at least two predetermined parts, and
the computing unit calculates a position of each of the at least two predetermined parts based on an optical received result of the returning light from each of the at least two predetermined parts by the optical apparatus.

[Supplementary Note 86]

The measurement system according to the Supplementary Note 84 or 85, wherein
the predetermined part includes a feature point of the workpiece.

[Supplementary Note 87]

The measurement system according to any one of the Supplementary Notes 84 to 87, wherein
the computing unit generates information for correcting a processing path of the workpiece by the machine tool based on the optical received result of the returning light from the predetermined part by the optical apparatus.

[Supplementary Note 88]

The measurement system according to any one of the Supplementary Notes 84 to 87, wherein
the computing unit corrects a processing path of the workpiece by the machine tool based on the optical received result of the returning light from the predetermined part by the optical apparatus.

[Supplementary Note 89]

The measurement system according to any one of the Supplementary Notes 84 to 88, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit generates information for correcting the measurement path based on the optical received result of the returning light from the predetermined part by the optical apparatus.

[Supplementary Note 90]

The measurement system according to any one of the Supplementary Notes 84 to 89, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit corrects the measurement path based on the optical received result of the returning light from the predetermined part by the optical apparatus.

[Supplementary Note 91]

The measurement system according to the Supplementary Note 84, wherein
the computing unit calculates at least one of a position of the workpiece, a posture of the workpiece, and a size of the workpiece based on the position of the predetermined part.

[Supplementary Note 92]

The measurement system according to the Supplementary Note 85, wherein
the computing unit calculates at least one of a position of the workpiece, a posture of the workpiece, and a size of the workpiece based on the position of each of the at least two predetermined parts.

[Supplementary Note 93]

The measurement system according to the Supplementary Note 91 or 92, wherein
the computing unit generates information for correcting a processing path of the workpiece by the machine tool based on a calculated result of at least one of the position of the workpiece, the posture of the workpiece, and the size of the workpiece.

[Supplementary Note 94]

The measurement system according to any one of the Supplementary Notes 91 to 93, wherein
the computing unit corrects a processing path of the workpiece by the machine tool based on a calculated result of at least one of the position of the workpiece, the posture of the workpiece, and the size of the workpiece.

[Supplementary Note 95]

The measurement system according to any one of the Supplementary Notes 91 to 94, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit generates information for correcting the measurement path based on a calculated result of at least one of the position of the workpiece, the posture of the workpiece, and the size of the workpiece.

[Supplementary Note 96]

The measurement system according to any one of the Supplementary Notes 91 to 95, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit corrects the measurement path based on a calculated result of at least one of the position of the workpiece, the posture of the workpiece, and the size of the workpiece.

[Supplementary Note 97]

The measurement system according to any one of the Supplementary Notes 1 to 96, wherein

the fiducial member is positioned on the workpiece placed on the stage,
the optical apparatus irradiates the fiducial member with converged light as the measurement light,
the computing unit calculates at least one of a position of the workpiece, a posture of the workpiece, and a size of the workpiece based on the optical received result of the returning light from the fiducial member by the optical apparatus in a case where the fiducial member is irradiated with the converged light as the measurement light.

[Supplementary Note 98]

The measurement system according to any one of the Supplementary Notes 1 to 96, wherein

the optical apparatus irradiates the predetermined part with converged light as the measurement light,
the computing unit calculates at least one of a position of the workpiece, a posture of the workpiece, and a size of the workpiece based on the optical received result of the returning light from the predetermined part by the optical apparatus in a case where the predetermined part is irradiated with the converged light as the measurement light.

[Supplementary Note 99]

The measurement system according to the Supplementary Note 98, wherein
the computing unit generates information for correcting a processing path of the workpiece by the machine tool based on a calculated result of at least one of the position of the workpiece, the posture of the workpiece, and the size of the workpiece.

[Supplementary Note 100]

The measurement system according to the Supplementary Note 98 or 99, wherein
the computing unit corrects a processing path of the workpiece by the machine tool based on a calculated result of at least one of the position of the workpiece, the posture of the workpiece, and the size of the workpiece.

[Supplementary Note 101]

The measurement system according to any one of the Supplementary Notes 98 to 100, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit generates information for correcting the measurement path based on a calculated result of at least one of the position of the workpiece, the posture of the workpiece, and the size of the workpiece.

[Supplementary Note 102]

The measurement system according to any one of the Supplementary Notes 98 to 101, wherein

the optical apparatus optically receives returning light, which is generated by irradiating the workpiece with the measurement light along a measurement path, from the workpiece,
the computing unit calculates a three-dimensional shape of the workpiece based on an optical received result of the returning light, which is generated by irradiating the workpiece with the measurement light along the measurement path, from the workpiece by the optical apparatus, and
the computing unit corrects the measurement path based on a calculated result of at least one of the position of the workpiece, the posture of the workpiece, and the size of the workpiece.

[Supplementary Note 103]

The measurement system according to any one of the Supplementary Notes 1 to 102, wherein

the optical apparatus irradiates the workpiece with converged light as the measurement light,
the computing unit calculates a three-dimensional shape of the workpiece based on an optical received result of the returning light from the workpiece by the optical apparatus in a case where the workpiece is irradiated with the converged light as the measurement light.

[Supplementary Note 104]

The measurement system according to any one of the Supplementary Notes 1 to 103, wherein

the optical apparatus irradiates the fiducial member with collimated light as the measurement light,
the computing unit calculates a distance between the optical apparatus and the fiducial member based on the optical received result of the returning light from the fiducial member by the optical apparatus in a case where the fiducial member is irradiated with the collimated light as the measurement light.

[Supplementary Note 105]

The measurement system according to any one of the Supplementary Notes 1 to 104, wherein

the optical apparatus includes an optical member that is movable relative an optical path of the measurement light,
the optical apparatus irradiates the fiducial member with one of converged light and collimated light as the measurement light in a case where the optical member is positioned on the optical path of the measurement light,
the optical apparatus irradiates the fiducial member with the other one of the converged light and the collimated light as the measurement light in a case where the optical member is not positioned on the optical path of the measurement light,
the computing unit calculates at least one of a position of the workpiece, a posture of the workpiece, and a size of the workpiece based on the optical received result of the returning light from the fiducial member by the optical apparatus in a case where the fiducial member is irradiated with the converged light as the measurement light, and
the computing unit calculates a distance between the optical apparatus and the fiducial member based on the optical received result of the returning light from the fiducial member by the optical apparatus in a case where the fiducial member is irradiated with the collimated light as the measurement light.

[Supplementary Note 106]

The measurement system according to any one of the Supplementary Notes 1 to 105, wherein

the optical apparatus irradiates the fiducial member with one of converged light and collimated light as the measurement light through a first optical system,
the optical apparatus irradiates the fiducial member with the other one of the converged light and the collimated light as the measurement light through a second optical system that is different from the first optical system at least partially,
the computing unit calculates at least one of a position of the workpiece, a posture of the workpiece, and a size of the workpiece based on the optical received result of the returning light from the fiducial member by the optical apparatus in a case where the fiducial member is irradiated with the converged light as the measurement light, and
the computing unit calculates a distance between the optical apparatus and the fiducial member based on the optical received result of the returning light from the fiducial member by the optical apparatus in a case where the fiducial member is irradiated with the collimated light as the measurement light.

[Supplementary Note 107]

The measurement system according to any one of the Supplementary Notes 1 to 106, wherein

the optical apparatus is a first optical apparatus,
the measurement light is first measurement light that is collimated light,
the computing unit calculates a distance between the optical apparatus and the fiducial member based on the optical received result of the returning light from the fiducial member by the first optical apparatus,
the measurement system further comprises a second optical apparatus that optically receives the returning light, which is generated by irradiating the fiducial member with second measurement light that is converged light, from the fiducial member, and
the computing unit calculates at least one of a position of the workpiece, a posture of the workpiece, and a size of the workpiece based on the optical received result of the returning light from the fiducial member by the second optical apparatus.

[Supplementary Note 108]

The measurement system according to any one of the Supplementary Notes 1 to 107, wherein

the optical apparatus optically receives returning light, which is generated by irradiating the workpiece with second measurement light, from the workpiece, and
the computing unit calculates a three-dimensional shape of the workpiece based on an optical received result of the returning light from the workpiece by the optical apparatus.

[Supplementary Note 109]

The measurement system according to the Supplementary Note 108, wherein

the computing unit generates, based on the calculated distance, at least one of information related to a movement error occurring in a movement of the stage and information related to a movement error occurring in a movement of the processing head, and
the optical apparatus irradiates the workpiece with the measurement light so that an irradiation position of the measurement light on the workpiece moves along a measurement path that is corrected based on the information related to the movement error.

[Supplementary Note 110]

The measurement system according to the Supplementary Note 109, wherein
at least one of the processing head and the stage is controlled so that the irradiation position of the measurement light on the workpiece moves along the measurement path that is corrected based on the information related to the movement error.

[Supplementary Note 111]

The measurement system according to any one of the Supplementary Notes 108 to 110, wherein

the fiducial member is position on the workpiece placed on the stage,
the computing unit calculates at least one of a position of the workpiece, a posture of the workpiece, and a size of the workpiece based on the optical received result of the returning light from the fiducial member by the optical apparatus, and
the optical apparatus irradiates the workpiece with the measurement light so that an irradiation position of the measurement light on the workpiece moves along a measurement path that is corrected based on at least one of the position of the workpiece, the posture of the workpiece, and the size of the workpiece.

[Supplementary Note 112]

The measurement system according to any one of the Supplementary Notes 1 to 111, wherein
the computing unit calculates a position of the optical apparatus based on a temperature of at least one of the workpiece and the stage that is detected by a temperature detector, which is configured to detect the temperature of at least one of the workpiece and the stage, and the optical received result of the returning light from the fiducial member by the optical apparatus.

[Supplementary Note 113]

The measurement system according to any one of the Supplementary Notes 1 to 112, wherein the computing unit calculates a position of the optical apparatus based on a temperature of the machine tool that is detected by a temperature detector, which is configured to detect the temperature of the machine tool, and the optical received result of the returning light from the fiducial member by the optical apparatus.

[Supplementary Note 114]

The measurement system according to the Supplementary Note 113, wherein the temperature detector is configured to detect, as the temperature of the machine tool, at least one of a temperature in a space including an optical path of the measurement light between the optical apparatus and the workpiece, a temperature of the stage, and a temperature of the workpiece.

[Supplementary Note 115]

The measurement system according to any one of the Supplementary Notes 112 to 114 further comprising the temperature detector.

[Supplementary Note 116]

The measurement system according to any one of the Supplementary Notes 112 to 115, wherein the temperature detector includes a thermography camera.

[Supplementary Note 117]

The measurement system according to any one of the Supplementary Notes 112 to 116, wherein

the fiducial member is positioned on the stage or the workpiece through a support member that supports the fiducial member, and
the temperature detector is positioned at the support member.

[Supplementary Note 118]

The measurement system according to the Supplementary Note 117, wherein the fiducial member, which is supported by the support member at which the temperature detector is positioned, is positioned on the workpiece through the support member.

[Supplementary Note 119]

The measurement system according to any one of the Supplementary Notes 1 to 118, wherein the workpiece is placed on the stage through a low thermal expansion member whose linear expansion coefficient is equal to or less than a predetermined value.

[Supplementary Note 120]

The measurement system according to any one of the Supplementary Notes 1 to 119, wherein

the fiducial member is a first fiducial member,
the optical apparatus calculates a distance between the optical apparatus and a second fiducial member based on an optical received result of returning light, which is generated by irradiating the second fiducial member with the measurement light, from the second fiducial member at each time of a first time and a second time that is different from the first time,
the computing unit calculates a position of the optical apparatus based on the optical received result of the returning light from the first fiducial member by the optical apparatus and a difference in a position of the processing head in a case where the distance between the optical apparatus and the second fiducial member calculated based on the optical received result of the returning light from the second fiducial member at the first time is the same as the distance between the optical apparatus and the second fiducial member calculated based on the optical received result of the returning light from the second fiducial member at the second time,
the fiducial member is positioned on the stage or on the workpiece placed on the stage, and
the second fiducial member is a fiducial member that is the same as the first fiducial member or the second fiducial member is a fiducial member that is different from the first fiducial member.

[Supplementary Note 121]

The measurement system according to any one of the Supplementary Notes 1 to 120, wherein a heat source of the optical apparatus is thermally coupled to a housing of the optical apparatus.

[Supplementary Note 122]

The measurement system according to any one of the Supplementary Notes 1 to 121, wherein

a plurality of fiducial members are positioned on at least one of the stage and the workpiece,
the computing unit calculates a distance between the optical apparatus and each of the plurality of fiducial members based on the optical received result of the returning light from each of the plurality of fiducial members by the optical apparatus, and

the computing unit calculates a position of the optical apparatus based on the calculated distance between the optical apparatus and each of the plurality of fiducial members.

[Supplementary Note 123]

The measurement system according to the Supplementary Note 122, wherein

the computing unit calculates the distance between the optical apparatus and each of the plurality of fiducial members based on a temperature of at least one of the workpiece and the stage that is detected by a temperature detector, which is configured to detect the temperature of at least one of the workpiece and the stage, and the optical received result of the returning light from each of the plurality of fiducial members by the optical apparatus, and

the computing unit calculates the position of the optical apparatus based on the calculated distance between the optical apparatus and each of the plurality of fiducial members.

[Supplementary Note 124]

The measurement system according to the Supplementary Note 122 or 123, wherein

the plurality of fiducial members are a plurality of first fiducial members,

the optical apparatus optically receives returning light, which is generated by irradiating a second fiducial member with the measurement light, from the second fiducial member at each time of a first time and a second time that is different from the first time,

the computing unit calculates the distance between the optical apparatus and each of the plurality of first fiducial members based on the optical received result of the returning light from each of the plurality of first fiducial members by the optical apparatus and a difference in a position of the processing head in a case where a distance between the optical apparatus and the second fiducial member calculated based on the optical received result of the returning light from the second fiducial member at the first time is the same as a distance between the optical apparatus and the second fiducial member calculated based on the optical received result of the returning light from the second fiducial member at the second time,

the computing unit calculates the position of the optical apparatus based on the calculated distance between the optical apparatus and each of the plurality of first fiducial members,

the second fiducial member is positioned on the stage or on the workpiece placed on the stage, and the second fiducial member is a fiducial member that is the same as at least one of the plurality of first fiducial members or the second fiducial member is a fiducial member that is different from each of the plurality of first fiducial members.

[Supplementary Note 125]

The measurement system according to any one of the Supplementary Notes 120 and 122 to 124, wherein the position of the optical apparatus is a fiducial point that is a fiducial for calculating the distance.

[Supplementary Note 126]

The measurement system according to any one of the Supplementary Notes 1 to 125, wherein

the optical apparatus includes a direction change member that is configured to change a propagating direction of the measurement light,

the computing unit controls the direction change member so as to scan a first area, which is allowed to be irradiated with the measurement light by the direction change member changing the propagating direction of the measurement light, with the measurement light,

the optical apparatus optically receives returning light from the first area that is generated by scanning the first area with the measurement light,

the computing unit calculates a direction of the fiducial member from the optical apparatus based on an optical received result of returning light from the first area by the optical apparatus, and

the computing unit controls the direction change member so as to irradiate the fiducial member with the measurement light based on the calculated direction.

[Supplementary Note 127]

The measurement system according to the Supplementary Note 126, wherein

the computing unit calculates a direction from the optical apparatus of a second area, in which the fiducial member is positioned and which is smaller than the first area, based on the optical received result of the returning light from the first area by the optical apparatus,

the computing unit controls the direction change member so as to scan the second area with the measurement light based on the direction of the second area,

the optical apparatus optically receives returning light from the second area that is generated by scanning the second area with the measurement light, and

the computing unit calculates the direction of the fiducial member from the optical apparatus based on an optical received result of the returning light from the second area by the optical apparatus.

[Supplementary Note 128]

The measurement system according to the Supplementary Note 126 or 127, wherein

the calculated direction of the fiducial member from the optical apparatus is a direction of the fiducial member from the optical apparatus in a case where a relative positional relationship between the stage and the processing head is a first positional relationship,

the computing unit calculates a direction of the fiducial member from the optical apparatus in a second positional relationship based on the direction of the fiducial member from the optical apparatus in the first positional relationship and at least one of a movement distance and a movement direction of at least one of the stage and the processing head for changing the relative positional relationship between the stage and the processing head from the first positional relationship to the second positional relationship,

the computing unit controls the direction change member so as to irradiate the fiducial member with the measurement light in the second positional relationship based on the calculated direction of the fiducial member, and

the optical apparatus optically receives the returning light from the fiducial member that is generated by irradiating the fiducial member with the measurement light whose propagating direction has been changed by the direction change member in the second positional relationship.

[Supplementary Note 129]

The measurement system according to the Supplementary Note 128, wherein

the computing unit calculates a direction of a second area, in which the fiducial member is positioned and which is smaller than the first area, from the optical apparatus in the second positional relationship based on the direction of the fiducial member from the optical apparatus in the first positional relationship and at least one of the movement distance and the movement direction of at least one of the stage and the processing head for a change from the first positional relationship to the second positional relationship,

the computing unit controls the direction change member so as to scan the second area with the measurement light in the second positional relationship based on the calculated direction of the second area from the optical apparatus,

the optical apparatus optically receives the returning light from the second area that is generated by scanning the second area with the measurement light in the second positional relationship, and

the computing unit calculates the direction of the fiducial member from the optical apparatus in the second positional relationship based on the optical received result of the returning light from the second area by the optical apparatus.

[Supplementary Note 130]

The measurement system according to the Supplementary Note 128 or 129, wherein

the computing unit:

calculates a position of the optical apparatus in the first positional relationship and a position of the optical apparatus in the second positional relationship based on the optical received result of the returning light from the fiducial member by the optical apparatus in the first positional relationship and the optical received result of the returning light from the fiducial member by the optical apparatus in the second positional relationship; and

calculates, based on the calculated position of the optical apparatus in the first positional relationship and the calculated position of the optical apparatus in the second positional relationship, at least one of a movement error occurring in a movement of the stage in a space in which the stage moves due to the change from the first positional relationship to the second positional relationship and a movement error occurring in a movement of the processing head in a space in which the processing head moves due to the change from the first positional relationship to the second positional relationship.

[Supplementary Note 131]

The measurement system according to any one of the Supplementary Notes 1 to 130, wherein

a movement of the stage or the processing head includes a translational movement along at least one of a first translational axis, a second translational axis, and a third translational axis that are orthogonal to one another,

the optical apparatus optically receives the returning light, which is generated by irradiating the fiducial member with the measurement light, from the fiducial member each time the stage or the processing head moves translationally to each of a plurality of different positions,

the computing unit calculates a position of the optical apparatus in a space in which the stage or the processing head moves translationally to each of the plurality of different positions, based on the optical received result of the returning light from the fiducial member which is optically received by the optical apparatus each time the stage or the processing head moves translationally to each of the plurality of different positions, and

the computing unit generates, based on the calculated position of the optical apparatus in the space, at least one of information related to a movement error occurring in the translational movement of the stage in the space in which the stage moves and information related to a movement error occurring in the translational movement of the processing head in the space in which the processing moves.

[Supplementary Note 132]

The measurement system according to the Supplementary Note 131, wherein

the optical apparatus optically receives the returning light from the fiducial member each time the processing head moves translationally to each of a plurality of different positions along at least one of the first to third translational axes,

the computing unit calculates a position of the optical apparatus in the space in which it moves translationally to each of the plurality of different positions along at least one of the first to third translational axes, based on the optical received result of the returning light from the fiducial member which is optically received by the optical apparatus each time the processing head moves translationally to each of the plurality of different positions, and

the computing unit calculates, based on the calculated position of the optical apparatus in the space, the information related to the movement error occurring in the translational movement of the processing head along at least one of the first to third translational axes in the space.

[Supplementary Note 133]

The measurement system according to the Supplementary Note 131 or 132, wherein

the optical apparatus optically receives the returning light from each of the fiducial member that has moved due to the translational movement of the stage each time the stage moves translationally to each of the plurality of different positions along at least one of the first to third translational axes,

the computing unit calculates a position of the optical apparatus relative the fiducial member in the space in which it moves translationally to each of the plurality of different positions along at least one of the first to third translational axes, based on the optical received result of the returning light from the fiducial member which is optically received by the optical apparatus each time the stage moves translationally to each of the plurality of different positions, and

the computing unit calculates, based on the calculated position of the optical apparatus in the space, the movement error occurring in the translational movement of the stage along at least one of the first to third translational axes in the space.

[Supplementary Note 134]

The measurement system according to any one of the Supplementary Notes 131 to 133, wherein

the fiducial member is a first fiducial member,

the movement of the stage or the processing head includes, in addition to the translational movement, a rotational movement around at least one of a first rotational axis, a second rotational axis, and a third rotational axis that are orthogonal to one another,

the optical apparatus optically receives returning light, which is generated by irradiating a second fiducial member with the measurement light, from the second fiducial member in each of at least three positional relationships among which a relative positional relationship between the stage and the processing head is different, each time the stage or the processing head moves rotationally to each of a plurality of different positions around at least one of the first to third rotational axes,

the computing unit calculates a position of the second fiducial member for each rotational movement based on an optical received result of the returning light from the second fiducial member that is optically received by the optical apparatus in each of the at least three positional relationships,

the computing unit calculates, based on the calculated position of the second fiducial member for each rotational movement, at least one of a movement error occurring in the rotational movement of the processing head around at least one of the first to third rotational axes and a movement error occurring in the rotational movement of the stage around at least one of the first to third rotational axes,

the second fiducial member is positioned on the stage or on the workpiece placed on the stage,

the second fiducial member is a fiducial member that is the same as the first fiducial member or the second fiducial member is a fiducial member that is different from the first fiducial member, and

the stage or the processing head is aligned so as to be in the at least three positional relationships based on the information related to the movement error occurring in the translational movement.

[Supplementary Note 135]

The measurement system according to the Supplementary Note 134, wherein

the optical apparatus optically receives the returning light, which is generated by irradiating each of at least three second fiducial members with the measurement light, from each of the at least three second fiducial members in each of the at least three positional relationships among which the relative positional relationship between the stage and the processing head is different, each time the stage or the processing head moves rotationally to each of the plurality of different positions around at least one of the first to third rotational axes,
the computing unit calculates the position of each of the at least three second fiducial members for each rotational movement based on the optical received result of the returning light from each of the at least three second fiducial members that is optically received by the optical apparatus in each of the at least three positional relationships,
the computing unit calculates, based on the calculated position of each of the at least three second fiducial members for each rotational movement, at least one of the movement error occurring in the rotational movement of the processing head around at least one of the first to third rotational axes and the movement error occurring in the rotational movement of the stage around at least one of the first to third rotational axes,
each of the at least three second fiducial members is positioned on the stage or on the workpiece placed on the stage, and
each of the at least three second fiducial members is a fiducial member that is the same as the first fiducial member or each of the at least three second fiducial members is a fiducial member that is different from the first fiducial member.

[Supplementary Note 136]

The measurement system according to any one of the Supplementary Notes 131 to 135, wherein

the optical apparatus includes a direction change member that is configured to change a propagating direction of the measurement light,
the fiducial member is a first fiducial member,
the movement of the stage or the processing head includes, in addition to the translational movement, a rotational movement around at least one of a first rotational axis, a second rotational axis, and a third rotational axis that are orthogonal to one another,
the optical apparatus optically receives returning light, which is generated by irradiating a second fiducial member with the measurement light whose propagating direction is changed by the direction change member, from the second fiducial member in each of at least two positional relationships among which a relative positional relationship between the stage and the processing head is different, each time the stage or the processing head moves rotationally to each of a plurality of different positions around at least one of the first to third rotational axes,
the computing unit calculates a position of the second fiducial member for each rotational movement based on an optical received result of the returning light from the second fiducial member that is optically received by the optical apparatus in each of the at least two positional relationships,
the computing unit calculates, based on the calculated position of the second fiducial member for each rotational movement and information related to the propagating direction of the measurement light changed by the direction change member, at least one of a movement error occurring in the rotational movement of the processing head around at least one of the first to third rotational axes and a movement error occurring in the rotational movement of the stage around at least one of the first to third rotational axes,
the second fiducial member is positioned on the stage or on the workpiece placed on the stage,
the second fiducial member is a fiducial member that is the same as the first fiducial member or the second fiducial member is a fiducial member that is different from the first fiducial member, and
the stage or the processing head is aligned so as to be in the at least two positional relationships based on the information related to the movement error occurring in the translational movement.

[Supplementary Note 137]

The measurement system according to any one of the Supplementary Notes 131 to 136, wherein

the optical apparatus includes a direction change member that is configured to change a propagating direction of the measurement light,
the fiducial member is a first fiducial member,
the movement of the stage or the processing head includes, in addition to the translational movement, a rotational movement around at least one of a first rotational axis, a second rotational axis, and a third rotational axis that are orthogonal to one another,
the optical apparatus optically receives returning light, which is generated by irradiating a second fiducial member with the measurement light whose propagating direction is changed by the direction change member, from the second fiducial member in a state where a relative positional relationship between the stage and the processing head is a predetermined positional relationship, each time the stage or the processing head moves rotationally to each of a plurality of different positions around at least one of the first to third rotational axes,

the computing unit calculates a position of the second fiducial member for each rotational movement based on an optical received result of the returning light from the second fiducial member that is optically received by the optical apparatus in a state where the relative positional relationship between the stage and the processing head is the predetermined positional relationship,

the computing unit calculates, based on the calculated position of the second fiducial member for each rotational movement and information related to the propagating direction of the measurement light changed by the direction change member, at least one of a movement error occurring in the rotational movement of the processing head around at least one of the first to third rotational axes and a movement error occurring in the rotational movement of the stage around at least one of the first to third rotational axes,

the second fiducial member is positioned on the stage or on the workpiece placed on the stage,

the second fiducial member is a fiducial member that is the same as the first fiducial member or the second fiducial member is a fiducial member that is different from the first fiducial member, and

the stage or the processing head is aligned so as to be in the predetermined positional relationship based on the information related to the movement error occurring in the translational movement.

[Supplementary Note 138]

The measurement system according to any one of the Supplementary Notes 1 to 137, wherein

the optical apparatus optically receives the returning light, which is generated by irradiating the fiducial member with the measurement light, from the fiducial member in a situation where the workpiece is placed on the stage before the machine tool starts processing the workpiece, and

the computing unit calculates the distance between the optical apparatus and the fiducial member based on the optical received result of the returning light from each of the fiducial member by the optical apparatus before the machine tool starts processing the workpiece.

[Supplementary Note 139]

The measurement system according to any one of the Supplementary Notes 1 to 138, wherein

the optical apparatus irradiates the fiducial member with the measurement light that propagates along one optical path between the optical apparatus and the workpiece, and

the optical apparatus optically receives, as the returning light, light propagating along the one optical path out of light, which is generated by irradiating the fiducial member with the measurement light, from the fiducial member.

[Supplementary Note 140]

The measurement system according to any one of the Supplementary Notes 1 to 139, wherein the measurement light is collimated light.

[Supplementary Note 141]

The measurement system according to any one of the Supplementary Notes 1 to 140, wherein the measurement system further comprises an optical detector that detects interfering light generated by an interference between reference light and the returning light from the fiducial member optically received by the optical apparatus.

[Supplementary Note 142]

The measurement system according to the Supplementary Note 141, wherein the optical detector is positioned inside the optical apparatus.

[Supplementary Note 143]

The measurement system according to the Supplementary Note 141, wherein the optical detector is positioned outside the optical apparatus.

[Supplementary Note 144]

The measurement system according to the Supplementary Note 143, wherein the optical detector is optically connected to the optical apparatus through a polarization maintaining optical fiber.

[Supplementary Note 145]

The measurement system according to the Supplementary Note 143 or 144, wherein the optical detector transmits the measurement light and the reference light toward the optical apparatus through the same first polarization maintaining optical fiber.

[Supplementary Note 146]

The measurement system according to any one of the Supplementary Notes 143 to 145, wherein

the optical apparatus transmits the returning light and the reference light toward the optical detector through the same second polarization maintaining optical fiber.

[Supplementary Note 147]

The measurement system according to the Supplementary Note 146, wherein
the optical apparatus includes a reflection element that reflects the returning light and the reference light toward the optical detector.

[Supplementary Note 148]

The measurement system according to the Supplementary Note 146 or 147, wherein
the optical detector detects the interfering light generated by the interference between the reference light entering the optical detector and the returning light entering the optical detector.

[Supplementary Note 149]

The measurement system according to the Supplementary Note 143, wherein
the optical apparatus transmits the interference light, which is generated by the interference between the reference light and the returning light, toward the optical detector.

[Supplementary Note 150]

The measurement system according to the Supplementary Note 143 or 144, wherein

the measurement light is transmitted from another optical apparatus, which includes the optical detector, to the optical apparatus through a third polarization maintaining optical fiber, and
the reference light is transmitted from the another optical apparatus, which includes the optical detector, to the optical apparatus through a forth polarization maintaining optical fiber, and

[Supplementary Note 151]

The measurement system according to any one of the Supplementary Notes 1 to 150, wherein

the optical apparatus includes a direction change member that is configured to change a propagating direction of the measurement light,
the direction change member includes a reflection member, and
the reflection member is configured to change the propagating direction of the measurement light by rotating around a rotational axis that intersects an optical path of the measurement light, entering the reflection member, at an incident side.

[Supplementary Note 152]

The measurement system according to the Supplementary Note 151, wherein

the optical apparatus further includes an irradiation optical system that irradiates the workpiece with the measurement light emitted from the direction change member, and
a deflection angle of the measurement light emitted from the irradiation optical system is greater than a deflected angle of the measurement light emitted from the direction change member in a case where the mirror rotates around the rotational axis.

[Supplementary Note 153]

The measurement system according to the Supplementary Note 152, wherein
the irradiation optical system includes a first optical system that forms a real image of the reflection member or a second optical system that forms a virtual image of the reflection member.

[Supplementary Note 154]

The measurement system according to any one of the Supplementary Notes 151 to 153, wherein

the rotational axis is a first rotational axis, and
the reflection member is configured to change the propagating direction of the measurement light by rotating around a second rotational axis that intersects an optical path of the measurement light, entering the reflection member, at an incident side and that intersects the first rotational axis.

[Supplementary Note 155]

The measurement system according to any one of the Supplementary Notes 151 to 153, wherein
the optical apparatus is configured to change a changing range of the propagating direction of the measurement light emitted from the direction change member.

[Supplementary Note 156]

The measurement system according to the Supplementary Note 155, wherein
the optical apparatus is configured to change the changing range of the propagating direction of the measurement light by changing an attachment angle of the direction change member to the optical apparatus.

[Supplementary Note 157]

The measurement system according to the Supplementary Note 155 or 156, wherein
the optical apparatus is configured to change the changing range of the propagating direction of the measurement light by changing an incident direction along which the measurement light enters the direction change member.

[Supplementary Note 158]

The measurement system according to the Supplementary Note 157, wherein
the optical apparatus includes:

a first reflection optical element that reflects the measurement light toward the direction change member so that the measurement light enters the direction change member from a first incident direction;
a second reflection optical element that reflects the measurement light toward the direction change member so that the measurement light enters the direction change member from a second incident direction that is different from the first incident direction; and
an optical path switch optical element that switches an optical path of the measurement light between a first optical path along which the measurement light is directed toward the first reflection optical element and a second optical path along which the measurement light is directed toward the second reflection optical element,
the measurement light entering the direction change member from the first incident direction is reflected by the reflection member to propagate in a propagating direction in a first changing range of the propagating direction, and
the measurement light entering the direction change member from the second incident direction is reflected by the reflection member to propagate in a propagating direction in a second changing range of the propagating direction that is different from the first changing range of the propagating direction at least partially.

[Supplementary Note 159]

The measurement system according to any one of the Supplementary Notes 151 to 158, wherein

the direction change member is a first direction change member,
the reflection member is a first reflection member,
the optical apparatus includes a second direction change member that is configured to change the propagating direction of the measurement light by using a second reflection member rotatable around a second rotational axis that intersects an optical path of the measurement light, entering the reflection member, at an incident side and that intersects the first rotational axis, and
the measurement light emitted from the second direction change member enters the first direction change member.

[Supplementary Note 160]

The measurement system according to the Supplementary Note 159, wherein
the optical apparatus further includes a relay optical system that is positioned on an optical path of the measurement light between the first and second direction change members and that allows the first direction change member to be optically conjugate to the second direction change member.

[Supplementary Note 161]

The measurement system according to any one of the Supplementary Notes 151 to 158, wherein

the optical apparatus irradiates the fiducial member with the measurement light a plurality of number of times, and optically receives the returning light from the fiducial member a plurality of number of times by optically receiving the returning light from the fiducial member each time the fiducial member is irradiated with the measurement light, and
the computing unit calculates a plurality of distances between the optical apparatus and the fiducial member based on a plurality of optical received results of the returning light from the fiducial member, and calculates an average of the calculated distances as the distance between the optical apparatus and the reference member.

[Supplementary Note 162]

The measurement system according to any one of the Supplementary Notes 1 to 161, wherein

the optical apparatus includes a direction change member that is configured to change a propagating direction of the measurement light,
the direction change member includes a reflection member,
the reflection member is configured to change the propagating direction of the measurement light by rotating around a rotational axis that intersects an optical path of the measurement light, entering the reflection member, at an incident side, and
the reflection member rotates each time the optical apparatus optically receives the returning light from the fiducial member.

[Supplementary Note 163]

A machine tool including:

the measurement system according to any one of the Supplementary Notes 1 to 162;
the processing head;
the stage; and
a driving apparatus that moves at least one of the processing head and the placing apparatus.

[Supplementary Note 164]

A measurement method that is used for a machine tool, wherein

the machine tool processes a workpiece by a tool, which is attached to a main spindle of a processing head in a detachable manner, while moving at least one of a stage, on which the workpiece is placed, and the processing head,
the measurement method includes:

irradiating a fiducial member with measurement light by using an optical apparatus;
optically receiving, by using the optical apparatus, returning light, which is generated by irradiating the fiducial member with the measurement light, from the fiducial member; and
calculating a distance between the optical apparatus and the fiducial member based on an optical received result of the returning light from the fiducial member by the optical apparatus.

[Supplementary Note 165]

A computer program that allows a computer to execute the measurement method according to the Supplementary Note 164.

[Supplementary Note 166]

A recording medium recording thereon the computer program according to the Supplementary Note 165.

[Supplementary Note 167]

An optical apparatus that is attached to a main spindle instead of a tool in a machine tool, wherein

the machine tool processes a workpiece by the tool, which is attached to the main spindle of a processing head in a detachable manner, while moving at least one of a stage, on which the workpiece is placed, and the processing head,
the optical apparatus includes:
a light receiving unit that optically receives returning light, which is generated by irradiating a fiducial members positioned on at least one of the stage and the workpiece with measurement light, from the fiducial member.

[Supplementary Note 168]

The optical apparatus according to the Supplementary Note 167, wherein
an optical received result of the returning light by the light receiving unit is used to calculate a distance between the optical apparatus and the fiducial member.

[Supplementary Note 169]

The optical apparatus according to the Supplementary Note 167 or 168, wherein
a control apparatus, which acquires an optical received result of the returning light by the light receiving unit, calculates a distance between the optical apparatus and the fiducial member based on the optical received result of the returning light by the light receiving unit.

[Supplementary Note 170]

The optical apparatus according to the Supplementary Note 169, wherein
the control apparatus generates, based on the calculated distance between the optical apparatus and the fiducial member, at least one of information related to a movement error occurring in a movement of the stage and information related to a movement error occurring in a movement of the processing head.

[Supplementary Note 171]

The optical apparatus according to the Supplementary Note 169 or 170, wherein
the control apparatus generates, based on the calculated distance between the optical apparatus and the fiducial member, at least one of information for correcting a movement error occurring in a movement of the stage and information for correcting a movement error occurring in a movement of the processing head.

[Supplementary Note 172]

The optical apparatus according to any one of the Supplementary Notes 169 to 171, wherein
the control apparatus generates, based on the calculated distance between the optical apparatus and the fiducial member, information for controlling the machine tool.

[Supplementary Note 173]

The optical apparatus according to any one of the Supplementary Notes 167 to 174, wherein

the light receiving unit optically receives the returning light, which is generated by irradiating the fiducial member with the measurement light, from the fiducial member each time the stage or the processing head moves to each of a plurality of different positions, and

a control apparatus, which acquires an optical received result of the returning light by the light receiving unit, calculates a distance between the optical apparatus and the fiducial member in a space in which the stage or the processing head moves to each of the plurality of different positions, based on the optical received result of the returning light from the fiducial member which is optically received by the optical apparatus each time the stage or the processing head moves to each of the plurality of different positions, and calculates a position of the optical apparatus in the space based on the distance.

[Supplementary Note 174]

The optical apparatus according to the Supplementary Note 173, wherein the control apparatus generates, based on the calculated position of the optical apparatus in the space, at least one of information related to a movement error occurring in a movement of the stage in the space and information related to a movement error occurring in a movement of the processing head in the space.

[Supplementary Note 175]

The optical apparatus according to the Supplementary Note 173 or 174, wherein the control apparatus generates, based on the calculated position of the optical apparatus in the space, at least one of information for correcting a movement error occurring in a movement of the stage in the space and information for correcting a movement error occurring in a movement of the processing head in the space.

[Supplementary Note 176]

The optical apparatus according to any one of the Supplementary Notes 173 to 175, wherein the control apparatus generates, based on the calculated position of the optical apparatus in the space, information for controlling the machine tool.

[Supplementary Note 177]

The optical apparatus according to any one of the Supplementary Notes 169 to 176, wherein a first control apparatus that controls the machine tool is used as the control apparatus.

[Supplementary Note 178]

The optical apparatus according to any one of the Supplementary Notes 169 to 177, wherein a second control apparatus of a measurement system including the optical apparatus is used as the control apparatus.

[Supplementary Note 179]

The optical apparatus according to any one of the Supplementary Notes 167 to 178, wherein the fiducial member is positioned on the workpiece place on the stage.

[Supplementary Note 180]

The optical apparatus according to any one of the Supplementary Notes 167 to 179, wherein

the light receiving unit optically receives the returning light, which is generated by irradiating each of a plurality of fiducial members positioned on at least one of the stage and the workpiece placed on the stage with the measurement light, from each of the plurality of fiducial members, and at least one of the plurality of fiducial members is positioned on the workpiece place on the stage.

[Supplementary Note 181]

The optical apparatus according to any one of the Supplementary Notes 167 to 180, wherein

the light receiving unit optically receives the returning light, which is generated by irradiating each of at least four fiducial members positioned on at least one of the stage and the workpiece placed on the stage with the measurement light, from each of the plurality of fiducial members, and at least one of the at least four fiducial members is positioned on the workpiece place on the stage.

[Supplementary Note 182]

The optical apparatus according to any one of the Supplementary Notes 169 to 181, wherein

the optical apparatus includes an optical member that is movable relative an optical path of the measurement light, the optical apparatus irradiates the fiducial member with one of converged light and collimated light as the measurement light in a case where the optical member is positioned on the optical path of the measurement light, the optical apparatus irradiates the fiducial member with the other one of the converged light and the collimated light as the measurement light in a case where the optical member is not positioned on the optical path of the measurement light

[Supplementary Note 183]

The optical apparatus according to any one of the Supplementary Notes 169 to 182, wherein

the optical apparatus irradiates the fiducial member with one of converged light and collimated light as the measurement light through a first optical system, the optical apparatus irradiates the fiducial member with the other one of the converged light and the collimated light as the measurement light through a second optical system that is different from the first optical system at least partially.

[Supplementary Note 184]

The optical apparatus according to the Supplementary Note 182 or 183, wherein

a control apparatus, which acquires an optical received result of the returning light by the light receiving unit, calculates at least one of a position of the workpiece, a posture of the workpiece, and a size of the workpiece based on the optical received result of the returning light from the fiducial member by the optical apparatus in a case where the fiducial member is irradiated with the converged light as the measurement light, and the control apparatus generates at least one of information related to a movement error occurring in a movement of the stage and information related to a movement error occurring in a movement of the processing head based on the optical received result of the returning light from the fiducial member by the optical apparatus in a case where the fiducial member is irradiated with the collimated light as the measurement light.

[Supplementary Note 185]

A measurement system including:

the optical apparatus according to any one of the Supplementary Notes 167 to 184; and a computing unit that calculates a distance between the optical apparatus and the fiducial member based on an optical received result of the returning light by the light receiving unit.

[Supplementary Note 186]

A machine tool including:

the optical apparatus according to any one of the Supplementary Notes 167 to 184; a computing unit that calculates a distance between the optical apparatus and the fiducial member based on an optical received result of the returning light by the light receiving unit;
the processing head;
the stage; and
a driving apparatus that moves at least one of the processing head and the placing apparatus.

[Supplementary Note 187]

A measurement system that is used for a workpiece measurement apparatus, wherein

the workpiece measurement apparatus measures a workpiece by using a measurement head while moving at least one of a stage, on which the workpiece is placed, and the measurement head, the measurement system includes:

an optical apparatus that optically receives returning light, which is generated by irradiating a fiducial member positioned on at least one of the stage and the workpiece with the measurement light, from the fiducial member; and a computing unit that calculates a distance between the optical apparatus and the fiducial member based on an optical received result of the returning light from the fiducial member by the optical apparatus.

[Supplementary Note 188]

The measurement system according to the Supplementary Note 187, wherein the computing unit generates, based on the calculated distance between the optical apparatus and the fiducial member, at least one of information related to a movement error occurring in a movement of the stage and information related to a movement error occurring in a movement of the measurement head.

[Supplementary Note 189]

The measurement system according to the Supplementary Note 187 or 188, wherein the computing unit generates, based on the calculated distance between the optical apparatus and the fiducial member, at least one of information for correcting a movement error occurring in a movement of the stage and information for correcting a movement error occurring in a movement of the measurement head.

[Supplementary Note 190]

The measurement system according to any one of the Supplementary Notes 187 to 189, wherein the computing unit generates, based on the calculated distance between the optical apparatus and the fiducial member, information for controlling the workpiece measurement apparatus.

[Supplementary Note 191]

The measurement system according to any one of the Supplementary Notes 187 to 190, wherein

the optical apparatus optically receives the returning light, which is generated by irradiating the fiducial member with the measurement light, from the fiducial member each time the stage or the measurement head moves to each of a plurality of different positions, and

the computing unit calculates the distance between the optical apparatus and the fiducial member in a space in which the stage or the measurement head moves to each of the plurality of different positions, based on the optical received result of the returning light from the fiducial member which is optically received by the optical apparatus each time the stage or the measurement head moves to each of the plurality of different positions, and calculates a position of the optical apparatus in the space based on the distance.

[Supplementary Note 192]

The measurement system according to the Supplementary Note 191, wherein
the control apparatus generates, based on the calculated position of the optical apparatus in the space, at least one of information related to a movement error occurring in a movement of the stage in the space in which the stage moves to the plurality of different positions and information related to a movement error occurring in a movement of the measurement head in the space in which the measurement head moves to the plurality of different positions.

[Supplementary Note 193]

The measurement system according to the Supplementary Note 191 or 192, wherein
the control apparatus generates, based on the calculated position of the optical apparatus in the space, at least one of information for correcting a movement error occurring in a movement of the stage in the space in which the stage moves to the plurality of different positions and information for correcting a movement error occurring in a movement of the measurement head in the space in which the measurement head moves to the plurality of different positions.

[Supplementary Note 194]

The measurement system according to any one of the Supplementary Notes 191 to 193, wherein
the control apparatus generates, based on the calculated position of the optical apparatus in the space, information for controlling the workpiece measurement apparatus.

[Supplementary Note 195]

The measurement system according to any one of the Supplementary Notes 187 to 194, wherein
a control apparatus, which controls the workpiece measurement apparatus, calculates the distance between the optical apparatus and the fiducial member based on the optical received result of the returning light from the fiducial member by the optical apparatus.

[Supplementary Note 196]

The measurement system according to any one of the Supplementary Notes 187 to 195, wherein
a control apparatus, which controls the workpiece measurement apparatus, generates, based on the calculated distance between the optical apparatus and the fiducial member, at least one of information related to a movement error occurring in a movement of the stage and information related to a movement error occurring in a movement of the measurement head.

[Supplementary Note 197]

The measurement system according to any one of the Supplementary Notes 187 to 196, wherein
a control apparatus, which controls the workpiece measurement apparatus, generates, based on the calculated distance between the optical apparatus and the fiducial member, at least one of information for correcting a movement error occurring in a movement of the stage and information for correcting a movement error occurring in a movement of the measurement head.

[Supplementary Note 198]

The measurement system according to any one of the Supplementary Notes 187 to 197, wherein
a control apparatus, which controls the workpiece measurement apparatus, generates, based on the calculated distance between the optical apparatus and the fiducial member, information for controlling the workpiece measurement apparatus.

[Supplementary Note 199]

The measurement system according to any one of the Supplementary Notes 187 to 198, wherein
the fiducial member is positioned on the workpiece place on the stage.

[Supplementary Note 200]

The measurement system according to any one of the Supplementary Notes 187 to 199, wherein

the computing unit calculates the distance between the optical apparatus and each of a plurality of fiducial members based on the optical received result by the optical apparatus that optically receives the returning light, which is generated by irradiating each of the plurality of fiducial members positioned on at least one of the stage and the workpiece with the measurement light, from each of the plurality of fiducial members, and
at least one of the plurality of fiducial members is positioned on the workpiece place on the stage.

[Supplementary Note 201]

The measurement system according to any one of the Supplementary Notes 187 to 200, wherein

the computing unit calculates the distance between the optical apparatus and each of at least four fiducial members based on the optical received result by the optical apparatus that optically receives the returning light, which is generated by irradiating each of the at least four fiducial members positioned on at least one of the stage and the workpiece with the measurement light, from each of the at least four fiducial members, and
at least one of the at least four fiducial members is positioned on the workpiece place on the stage.

[Supplementary Note 202]

The measurement system according to any one of the Supplementary Notes 187 to 201, wherein

the optical apparatus includes an optical member that is movable relative an optical path of the measurement light,
the optical apparatus irradiates the fiducial member with one of converged light and collimated light as the measurement light in a case where the optical member is positioned on the optical path of the measurement light,
the optical apparatus irradiates the fiducial member with the other one of the converged light and the collimated light as the measurement light in a case where the optical member is not positioned on the optical path of the measurement light

[Supplementary Note 203]

The measurement system according to any one of the Supplementary Notes 187 to 202, wherein

the optical apparatus irradiates the fiducial member with one of converged light and collimated light as the measurement light through a first optical system,
the optical apparatus irradiates the fiducial member with the other one of the converged light and the collimated light as the measurement light through a second optical system that is different from the first optical system at least partially.

[Supplementary Note 204]

The measurement system according to the Supplementary Note 202 or 203, wherein

the computing unit calculates at least one of a position of the workpiece, a posture of the workpiece, and a size of the workpiece based on the optical received result of the returning light from the fiducial member by the optical apparatus in a case where the fiducial member is irradiated with the converged light as the measurement light, and
the control apparatus generates at least one of information related to a movement error occurring in a movement of the stage and information related to a movement error occurring in a movement of the measurement head based on the optical received result of the returning light from the fiducial member by the optical apparatus in a case where the fiducial member is irradiated with the collimated light as the measurement light.

[Supplementary Note 205]

A workpiece measurement apparatus including:

the measurement system according to any one of the Supplementary Notes 187 to 204;
the measurement head;
the stage; and
a driving apparatus that moves at least one of the measurement head and the placing apparatus.

[Supplementary Note 206]

A machine tool that processes a workpiece by a tool, which is attached to a main spindle of a processing head in a detachable manner, while moving at least one of a stage, on which the workpiece is placed, and the processing head,
the machine tool includes:
a computing unit that calculates a distance between an optical apparatus and a fiducial member based on an optical received result by the optical apparatus that optically receives returning light, which is generated by irradiating the fiducial member positioned on at least one of the stage and the workpiece with measurement light, from the fiducial member.

[Supplementary Note 207]

The machine tool according to the Supplementary Note 206, wherein
the control apparatus generates, based on the calculated distance between the optical apparatus and the fiducial member, at least one of information related to a movement error occurring in a movement of the stage and information related to a movement error occurring in a movement of the processing head.

[Supplementary Note 208]

The machine tool according to the Supplementary Note 206 or 207, wherein
the computing unit generates, based on the calculated distance between the optical apparatus and the fiducial member, at least one of information for correcting a movement error occurring in a movement of the stage and information for correcting a movement error occurring in a movement of the processing head.

[Supplementary Note 209]

The machine tool according to any one of the Supplementary Notes 206 to 208, wherein
the computing unit generates, based on the calculated distance between the optical apparatus and the fiducial member, information for controlling the machine tool.

[Supplementary Note 210]

The machine tool according to any one of the Supplementary Notes 206 to 208, wherein
the machine tool includes the optical apparatus.

[Supplementary Note 211]

The machine tool according to any one of the Supplementary Notes 206 to 174, wherein

the optical apparatus optically receives the returning light, which is generated by irradiating the fiducial member with the measurement light, from the fiducial member each time the stage or the processing head moves to each of a plurality of different positions, and
the computing unit calculates the distance between the optical apparatus and the fiducial member in a space in which the stage or the processing head moves to each of the plurality of different positions, based on the optical received result of the returning light from the fiducial member which is optically received by the optical apparatus each time the stage or the processing head moves to each of the plurality of different positions, and calculates a position of the optical apparatus in the space based on the distance.

[Supplementary Note 212]

The machine tool according to the Supplementary Note 211, wherein
the computing unit generates, based on the calculated position of the optical apparatus in the space, at least one of information related to a movement error occurring in a movement of the stage in the space in which the stage moves to each of the plurality of different positions and information related to a movement error occurring in a movement of the processing head in the space in which the processing head moves to each of the plurality of different positions.

[Supplementary Note 213]

The machine tool according to the Supplementary Note 211 or 212, wherein
the computing unit generates, based on the calculated position of the optical apparatus in the space, at least one of information for correcting a movement error occurring in a movement of the stage in the space in which the stage moves to each of the plurality of different positions and information for correcting a movement error occurring in a movement of the processing head in the space in which the processing head moves to each of the plurality of different positions.

[Supplementary Note 214]

The machine tool according to any one of the Supplementary Notes 211 to 213, wherein
the computing unit generates, based on the calculated position of the optical apparatus in the space, information for controlling the machine tool.

[Supplementary Note 215]

The machine tool according to any one of the Supplementary Notes 206 to 214, wherein
the fiducial member is positioned on the workpiece place on the stage.

[Supplementary Note 216]

The machine tool according to any one of the Supplementary Notes 206 to 215, wherein

the computing unit calculates the distance between the optical apparatus and each of a plurality of fiducial members based on the optical received result by the optical apparatus that optically receives the returning light, which is generated by irradiating each of the plurality of fiducial members positioned on at least one of the stage and the workpiece with the measurement light, from each of the plurality of fiducial members, and
at least one of the plurality of fiducial members is positioned on the workpiece place on the stage.

[Supplementary Note 217]

The machine tool according to any one of the Supplementary Notes 206 to 216, wherein

the computing unit calculates the distance between the optical apparatus and each of at least four fiducial members based on the optical received result by the optical apparatus that optically receives the returning light, which is generated by irradiating each of the at least four fiducial members positioned on at least one of the stage and the workpiece with the measurement light, from each of the at least four fiducial members, and
at least one of the at least four fiducial members is positioned on the workpiece place on the stage.

[Supplementary Note 218]

A measurement method that is used for a machine tool, wherein

the machine tool processes a workpiece by a tool, which is attached to a main spindle of a processing head in a detachable manner, while moving at least one of a stage, on which the workpiece is placed, and the processing head,
the measurement method includes:

irradiating a fiducial member, which is positioned on at least one of the stage and the workpiece, with measurement light;
optically receiving returning light, which is generated by irradiating the fiducial member with the measurement light, from the fiducial member; and
calculating a distance between the optical apparatus and the fiducial member based on an optical received result of the returning light from the fiducial member.

[Supplementary Note 219]

A measurement system that is used for a workpiece measurement apparatus, wherein

the workpiece measurement apparatus measures a workpiece by using a measurement head while moving at least one of a stage, on which the workpiece is placed, and the measurement head,
the measurement system includes:
a computing unit that calculates a distance between an optical apparatus and a fiducial member based on an optical received result by the optical apparatus that optically receives returning light, which is generated by irradiating the fiducial member positioned on at least one of the stage and the workpiece with measurement light, from the fiducial member.

[Supplementary Note 220]

The measurement system according to the Supplementary Note 219, wherein
the computing unit generates, based on the calculated distance between the optical apparatus and the fiducial member, at least one of information related to a movement error occurring in a movement of the stage and information related to a movement error occurring in a movement of the measurement head.

[Supplementary Note 221]

The measurement system according to the Supplementary Note 219 or 220, wherein
the computing unit generates, based on the calculated distance between the optical apparatus and the fiducial member, at least one of information for correcting a movement error occurring in a movement of the stage and information for correcting a movement error occurring in a movement of the measurement head.

[Supplementary Note 222]

The measurement system according to any one of the Supplementary Notes 219 to 221, wherein
the computing unit generates, based on the calculated distance between the optical apparatus and the fiducial member, information for controlling the workpiece measurement apparatus.

[Supplementary Note 223]

The measurement system according to any one of the Supplementary Notes 219 to 222, wherein
the measurement system includes the optical apparatus.

[Supplementary Note 224]

The measurement system according to any one of the Supplementary Notes 219 to 223, wherein
the fiducial member is positioned on the workpiece place on the stage.

[Supplementary Note 225]

The measurement system according to any one of the Supplementary Notes 219 to 224, wherein

the computing unit calculates the distance between the optical apparatus and each of a plurality of fiducial members based on the optical received result by the optical apparatus that optically receives the returning light, which is generated by irradiating each of the plurality of fiducial members positioned on at least one of the stage and the workpiece with the measurement light, from each of the plurality of fiducial members, and

at least one of the plurality of fiducial members is positioned on the workpiece place on the stage.

[Supplementary Note 225]

The measurement system according to any one of the Supplementary Notes 219 to 224, wherein

the computing unit calculates the distance between the optical apparatus and each of at least four fiducial members based on the optical received result by the optical apparatus that optically receives the returning light, which is generated by irradiating each of the at least four fiducial members positioned on at least one of the stage and the workpiece with the measurement light, from each of the at least four fiducial members, and
at least one of the at least four fiducial members is positioned on the workpiece place on the stage.

[Supplementary Note 227]

A measurement system that is used for a machine tool, wherein

the machine tool processes a workpiece by a tool, which is attached to a main spindle of a processing head in a detachable manner, while moving at least one of a stage, on which the workpiece is placed, and the processing head,
the measurement system includes:

an optical apparatus that optically receives returning light, which is generated by irradiating a fiducial member with measurement light each time the stage or the processing head moves to each of a plurality of different positions, from the fiducial member in a situation where the main spindle is positioned in a first space that is different from a second space occupied by the workpiece placed on the stage; and
a computing unit that calculates a position related to the main spindle in the first space based on an optical received result of the returning light from the fiducial member which is optically received by the optical apparatus each time the stage or the processing head moves to each of the plurality of different positions, and calculates a position related to the main spindle in the second space based on the calculated position related to the main spindle in the first space.

[Supplementary Note 228]

The measurement system according to the Supplementary Note 227, wherein

the fiducial member is attached to the main spindle, and
the position related to the main spindle includes a position of the fiducial member.

[Supplementary Note 229]

The measurement system according to the Supplementary Note 228, wherein
the optical apparatus is positioned at a position different from the main spindle.

[Supplementary Note 230]

The measurement system according to the Supplementary Note 228 or 229, wherein
the optical apparatus is positioned on the stage or on the workpiece placed on the stage.

[Supplementary Note 231]

The measurement system according to any one of the Supplementary Notes 227 to 230, wherein

the optical apparatus is attached to the main spindle, and
the position related to the main spindle includes a position of the optical apparatus.

[Supplementary Note 232]

The measurement system according to the Supplementary Note 231, wherein
the fiducial member is positioned at a position different from the main spindle.

[Supplementary Note 233]

The measurement system according to the Supplementary Note 231 or 232, wherein
the fiducial member is positioned on the stage.

[Supplementary Note 234]

The measurement system according to any one of the Supplementary Notes 227 to 233, wherein
the computing unit generates, based on the calculated position related to the main spindle in the first space, at least one of information related to a movement error occurring in a movement of the stage in the first space and information related to a movement error occurring in a movement of the processing head in the first space.

[Supplementary Note 235]

The measurement system according to any one of the Supplementary Notes 227 to 234, wherein
the computing unit generates, based on the calculated position related to the main spindle in the first space, at least one of information for correcting a movement error occurring in a movement of the stage in the first space and information for correcting a movement error occurring in a movement of the processing head in the first space.

[Supplementary Note 236]

The measurement system according to any one of the Supplementary Notes 227 to 235, wherein the computing unit generates, based on the calculated position related to the main spindle in the first space, information for controlling the machine tool.

[Supplementary Note 237]

The measurement system according to any one of the Supplementary Notes 227 to 236, wherein the measurement system includes the optical apparatus.

[Supplementary Note 238]

The measurement system according to any one of the Supplementary Notes 227 to 237, wherein the fiducial member is positioned on the workpiece place on the stage.

[Supplementary Note 239]

The measurement system according to any one of the Supplementary Notes 227 to 238, wherein

the computing unit calculates a distance between the optical apparatus and each of a plurality of fiducial members based on the optical received result by the optical apparatus that optically receives the returning light, which is generated by irradiating each of the plurality of fiducial members positioned on at least one of the stage and the workpiece with the measurement light, from each of the plurality of fiducial members, and
at least one of the plurality of fiducial members is positioned on the workpiece place on the stage.

[Supplementary Note 240]

The measurement system according to any one of the Supplementary Notes 227 to 239, wherein

the computing unit calculates a distance between the optical apparatus and each of at least four fiducial members based on the optical received result by the optical apparatus that optically receives the returning light, which is generated by irradiating each of the at least four fiducial members positioned on at least one of the stage and the workpiece with the measurement light, from each of the at least four fiducial members, and

at least one of the at least four fiducial members is positioned on the workpiece place on the stage.

[Supplementary Note 241]

The measurement system according to any one of the Supplementary Notes 227 to 240, wherein the computing unit generates, based on the calculated position related to the main spindle in the first space, at least one of information related to a movement error occurring in a movement of the stage in the second space and information related to a movement error occurring in a movement of the processing head in the second space.

[Supplementary Note 242]

The measurement system according to any one of the Supplementary Notes 227 to 241, wherein the computing unit generates, based on the calculated position related to the main spindle in the first space, at least one of information for correcting a movement error occurring in a movement of the stage in the second space and information for correcting a movement error occurring in a movement of the processing head in the second space.

[Supplementary Note 243]

The measurement system according to any one of the Supplementary Notes 227 to 242, wherein the computing unit:

generates, based on the calculated position related to the main spindle in the first space, at least one of information related to a movement error occurring in a movement of the stage in the first space and information related to a movement error occurring in a movement of the processing head in the first space, and
generates, based on the generated at least one of the information related to a movement error occurring in a movement of the stage in the first space and the information related to a movement error occurring in a movement of the processing head in the first space and the information related to a movement error occurring in a movement of the stage in the first space, at least one of information for correcting a movement error occurring in a movement of the stage in the second space and information for correcting a movement error occurring in a movement of the processing head in the second space.

[Supplementary Note 244]

The measurement system according to any one of the Supplementary Notes 227 to 243, wherein

the fiducial member is a second fiducial member,

a fiducial member that is positioned on the stage in a case where the workpiece is not placed on the stage is a first fiducial member,

the optical apparatus optically receives the returning light, which is generated by irradiating the first fiducial member with the measurement light, from the first fiducial member each time the stage or the processing head moves to each of the plurality of different positions in a first situation where the workpiece is not placed on the stage, and optically receives the returning light, which is generated by irradiating the second fiducial member with the measurement light, from the second fiducial member each time the stage or the processing head moves to each of the plurality of different positions in a second situation where the workpiece is placed on the stage and the optical apparatus is positioned in the first space, and

the computing unit calculates the position related to the main spindle in the first situation based on the optical received result by the optical apparatus in the first situation, calculates the position related to the main spindle in the second situation based on the optical received result by the optical apparatus in the second situation, and calculates the position related to the main spindle in the second space in a situation where the workpiece is placed on the stage based on the position related to the main spindle in the first situation and the position related to the main spindle in the second situation.

[Supplementary Note 245]

The measurement system according to any one of the Supplementary Notes 227 to 244, wherein

the fiducial member is a second fiducial member,
a fiducial member that is positioned on the stage in a case where the workpiece is not placed on the stage is a first fiducial member,
the optical apparatus optically receives the returning light, which is generated by irradiating the first fiducial member with the measurement light, from the first fiducial member each time the stage or the processing head moves to each of the plurality of different positions in a first situation where the workpiece is not placed on the stage, and optically receives the returning light, which is generated by irradiating the second fiducial member with the measurement light, from the second fiducial member each time the stage or the processing head moves to each of the plurality of different positions in a second situation where the workpiece is placed on the stage and the optical apparatus is positioned in the first space, and
the computing unit calculates the position related to the main spindle in the first situation based on the optical received result by the optical apparatus in the first situation, calculates the position related to the main spindle in the first space in the second situation based on the optical received result by the optical apparatus in the second situation, and generates at least one of information related to a movement error occurring in a movement of the stage in the second space in a situation where the workpiece is placed on the stage and information related to a movement error occurring in a movement of the processing head in the second space in a situation where the workpiece is placed on the stage based on the position related to the main spindle in the first situation and the position related to the main spindle in the first space in the second situation.

[Supplementary Note 246]

The measurement system according to any one of the Supplementary Notes 227 to 245, wherein

the fiducial member is a second fiducial member,
a fiducial member that is positioned on the stage in a case where the workpiece is not placed on the stage is a first fiducial member,
the optical apparatus optically receives the returning light, which is generated by irradiating the first fiducial member with the measurement light, from the first fiducial member each time the stage or the processing head moves to each of the plurality of different positions in a first situation where the workpiece is not placed on the stage, and optically receives the returning light, which is generated by irradiating the second fiducial member with the measurement light, from the second fiducial member each time the stage or the processing head moves to each of the plurality of different positions in a second situation where the workpiece is placed on the stage and the optical apparatus is positioned in the first space, and
the computing unit calculates the position related to the main spindle in the first situation based on the optical received result by the optical apparatus in the first situation, calculates the position related to the main spindle in the first space in the second situation based on the optical received result by the optical apparatus in the second situation, and generates at least one of information for correcting a movement error occurring in a movement of the stage in the second space in a situation where the workpiece is placed on the stage and information for correcting a movement error occurring in a movement of the processing head in the second space in a situation where the workpiece is placed on the stage based on the position related to the main spindle in the first situation and the position related to the main spindle in the first space in the second situation.

[Supplementary Note 247]

The measurement system according to any one of the Supplementary Notes 244 to 246, wherein the first situation is a situation where the optical apparatus is positioned in a third space that includes: a space occupied by the workpiece in a case where the workpiece is placed on the stage; and a space that is different from the space occupied by the workpiece in a case where the workpiece is placed on the stage.

[Supplementary Note 248]

The measurement system according to any one of the Supplementary Notes 227 to 247, wherein the first space includes a space around the second space.

[Supplementary Note 249]

The measurement system according to any one of the Supplementary Notes 227 to 248, wherein the first space includes at least one of a space above the second space and a space lateral to the second space.

[Supplementary Note 250]

A machine tool including:

the measurement system according to any one of the Supplementary Notes 227 to 249;
the processing head;
the stage; and
a driving apparatus that moves at least one of the processing head and the placing apparatus.

[Supplementary Note 251]

A measurement method that is used for a machine tool, wherein

the machine tool processes a workpiece by a tool, which is attached to a main spindle of a processing head in a detachable manner, while moving at least one of a stage, on which the workpiece is placed, and the processing head,
the measurement method includes:

irradiating a fiducial member with measurement light from an optical apparatus each time the stage or the processing head moves to each of a plurality of different positions in a situation where the main spindle is positioned in a first space that is different from a second space occupied by the workpiece placed on the stage,
optically receiving, by using the optical apparatus, returning light, which is generated by irradiating the fiducial member with the measurement light each time the stage or the processing head moves to each of the plurality of different positions, from the fiducial member in a situation where the main spindle is positioned in the first space;
calculating a position related to the main spindle in the first space based on an optical received result of the returning light from the fiducial member which is optically received by the optical apparatus each time the stage or the processing head moves to each of the plurality of different positions; and
calculating a position related to the main spindle in the second space based on the calculated position related to the main spindle in the first space.

[Supplementary Note 252]

A computer program that allows a computer to execute the measurement method according to the Supplementary Note 251.

[Supplementary Note 253]

A recording medium recording thereon the computer program according to the Supplementary Note 252.

[Supplementary Note 254]

A measurement system that is used for a machine tool, wherein

the machine tool processes a workpiece by a tool, which is attached to a main spindle of a processing head in a detachable manner, while moving at least one of a stage, on which the workpiece is placed, and the processing head,
the measurement system includes:
a computing unit that calculates a position related to the main spindle in a first space based on an optical received result of returning light, which is generated by irradiating a fiducial member with measurement light each time the stage or the processing head moves to each of a plurality of different positions, from the fiducial member by an optical apparatus in a situation where the main spindle is positioned in the first space that is different from a second space occupied by the workpiece placed on the stage, and calculates a position related to the main spindle in the second space based on the calculated position related to the main spindle in the first space.

[Supplementary Note 255]

A measurement system that is used for a workpiece measurement apparatus, wherein

the workpiece measurement apparatus measures a workpiece by using a measurement head while moving at least one of a stage, on which the workpiece is placed, and the measurement head,
the measurement system includes:

an optical apparatus that optically receives returning light, which is generated by irradiating a fiducial member with measurement light each time the stage or the measurement head moves to each of a plurality of different positions, from the fiducial member in a situation where the measurement head is positioned in a first space that is different from a second space occupied by the workpiece placed on the stage; and
a computing unit that calculates a position related to the measurement head in the first space based on an optical received result of the returning light from the fiducial member which is optically received by the optical apparatus each time the stage or the measurement head moves to each of the plurality of different positions, and calculates a position related to the measurement head in the second space based on the calculated position related to the measurement head in the first space.

[Supplementary Note 256]

A measurement system that is used for a machine tool, wherein

the machine tool processes a workpiece by a tool, which is attached to a main spindle of a processing head in a detachable manner, while moving at least one of a stage, on which the workpiece is placed, and the processing head,
the measurement system includes:

an optical apparatus that optically receives returning light, which is generated by irradiating a fiducial member with measurement light, from the fiducial member in a situation where the workpiece is placed on the stage; and
a computing unit that generates at least one of information related to a movement error occurring in a movement of the stage in a first space, which is different from a second space occupied by the workpiece placed on the stage, and information related to a movement error occurring in a movement of the processing head in the first space based on an optical received result of the returning light from the fiducial member by the optical apparatus, and generates at least one of information related to a movement error occurring in a movement of the stage in the second space and information related to a movement error occurring in a movement of the processing head in the second space based on at least one of the information related to the movement error occurring in the movement of the stage in the first space and the information related to the movement error occurring in the movement of the processing head in the first space.

[Supplementary Note 257]

The measurement system according to the Supplementary Note 256, wherein

the fiducial member is attached to the main spindle, and
the optical apparatus is positioned on the stage.

[Supplementary Note 258]

The measurement system according to the Supplementary Note 256 or 257, wherein

the optical apparatus is attached to the main spindle, and
the fiducial member is positioned on the stage or on the workpiece placed on the stage.

[Supplementary Note 259]

The measurement system according to any one of the Supplementary Notes 256 to 258, wherein the computing unit generates at least one of information for correcting the movement error occurring in the movement of the stage in the first space and information for correcting the movement error occurring in the movement of the processing head in the first space based on the generated at least one of the information related to the movement error occurring in the movement of the stage in the first space and the information related to the movement error occurring in the movement of the processing head in the first space.

[Supplementary Note 260]

The measurement system according to any one of the Supplementary Notes 256 to 259, wherein the computing unit generates information for controlling the machine tool based on the generated at least one of the information related to the movement error occurring in the movement of the stage in the first space and the information related to the movement error occurring in the movement of the processing head in the first space.

[Supplementary Note 261]

The measurement system according to any one of the Supplementary Notes 256 to 260, wherein the measurement system includes the optical apparatus.

[Supplementary Note 262]

The measurement system according to any one of the Supplementary Notes 256 to 261, wherein the fiducial member is positioned on the workpiece place on the stage.

[Supplementary Note 263]

The measurement system according to any one of the Supplementary Notes 256 to 262, wherein

the computing unit calculates a distance between the optical apparatus and each of a plurality of fiducial members based on the optical received result by the optical apparatus that optically receives the returning light, which is generated by irradiating each of the plurality of fiducial members positioned on at least one of the stage and the workpiece with the measurement light, from each of the plurality of fiducial members, and
at least one of the plurality of fiducial members is positioned on the workpiece place on the stage.

[Supplementary Note 264]

The measurement system according to any one of the Supplementary Notes 256 to 263, wherein

the computing unit calculates a distance between the optical apparatus and each of at least four fiducial members based on the optical received result by the optical apparatus that optically receives the returning light, which is generated by irradiating each of the at least four fiducial members positioned on at least one of the stage and the workpiece with the measurement light, from each of the at least four fiducial members, and
at least one of the at least four fiducial members is positioned on the workpiece place on the stage.

[Supplementary Note 265]

The measurement system according to any one of the Supplementary Notes 256 to 264, wherein the computing unit generates at least one of information for correcting the movement error occurring in the movement of the stage in the second space and information for correcting the movement error occurring in the movement of the processing head in the second space based on the generated at least one of the information related to the movement error occurring in the movement of the stage in the first space and the information related to the movement error occurring in the movement of the processing head in the first space.

[Supplementary Note 266]

The measurement system according to any one of the Supplementary Notes 256 to 265, wherein

the fiducial member is a second fiducial member, a fiducial member that is positioned on the stage in a case where the workpiece is not placed on the stage is a first fiducial member, the optical apparatus optically receives the returning light, which is generated by irradiating the first fiducial member with the measurement light, from the first fiducial member each time the stage or the processing head moves to each of a plurality of different positions in a first situation where the workpiece is not placed on the stage, and optically receives the returning light, which is generated by irradiating the second fiducial member with the measurement light, from the second fiducial member each time the stage or the processing head moves to each of a plurality of different positions in a second situation where the workpiece is placed on the stage and the optical apparatus is positioned in the first space, and
the computing unit generates the information related to the movement error in the first space in the first situation based on the optical received result by the optical apparatus in the first situation, generates the information related to the movement error in the first space in the second situation based on the optical received result by the optical apparatus in the second situation, and generates the information related to the movement error in the second space in a situation where the workpiece is placed on the stage based on the information related to the movement error in the first space in the first situation and the information related to the movement error in the first space in the second situation.

[Supplementary Note 267]

The measurement system according to any one of the Supplementary Notes 256 to 266, wherein

the fiducial member is a second fiducial member, a fiducial member that is positioned on the stage in a case where the workpiece is not placed on the stage is a first fiducial member, the optical apparatus optically receives the returning light, which is generated by irradiating the first fiducial member with the measurement light, from the first fiducial member each time the stage or the processing head moves to each of a plurality of different positions in a first situation where the workpiece is not placed on the stage, and optically receives the returning light, which is generated by irradiating the second fiducial member with the measurement light, from the second fiducial member each time the stage or the processing head moves to each of a plurality of different positions in a second situation where the workpiece is placed on the stage and the optical apparatus is positioned in the first space, and
the computing unit generates the information related to the movement error in the first space in the first situation based on the optical received result by the optical apparatus in the first situation, generates the information related to the movement error in the first space in the second situation based on the optical received result by the optical apparatus in the second situation, and generates information for correcting the movement error in the second space occurring in a situation where the workpiece is placed on the stage based on the information related to the movement error in the first space in the first situation and the information related to the movement error in the first space in the second situation.

[Supplementary Note 268]

The measurement system according to the Supplementary Note 266 or 267, wherein
the first situation is a situation where the optical apparatus is positioned in a third space that includes: a space occupied by the workpiece in a case where the workpiece is placed on the stage; and a space that is different from the space occupied by the workpiece in a case where the workpiece is placed on the stage.

[Supplementary Note 269]

The measurement system according to any one of the Supplementary Notes 256 to 268, wherein
the first space includes a space around the second space.

[Supplementary Note 270]

The measurement system according to any one of the Supplementary Notes 256 to 269, wherein
the first space includes at least one of a space above the second space and a space lateral to the second space.

[Supplementary Note 271]

A machine tool including:

the measurement system according to any one of the Supplementary Notes 256 to 270;
the processing head;
the stage; and
a driving apparatus that moves at least one of the processing head and the placing apparatus.

[Supplementary Note 272]

A measurement method that is used for a machine tool, wherein

the machine tool processes a workpiece by a tool, which is attached to a main spindle of a processing head in a detachable manner, while moving at least one of a stage, on which the workpiece is placed, and the processing head,
the measurement method includes:

irradiating a fiducial member with measurement light by using an optical apparatus in a situation where the workpiece is placed on the stage;
optically receiving returning light, which is generated by irradiating the fiducial member with the measurement light, from the fiducial member by using the optical apparatus in a situation where the workpiece is placed on the stage;
generating at least one of information related to a movement error occurring in a movement of the stage in a first space, which is different from a second space occupied by the workpiece placed on the stage, and information related to a movement error occurring in a movement of the processing head in the first space based on an optical received result of the returning light from the fiducial member by the optical apparatus; and
generating at least one of information related to a movement error occurring in a movement of the stage in the second space and information related to a movement error occurring in a movement of the processing head in the second space based on at least one of the information related to the movement error occurring in the movement of the stage in the first space and the information related to the movement error occurring in the movement of the processing head in the first space.

[Supplementary Note 273]

A computer program that allows a computer to execute the measurement method according to the Supplementary Note 272.

[Supplementary Note 274]

A recording medium recording thereon the computer program according to the Supplementary Note 273.

[Supplementary Note 275]

A measurement system that is used for a machine tool, wherein

the machine tool processes a workpiece by a tool, which is attached to a main spindle of a processing head in a detachable manner, while moving at least one of a stage, on which the workpiece is placed, and the processing head,

the measurement system includes:

a computing unit that generates at least one of information related to a movement error occurring in a movement of the stage in a first space, which is different from a second space occupied by the workpiece placed on the stage, and information related to a movement error occurring in a movement of the processing head in the first space based on an optical received result of returning light, which is generated by irradiating a fiducial member with measurement light, from the fiducial member by an optical apparatus in a situation where the workpiece is placed on the stage, and generates at least one of information related to a movement error occurring in a movement of the stage in the second space and information related to a movement error occurring in a movement of the processing head in the second space based on at least one of the information related to the movement error occurring in the movement of the stage in the first space and the information related to the movement error occurring in the movement of the processing head in the first space.

[Supplementary Note 276]

A measurement system that is used for a workpiece measurement apparatus, wherein

the workpiece measurement apparatus measures a workpiece by using a measurement head while moving at least one of a stage, on which the workpiece is placed, and the measurement head,

the measurement system includes:

an optical apparatus that optically receives returning light, which is generated by irradiating a fiducial member with measurement light, from the fiducial member in a situation where the workpiece is placed on the stage; and a computing unit that generates at least one of information related to a movement error occurring in a movement of the stage in a first space, which is different from a second space occupied by the workpiece placed on the stage, and information related to a movement error occurring in a movement of the measurement head in the first space based on an optical received result of the returning light from the fiducial member by the optical apparatus, and generates at least one of information related to a movement error occurring in a movement of the stage in the second space and information related to a movement error occurring in a movement of the measurement head in the second space based on at least one of the information related to the movement error occurring in the movement of the stage in the first space and the information related to the movement error occurring in the movement of the measurement head in the first space.

[Supplementary Note 277]

A measurement system that is used for a machine tool, wherein

the machine tool processes a workpiece by a tool, which is attached to a main spindle of a processing head in a detachable manner, while moving at least one of a stage, on which the workpiece is placed, and the processing head,

the measurement system includes:

an optical apparatus that optically receives returning light, which is generated by irradiating measurement light onto a fiducial member that is positioned on the stage or on the workpiece placed on the stage, from the fiducial member; and a computing unit that calculates a distance between the optical apparatus and the fiducial member based on a temperature of at least one of the workpiece and the stage that is detected by a temperature detector, which is configured to detect the temperature of at least one of the workpiece and the stage, and an optical received result of the returning light from the fiducial member by the optical apparatus.

[Supplementary Note 278]

The measurement system according to the Supplementary Note 277, wherein

the fiducial member is attached to the main spindle, and the optical apparatus is positioned on the stage.

[Supplementary Note 279]

The measurement system according to the Supplementary Note 277 or 278, wherein

the optical apparatus is attached to the main spindle, and the fiducial member is positioned on the stage or on the workpiece placed on the stage.

[Supplementary Note 280]

The measurement system according to any one of the Supplementary Notes 277 to 279, wherein the computing unit generates at least one of information related to a movement error occurring in a movement of the stage and information related to a movement error occurring in a movement of the processing head based on the calculated distance.

[Supplementary Note 281]

The measurement system according to any one of the Supplementary Notes 277 to 280, wherein the computing unit generates at least one of information for correcting a movement error occurring in a movement of the stage and information for correcting a movement error occurring in a movement of the processing head based on the calculated distance.

[Supplementary Note 282]

The measurement system according to any one of the Supplementary Notes 277 to 281, wherein the computing unit generates information for controlling the machine tool based on the calculated distance.

[Supplementary Note 283]

The measurement system according to any one of the Supplementary Notes 277 to 282, wherein the measurement system includes the optical apparatus.

[Supplementary Note 284]

The measurement system according to any one of the Supplementary Notes 277 to 283, wherein the fiducial member is positioned on the workpiece place on the stage.

[Supplementary Note 285]

The measurement system according to any one of the Supplementary Notes 277 to 284, wherein

the computing unit calculates the distance between the optical apparatus and each of a plurality of fiducial members based on the optical received result by the optical apparatus that optically receives the returning light, which is generated by irradiating each of the plurality of fiducial members positioned on at least one of the stage and the workpiece with the measurement light, from each of the plurality of fiducial members, and
at least one of the plurality of fiducial members is positioned on the workpiece place on the stage.

[Supplementary Note 286]

The measurement system according to any one of the Supplementary Notes 277 to 285, wherein

the computing unit calculates the distance between the optical apparatus and each of at least four fiducial members based on the optical received result by the optical apparatus that optically receives the returning light, which is generated by irradiating each of the at least four fiducial members positioned on at least one of the stage and the workpiece with the measurement light, from each of the at least four fiducial members, and
at least one of the at least four fiducial members is positioned on the workpiece place on the stage.

[Supplementary Note 287]

A machine tool including:

the measurement system according to any one of the Supplementary Notes 277 to 286;
the processing head;
the stage; and
a driving apparatus that moves at least one of the processing head and the placing apparatus.

[Supplementary Note 288]

A measurement method that is used for a machine tool, wherein

the machine tool processes a workpiece by a tool, which is attached to a main spindle of a processing head in a detachable manner, while moving at least one of a stage, on which the workpiece is placed, and the processing head,
the measurement method includes:

irradiating a fiducial member, which is positioned on the stage or on the workpiece placed on the stage, with measurement light by using an optical apparatus;
optically receiving returning light, which is generated by irradiating the fiducial member with the measurement light, from the fiducial member by using the optical apparatus; and
calculating a distance between the optical apparatus and the fiducial member based on a temperature of at least one of the workpiece and the stage that is detected by a temperature detector, which is configured to detect the temperature of at least one of the workpiece and the stage, and an optical received result of the returning light from the fiducial member by the optical apparatus.

[Supplementary Note 289]

A computer program that allows a computer to execute the measurement method according to the Supplementary Note 288.

[Supplementary Note 290]

A recording medium recording thereon the computer program according to the Supplementary Note 289.

[Supplementary Note 291]

A measurement system that is used for a machine tool, wherein

the machine tool processes a workpiece by a tool, which is attached to a main spindle of a processing head in a detachable manner, while moving at least one of a stage, on which the workpiece is placed, and the processing head,
the measurement system includes:
a computing unit that calculates a distance between an optical apparatus and a fiducial member based on a temperature of at least one of the workpiece and the stage that is detected by a temperature detector, which is configured to detect the temperature of at least one of the workpiece and the stage, and an optical received result of returning light, which is generated by irradiating measurement light onto the fiducial member that is positioned on the stage or on the workpiece placed on the stage, from the fiducial member by the optical apparatus.

[Supplementary Note 292]

A measurement system that is used for a workpiece measurement apparatus, wherein

the workpiece measurement apparatus measures a workpiece by using a measurement head while moving at least one of a stage, on which the workpiece is placed, and the measurement head,
the measurement system includes:

an optical apparatus that optically receives returning light, which is generated by irradiating measurement light onto a fiducial member that is positioned on the stage or on the workpiece placed on the stage, from the fiducial member; and
a computing unit that calculates a distance between the optical apparatus and the fiducial member based on a temperature of at least one of the workpiece and the stage that is detected by a temperature detector, which is configured to detect the temperature of at least one of the workpiece and the stage, and an optical received result of the returning light from the fiducial member by the optical apparatus.

[Supplementary Note 293]

A measurement system that is used for a machine tool, wherein

the machine tool processes a workpiece by a tool, which is attached to a main spindle of a processing head in a detachable manner, while moving at least one of a stage, on which the workpiece is placed, and the processing head,
the measurement system includes:

an optical apparatus that optically receives returning light, which is generated by irradiating a fiducial member with measurement light, from the fiducial member; and
a computing unit that calculates a distance between the optical apparatus and the fiducial member based on an optical received result of the returning light from the fiducial member by the optical apparatus,
the optical apparatus includes a direction change member that is configured to change a propagating direction of the measurement light,
the computing unit controls the direction change member so as to scan a first area, which is allowed to be irradiated with the measurement light by the direction change member changing the propagating direction of the measurement light, with the measurement light,
the optical apparatus optically receives returning light from the first area that is generated by scanning the first area with the measurement light,
the computing unit calculates a direction of the fiducial member from the optical apparatus based on the optical received result of the returning light from the first area by the optical apparatus, and
the computing unit controls the direction change member so as to irradiate the fiducial member with the measurement light based on the direction of the fiducial member.

[Supplementary Note 294]

The measurement system according to the Supplementary Note 293, wherein

the fiducial member is attached to the main spindle, and
the optical apparatus is positioned on the stage.

[Supplementary Note 295]

The measurement system according to the Supplementary Note 293 or 294, wherein

the optical apparatus is attached to the main spindle, and

the fiducial member is positioned on the stage or on the workpiece placed on the stage.

[Supplementary Note 296]

The measurement system according to any one of the Supplementary Notes 293 to 295, wherein the computing unit generates at least one of information related to a movement error occurring in a movement of the stage and information related to a movement error occurring in a movement of the processing head based on the optical received result of the returning light from the fiducial member by the optical apparatus.

[Supplementary Note 297]

The measurement system according to any one of the Supplementary Notes 293 to 296, wherein the computing unit generates at least one of information for correcting a movement error occurring in a movement of the stage and information for correcting a movement error occurring in a movement of the processing head based on the optical received result of the returning light from the fiducial member by the optical apparatus.

[Supplementary Note 298]

The measurement system according to any one of the Supplementary Notes 293 to 297, wherein the computing unit generates information for controlling the machine tool based on the optical received result of the returning light from the fiducial member by the optical apparatus.

[Supplementary Note 299]

The measurement system according to any one of the Supplementary Notes 293 to 298, wherein the measurement system includes the optical apparatus.

[Supplementary Note 300]

The measurement system according to any one of the Supplementary Notes 293 to 299, wherein the fiducial member is positioned on the workpiece place on the stage.

[Supplementary Note 301]

The measurement system according to any one of the Supplementary Notes 293 to 300, wherein

the computing unit calculates the distance between the optical apparatus and each of a plurality of fiducial members based on the optical received result by the optical apparatus that optically receives the returning light, which is generated by irradiating each of the plurality of fiducial members positioned on at least one of the stage and the workpiece with the measurement light, from each of the plurality of fiducial members, and
at least one of the plurality of fiducial members is positioned on the workpiece place on the stage.

[Supplementary Note 302]

The measurement system according to any one of the Supplementary Notes 293 to 301, wherein

the computing unit calculates the distance between the optical apparatus and each of at least four fiducial members based on the optical received result by the optical apparatus that optically receives the returning light, which is generated by irradiating each of the at least four fiducial members positioned on at least one of the stage and the workpiece with the measurement light, from each of the at least four fiducial members, and
at least one of the at least four fiducial members is positioned on the workpiece place on the stage.

[Supplementary Note 303]

The measurement system according to any one of the Supplementary Notes 293 to 302, wherein

the computing unit calculates a direction from the optical apparatus of a second area, in which the fiducial member is positioned and which is smaller than the first area, based on the optical received result of the returning light from the first area by the optical apparatus,
the computing unit controls the direction change member so as to scan the second area with the measurement light based on the direction of the second area,
the optical apparatus optically receives returning light from the second area that is generated by scanning the second area with the measurement light, and
the computing unit calculates the direction of the fiducial member from the optical apparatus based on an optical received result of the returning light from the second area by the optical apparatus.

[Supplementary Note 304]

The measurement system according to any one of the Supplementary Notes 293 or 303, wherein

the calculated direction of the fiducial member from the optical apparatus is a direction of the fiducial member from the optical apparatus in a case where a relative positional relationship between the stage and the processing head is a first positional relationship,

the computing unit calculates a direction of the fiducial member from the optical apparatus in a second positional relationship based on the direction of the fiducial member from the optical apparatus in the first positional relationship and at least one of a movement distance and a movement direction of at least one of the stage and the processing head for changing the relative positional relationship between the stage and the processing head from the first positional relationship to the second positional relationship,

the computing unit controls the direction change member so as to irradiate the fiducial member with the measurement light in the second positional relationship based on the calculated direction of the fiducial member, and

the optical apparatus optically receives the returning light from the fiducial member that is generated by irradiating the fiducial member with the measurement light whose propagating direction has been changed by the direction change member in the second positional relationship.

[Supplementary Note 305]

The measurement system according to the Supplementary Note 304, wherein

the computing unit calculates a direction of a second area, in which the fiducial member is positioned and which is smaller than the first area, from the optical apparatus in the second positional relationship based on the direction of the fiducial member from the optical apparatus in the first positional relationship and at least one of the movement distance and the movement direction of at least one of the stage and the processing head for a change from the first positional relationship to the second positional relationship,

the computing unit controls the direction change member so as to scan the second area with the measurement light in the second positional relationship based on the calculated direction of the second area from the optical apparatus,

the optical apparatus optically receives the returning light from the second area that is generated by scanning the second area with the measurement light in the second positional relationship, and

the computing unit calculates the direction of the fiducial member from the optical apparatus in the second positional relationship based on the optical received result of the returning light from the second area by the optical apparatus.

[Supplementary Note 306]

The measurement system according to the Supplementary Note 304 or 305, wherein

the computing unit:

calculates a position of the optical apparatus in the first positional relationship and a position of the optical apparatus in the second positional relationship based on the optical received result of the returning light from the fiducial member by the optical apparatus in the first positional relationship and the optical received result of the returning light from the fiducial member by the optical apparatus in the second positional relationship; and

calculates, based on the calculated position of the optical apparatus in the first positional relationship and the calculated position of the optical apparatus in the second positional relationship, at least one of a movement error occurring in a movement of the stage in a space in which the stage moves due to the change from the first positional relationship to the second positional relationship and a movement error occurring in a movement of the processing head in a space in which the processing head moves due to the change from the first positional relationship to the second positional relationship.

[Supplementary Note 307]

A machine tool including:

the measurement system according to any one of the Supplementary Notes 293 to 306;
the processing head;
the stage; and
a driving apparatus that moves at least one of the processing head and the placing apparatus.

[Supplementary Note 308]

A measurement method that is used for a machine tool, wherein

the machine tool processes a workpiece by a tool, which is attached to a main spindle of a processing head in a detachable manner, while moving at least one of a stage, on which the workpiece is placed, and the processing head,
the measurement method includes:

scanning a first area, which is allowed to be irradiated with measurement light by changing a propagating direction of the measurement light using a direction change member that is configured to change the propagating direction of the measurement light, with the measurement light;
optically receiving returning light from the first area that is generated by scanning the first area with the measurement light;
the computing unit calculates a direction of the fiducial member from the optical apparatus based on an optical received result of the returning light from the first area by the optical apparatus;

irradiating the fiducial member with the measurement light based on the direction of the fiducial member;

optically receiving returning light, which is generated by irradiating the fiducial member with the measurement light, from the fiducial member by using an optical apparatus that optically receives it; and

calculating a distance between the distance between the optical apparatus and the fiducial member based on an optical received result of the returning light from the fiducial member by the optical apparatus.

[Supplementary Note 309]

A computer program that allows a computer to execute the measurement method according to the Supplementary Note 308.

[Supplementary Note 310]

A recording medium recording thereon the computer program according to the Supplementary Note 312.

[Supplementary Note 311]

A measurement system that is used for a machine tool, wherein

the machine tool processes a workpiece by a tool, which is attached to a main spindle of a processing head in a detachable manner, while moving at least one of a stage, on which the workpiece is placed, and the processing head,
the measurement system includes:

a computing unit that calculates a distance between an optical apparatus and a fiducial member based on an optical received result of returning light, which is generated by irradiating the fiducial member with measurement light, from the fiducial member by the optical apparatus,
the optical apparatus includes a direction change member that is configured to change a propagating direction of the measurement light,
the computing unit controls the direction change member so as to scan a first area, which is allowed to be irradiated with the measurement light by the direction change member changing the propagating direction of the measurement light, with the measurement light,
the optical apparatus optically receives returning light from the first area that is generated by scanning the first area with the measurement light,
the computing unit calculates a direction of the fiducial member from the optical apparatus based on the optical received result of the returning light from the first area by the optical apparatus, and
the computing unit controls the direction change member so as to irradiate the fiducial member with the measurement light based on the direction of the fiducial member.

[Supplementary Note 312]

A measurement system that is used for a workpiece measurement apparatus, wherein

the workpiece measurement apparatus measures a workpiece by using a measurement head while moving at least one of a stage, on which the workpiece is placed, and the measurement head,
the measurement system includes:

an optical apparatus that optically receives returning light, which is generated by irradiating a fiducial member with measurement light, from the fiducial member; and
a computing unit that calculates a distance between the optical apparatus and the fiducial member based on an optical received result of the returning light from the fiducial member by the optical apparatus,
the optical apparatus includes a direction change member that is configured to change a propagating direction of the measurement light,
the computing unit controls the direction change member so as to scan a first area, which is allowed to be irradiated with the measurement light by the direction change member changing the propagating direction of the measurement light, with the measurement light,
the optical apparatus optically receives returning light from the first area that is generated by scanning the first area with the measurement light,
the computing unit calculates a direction of the fiducial member from the optical apparatus based on the optical received result of the returning light from the first area by the optical apparatus, and
the computing unit controls the direction change member so as to irradiate the fiducial member with the measurement light based on the direction of the fiducial member.

[Supplementary Note 313]

A measurement system that is used for a machine tool, wherein

the machine tool processes a workpiece by a tool, which is attached to a main spindle of a processing head in a detachable manner, while moving at least one of a stage, on which the workpiece is placed, and the processing head,
the measurement system includes:

an optical apparatus that optically receives returning light, which is generated by irradiating a fiducial member with measurement light, from the fiducial member; and
a computing unit that calculates a distance between the optical apparatus and the fiducial member based on an optical received result of the returning light from the fiducial member by the optical apparatus, and generate information for controlling the machine tool based on the calculated distance.

[Supplementary Note 314]

The measurement system according to the Supplementary Note 313, wherein
the information for controlling the machine tool includes at least one of information related to a movement error occurring in a movement of the stage and information related to a movement error occurring in a movement of the processing head.

[Supplementary Note 315]

The measurement system according to the Supplementary Note 313 or 314, wherein
the information for controlling the machine tool includes at least one of information for correcting a movement error occurring in a movement of the stage and information for correcting a movement error occurring in a movement of the processing head.

[Supplementary Note 316]

The measurement system according to any one of the Supplementary Notes 313 to 315, wherein
the measurement system includes the optical apparatus.

[Supplementary Note 317]

A machine tool including:

the measurement system according to any one of the Supplementary Notes 313 to 316;
the processing head;
the stage; and

a driving apparatus that moves at least one of the processing head and the placing apparatus.

[Supplementary Note 318]

A measurement method that is used for a machine tool, wherein

the machine tool processes a workpiece by a tool, which is attached to a main spindle of a processing head in a detachable manner, while moving at least one of a stage, on which the workpiece is placed, and the processing head,
the measurement method includes:

irradiating a fiducial member with measurement light;
optically receiving returning light, which is generated by irradiating the fiducial member with the measurement light, from the fiducial member by using an optical apparatus;
calculating a distance between the optical apparatus and the fiducial member based on an optical received result of the returning light from the fiducial member by the optical apparatus; and
generating information for controlling the machine tool based on the calculated distance.

[Supplementary Note 319]

A computer program that allows a computer to execute the measurement method according to the Supplementary Note 318.

[Supplementary Note 320]

A recording medium recording thereon the computer program according to the Supplementary Note 319.

[Supplementary Note 321]

A measurement system that is used for a machine tool, wherein

the machine tool processes a workpiece by a tool, which is attached to a main spindle of a processing head in a detachable manner, while moving at least one of a stage, on which the workpiece is placed, and the processing head,
the measurement system includes:
a computing unit that calculates a distance between an optical apparatus and a fiducial member based on an optical received result of returning light, which is generated by irradiating the fiducial member with measurement light, from the fiducial member by the optical apparatus, and generate information for controlling the machine tool based on the calculated distance.

[Supplementary Note 322]

A measurement system that is used for a workpiece measurement apparatus, wherein

the workpiece measurement apparatus measures a workpiece by using a measurement head while moving at least one of a stage, on which the workpiece is placed, and the measurement head, the measurement system includes:

an optical apparatus that optically receives returning light, which is generated by irradiating a fiducial member with measurement light, from the fiducial member; and
a computing unit that calculates a distance between the optical apparatus and the fiducial member based on an optical received result of the returning light from the fiducial member by the optical apparatus, and generate information for controlling the workpiece measurement apparatus based on the calculated distance.

[Supplementary Note 323]

A machine tool that processes a workpiece by a tool, which is attached to a main spindle of a processing head in a detachable manner, while moving at least one of a stage, on which the workpiece is placed, and the processing head, wherein
the machine tool includes:

a computing unit that calculates a distance between an optical apparatus and a fiducial member based on an optical received result by the optical apparatus that optically receives returning light, which is generated by irradiating the fiducial member that is positioned on at least one of the stage and the workpiece with measurement light, from the fiducial member,
at least one of the stage and the processing head is controlled based on the calculated distance and a command value related to a movement of at least one of the stage and the processing head.

[Supplementary Note 324]

The machine tool according to the Supplementary Note 323, wherein

the fiducial member is attached to the main spindle, and
the optical apparatus is positioned on the stage.

[Supplementary Note 325]

The machine tool according to the Supplementary Note 323 or 324, wherein

the optical apparatus is attached to the main spindle, and
the fiducial member is positioned on the stage or on the workpiece placed on the stage.

[Supplementary Note 326]

The machine tool according to any one of the Supplementary Notes 323 to 325, wherein
the measurement system includes the optical apparatus.

[Supplementary Note 327]

The machine tool according to any one of the Supplementary Notes 323 to 326, wherein
the fiducial member is positioned on the workpiece place on the stage.

[Supplementary Note 328]

The machine tool according to any one of the Supplementary Notes 323 to 327, wherein

the computing unit calculates the distance between the optical apparatus and each of a plurality of fiducial members based on the optical received result by the optical apparatus that optically receives the returning light, which is generated by irradiating each of the plurality of fiducial members positioned on at least one of the stage and the workpiece with the measurement light, from each of the plurality of fiducial members, and
at least one of the plurality of fiducial members is positioned on the workpiece place on the stage.

[Supplementary Note 329]

The machine tool according to any one of the Supplementary Notes 323 to 328, wherein

the computing unit calculates the distance between the optical apparatus and each of at least four fiducial members based on the optical received result by the optical apparatus that optically receives the returning light, which is generated by irradiating each of the at least four fiducial members positioned on at least one of the stage and the workpiece with the measurement light, from each of the at least four fiducial members, and
at least one of the at least four fiducial members is positioned on the workpiece place on the stage.

[Supplementary Note 330]

A control method for controlling a machine tool, wherein

the machine tool processes a workpiece by a tool, which is attached to a main spindle of a processing head in a detachable manner, while moving at least one of a stage, on which the workpiece is placed, and the processing head,
the control method includes:

irradiating a fiducial member positioned on at least one of the stage and the workpiece with measurement light;
optically receiving returning light, which is generated by irradiating the fiducial member with the measurement light, from the fiducial member by using an optical apparatus;
calculating a distance between the optical apparatus and the fiducial member based on an optical received result of the returning light from the fiducial member by the optical apparatus; and
controlling at least one of the stage and the processing head based on the calculated distance and a command value related to a movement of at least one of the stage and the processing head.

[Supplementary Note 331]

A computer program that allows a computer to execute the control method according to the Supplementary Note 330.

[Supplementary Note 332]

A recording medium recording thereon the computer program according to the Supplementary Note 331.

[Supplementary Note 333]

A workpiece measurement apparatus that measures a workpiece by using a measurement head while moving at least one of a stage, on which the workpiece is placed, and the measurement head, wherein
the workpiece measurement apparatus includes:

a computing unit that calculates a distance between an optical apparatus and a fiducial member based on an optical received result by the optical apparatus that optically receives returning light, which is generated by irradiating the fiducial member that is positioned on at least one of the stage and the workpiece with measurement light, from the fiducial member,
at least one of the stage and the measurement head is controlled based on the calculated distance and a command value related to a movement of at least one of the stage and the measurement head.

[Supplementary Note 334]

An optical scanning apparatus including:

an optical scanning member that includes a reflection surface configured to swing and that changes an emission angle of a light beam to emit it; and
an emission optical system that emits the light beam which has entered thereto from the reflection surface of the optical scanning apparatus,
wherein the emission optical system has an angular magnification that is equal to or greater than 1.1 and forms a virtual image of the reflection surface.

[Supplementary Note 335]

The optical scanning apparatus according to the Supplementary Note 334, wherein
the emission optical system is an afocal optical system.

[Supplementary Note 336]

The optical scanning apparatus according to the Supplementary Note 334 or 335, wherein

the emission optical system includes: a first partial optical system that is positioned between the reflection surface of the optical scanning member and the virtual image; and a second partial optical system that is positioned at an emission side of the virtual image,
the second partial optical system includes one or more lens whose shape is a meniscus-shape and whose concave surface faces toward the virtual image side.

[Supplementary Note 337]

An optical scanning apparatus including:

an optical scanning member that includes a reflection surface configured to swing and that changes an emission angle of a light beam to emit it;
a first incident optical system that allows the light beam to enter the reflection surface from a first incident direction;
a second incident optical system that allows the light beam to enter the reflection surface from a second incident direction that is different from the first incident direction; and
an optical path switch optical system that switches an optical path of the light beam between a first optical path along which the light beam enters the first incident optical element and a second optical path along which the light beam enters the second incident optical element.

[Supplementary Note 338]

The optical scanning apparatus according to the Supplementary Note 337, wherein

a propagating direction of the light beam, which enters along the first incident direction to be reflected by the reflection surface, is changed in a first angle range by a swing of the reflection surface, and
a propagating direction of the light beam, which enters along the second incident direction to be reflected by the reflection surface, is changed in a second angle range, which is different from the first angle range at least partially, by the swing of the reflection surface.

[Supplementary Note 339]

The optical scanning apparatus according to the Supplementary Note 337 or 338, wherein

the first incident optical system includes a first deflection member that deflects the light beam to allow it to enter the reflection surface of the optical scanning member, and
an optical path of the light beam from the first deflection member to the reflection surface is positioned between an optical path of the light beam entering the first deflection member and an optical path of the light beam reflected by the reflection surface.

[Supplementary Note 340]

A measurement method that is used for a workpiece measurement apparatus, wherein

the workpiece measurement apparatus measures a workpiece by using a measurement head while moving at least one of a stage, on which the workpiece is placed, and the measurement head, wherein
the measurement method includes:

irradiating a fiducial member with measurement light by an optical apparatus;
optically receiving returning light, which is generated by irradiating the fiducial member with the measurement light, from the fiducial member by the optical apparatus; and
calculating a distance between the optical apparatus and the fiducial member based on an optical received result of the returning light from the fiducial member by the optical apparatus.

[Supplementary Note 341]

A computer program that allows a computer to execute the measurement method according to the Supplementary Note 340.

[Supplementary Note 342]

A recording medium recording thereon the computer program according to the Supplementary Note 341.

[Supplementary Note 343]

An optical apparatus that is used for a workpiece measurement apparatus, wherein

the workpiece measurement apparatus measures a workpiece by using a head while moving at least one of a stage, on which the workpiece is placed, and the measurement head, wherein
the optical apparatus includes:
a light receiving unit that optically receives returning light, which is generated by irradiating a fiducial members positioned on at least one of the stage and the workpiece with measurement light, from the fiducial member.

[Supplementary Note 344]

A workpiece measurement apparatus that measures a workpiece by using a head while moving at least one of a stage, on which the workpiece is placed, and the measurement head, wherein
the workpiece measurement apparatus includes:
a computing unit that calculates a distance between an optical apparatus and a fiducial member based on an optical received result by the optical apparatus that optically receives returning light, which is generated by irradiating the fiducial member that is positioned on at least one of the stage and the workpiece with measurement light, from the fiducial member,

[Supplementary Note 345]

A measurement method that is used for a workpiece measurement apparatus, wherein

the workpiece measurement apparatus measures a workpiece by using a measurement head while moving at least one of a stage, on which the workpiece is placed, and the measurement head, wherein
the measurement method includes:

irradiating a fiducial member with measurement light by an optical apparatus;
optically receiving returning light, which is generated by irradiating the fiducial member with the measurement light, from the fiducial member by the optical apparatus; and
generating information for controlling the workpiece measurement apparatus based on an optical received result of the returning light from the fiducial member by the optical apparatus.

[Supplementary Note 346]

A computer program that allows a computer to execute the measurement method according to the Supplementary Note 345.

[Supplementary Note 347]

A recording medium recording thereon the computer program according to the Supplementary Note 346.

[Supplementary Note 348]

A control method for controlling a workpiece measurement apparatus, wherein

the workpiece measurement apparatus measures a workpiece by using a measurement head while moving at least one of a stage, on which the workpiece is placed, and the measurement head, wherein
the control method includes:

irradiating a fiducial member positioned on at least one of the stage and the workpiece with measurement light;
optically receiving returning light, which is generated by irradiating the fiducial member with the measurement light, from the fiducial member by using an optical apparatus;
calculating a distance between the optical apparatus and the fiducial member based on an optical received result of the returning light from the fiducial member by the optical apparatus; and
controlling at least one of the stage and the measurement head based on the calculated distance and a command value related to a movement of at least one of the stage and the measurement head.

[Supplementary Note 349]

A computer program that allows a computer to execute the control method according to the Supplementary Note 348.

[Supplementary Note 350]

A recording medium recording thereon the computer program according to the Supplementary Note 349.
At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.
The present invention is allowed to be changed, if desired, without departing from the essence or spirit of the invention which can be read from the claims and the entire specification, and a measurement system, a machine tool, an optical apparatus, a measurement method, a computer program, and a recording medium, which involve such changes, are also intended to be within the technical scope of the present invention.

Description of Reference Codes

| | |
|---|---|
| 1 | machine tool |
| 11 | processing head |
| 111 | main spindle |
| 113 | tool |
| 12 | head driving system |
| 13 | position measurement apparatus |
| 14 | stage apparatus |
| 141 | stage |
| 142 | stage driving system |
| 143 | position measurement apparatus |
| 16 | processing control apparatus |
| 2 | measurement system |
| 20 | measurement apparatus |
| 21 | measurement light source |
| 22 | measurement head |
| 221 | head housing |
| 222 | optical system |
| 2228 | Galvano mirror |
| W | workpiece |
| FM | fiducial member |
| ML | measurement light |
| RL | returning light |
| RB | reference light |

**Claims**

1. An optical apparatus that is attached to a main spindle instead of a tool in a machine tool, wherein

the machine tool processes a workpiece by the tool, which is attached to the main spindle of a processing head in a detachable manner, while moving at least one of a stage, on which the workpiece is placed, and the processing head, the optical apparatus comprises:

a direction change member that is configured to change a propagating direction of measurement light; and
a light receiving unit that optically receives returning light, which is generated by irradiating each of a plurality of fiducial members with the measurement light whose propagating direction has been changed by the direction change member, from each of the plurality of fiducial members,
the light receiving unit optically receives the returning light that is generated by irradiating each of at least one fiducial member, which is positioned on the workpiece placed on the stage, and at least another one fiducial member, which is positioned on the stage or on the workpiece placed on the stage, of the plurality of fiducial members with the measurement light.

2. A measurement system that is used for a machine tool, wherein

the machine tool processes a workpiece by a tool, which is attached to a main spindle of a processing head in a detachable manner, while moving at least one of a stage, on which the workpiece is placed, and the processing head, the measurement system comprises:

an optical apparatus that is attached to the main spindle instead of the tool, that includes a direction change member configured to change a propagating direction of measurement light, and that optically receives returning light, which is generated by irradiating each of at least four fiducial members with the measurement light whose propagating direction has been changed by the direction change member, from each of the at least four fiducial members; and
a computing unit that calculates a position of the optical apparatus based on an optical received result of the returning light from each of the at least four fiducial members by the optical apparatus attached to the main spindle,
the optical apparatus optically receives the returning light that is generated by irradiating each of at least one fiducial member, which is positioned on the workpiece placed on the stage, and at least three fiducial members, which are positioned on the stage or on the workpiece placed on the stage, of the at least four fiducial members with the measurement light.

3. The measurement system according to claim 2, wherein
the computing unit generates, based on the calculated position of the optical apparatus, at least one of information related to a movement error occurring in a movement of the stage and information related to a movement error occurring in a movement of the processing head.

4. The measurement system according to claim 3, wherein
the computing unit generates, based on the calculated position of the optical apparatus, at least one of information for correcting the movement error occurring in the movement of the stage and information for correcting the movement error occurring in the movement of the processing head.

5. The measurement system according to any one of claims 2 to 4, wherein

the optical apparatus optically receives the returning light, which is generated by irradiating each of the at least four fiducial members with the measurement light whose propagating direction has been changed by the direction change member, from each of the at least four fiducial members each time the stage or the processing head moves to each of a plurality of different positions, and
the computing unit calculates a position of the optical apparatus in a space in which the stage or the processing head moves to each of the plurality of different positions, based on the optical received result of the returning light from each of the at least four fiducial members which is optically received by the optical apparatus each time the stage or the processing head moves to each of the plurality of different positions.

6. The measurement system according to claim 5, wherein
the computing unit generates, based on the calculated position of the optical apparatus in the space, at least one of information related to a movement error occurring in a movement of the stage in the space and information related to a movement error occurring in a movement of the processing head in the space.

7. The measurement system according to claim 6, wherein
the computing unit generates, based on the calculated position of the optical apparatus in the space, at least one of information for correcting the movement error occurring in the movement of the stage in the space and information for correcting the movement error occurring in the movement of the processing head in the space.

8. The measurement system according to claim 6 or 7, wherein

the optical apparatus optically receives the returning light, which is generated by irradiating each of the at least four fiducial members with the measurement light whose propagating direction has been changed by the direction change member, from each of the at least four fiducial members each time the stage or the processing head moves to each of the plurality of different positions, in a situation where the optical apparatus is positioned in a first space that is different from a second space occupied by the workpiece placed on the stage, and

the computing unit generates information related to the movement error in the second space based on information related to the movement error in the first space that is generated based on the optical received result by the optical apparatus in a situation where the optical apparatus is positioned in the first space.

9. The computing system according to claim 8, wherein

the at least four fiducial members are a second fiducial member group,

at least four fiducial members that are positioned on the stage in a case where the workpiece is not placed on the stage is a first fiducial member group,

the optical apparatus optically receives the returning light, which is generated by irradiating each of the fiducial members of the first fiducial member group with the measurement light whose propagating direction has been changed by the direction change member, from each of the fiducial members of the first fiducial members each time the stage or the processing head moves to each of the plurality of different positions in a first situation where the workpiece is not placed on the stage, and optically receives the returning light, which is generated by irradiating each of the fiducial members of the second fiducial member group with the measurement light whose propagating direction has been changed by the direction change member, from each of the fiducial members of the second fiducial members each time the stage or the processing head moves to each of the plurality of different positions in a second situation where the workpiece is placed on the stage and the optical apparatus is positioned in the first space, and

the computing unit generates the information related to the movement error in the second space, which occurs in a situation where the workpiece is placed on the stage, based on information related to the movement error that is generated based on the optical received result by the optical apparatus in the first situation and information related to the movement error in the first space that is generated based on the optical received result by the optical apparatus in the second situation.

10. The measurement system according to claim 9, wherein
the first situation is a situation where the optical apparatus is positioned in a third space that includes: a space occupied by the workpiece in a case where the workpiece is placed on the stage; and a space that is different from the space occupied by the workpiece in a case where the workpiece is placed on the stage.

11. The measurement system according to any one of claims 2 to 10, wherein
the computing unit calculates a position of the at least one fiducial member, which is positioned on the workpiece placed on the stage, based on the optical received result of the returning light from each of the at least four fiducial members by the optical apparatus.

12. The measurement system according to claim 11, wherein
the computing unit:

generates at least one of information related to a movement error occurring in a movement of the stage in a space in which the stage moves to each of a plurality of different positions and information related to a movement error occurring in a movement of the processing head in a space in which the processing head moves to each of a plurality of different positions, based on the optical received result of the returning light from each of the at least four fiducial members that is optically received by the optical apparatus each time the stage moves to each of the plurality of different positions and the optical received result of the returning light from each of the at least four fiducial members that is optically received by the optical apparatus each time the processing head moves to each of the plurality of different positions, respectively; and

calculates the position of the at least one fiducial member based on the generated movement error in the space and the optical received result of the returning light from the at least one fiducial member positioned on the workpiece by the optical apparatus.

**13.** The measurement system according to any one of claims 2 to 12, wherein
the computing unit calculates a position of the workpiece based on the optical received result of the returning light from each of the at least four fiducial members by the optical apparatus.

**14.** The measurement system according to any one of claims 2 to 13, wherein
the computing unit generates information for correcting a processing path of the workpiece by the machine tool based on the optical received result of the returning light from each of the at least four fiducial members by the optical apparatus.

**15.** The measurement system according to claim 13 or 14, wherein

the at least one fiducial member is positioned on a datum of the workpiece placed on the stage, and
the computing unit calculates a position of the datum of the workpiece, which is a position of the workpiece, based on the optical received result of the returning light from each of the at least four fiducial members by the optical apparatus.

**16.** The measurement system according to any one of claims 2 to 15, wherein

each of at least two fiducial members of the at least four fiducial members is positioned on the workpiece placed on the stage, and
the computing unit calculates a position of each of the at least two fiducial members, which is positioned on the workpiece placed on the stage, based on the optical received result of the returning light from each of the at least four fiducial members by the optical apparatus.

**17.** The measurement system according to claim 16, wherein

the computing unit generates at least one of information related to a movement error occurring in a movement of the stage in a space in which the stage moves to each of a plurality of different positions and information related to a movement error occurring in a movement of the processing head in a space in which the processing head moves to each of a plurality of different positions, based on the optical received result of the returning light from each of the at least four fiducial members that is optically received by the optical apparatus each time the stage moves to each of the plurality of different positions and the optical received result of the returning light from each of the at least four fiducial members that is optically received by the optical apparatus each time the processing head moves to each of the plurality of different positions, respectively, and the computing unit calculates the positions of the at least two fiducial members based on the generated movement error in the space and the optical received result of the returning light from the at least two fiducial members positioned on the workpiece by the optical apparatus.

**18.** The measurement system according to any one of claims 2 to 17, wherein

each of at least two fiducial members of the at least four fiducial members is positioned on the workpiece placed on the stage, and
the computing unit calculates at least one of a position of the workpiece, a posture of the workpiece, and a size of the workpiece based on the optical received result of the returning light from each of the at least four fiducial members by the optical apparatus.

**19.** The measurement system according to claim 18, wherein
the computing unit generates information for correcting a processing path of the workpiece by the machine tool based on a calculated result of at least one of the position of the workpiece, the posture of the workpiece, and the size of the workpiece.

**20.** The measurement system according to claim 18 or 19, wherein

each of the at least two fiducial members is positioned on a datum of the workpiece placed on the stage,
the computing unit calculates a position of the datum of the workpiece based on the optical received result of the returning light from each of the at least four fiducial members by the optical apparatus, and
the computing unit calculates at least one of the position of the workpiece, the posture of the workpiece, and the size of the workpiece based on the calculated position of the datum.

**21.** The measurement system according to any one of claims 2 to 20, wherein
the computing unit calculates the position of the optical apparatus based on a temperature of at least one of the workpiece and the stage that is detected by a temperature detector, which is configured to detect the temperature of at least one of the workpiece and the stage, and the optical received result of the returning light from each of the at least four fiducial members by the optical apparatus.

**22.** The measurement system according to any one of claims 2 to 21, wherein

the at least four fiducial members are at least four first fiducial members,

the optical apparatus calculates a distance between the optical apparatus and a second fiducial member based on an optical received result of returning light, which is generated by irradiating the second fiducial member with the measurement light, from the second fiducial member at each time of a first time and a second time that is different from the first time,

the computing unit calculates the position of the optical apparatus based on the optical received result of the returning light from each of the at least four first fiducial members by the optical apparatus and a difference in a position of the processing head in a case where the distance between the optical apparatus and the second fiducial member calculated based on the optical received result of the returning light from the second fiducial member at the first time is the same as the distance between the optical apparatus and the second fiducial member calculated based on the optical received result of the returning light from the second fiducial member at the second time,

the second fiducial member is positioned on the stage or on the workpiece placed on the stage, and

the second fiducial member is a fiducial member that is the same as at least one of the at least four first fiducial members or the second fiducial member is a fiducial member that is different from each of the at least four first fiducial members.

**23.** The measurement system according to any one of claims 2 to 22, wherein

the computing unit calculates a distance between the optical apparatus and each of the at least four fiducial members based on the optical received result of the returning light from each of the at least four fiducial members by the optical apparatus, and

the computing unit calculates the position of the optical apparatus based on the calculated distance between the optical apparatus and each of the at least four fiducial members.

**24.** The measurement system according to claim 23, wherein

the computing unit calculates the distance between the optical apparatus and each of the at least four fiducial members based on a temperature of at least one of the workpiece and the stage that is detected by a temperature detector, which is configured to detect the temperature of at least one of the workpiece and the stage, and the optical received result of the returning light from each of the at least four fiducial members by the optical apparatus, and

the computing unit calculates the position of the optical apparatus based on the calculated distance between the optical apparatus and each of the at least four fiducial members.

**25.** The measurement system according to claim 23 or 24, wherein

the at least four fiducial members are at least four first fiducial members,

the optical apparatus calculates a distance between the optical apparatus and a second fiducial member based on an optical received result of returning light, which is generated by irradiating the second fiducial member with the measurement light, from the second fiducial member at each time of a first time and a second time that is different from the first time,

the computing unit calculates the distance between the optical apparatus and each of the at least four first fiducial members based on the optical received result of the returning light from each of the at least four first fiducial members by the optical apparatus and a difference in a position of the processing head in a case where the distance between the optical apparatus and the second fiducial member calculated based on the optical received result of the returning light from the second fiducial member at the first time is the same as the distance between the optical apparatus and the second fiducial member calculated based on the optical received result of the returning light from the second fiducial member at the second time,

the computing unit calculates the position of the optical apparatus based on the calculated distance between the optical apparatus and each of the at least four first fiducial members,

the second fiducial member is positioned on the stage or on the workpiece placed on the stage, and

the second fiducial member is a fiducial member that is the same as at least one of the at least four first fiducial members or the second fiducial member is a fiducial member that is different from each of the at least four first fiducial members.

**26.** The measurement system according to any one of claims 22 to 24, wherein
the position of the optical apparatus is a fiducial point that is a fiducial for calculating the distance.

27. The measurement system according to any one of claims 2 to 26, wherein

the computing unit controls the direction change member so as to scan a first area, which is allowed to be irradiated with the measurement light by the direction change member changing the propagating direction of the measurement light, with the measurement light,
the optical apparatus optically receives returning light from the first area that is generated by scanning the first area with the measurement light,
the computing unit calculates directions of the at least four fiducial members from the optical apparatus based on an optical received result of the returning light from the first area by the optical apparatus, and
the computing unit controls the direction change member so as to irradiate each of the at least four fiducial members with the measurement light based on the calculated directions.

28. The measurement system according to claim 27, wherein

the computing unit calculates directions from the optical apparatus of at least four second areas, in which the at least four fiducial members are positioned, respectively, and each of which is smaller than the first area, based on the optical received result of the returning light from the first area by the optical apparatus,
the computing unit controls the direction change member so as to scan each of the at least four second areas with the measurement light based on the directions of the at least four second areas,
the optical apparatus optically receives returning light from each of the at least four second areas that is generated by scanning each of the at least four second areas with the measurement light, and
the computing unit calculates directions of the at least four fiducial members from the optical apparatus based on an optical received result of the returning light from each of the at least four second areas by the optical apparatus.

29. The measurement system according to claim 27 or 28, wherein

the calculated directions of the at least four fiducial members from the optical apparatus are directions of the at least four fiducial members from the optical apparatus in a case where a relative positional relationship between the stage and the processing head is a first positional relationship,
the computing unit calculates directions of the at least four fiducial members from the optical apparatus in a second positional relationship based on the directions of the at least four fiducial members from the optical apparatus in the first positional relationship and at least one of a movement distance and a movement direction of at least one of the stage and the processing head for changing the relative positional relationship between the stage and the processing head from the first positional relationship to the second positional relationship,
the computing unit controls the direction change member so as to irradiate each of the at least four fiducial members with the measurement light in the second positional relationship based on the calculated directions of the at least four fiducial members, and
the optical apparatus optically receives the returning light from each of the at least four fiducial members that is generated by irradiating each of the at least four fiducial members with the measurement light whose propagating direction has been changed by the direction change member in the second positional relationship.

30. The measurement system according to claim 29, wherein

the computing unit calculates directions of at least four second areas, in which the at least four fiducial members are positioned, respectively, and each of which is smaller than the first area, from the optical apparatus in the second positional relationship based on the directions of the at least four fiducial members from the optical apparatus in the first positional relationship and at least one of the movement distance and the movement direction of at least one of the stage and the processing head for a change from the first positional relationship to the second positional relationship,
the computing unit controls the direction change member so as to scan each of the at least four second areas with the measurement light in the second positional relationship based on the calculated directions of the at least four second areas from the optical apparatus,
the optical apparatus optically receives the returning light from each of the at least four second areas that is generated by scanning each of the at least four second areas with the measurement light in the second positional relationship, and
the computing unit calculates directions of the at least four fiducial members from the optical apparatus in the second positional relationship based on the optical received result of the returning light from each of the at least four second areas by the optical apparatus.

31. The measurement system according to claim 29 or 30, wherein
the computing unit:

calculates the position of the optical apparatus in the first positional relationship and the position of the optical apparatus in the second positional relationship based on the optical received result of the returning light from each of the at least four fiducial members by the optical apparatus in the first positional relationship and the optical received result of the returning light from each of the at least four fiducial members by the optical apparatus in the second positional relationship; and

calculates, based on the calculated position of the optical apparatus in the first positional relationship and the calculated position of the optical apparatus in the second positional relationship, the movement error in a space in which the stage or the processing head moves due to the change from the first positional relationship to the second positional relationship.

32. The measurement system according to any one of claims 2 to 31, wherein

a movement of the stage or the processing head includes a translational movement along at least one of a first translational axis, a second translational axis, and a third translational axis that are orthogonal to one another,
the optical apparatus optically receives the returning light, which is generated by irradiating each of the at least four fiducial members with the measurement light whose propagating direction has been changed by the direction change member, from each of the at least four fiducial members each time the stage or the processing head moves translationally to each of a plurality of different positions,
the computing unit calculates the position of the optical apparatus in a space in which the stage or the processing head moves translationally to each of the plurality of different positions, based on the optical received result of the returning light from each of the at least four fiducial members which is optically received by the optical apparatus each time the stage or the processing head moves translationally to each of the plurality of different positions, and
the computing unit generates, based on the calculated position of the optical apparatus in the space, at least one of information related to a movement error occurring in the translational movement of the stage in the space and information related to a movement error occurring in the translational movement of the processing head in the space.

33. The measurement system according to claim 32, wherein

the optical apparatus optically receives the returning light from each of the at least four fiducial members each time the processing head moves translationally to each of the plurality of different positions along at least one of the first to third translational axes,
the computing unit calculates the position of the optical apparatus in the space in which it moves translationally to each of the plurality of different positions along at least one of the first to third translational axes, based on the optical received result of the returning light from each of the at least four fiducial members which is optically received by the optical apparatus each time the processing head moves translationally to each of the plurality of different positions, and
the computing unit calculates, based on the calculated position of the optical apparatus in the space, the information related to the movement error occurring in the translational movement of the processing head along at least one of the first to third translational axes in the space.

34. The measurement system according to claim 32 or 33, wherein

the optical apparatus optically receives the returning light from each of the at least four fiducial members that have moved due to the translational movement of the stage each time the stage moves translationally to each of the plurality of different positions along at least one of the first to third translational axes,
the computing unit calculates the position of the optical apparatus relative to at least one fiducial member of the at least four fiducial members in the space in which it moves translationally to each of the plurality of different positions along at least one of the first to third translational axes, based on the optical received result of the returning light from each of the at least four fiducial members which is optically received by the optical apparatus each time the stage moves translationally to each of the plurality of different positions, and
the computing unit calculates, based on the calculated position of the optical apparatus in the space, the movement error occurring in the translational movement of the stage along at least one of the first to third translational axes in the space.

35. The measurement system according to any one of claims 32 to 34, wherein

the movement of the stage or the processing head includes, in addition to the translational movement, a rotational movement around at least one of a first rotational axis, a second rotational axis, and a third rotational axis that are orthogonal to one another,

the optical apparatus optically receives the returning light, which is generated by irradiating each of at least three fiducial members with the measurement light whose propagating direction has been changed by the direction change member, from each of the at least three fiducial members in each of at least three positional relationships among which a relative positional relationship between the stage and the processing head is different, each time the stage or the processing head moves rotationally to each of a plurality of different positions around at least one of the first to third rotational axes,

the computing unit calculates a position of each of the at least three fiducial members for each rotational movement based on an optical received result of the returning light from each of the at least three fiducial members that is optically received by the optical apparatus in each of the at least three positional relationships,

the computing unit calculates, based on the calculated position of each of the at least three fiducial members for each rotational movement, at least one of a movement error occurring in the rotational movement of the processing head around at least one of the first to third rotational axes and a movement error occurring in the rotational movement of the stage around at least one of the first to third rotational axes,

each of the at least three fiducial members is positioned on the stage or on the workpiece placed on the stage,

at least one of the at least three fiducial members is a fiducial member that is the same as at least one of the at least four fiducial members or at least one of the at least three fiducial members is a fiducial member that is different from each of the at least four fiducial members, and

the stage or the processing head is aligned so as to be in the at least three positional relationships based on the information related to the movement error occurring in the translational movement.

36. The measurement system according to any one of claims 2 to 35, wherein

the optical apparatus optically receives the returning light, which is generated by irradiating each of the at least four fiducial members with the measurement light, from each of the at least four fiducial members in a situation where the workpiece is placed on the stage before the machine tool starts processing the workpiece, and

the computing unit calculates the position of the optical apparatus based on the optical received result of the returning light from each of the at least four fiducial members by the optical apparatus before the machine tool starts processing the workpiece.

37. The measurement system according to any one of claims 2 to 36, wherein

the optical apparatus irradiates one fiducial member of the at least four fiducial members with the measurement light that propagates along one optical path between the optical apparatus and the workpiece, and

the optical apparatus optically receives, as the returning light, light propagating along the one optical path out of light, which is generated by irradiating the one fiducial member with the measurement light, from the one fiducial member.

38. The measurement system according to any one of claims 2 to 37, wherein
the measurement light is collimated light.

39. The measurement system according to any one of claims 2 to 38, wherein
the measurement system further comprises an optical detector that detects interfering light generated by an interference between reference light and the returning light from each of the at least four fiducial members optically received by the optical apparatus.

40. The measurement system according to claim 39, wherein
the optical detector is positioned inside the optical apparatus.

41. The measurement system according to claim 39, wherein
the optical detector is positioned outside the optical apparatus.

42. The measurement system according to any one of claims 2 to 41, wherein

the direction change member includes a reflection member, and

the reflection member is configured to change the propagating direction of the measurement light by rotating around a rotational axis that intersects an optical path of the measurement light, entering the reflection member, at an incident side.

**43.** The measurement system according to claim 42, wherein

the optical apparatus further includes an irradiation optical system that irradiates the workpiece with the measurement light emitted from the direction change member, and

a deflection angle of the measurement light emitted from the irradiation optical system is greater than a deflection angle of the measurement light emitted from the direction change member in a case where the mirror rotates around the rotational axis.

**44.** The measurement system according to claim 43, wherein

the irradiation optical system includes a first optical system that forms a real image of the reflection member or a second optical system that forms a virtual image of the reflection member.

**45.** The measurement system according to any one of claims 42 to 44, wherein

the rotational axis is a first rotational axis, and

the reflection member is configured to change the propagating direction of the measurement light by rotating around a second rotational axis that intersects an optical path of the measurement light, entering the reflection member, at an incident side and that intersects the first rotational axis.

**46.** The measurement system according to any one of claims 42 to 45, wherein

the optical apparatus is configured to change a changing range of the propagating direction of the measurement light emitted from the direction change member.

**47.** The measurement system according to claim 46, wherein

the optical apparatus is configured to change the changing range of the propagating direction of the measurement light by changing an attachment angle of the direction change member to the optical apparatus.

**48.** The measurement system according to claim 46 or 47, wherein

the optical apparatus is configured to change the changing range of the propagating direction of the measurement light by changing an incident direction along which the measurement light enters the direction change member.

**49.** The measurement system according to claim 48, wherein

the optical apparatus includes:

a first reflection optical element that reflects the measurement light toward the direction change member so that the measurement light enters the direction change member from a first incident direction;

a second reflection optical element that reflects the measurement light toward the direction change member so that the measurement light enters the direction change member from a second incident direction that is different from the first incident direction; and

an optical path switch optical element that switches an optical path of the measurement light between a first optical path along which the measurement light is directed toward the first reflection optical element and a second optical path along which the measurement light is directed toward the second reflection optical element,

the measurement light entering the direction change member from the first incident direction is reflected by the reflection member to propagate in a propagating direction in a first changing range of the propagating direction, and

the measurement light entering the direction change member from the second incident direction is reflected by the reflection member to propagate in a propagating direction in a second changing range of the propagating direction that is different from the first changing range of the propagating direction at least partially.

**50.** The measurement system according to any one of claims 42 to 49, wherein

the direction change member is a first direction change member,

the reflection member is a first reflection member, and

the optical apparatus includes a second direction change member that is configured to change the propagating direction of the measurement light by using a second reflection member rotatable around a second rotational axis that intersects an optical path of the measurement light, entering the reflection member, at an incident side and that intersects the first rotational axis, and
the measurement light emitted from the second direction change member enters the first direction change member.

51. The measurement system according to claim 51, wherein
the optical apparatus further includes a relay optical system that is positioned on an optical path of the measurement light between the first and second direction change members and that allows the first direction change member to be optically conjugate to the second direction change member.

52. A machine tool comprising:

the measurement system according to any one of claims 2 to 52;
the processing head;
the stage; and
a driving apparatus that moves at least one of the processing head and the stage.

53. A measurement method that is used for a machine tool, wherein

the machine tool processes a workpiece by the tool, which is attached to the main spindle of a processing head in a detachable manner, while moving at least one of a stage, on which the workpiece is placed, and the processing head, the measurement method comprises:

irradiating each of at least four fiducial members with measurement light by using an optical apparatus that is attached to the main spindle instead of the tool;
optically receiving, by using the optical apparatus, returning light, which is generated by irradiating each of at least four fiducial members with the measurement light, from each of the at least four fiducial members; and
calculating a position of the optical apparatus based on an optical received result of the returning light from each of the at least four fiducial members by the optical apparatus,
each of the at least four fiducial members is positioned on the stage or on the workpiece placed on the stage,
at least one fiducial member of the at least four fiducial members is positioned on the workpiece placed on the stage.

54. A computer program that allows a computer to execute the measurement method according to claim 53.

55. A recording medium recording thereon the computer program according to claim 54.

56. An optical apparatus that is attached to a main spindle instead of a tool in a machine tool, wherein

the machine tool processes a workpiece by a tool, which is attached to a main spindle of a processing head in a detachable manner, while moving at least one of a stage, on which the workpiece is placed, and the processing head, the optical apparatus comprises:

a direction change member that is configured to change a propagating direction of measurement light; and
a light receiving unit that optically receives returning light, which is generated by irradiating each of at least four fiducial members with the measurement light whose propagating direction has been changed by the direction change member, from each of the at least four fiducial members,
the light receiving unit optically receives the returning light that is generated by irradiating each of at least one fiducial member, which is positioned on the workpiece placed on the stage, and at least three fiducial members, which are positioned on the stage or on the workpiece placed on the stage, of the at least four fiducial members with the measurement light, and
an optical received result of the returning light by the light receiving unit is used to calculate a position of the optical apparatus.

57. A machine tool that processes a workpiece by a tool, which is attached to a main spindle of a processing head in a detachable manner, while moving at least one of a stage, on which the workpiece is placed, and the processing head, wherein
the machine tool comprises:

a computing unit that calculates a position of the optical apparatus based on an optical received result by an optical apparatus that is attached to the main spindle instead of the tool and that optically receives returning light, which is generated by irradiating each of at least four fiducial members with the measurement light, from each of the at least four fiducial members,
the computing unit calculates the position of the optical apparatus based on the optical received result of the returning light, which is generated by irradiating each of at least one fiducial member, which is positioned on the workpiece placed on the stage, and at least three fiducial members, which are positioned on the stage or on the workpiece placed on the stage, of the at least four fiducial members with the measurement light, by the optical apparatus.

**58.** A measurement system that is used for a machine tool, wherein

the machine tool processes a workpiece by a tool, which is attached to a main spindle of a processing head in a detachable manner, while moving at least one of a stage, on which the workpiece is placed, and the processing head, the measurement system comprises:

an optical apparatus that optically receives returning light, which is generated by irradiating a fiducial member with measurement light each time the stage or the processing head moves to each of a plurality of different positions, from the fiducial member in a situation where the main spindle is positioned in a first space that is different from a second space occupied by the workpiece placed on the stage; and

a computing unit that calculates a position related to the main spindle in the first space based on an optical received result of the returning light from the fiducial member which is optically received by the optical apparatus each time the stage or the processing head moves to each of the plurality of different positions, and calculates a position related to the main spindle in the second space based on the calculated position related to the main spindle in the first space.

**59.** A measurement system that is used for a machine tool, wherein

the machine tool processes a workpiece by a tool, which is attached to a main spindle of a processing head in a detachable manner, while moving at least one of a stage, on which the workpiece is placed, and the processing head, the measurement system comprises:

an optical apparatus that is attached to the main spindle instead of the tool and that optically receives returning light, which is generated by irradiating measurement light onto a fiducial member that is positioned on the stage or on the workpiece placed on the stage, from the fiducial member; and

a computing unit that calculates a position of the optical apparatus based on a temperature of at least one of the workpiece and the stage that is detected by a temperature detector, which is configured to detect the temperature of at least one of the workpiece and the stage, and an optical received result of the returning light from the fiducial member by the optical apparatus.

**60.** A measurement system that is used for a machine tool, wherein

the machine tool processes a workpiece by a tool, which is attached to a main spindle of a processing head in a detachable manner, while moving at least one of a stage, on which the workpiece is placed, and the processing head, the measurement system comprises:

an optical apparatus that is attached to the main spindle instead of the tool and that optically receives returning light, which is generated by irradiating a fiducial member with measurement light, from the fiducial member; and

a computing unit that calculates a position of the optical apparatus based on an optical received result of the returning light from the fiducial member by the optical apparatus attached to the main spindle, the optical apparatus includes a direction change member that is configured to change a propagating direction of the measurement light, the computing unit controls the direction change member so as to scan a first area, which is allowed to be irradiated with the measurement light by the direction change member changing the propagating direction of the measurement light, with the measurement light, the optical apparatus optically receives the returning light from the first area that is generated by scanning the first area with the measurement light, the computing unit calculates a direction of the fiducial member from the optical apparatus based on the optical received result of the returning light from the first area by the optical apparatus, and the computing unit controls the direction change member so as to irradiate the fiducial member with the measurement light based on the direction of the fiducial member.

**61.** A measurement system that is used for a machine tool, wherein

the machine tool processes a workpiece by a tool, which is attached to a main spindle of a processing head in a detachable manner, while moving at least one of a stage, on which the workpiece is placed, and the processing head, the measurement system comprises:

an optical apparatus that is attached to the main spindle instead of the tool, that includes a direction change member configured to change a propagating direction of measurement light, and that optically receives returning light, which is generated by irradiating each of at least four fiducial members that are positioned on at least one of the stage and the workpiece with the measurement light whose propagating direction has been changed by the direction change member, from each of the at least four fiducial members; and
a computing unit that calculates a distance between the optical apparatus and each of the at least four fiducial members based on an optical received result of the returning light from each of the at least four fiducial members by the optical apparatus, and generate information for controlling the machine tool based on the calculated distance.

**62.** The measurement system according to claim 61, wherein
the optical apparatus optically receives the returning light that is generated by irradiating each of at least one fiducial member, which is positioned on the workpiece placed on the stage, and at least three fiducial members, which are positioned on the stage or on the workpiece placed on the stage, of the at least four fiducial members with the measurement light.

**63.** The measurement system according to claim 61 or 62, wherein
the information for controlling the machine tool includes information related to a movement error occurring in a movement of the stage or the processing head.

**64.** The measurement system according to any one of claims 61 to 63, wherein
the information for controlling the machine tool includes information for correcting a movement error occurring in a movement of the stage or the processing head.

**65.** A machine tool that processes a workpiece by a tool, which is attached to a main spindle of a processing head in a detachable manner, while moving at least one of a stage, on which the workpiece is placed, and the processing head,
the machine tool comprises:

a computing unit that calculates a distance between an optical apparatus and each of at least four fiducial members based on an optical received result by the optical apparatus that is attached to the main spindle instead of the tool and that optically receives returning light, which is generated by irradiating each of at least four fiducial members that are positioned on at least one of the stage and the workpiece with measurement light, from each of the at least four fiducial members,
at least one of the stage and the processing head is controlled based on the calculated distance and a command value related to a movement of at least one of the stage and the processing head.

**66.** The machine tool according to claim 65, wherein
the computing unit calculates the distance based on the optical received result of the returning light, which is generated by irradiating each of at least one fiducial member, which is positioned on the workpiece placed on the stage, and at least three fiducial members, which are positioned on the stage or on the workpiece placed on the stage, of the at least four fiducial members with the measurement light, by the optical apparatus.

FIG. 1

FIG. 2

11

Z

Y ⊗ → X

112

RX

1111

1112

111

ROTATE

FIG. 3

2

Z

Y ⊗ → X

112

RX

1111

1112

111

1131

113

ROTATE

FIG. 4

FIG. 5

FIG. 6

FIG. 7

FIG. 8

FIG. 9

(a)

(b)

FIG. 10

FIG. 11

START

MOVE AT LEAST ONE OF PROCESSING HEAD AND STAGE TO INITIAL POSITION — S101

PERFORM GLOBAL SCAN — S102

CALCULATE DIRECTION OF LOCAL SCAN AREA — S103

PERFORM LOCAL SCAN — S104

CALCULATE DIRECTION OF FIDUCIAL MEMBER — S105

IRRADIATE FIDUCIAL MEMBER WITH MEASUREMENT LIGHT — S106

S107
IS ONE OF PROCESSING HEAD AND STAGE MOVED ?

Yes → MOVE ONE OF PROCESSING HEAD AND STAGE TRANSLATIONALLY — S108 → CALCULATE DIRECTION OF LOCAL SCAN AREA — S109

No → CALCULATE POSITION OF MEASUREMENT POINT — S110

CALCULATE MOVEMENT ERROR — S111

END

FIG. 12

FIG. 13

FIG. 14

Z (MECHANICAL
COORDINATE SYSTEM)

Y(MECHANICAL
COORDINATE SYSTEM)

Z(MEASUREMENT
COORDINATE SYSTEM)

MP#1
$(X_{p1}, Y_{p1}, Z_{p1})$
$=(0,0,0)$

Y(MEASUREMENT
COORDINATE SYSTEM)

MP#3
$(X_{p3}, Y_{p3}, Z_{p3})=(X_{p3}, Y_{p3}, 0)$

MP#2
$(X_{p2}, Y_{p2}, Z_{p2})=(X_{p2}, 0, 0)$

X(MEASUREMENT
COORDINATE SYSTEM)

X(MECHANICAL
COORDINATE SYSTEM)

# FIG. 15

Z (MACHINE
COORDINATE SYSTEM)

141

MOVE

Z(MEASUREMENT
COORDINATE
SYSTEM)

Y(MACHINE
COORDINATE SYSTEM)

MOVE

Y(MEASUREMENT
COORDINATE SYSTEM)

X(MEASUREMENT
COORDINATE SYSTEM)

X(MACHINE
COORDINATE SYSTEM)

# FIG. 16

FIG. 17

FIG. 18

Z(MACHINE
COORDINATE SYSTEM)

MP#1
(MP)

MP#j
(MP)

Y(MACHINE
COORDINATE SYSTEM)

MP#J
(MP)

X(MACHINE
COORDINATE SYSTEM)

# FIG. 19

MOVEMENT ERROR
($\Delta$x#j, $\Delta$y#j, $\Delta$z#j)

(x_command,
y_command,
z_command)

MP#j
(x_actual,
y_actual,
z_actual)

○  COMMAND POSITION OF
MEASUREMENT POINT

●  ACTUAL POSITION OF
MEASUREMENT POINT

Z(MACHINE
COORDINATE
SYSTEM)

Y(MACHINE
COORDINATE SYSTEM)

X(MACHINE
COORDINATE SYSTEM)

# FIG. 20

START

MOVE AT LEAST ONE OF PROCESSING HEAD AND STAGE TO INITIAL POSITION — S201

PERFORM GLOBAL SCAN — S202

CALCULATE DIRECTION OF LOCAL SCAN AREA — S203

PERFORM LOCAL SCAN — S204

CALCULATE DIRECTION OF LOCAL SCAN AREA — S209

CALCULATE DIRECTION OF FIDUCIAL MEMBER — S205

MOVE ONE OF PROCESSING HEAD AND STAGE TRANSLATIONALLY — S208

IRRADIATE FIDUCIAL MEMBER WITH MEASUREMENT LIGHT — S206

IS ONE OF PROCESSING HEAD AND STAGE MOVED ? — S207 — Yes

No

IS STAGE MOVED ROTATIOANLLY ? — S210 — Yes

S211 — MOVE STAGE ROTATIONALLY

No

CALCULATE POSITION OF MEASUREMENT POINT — S212

CALCULATE MOVEMENT ERROR — S213

END

FIG. 21

**FIG. 22**

**FIG. 23**

○ COMMAND POSITION OF
FIDUCIAL MEMBER

● ACTUAL POSITION OF
FIDUCIAL MEMBER

Z (MECHANICAL
COORDINATE SYSTEM)

Y(MECHANICAL
COORDINATE SYSTEM)

$\theta$ z_actual   $\theta$ z_command

X(MECHANICAL
COORDINATE SYSTEM)

FIG. 24

22

Z

Y ⊗ → X

SP1

W

SP2

141

FIG. 25

FIG. 26

MEASURED
MOVEMENT ERROR
(SPACE SP11)

○ COMMAND POSITION OF
MEASUREMENT POINT

● ACTUAL POSITION OF
MEASUREMENT POINT

▲ EXTRAPOLATED POSITION
OF MEASUREMENT POINT

EXTRAPPLATION

EXTRAPOLATED
MOVEMENT ERROR
(SPACE SP2)

FIG. 27

FIG. 28

MEASURED
MOVEMENT ERROR
(SPACE SP12)

MEASURED
MOVEMENT ERROR
(SPACE SP12)

Z(G)

Y(G)

X(G)

INTERPOLATION

INTERPOLATION

INTERPOLATED
MOVEMENT ERROR
(SPACE SP2)

o    COMMAND POSITION OF
      MEASUREMENT POINT

●    ACTUAL POSITION OF
      MEASUREMENT POINT

▲    INTERPOLATED POSITION
      OF MEASUREMENT POINT

FIG. 29

SP13#2(SP13)

SP13#1(SP13) } SP14

SP13#3(SP13)

22

FM

FM

W

SP2

141

# FIG. 30

SPol

POSITION OF MEASUREMENT POINT MP IN SP13#1

SPol

POSITION OF MEASUREMENT POINT MP IN SP13#2

POSITION OF MEASUREMENT POINT MP IN SP13#3

SP2

MERGE

POSITION OF MEASUREMENT POINT MP IN SP14

SP2

# FIG. 31

(a)

(b)

# FIG. 32

(a)

(b)

FIG. 33

(a)

(b)

FIG. 34

(a)

(b)

# FIG. 35

(a)

(b)

# FIG. 36

FIG. 37

SYS4   CHANGE

22d-1  ⟷  22

ML   ML

Z
⊗ → X
Y

W

141

FIG. 38

Z
⊗ → X
Y

22d-1
(222d-1)

2224

2228

PP   22281

2227

2229d-1

ML

MEASUREMENT
TARGET OBJECT

FIG. 39

FIG. 40

FIG. 41

(a)

(b)

FIG. 42

Z(MACHINE
COORDINATE SYSTEM)

○ CALCULATED RESULT OF DISTANCE
(NO MOVEMENT ERROR EXISTS)

● CALCULATED RESULT OF DISTANCE
(MOVEMENT ERROR EXISTS)

Y(MACHINE
COORDINATE SYSTEM)

X(MACHINE
COORDINATE SYSTEM)

# FIG. 43

22g-1

222g-1

22281

2228

2227

PV

θ 1

2229g-1

θ 2

ML

# FIG. 44

CHANGE ATTACHMENT
ANGLE OF GALVANO
MIRROR 2228

FIG. 45

22g-3

222g-3

22211g-3

2221g-3

2227

(a)

2223g-3

22281

2228

2224g-3

CR
(CR3)

2222g-3

CHANGE INCIDENT DIRECTION
OF MEASUREMENT LIGHT ML
TO GALVANO MIRROR 2228

22g-3

222g-3

22211g-3

2221g-3

2227

(b)

2223g-3

22281

2228

2224g-3

CR
(CR4)

2222g-3

FIG. 46

22g-4

2221g-4
22211g-4

22221g-4
2222g-4

222g-4

**FIG. 47**

22g-5

2221g-4
22211g-4

2223g-5

22221g-4
2222g-4

222g-5

PV1g-4

PV2g-4

**FIG. 48**

**FIG. 49**

FIG. 50

FIG. 51

FIG. 52

SYS9

Z

X

Y

RX

1111

212

221

112

11

20i

111

220

26i

25i

222i

AX

22i

ML

FIG. 53

EP 4 616 996 A1

FIG. 54

200

FIG. 55

FIG. 56

Z
Y ⊗ → X

22

22

ML / RL

FM

[IRRADIATION
&RECEIPTION] ——————→ [NON
IRRADIATION]

REPEAT PLURALITY OF
NUMBER OF TIMES

FIG. 57

Z
Y ⊗ → X

2228 / 22281

2228 / 22281

2228 / 22281

ML / RL

FM

FM

FM

[IRRADIATION
&RECEIPTION] ——→ [NON
IRRADIATION] ——→ [MIRROR MICRO-
VIBRATION]

REPEAT PLURALITY OF
NUMBER OF TIMES

FIG. 58

SYS11
(SYS)

MACHINE TOOL

1

11 PROCESSING HEAD

16 PROCESSING CONTROL APPARATUS

111 MAIN SPINDLE

12 HEAD DRIVING SYSTEM

13 HEAD POSITION MEASUREMENT APPARATUS

14 STAGE APPARATUS

15 TOOL CHANGE APPARATUS

17K TEMPERATURE SENSOR

2 MEASUREMENT SYSTEM

20 MEASUREMENT APPARATUS

24 MEASUREMENT CONTROL APPARATUS

25 OUTPUT APPARATUS

21 MEASUREMENT LIGHT SOURCE

22 MEASUREMENT HEAD

23 OUTPUT INTERFACE

FIG. 59

## FIG. 60

(a)

(b)

(c)

(d)

## FIG. 61

FIG. 62

FIG. 63

FIG. 64

<u>SYS12</u>
<u>(SYS)</u>

FIG. 65

SYS13
(SYS)

MACHINE TOOL

1

11m — MOVEMENT HEAD

111m — MEASUREMENT APPARATUS

16 — PROCESSING CONTROL APPARATUS

12 — HEAD DRIVING SYSTEM

13 — HEAD POSITION MEASUREMENT APPARATUS

14 — STAGE APPARATUS

141 — STAGE

142 — STAGE DRIVING SYSTEM

143 — STAGE POSITION MEASUREMENT APPARATUS

15 — TOOL CHANGE APPARATUS

2 — MEASUREMENT SYSTEM

20 — MEASUREMENT APPARATUS

21 — MEASUREMENT LIGHT SOURCE

22 — MEASUREMENT HEAD

23 — OUTPUT INTERFACE

24 — MEASUREMENT CONTROL APPARATUS

25 — OUTPUT APPARATUS

FIG. 66

FIG. 67

## INTERNATIONAL SEARCH REPORT

| International application No. |
|---|
| **PCT/JP2022/041449** |

| A. | CLASSIFICATION OF SUBJECT MATTER |
|---|---|

*B23Q 17/24*(2006.01)i
FI:   B23Q17/24 C

According to International Patent Classification (IPC) or to both national classification and IPC

| B. | FIELDS SEARCHED |
|---|---|

Minimum documentation searched (classification system followed by classification symbols)

B23Q17/24; B23B25/06; G01B11/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/162893 A1 (NIKON CORP.) 04 August 2022 (2022-08-04) paragraphs [0015]-[0024], [0032]-[0036], [0072], [0097]-[0107], [0262]-[0266], fig. 1, 2, 6, 7, 10, 11, 51 | 1-4, 53-56, 58, 61-64 |
| Y | | 5-8, 11-26, 32-34, 36-42, 45-48, 50, 52 |
| A | | 9-10, 27-31, 35, 43-44, 49, 51, 57 |
| Y | JP 2017-67704 A (TOYOTA BOSHOKU CORP.) 06 April 2017 (2017-04-06) paragraphs [0013]-[0024], fig. 1-4 | 5-8, 11-26, 32-34, 36-42, 45-48, 50, 52 |
| Y | JP 2006-5137 A (CANON INC.) 05 January 2006 (2006-01-05) paragraphs [0029]-[0037] | 21-26, 32-34, 36-42, 45-48, 50, 52 |
| Y | JP 7-68451 A (NIKON CORP.) 14 March 1995 (1995-03-14) paragraphs [0010]-[0014] | 22-26, 32-34, 36-42, 45-48, 50, 52 |
| A | JP 2014-232113 A (FARO TECHNOLOGIES INC.) 11 December 2014 (2014-12-11) | 1-58, 61-64 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 January 2023** | **24 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/041449**

**Box No. III      Observations where unity of invention is lacking (Continuation of item 3 of first sheet)**

This International Searching Authority found multiple inventions in this international application, as follows:

Document 1: WO 2022/162893 A1 (NIKON CORP.) 04 August 2022 (2022-08-04), paragraphs [0015]-[0024], [0032]-[0036], [0072], [0097]-[0107], [0262]-[0266], fig. 1, 2, 6, 7, 10, 11, 51

The claims are classified into the seven inventions below.
(Invention 1) Claims 1-52 and 56
    Claims 1-52 and 56 have the special technical feature of "in a machine tool for machining a workpiece with a tool detachably attached to a main shaft of a machining head while moving at least one of a stage and the machining head, an optical device attached to the main shaft instead of the tool, the optical device being provided with: a direction change member capable of changing a travel direction of measurement light; and a light receiving part for receiving return light from each of multiple reference members, the return light being caused by irradiating each of the reference members with the measurement light of which the travel direction has been changed, wherein the light receiving part receives return light caused by irradiating, with the measurement light, each of at least one of the reference members disposed in the workpiece and at least another of the reference members disposed in the workpiece or the stage"; thus these claims are classified as invention 1.

(Invention 2) Claims 53-55 and 61-64
    Claims 53-55 and 61-64 share, with the special technical feature of invention 1, the technical feature of "an optical device that is used in a machine tool for machining a workpiece with a tool detachably attached to a main shaft of a machining head while moving at least one of a stage and the machining head, wherein the optical device is attached to the main shaft instead of the tool and provided with a direction change member capable of changing a travel direction of measurement light, and receives return light from reference members, the return light being caused by irradiating the reference members with the measurement light".
    However, this technical feature does not make a contribution over the prior art in light of the disclosure of document 1 (in particular, see paragraphs [0015]-[0024], [0032]-[0036], [0072], and [0097]-[0107], and fig. 1, 2, 6, 7, 10, and 11).Thus the technical feature cannot be considered a special technical feature.
    Apart from this feature, there are not the same or corresponding special technical features between claims 53-55 and 61-64 and invention 1.
    Furthermore, claims 53-55 and 61-64 do not depend from any of claims 1-2 and 56.
    In addition, claims 53-55 and 61-64 are not substantially identical to or similarly closely related to any of the claims classified as invention 1.
    Accordingly claims 53-55 and 61-64 cannot be identified as invention 1.   Meanwhile, claims 53-55 and 61-64 have the special technical feature of "a measurement system that is used in a machine tool for machining a workpiece with a tool detachably attached to a main shaft of a machining head while moving at least one of a stage and the machining head, the measurement system being provided with an optical device that is attached to the main shaft instead of the tool, and that has a direction change member capable of changing a travel direction of measurement light, and that receives return light from each of at least four reference members disposed at least one of the stage and the workpiece, the return light being caused by irradiating each of the at least four reference members with the measurement light of which the travel direction has been changed by the direction change member; and a calculation unit for calculating the distance between the optical device and each of the at least four reference members on the basis of a result of the reception of the return light from each of the at least four reference members by the optical device, and generating information for controlling the machine tool on the basis of the calculated distance"; thus these claims are classified as invention 2.

(Invention 3) Claim 57
    Claim 57 shares, with the special technical features of inventions 1 and 2, the technical feature wherein "in a machine tool for machining a workpiece with a tool detachably attached to a main shaft of a machining head while moving at least one of a stage and the machining head, a light receiving part of an optical device attached to the main shaft instead of the tool receives return light caused by irradiating multiple reference members with measurement light".
    However, this technical feature does not make a contribution over the prior art in light of the disclosure of document 1 (in particular, see paragraphs [0015]-[0024], [0032]-[0036], [0072], and [0097]-[0107], and fig. 1, 2, 6, 7, 10, and 11). Thus the technical feature cannot be considered a special technical feature.
    Apart from this feature, there are not the same or corresponding special technical features between claim 57 and inventions 1 and 2.
    Furthermore, claim 57 does not depend from any of claims 1-2, 53, 56, and 61.

Form PCT/ISA/210 (continuation of first sheet) (January 2015)

**INTERNATIONAL SEARCH REPORT**

International application No.

**PCT/JP2022/041449**

| Box No. III | Observations where unity of invention is lacking (Continuation of item 3 of first sheet) |
|---|---|

In addition, claim 57 is not substantially identical to or similarly closely related to any of the claims classified as invention 1 or 2.

Accordingly claim 57 cannot be identified as either of inventions 1 and 2.

Meanwhile, claim 57 has the special technical feature of "a machine tool for machining a workpiece with a tool detachably attached to a main shaft of a machining head while moving at least one of a stage and the machining head, the machine tool being provided with a calculation unit for calculating the position of an optical device on the basis of a result of reception of light by the optical device that receives return light from each of at least four reference members, the return light being caused by irradiating the at least four reference members with measurement light, wherein the calculation unit calculates the position of the optical device on the basis a result of reception, by the optical device, of return light caused by irradiating, with the measurement light, each of at least one of the reference members disposed in the workpiece and at least three of the reference members disposed in the workpiece or the stage"; thus this claim is classified as invention 3.

(Invention 4) Claim 58

Claim 58 shares, with the special technical features of inventions 1-3, the technical feature of "an optical device that is used in a machine tool for machining a workpiece with a tool detachably attached to a main shaft of a machining head while moving at least one of a stage and the machining head, wherein the optical device receives return light from a reference member, the return light being caused by irradiating the reference member with measurement light".

However, this technical feature does not make a contribution over the prior art in light of the disclosure of document 1 (in particular, see paragraphs [0015]-[0024], [0032]-[0036], [0072], and [0097]-[0107], and fig. 1, 2, 6, 7, 10, and 11). Thus the technical feature cannot be considered a special technical feature.

Apart from this feature, there are not the same or corresponding special technical features between claim 58 and inventions 1-3. Furthermore, claim 58 does not depend from any of claims 1-2, 53, 56-57, and 61.

In addition, claim 58 is not substantially identical to or similarly closely related to any of the claims classified as invention 1, 2, or 3.

Accordingly claim 58 cannot be identified as any of inventions 1, 2, and 3.

Meanwhile, claim 58 has the special technical feature of "a measurement system that is used in a machine tool for machining a workpiece with a tool detachably attached to a main shaft of a machining head while moving at least one of a stage and the machining head, the measurement system being provided with: an optical device for receiving return light from a reference member, the return light being caused by irradiating the reference member with measurement light each time the stage or the machining head moves to different positions while the main shaft is positioned in a first space other than a second space occupied by the workpiece placed on the stage; and a calculation unit for calculating a position related to the main shaft in the first space on the basis of a result of reception of return light from the reference member that is received by the optical device each time the stage or the machining head moves to different positions, and calculating a position related to the main shaft in the second space on the basis of the calculated position related to the main shaft in the first space"; thus this claim is classified as invention 4.

(Invention 5) Claim 59

Claim 59 shares, with the special technical features of inventions 1-4, the technical feature of "an optical device that is used in a machine tool for machining a workpiece with a tool detachably attached to a main shaft of a machining head while moving at least one of a stage and the machining head, wherein the optical device is attached to the main shaft instead of the tool, and receives return light from a reference member, the return light being caused by irradiating the reference member with measurement light".

However, this technical feature does not make a contribution over the prior art in light of the disclosure of document 1 (in particular, see paragraphs [0015]-[0024], [0032]-[0036], [0072], and [0097]-[0107], and fig. 1, 2, 6, 7, 10, and 11). Thus the technical feature cannot be considered a special technical feature.

Apart from this feature, there are not the same or corresponding special technical features between claim 59 and inventions 1-4.

Furthermore, claim 59 does not depend from any of claims 1-2, 53, 56-58, and 61.

In addition, claim 59 is not substantially identical to or similarly closely related to any of the claims classified as invention 1, 2, 3, or 4.

Accordingly claim 59 cannot be identified as any of inventions 1, 2, 3, and 4.

Meanwhile, claim 59 has the special technical feature of "a measurement system that is used in a machine tool for machining a workpiece with a tool detachably attached to a main shaft of a machining head while moving at least one of a stage and the machining head, the measurement system being provide with: an optical device that is attached to the main shaft instead of the tool, and that receives return light from a reference member disposed on

Form PCT/ISA/210 (continuation of first sheet) (January 2015)

## INTERNATIONAL SEARCH REPORT

| International application No. |
| --- |
| **PCT/JP2022/041449** |

**Box No. III    Observations where unity of invention is lacking (Continuation of item 3 of first sheet)**

the stage or the workpiece placed on the stage, the return light being caused by irradiating the reference member with measurement light; and a calculation unit for calculating the position of the optical device on the basis of the temperature of at least one of the workpiece and the stage as detected with a temperature detector capable of detecting the temperature of at least one of the workpiece and the stage, and a result of reception of the return light from the reference member by the optical device"; thus this claim is classified as invention 5.

(Invention 6) Claim 60

Claim 60 shares, with the special technical features of inventions 1-5, the technical feature of "an optical device that is used in a machine tool for machining a workpiece with a tool detachably attached to a main shaft of a machining head while moving at least one of a stage and the machining head, wherein the optical device is attached to the main shaft instead of the tool, receives return light from a reference member, the return light being caused by irradiating the reference member with measurement light, and is provided with a direction change member capable of changing a travel direction of the measurement light".   However, this technical feature does not make a contribution over the prior art in light of the disclosure of document 1 (in particular, see paragraphs [0015]-[0024], [0032]-[0036], [0072], and [0097]-[0107], and fig. 1, 2, 6, 7, 10, and 11). Thus the technical feature cannot be considered a special technical feature.

Apart from this feature, there are not the same or corresponding special technical features between claim 60 and inventions 1-5.

Furthermore, claim 60 does not depend from any of claims 1-2, 53, 56-59, and 61.

In addition, claim 60 is not substantially identical to or similarly closely related to any of the claims classified as invention 1, 2, 3, 4, or 5.

Accordingly claim 60 cannot be identified as any of inventions 1, 2, 3, 4, and 5.

Meanwhile, claim 60 has the special technical feature of "a measurement system that is used in a machine tool for machining a workpiece with a tool detachably attached to a main shaft of a machining head while moving at least one of a stage and the machining head, the measurement system being provided with: an optical device that is attached to the main shaft instead of the tool, and that receives return light from a reference member, the return light being caused by irradiating the reference member with measurement light; and a calculation unit for calculating the position of the optical device on the basis of a result of reception of return light from the reference member by the optical device attached to the main shaft, wherein the optical device is provided with a direction change member capable of changing a travel direction of the measurement light, the calculation unit controls the direction change member such that the direction change member changes the travel direction of the measurement light to scan, with the measurement light, a first region capable of being irradiated with the measurement light, the optical device receives return light from the first region, the return light being caused by scanning the first region with the measurement light, the calculation unit calculates the direction of the reference member relative to the optical device on the basis of a result of reception of the return light from the first region by the optical device, and the calculation unit controls the direction change member to irradiate the reference member with the measurement light on the basis of the direction of the reference member"; thus this claim is classified as invention 6.

(Invention 7) Claims 65-66

Claims 65-66 share, with the special technical features of inventions 1-6, the technical feature of "an optical device that is used in a machine tool for machining a workpiece with a tool detachably attached to a main shaft of a machining head while moving at least one of a stage and the machining head, wherein the optical device is attached to the main shaft instead of the tool, and receives return light from multiple reference members, the return light being caused by irradiating the reference members with measurement light".

However, this technical feature does not make a contribution over the prior art in light of the disclosure of document 1 (in particular, see paragraphs [0015]-[0024], [0032]-[0036], [0072], and [0097]-[0107], and fig. 1, 2, 6, 7, 10, and 11). Thus the technical feature cannot be considered a special technical feature.

Apart from this feature, there are not the same or corresponding special technical features between claims 65-66 and inventions 1-6.

Furthermore, claims 65-66 do not depend from any of claims 1-2, 53, and 56-61.

In addition, claims 65-66 are not substantially identical to or similarly closely related to any of the claims classified as inventions 1, 2, 3, 4, 5, or 6.

Accordingly claims 65-66 cannot be identified as any of inventions 1, 2, 3, 4, 5, and 6.

Meanwhile, claims 65-66 have the special technical feature of "a machine tool for machining the workpiece with a tool detachably attached to a main shaft of a machining head while moving at least one of a stage and the machining head, the machine tool being provided with a calculation unit for, on the basis of a result of reception by an optical device that is attached to the main shaft instead of the tool, and that receives return light from each of at least four reference members disposed at least one of the stage and the workpiece, the return light being caused by

Form PCT/ISA/210 (continuation of first sheet) (January 2015)

**INTERNATIONAL SEARCH REPORT**

International application No.

**PCT/JP2022/041449**

| Box No. III | Observations where unity of invention is lacking (Continuation of item 3 of first sheet) |

irradiating each of the at least four reference members with measurement light, calculating the distance between the optical device and each of the at least four reference members, wherein at least one of the stage and the machining head is controlled on the basis of the calculated distance and a command value relating to the movement of at least one of the stage and the machining head"; thus these claims are classified as invention 7.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☑ As only some of the required additional search fees were timely paid by the applicant, this international search report covers only those claims for which fees were paid, specifically claims Nos.: **Claims 1- 58 and 61-64**

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2022/041449**

| Patent document cited in search report | | | Publication date (day/month/year) | Patent family member(s) | | | Publication date (day/month/year) |
|---|---|---|---|---|---|---|---|
| WO | 2022/162893 | A1 | 04 August 2022 | (Family: none) | | | |
| JP | 2017-67704 | A | 06 April 2017 | (Family: none) | | | |
| JP | 2006-5137 | A | 05 January 2006 | (Family: none) | | | |
| JP | 7-68451 | A | 14 March 1995 | (Family: none) | | | |
| JP | 2014-232113 | A | 11 December 2014 | US | 2011/0260033 | A1 | |
| | | | | GB | 2503179 | A | |
| | | | | WO | 2012/141810 | A1 | |
| | | | | CN | 103608642 | A | |

Form PCT/ISA/210 (patent family annex) (January 2015)

**REFERENCES CITED IN THE DESCRIPTION**

**Patent documents cited in the description**

- US 20180174317 A1
- JP 2015072137 A
- JP 2020101499 A
- JP 2020085633 A
- JP 2010025922 A
- JP 2016510415 A
- US 2014226145 A1